(19) **Europäisches Patentamt**
**European Patent Office**
**Office européen des brevets**

(11) **EP 4 572 394 A1**

(12) **EUROPEAN PATENT APPLICATION**
published in accordance with Art. 153(4) EPC

(43) Date of publication:
**18.06.2025 Bulletin 2025/25**

(21) Application number: **23852489.6**

(22) Date of filing: **03.08.2023**

(51) International Patent Classification (IPC):
*H04W 28/18* (2009.01)      *H04W 12/03* (2021.01)
*H04W 16/14* (2009.01)      *H04W 88/18* (2009.01)

(52) Cooperative Patent Classification (CPC):
**H04W 12/03; H04W 16/14; H04W 28/18;**
**H04W 88/18**

(86) International application number:
**PCT/JP2023/028492**

(87) International publication number:
**WO 2024/034523 (15.02.2024 Gazette 2024/07)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **10.08.2022 JP 2022128487**

(71) Applicant: **Sony Group Corporation**
**Tokyo 108-0075 (JP)**

(72) Inventors:
• **KIMURA, Ryota**
**Tokyo 108-0075 (JP)**
• **FURUICHI, Sho**
**Tokyo 108-0075 (JP)**

(74) Representative: **Witte, Weller & Partner**
**Patentanwälte mbB**
**Postfach 10 54 62**
**70047 Stuttgart (DE)**

(54) **COMMUNICATION CONTROL DEVICE, COMMUNICATION DEVICE, COMMUNICATION CONTROL METHOD, AND COMMUNICATION METHOD**

(57)      Information on a communication device using a secondary communication service using at least a part of a frequency band of a primary communication system is concealed. A communication control device includes a reception unit and a calculation unit. The reception unit included in the communication control device receives information on a communication device from the communication device requesting the secondary communication service which is the communication service using at least a part of the frequency band of the primary communication system. The calculation unit included in the communication control device performs secret calculation based on the information on the communication device to generate a communication parameter of the communication device.

EP 4 572 394 A1

# FIG.6

**40**
COMMUNICATION DEVICE

**60**
COMMUNICATION CONTROL DEVICE

**S100** REQUEST REGISTRATION OF COMMUNICATION DEVICE

**S101** NOTIFY INFORMATION ON ENCRYPTION SCHEME (FOR SECRET CALCULATION)

**S102** ACQUIRE INFORMATION ON COMMUNICATION DEVICE

**S103** ENCRYPT INFORMATION ON COMMUNICATION DEVICE

**S104** NOTIFY ENCRYPTED INFORMATION ON COMMUNICATION DEVICE

**S105** CALCULATE INFORMATION REGARDING DISTANCE AND DIRECTION (SECRET CALCULATION)

**S106** CALCULATE INFORMATION REGARDING RADIO WAVE PROPAGATION MODEL (SECRET CALCULATION)

**S107** CALCULATE RECEIVED SIGNAL POWER OR INTERFERENCE SIGNAL POWER (SECRET CALCULATION OR NORMAL CALCULATION)

**S108** CALCULATE COMMUNICATION PARAMETER (SECRET CALCULATION OR NORMAL CALCULATION)

**S109** NOTIFY COMMUNICATION PARAMETER

**S110** SET COMMUNICATION PARAMETER OF COMMUNICATION DEVICE

**S111** EMIT OR SUSPEND RADIO WAVE USING NOTIFIED COMMUNICATION PARAMETER

**Description**

Field

The present disclosure relates to a communication control device, a communication device, a communication control method, and a communication method.

Background

As the demand for wireless communication increases, frequency resources and radio wave resources necessary for wireless communication are being depleted. Conventionally, as frequency resources, there has been an option of preparing and allocating a dedicated frequency band (licensed spectrum) to a specific communication system and device, or preparing a frequency band (unlicensed spectrum) to be equally used among a plurality of communication systems and devices. A mobile phone system can be said to be a typical communication system of the former case, and a wireless LAN can be said to be a typical communication system of the latter case. In the case where a dedicated frequency band is allocated, a specific system and device can exclusively use the frequency band allocated to the system and device, so that stable and high-quality communication can be easily achieved. Note, however, that due to the influence of the depletion of the frequency resources and radio wave resources described above, it is very difficult to prepare a frequency band having a bandwidth sufficient to satisfy the communication demand for a specific system and device.

On the other hand, the frequency band exclusively allocated to a specific system and device is not always used in reality. That is, it is known that there is an idle frequency band when the usage status of a certain frequency band is viewed temporally and spatially. Such a situation hinders effective use of frequency resources and radio wave resources, which are limited public goods, and has been a problem.

Cognitive radio and frequency sharing (spectrum sharing, dynamic spectrum access, or the like) are concepts that solve such a situation and enable effective use of frequency resources and radio wave resources. In frequency sharing, frequency resources are used such that a frequency band preferentially allocated to a specific communication system and device (incumbent system, primary system, high-priority system, higher-tier system, or the like) is also permitted to be used by another communication system and device (secondary system, low-priority system, lower-tier system, or the like).

At this time, the secondary system is required to use a frequency band that is not temporally or spatially used by the primary system, and to maintain a level of interference and jamming generated from the secondary system to the primary system at a predetermined level or less. A means for satisfying such a requirement corresponds to management of frequency usage by a communication control device (database, frequency management system, spectrum access system (SAS), automated frequency coordination (AFC) system, or the like). The communication control device grasps a frequency usage status of the primary system and the secondary system, and controls the behavior and communication parameters (permission or suspension of radio wave emission, transmission power, frequency channel used, antenna directivity, and the like) of the secondary system so as to satisfy the requirement imposed on the secondary system.

In the prior art, it is disclosed that a communication control device calculates the level of interference signal power that may occur from the secondary system to the primary system and controls the behavior and the communication parameters of the communication device of the secondary system so as to curb the interference signal power level to a predetermined level. In this prior art, a means for calculating and estimating the sum of interference (aggregate interference, synthetic interference, cumulative interference, or the like) generated from a plurality of communication devices of the secondary system is also disclosed, and it is intended to reliably protect the primary system from interference (see, for example, Patent Literature 1).

Citation List

Patent Literature

Patent Literature 1: WO 2013/111442 A

Summary

Technical Problem

However, in the related art described above, in order to calculate and estimate the level of interference signal power from the secondary system to the primary system, it is necessary for the communication control device to collect and grasp information on each communication device from the communication device of the primary system and the communication device of the secondary system. This information corresponds to, for example, location information, the available frequency channel, the available maximum transmission power, and antenna characteristics of the communication device. These pieces of information may be know-how for providing a stable and high-quality communication service from the viewpoint of the user operating the communication system. Therefore, it is considered that the information is information that is preferably concealed from a user operating another communication system. Even if the communication control device is a device in a neutral location, it is considered that there is psychological resistance to putting such important information outside the system. For example, in a case where the user of the primary system feels such resistance, the primary system does not agree with the concept of frequency sharing, and as a result, the frequency sharing with the secondary system is not achieved, and the possibility that this will not lead to effective use of frequency resources is increased.

In this problem, by encrypting (e.g., using secure sockets layer (SSL), transport layer security (TLS), or the like) a communication link used when information is provided, an effect of preventing information leakage to some extent can be obtained against an attack such as eavesdropping on the communication link. Note, however, that even if such a means is applied, the communication control device decrypts the cryptography of the communication link, and thus the communication control device uses or stores the information itself. Therefore, there is a possibility of information leakage when the communication control device is attacked. In addition, in a case where the communication control device itself is not in a neutral location but has some intention or maliciousness, there remains a possibility that information on the communication device is used for a purpose other than the original purpose. As described above, the related art described above has a problem in that information on a communication device using a secondary communication service is disclosed.

In view of the foregoing, the present disclosure proposes a communication control device, a communication device, a communication control method, and a communication method that conceal information on a communication device using a secondary communication service.

Solution to Problem

A communication control device according to the present disclosure includes a reception unit and a calculation unit. The reception unit receives information on a communication device from a communication device requesting a secondary communication service that is a communication service using at least a part of a frequency band of a primary communication system. The calculation unit generates a communication parameter of the communication device by performing secret calculation based on the information on the communication device.

Furthermore, A communication control method according to the present disclosure includes: receiving information on a communication device from a communication device requesting a secondary communication service that is a communication service using at least a part of a frequency band of a primary communication system; and generating a communication parameter of the communication device by performing secret calculation based on the information on the communication device.

A communication method according to the present disclosure includes: transmitting own information on a communication device to a communication control device in order to request a secondary communication service that is a communication service using at least a part of a frequency band of a primary communication system; and performing wireless communication with a terminal device on the basis of a communication parameter generated by secret calculation based on the transmitted information on the communication device in the communication control device.

Brief Description of Drawings

FIG. 1 is a diagram illustrating an example of an architecture of a network of the present disclosure.
FIG. 2 is a diagram illustrating a configuration example of a communication control device according to a first embodiment of the present disclosure.
FIG. 3 is a diagram illustrating a configuration example of a communication device according to the embodiment of the present disclosure.
FIG. 4 is a diagram illustrating an example of frequency bands of the primary communication system and the secondary communication system according to the embodiment of the present disclosure.
FIG. 5 is a diagram illustrating an example of time usage of the primary communication system and the secondary communication system according to the embodiment of the present disclosure.
FIG. 6 is a diagram illustrating an example of a communication control procedure according to the first embodiment of the present disclosure.
FIG. 7 is a diagram illustrating another example of the communication control procedure according to the first embodiment of the present disclosure.

FIG. 8 is a diagram illustrating an example of a processing procedure of registration request processing according to the first embodiment of the present disclosure.

FIG. 9 is a diagram illustrating an example of a processing procedure of registration processing according to the first embodiment of the present disclosure.

FIG. 10 is a diagram illustrating an example of a processing procedure of encryption key selection processing according to the first embodiment of the present disclosure.

FIG. 11 is a diagram illustrating another example of the processing procedure of the encryption key selection processing according to the first embodiment of the present disclosure.

FIG. 12 is a diagram illustrating an example of encryption information according to the embodiment of the present disclosure.

FIG. 13 is a diagram illustrating an example of information on a communication device according to the embodiment of the present disclosure.

FIG. 14 is a diagram illustrating an example of communication parameters according to the embodiment of the present disclosure.

FIG. 15 is a diagram illustrating an example of a processing procedure of information change processing of the communication device according to the first embodiment of the present disclosure.

FIG. 16A is a diagram illustrating an example of a distance and a direction according to the embodiment of the present disclosure.

FIG. 16B is a diagram illustrating an example of a distance and a direction according to the embodiment of the present disclosure.

FIG. 17 is a diagram illustrating an example of a processing procedure of distance and direction calculation processing according to the first embodiment of the present disclosure.

FIG. 18 is a diagram illustrating an example of a processing procedure of radio wave propagation model calculation processing according to the embodiment of the present disclosure.

FIG. 19 is a diagram illustrating an example of geographic information according to the embodiment of the present disclosure.

FIG. 20 is a diagram illustrating an example of a processing procedure of processing of geographic information according to the embodiment of the present disclosure.

FIG. 21 is a diagram illustrating an example of geographic information data according to the embodiment of the present disclosure.

FIG. 22 is a diagram illustrating an example of a processing procedure of comparison processing between location information and geographic information data according to the embodiment of the present disclosure.

FIG. 23 is a diagram illustrating a specific example of a mesh according to the embodiment of the present disclosure.

FIG. 24 is a diagram illustrating an example of use schedule information according to the embodiment of the present disclosure.

FIG. 25 is a diagram illustrating an example of a processing procedure of a communication use request acceptability determination processing according to the embodiment of the present disclosure.

FIG. 26 is a diagram illustrating an example of a processing procedure of transmission power calculation processing according to the embodiment of the present disclosure.

FIG. 27 is a diagram illustrating an example of a processing procedure of transmission power calculation processing according to the embodiment of the present disclosure.

FIG. 28 is a diagram illustrating another example of the processing procedure of the transmission power calculation processing according to the embodiment of the present disclosure.

FIG. 29 is a diagram illustrating an example of wireless access scheme characteristic information according to the embodiment of the present disclosure.

FIG. 30 is a diagram illustrating an example of a processing procedure of the processing of wireless access scheme characteristic information according to the embodiment of the present disclosure.

FIG. 31 is a diagram illustrating an example of data of wireless access scheme characteristic information according to the embodiment of the present disclosure.

FIG. 32 is a diagram illustrating an example of a processing procedure of comparison processing between location information and wireless access scheme characteristic information data according to the embodiment of the present disclosure.

FIG. 33 is a diagram illustrating an example of a processing procedure of wireless access scheme and frequency band selection processing according to the embodiment of the present disclosure.

FIG. 34 is a diagram illustrating an example of a communication permitted area and a communication disabled area according to the embodiment of the present disclosure.

FIG. 35 is a diagram illustrating an example of data of a communication permitted area and a communication disabled area according to the embodiment of the present disclosure.

FIG. 36 is a diagram illustrating an example of a deregistration procedure of the communication device according to the embodiment of the present disclosure.

FIG. 37 is a diagram illustrating an example of a processing procedure of an encryption scheme setting and resetting processing according to the embodiment of the present disclosure.

FIG. 38 is a diagram illustrating an example of a processing procedure of encryption scheme setting and resetting processing according to the embodiment of the present disclosure.

FIG. 39 is a diagram illustrating an example of a processing procedure of encryption scheme setting and resetting processing according to the embodiment of the present disclosure.

FIG. 40 is a diagram illustrating an example of a communication control protocol hierarchy.

FIG. 41 is a diagram illustrating a configuration example of an information recording device according to a second embodiment of the present disclosure.

FIG. 42 is a diagram illustrating an example of a communication control procedure according to the second embodiment of the present disclosure.

FIG. 43 is a diagram illustrating another example of the communication control procedure according to the second embodiment of the present disclosure.

FIG. 44 is a diagram illustrating an example of a communication control procedure according to a third embodiment of the present disclosure.

FIG. 45 is a diagram illustrating an example of a communication control procedure according to the third embodiment of the present disclosure.

FIG. 46 is a diagram illustrating an example of a processing procedure of communication control processing according to the third embodiment of the present disclosure.

FIG. 47 is a diagram illustrating an example of a processing procedure of communication control processing according to the third embodiment of the present disclosure.

FIG. 48 is a diagram illustrating an example of a communication control procedure according to a fourth embodiment of the present disclosure.

FIG. 49 is a diagram illustrating another example of the communication control procedure according to the fourth embodiment of the present disclosure.

FIG. 50 is a diagram illustrating another example of the communication control procedure according to the fourth embodiment of the present disclosure.

FIG. 51 is a diagram illustrating an example of a communication control procedure according to a fifth embodiment of the present disclosure.

FIG. 52 is a diagram illustrating another example of the communication control procedure according to the fifth embodiment of the present disclosure.

FIG. 53 is a diagram illustrating another example of the communication control procedure according to the fifth embodiment of the present disclosure.

FIG. 54 is a diagram illustrating another example of the communication control procedure according to the fifth embodiment of the present disclosure.

FIG. 55 is a diagram illustrating another example of the communication control procedure according to the fifth embodiment of the present disclosure.

FIG. 56 is a diagram illustrating an example of a communication control procedure according to a sixth embodiment of the present disclosure.

FIG. 57 is a diagram illustrating an example of a communication control procedure according to the sixth embodiment of the present disclosure.

FIG. 58 is a diagram illustrating another example of the communication control procedure according to the sixth embodiment of the present disclosure.

FIG. 59 is a diagram illustrating another example of the communication control procedure according to the sixth embodiment of the present disclosure.

FIG. 60 is a diagram illustrating a configuration example of a communication control device according to a seventh embodiment of the present disclosure.

FIG. 61 is a diagram illustrating an example of a processing procedure of communication control processing according to the seventh embodiment of the present disclosure.

FIG. 62 is a diagram illustrating another configuration example of a communication control device according to the seventh embodiment of the present disclosure.

FIG. 63 is a diagram illustrating another example of the processing procedure of the communication control processing according to the seventh embodiment of the present disclosure.

FIG. 64 is a diagram illustrating an example of a communication control procedure according to an eighth embodiment of the present disclosure.

FIG. 65 is a diagram illustrating another example of the communication control procedure according to the eighth

## EP 4 572 394 A1

embodiment of the present disclosure.

FIG. 66 is a diagram illustrating an example of a communication control procedure according to a ninth embodiment of the present disclosure.

FIG. 67 is a diagram illustrating an example of a communication control procedure according to the ninth embodiment of the present disclosure.

FIG. 68 is a diagram illustrating another example of the communication control procedure according to the ninth embodiment of the present disclosure.

FIG. 69 is a diagram illustrating another example of the communication control procedure according to the ninth embodiment of the present disclosure.

FIG. 70 is a diagram illustrating another example of the communication control procedure according to the ninth embodiment of the present disclosure.

FIG. 71 is a diagram illustrating another example of the communication control procedure according to the ninth embodiment of the present disclosure.

FIG. 72 is a diagram illustrating another example of the communication control procedure according to the ninth embodiment of the present disclosure.

FIG. 73 is a diagram illustrating another example of the communication control procedure according to the ninth embodiment of the present disclosure.

FIG. 74 is a diagram illustrating another example of the communication control procedure according to the ninth embodiment of the present disclosure.

FIG. 75 is a diagram illustrating another example of the communication control procedure according to the ninth embodiment of the present disclosure.

FIG. 76 is a diagram illustrating another example of the communication control procedure according to the ninth embodiment of the present disclosure.

FIG. 77 is a diagram illustrating another example of the communication control procedure according to the ninth embodiment of the present disclosure.

FIG. 78 is a diagram illustrating another example of the communication control procedure according to the ninth embodiment of the present disclosure.

FIG. 79 is a diagram illustrating another example of the communication control procedure according to the ninth embodiment of the present disclosure.

FIG. 80 is a diagram illustrating an example of a communication control procedure according to a 10th embodiment of the present disclosure.

FIG. 81 is a diagram illustrating an example of a communication control procedure according to the 10th embodiment of the present disclosure.

FIG. 82 is a diagram illustrating an example of a communication control procedure according to the 10th embodiment of the present disclosure.

FIG. 83 is a diagram illustrating another example of the communication control procedure according to the 10th embodiment of the present disclosure.

FIG. 84 is a diagram illustrating another example of the communication control procedure according to the 10th embodiment of the present disclosure.

FIG. 85 is a diagram illustrating another example of the communication control procedure according to the 10th embodiment of the present disclosure.

FIG. 86 is a diagram illustrating another example of the communication control procedure according to the 10th embodiment of the present disclosure.

FIG. 87 is a diagram illustrating another example of the communication control procedure according to the 10th embodiment of the present disclosure.

FIG. 88 is a diagram illustrating another example of the communication control procedure according to the 10th embodiment of the present disclosure.

Description of Embodiments

Hereinafter, embodiments of the present disclosure will be described in detail with reference to the drawings. The description will be given in the following order. Note that in each of the following embodiments, the same parts are denoted by the same reference numerals, and redundant description will be omitted.

1. First embodiment
2. Second embodiment
3. Third embodiment
4. Fourth embodiment

7

5. Fifth embodiment

6. Sixth embodiment

7. Seventh embodiment

8. Eighth embodiment

9. Ninth embodiment

10. Tenth embodiment

(1. First embodiment)

[Configuration of network system]

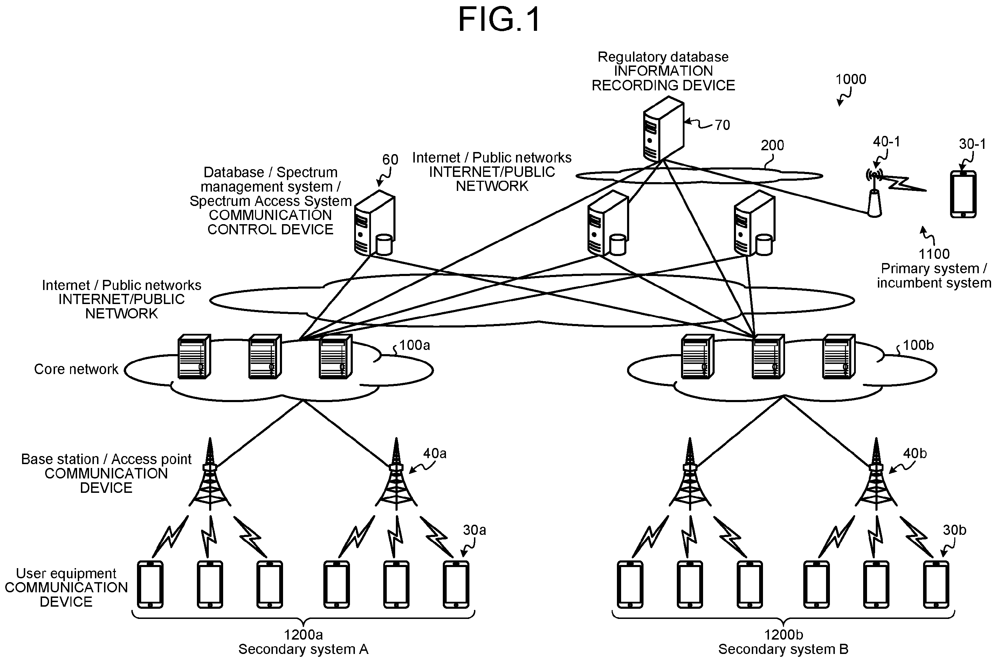

FIG. 1 is a diagram illustrating an example of an architecture of a network of the present disclosure. FIG. 1 is a diagram illustrating an example of an architecture of a network system 1000 of the present disclosure. The network system 1000 includes a primary communication system 1100 and secondary communication systems 1200a and 1200b. The primary communication system 1100 includes a communication device 40-1. The communication device 40-1 communicates with a terminal device 30-1 arranged in a cell operated by the communication device 40-1.

The secondary communication systems 1200a and 1200b are systems that provide communication services using at least a part of the frequency band of the primary communication system 1100. The secondary communication system 1200a includes a communication device 40a. The communication device 40a communicates with a terminal device 30a arranged in a cell operated by the communication device 40a. Furthermore, the communication device 40a requests a secondary communication service via a core network 100a and the Internet. In addition, the secondary communication system 1200b includes a communication device 40b. The communication device 40b communicates with a terminal device 30b arranged in a cell operated by the communication device 40b. Furthermore, the communication device 40b requests a secondary communication service via a core network 100b and the Internet.

Examples of the primary system and the secondary system include cellular systems (3G/4G/5G/6G, local 5G, private 5G, and the like), wireless LAN systems (WLAN, Wi-Fi, and the like), IoT communication systems (LPWA, Wi-SUN, Zigbee (registered trademark), Sigfox, LoRa, and the like), TV broadcasting systems (terrestrial broadcasting, satellite broadcasting, relay material transmission (field pickup unit (FPU)), and the like), defense and military communication systems, satellite communication systems, and air traffic control communication systems. In addition, the primary system and the secondary system include one or more communication devices. The communication device corresponds to, for example, a base station, an access point, a user terminal (user equipment, mobile phone, smart phone, smart watch, smart glasses, smart device), a transmission device, and a reception device. Communication devices in the same system can communicate wirelessly or by wire. In the case of a mobile phone system, a communication device of a core network (core network, evolved packet core (EPC), 5G Core (5GC), and the like) may be further included.

A communication control device 60 can communicate with a communication device of a primary system or a secondary system. A communication link is physically connected directly or indirectly between the communication control device 60 and a communication device 40. In a case where the communication control device 60 and the communication device 40 are indirectly connected, for example, it is conceivable that a communication device of a core network or a communication device on the public Internet is interposed.

In the present disclosure, there may be still another information recording device (regulatory database) 70. This is a communication control device for recording and storing information on communication devices of the primary system and the secondary system. The information recording device corresponds to, for example, a system operation adjustment system for use of a general radio station supervising system (PARTNER), a TV white space, and the like in Japan, an FCC universal licensing system (ULS) and an equipment authorization system (EAS) in the United States, an informing incumbent portal used in the CBRS, and the like. In the present disclosure, it is assumed that communication control devices can communicate with each other and share and acquire information.

In the present disclosure, it is assumed that there is one or more of each of the primary system and the secondary system. Alternatively, there may be a plurality of primary systems and secondary systems. Furthermore, there may be one or a plurality of communication control devices.

[Configuration of communication control device]

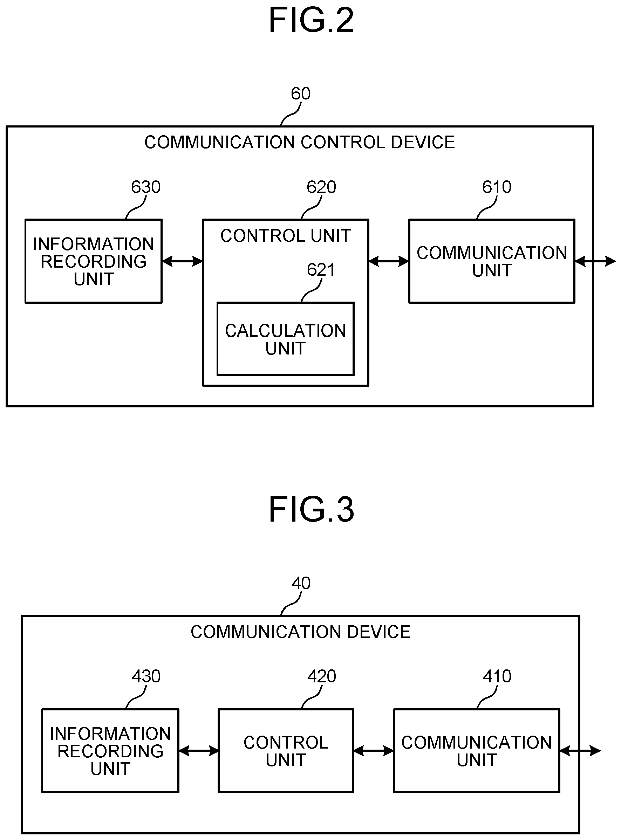

FIG. 2 is a diagram illustrating a configuration example of the communication control device according to the first embodiment of the present disclosure. FIG. 2 is a block diagram illustrating a configuration example of the communication control device 60. The communication control device 60 includes a communication unit 610, a control unit 620, and an information recording unit 630.

The communication unit 610 communicates with another communication device (e.g., communication device 40 and another communication control device 60). The communication unit 610 includes a transmission unit and a reception unit. Furthermore, the communication unit 610 operates under the control of the control unit 620. As described later, the communication unit 610 receives a request for a secondary communication service and information on the communication device from the communication device 40. Furthermore, the communication unit 610 transmits communication parameters to the communication device 40. Details of the information on the communication device and the communication parameters will be described later.

The control unit 620 controls the entire communication control device 60. The control unit 620 includes a calculation unit 621. The calculation unit 621 performs secret calculation based on information on the communication device to generate communication parameters of the communication device 40.

The information recording unit 630 records information such as information on the communication device and communication parameters.

[Configuration of communication device]

FIG. 3 is a diagram illustrating a configuration example of the communication device according to the embodiment of the present disclosure. FIG. 3 is a block diagram illustrating a configuration example of the communication device 40. The communication device 40 includes a communication unit 410, a control unit 420, and an information recording unit 430.

The communication unit 410 communicates with another communication device (e.g., communication control device 60 and terminal device 30). The communication unit 410 includes a transmission unit and a reception unit. Furthermore, the communication unit 410 operates under the control of the control unit 420. As described later, the communication unit 410 transmits a request for a secondary communication service and its own communication device information to the communication control device 60. Furthermore, the communication unit 410 receives communication parameters from the communication control device 60. This communication parameters are communication parameters generated by the communication control device 60 through secret calculation based on information on the communication device.

The control unit 420 controls the entire communication device 40. The control unit 420 controls communication with the terminal device 30 on the basis of the communication parameters transmitted from the communication control device 60.

The information recording unit 430 records information such as communication parameters.

[Frequency band of primary communication system and secondary communication system]

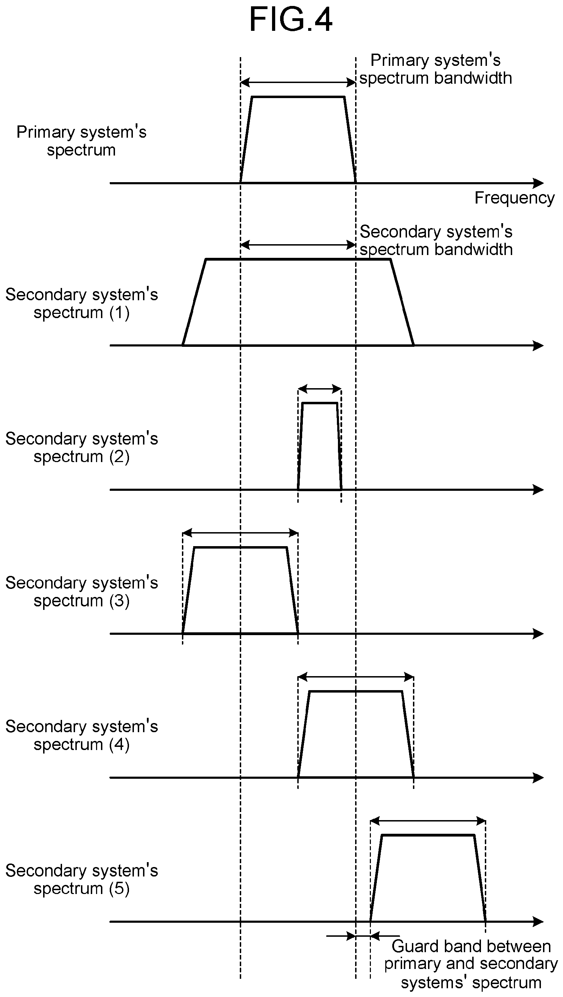

FIG. 4 is a diagram illustrating an example of frequency bands of the primary communication system and the secondary communication system according to the embodiment of the present disclosure. In the present disclosure, it is assumed that the primary system and the secondary system use the same frequency band. FIG. 4 illustrates examples of the relationship between frequency bands to be used.

All parts of FIG. 4 correspond to "using the same frequency band", and it may be considered that interference may occur from the secondary system to the primary system. (1) and (2) of FIG. 4 illustrate an example in a case where the entire frequency band used by the secondary system is included in the frequency band of the primary system. (3) and (4) of FIG. 4 illustrate an example in a case where a part of the frequency band (or frequency channel, spectrum, or the like) used by the secondary system overlaps the frequency band of the primary system. (5) of FIG. 4 is a case where the frequency band of the secondary system and the frequency band of the primary system do not overlap, but a gap (guard band or the like) therebetween is equal to or less than a predetermined width. (5) of FIG. 4 corresponds to a case where out-of-band radiation (not illustrated in FIG. 4) of radio waves emitted from the secondary system interferes with the primary system.

In other words, the fact that the primary system and the secondary system use the same frequency band can also be expressed as follows. Here, $F_{P,Lower}$ and $F_{P,upper}$ represent the lower limit and the upper limit of the frequency band of the primary system. Note that $F_{P,Lower} \leq F_{P,Upper}$ is satisfied. In addition, $F_{S,Lower}$ and $F_{S,Upper}$ represent the lower limit and the upper limit of the frequency band of the secondary system. Note that $F_{S,Lower} \leq F_{S,Upper}$ is satisfied. $B_{P,S,Guard}$ is a predetermined guard band width ($0 \leq B_{P,S,Guard}$) that is considered to use the same frequency band.

In the cases of (1) and (2) of FIG. 4, the state of the following equation is obtained.

$$(F_{P,Lower} \leq F_{S,Lower}) \text{ AND } (F_{S,Upper} \leq F_{P,Upper})$$

Further, in the case of FIG. 4 (3), the state of the following equation is obtained.

$$(F_{S,Lower} \leq F_{P,Lower}) \text{ AND } (F_{P,Lower} \leq F_{S,Upper})$$

In addition, in the case of FIG. 4 (4), the following equation is obtained.

$$(F_{S,Lower} \leq F_{P,Upper}) \text{ AND } (F_{P,Upper} \leq F_{S,Upper})$$

Further, in the case of FIG. 4 (5), the state of the following equation is obtained.

$$(0 \leq (F_{P,Lower} - F_{S,Upper})) \leq B_{P,S,Guard}) \text{ OR } (0 \leq (F_{S,Lower} - F_{P,Upper}) \leq B_{P,S,Guard})$$

Note that "AND" represents a logical product operation. "OR" represents a logical sum operation.

[Time usage of primary communication system and secondary communication system]

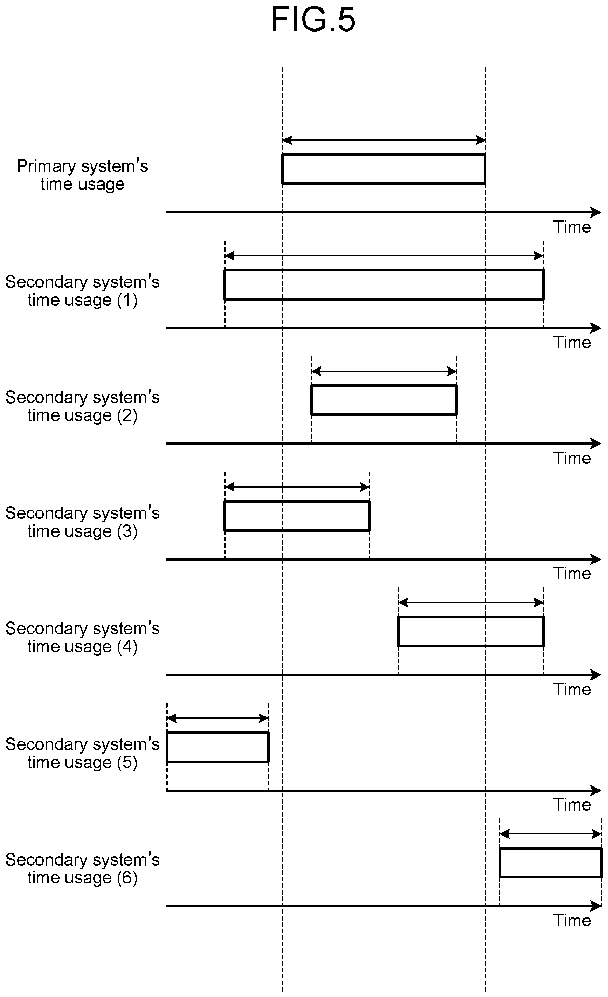

FIG. 5 is a diagram illustrating an example of time usage of the primary communication system and the secondary communication system according to the embodiment of the present disclosure. In the present disclosure, it is assumed that the primary system and the secondary system use the same time zone. FIG. 5 illustrates examples of the relationship between time zones to be used. All parts of FIG. 5 correspond to "using the same time", and it may be considered that interference may occur from the secondary system to the primary system. (1) and (2) of FIG. 5 are cases where the entire time zone used by the secondary system is included in the time zone of the primary system. (3) and (4) of FIG. 5 are cases where a part of the time zone used by the secondary system overlaps with the time zone of the primary system. (5) and (6) of FIG. 5 are cases where the time zone of the secondary system and the time zone of the primary system do not overlap, but a gap (guard time or the like) therebetween is equal to or less than a predetermined time width. (5) and (6) of FIG. 5 correspond to a case where the rise time and the fall time (not represented in FIG. 5) of the radio waves emitted by the secondary system interfere with the primary system.

In other words, the fact that the primary system and the secondary system use the same time can also be expressed as follows. Here, $F_{P,Start}$ and $F_{P,End}$ represent the start and end of the time usage of the primary system. Note that $F_{P,Start} \leq F_{P,End}$ is satisfied. In addition, $F_{S,Start}$ and $F_{S,End}$ represent the start and end of the time usage of the secondary system. Note that $F_{S,start} \leq F_{S,End}$ is satisfied. $B_{P,S,Guard}$ is a predetermined guard time width ($0 \leq B_{P,S,Guard}$) that is considered to use the same time.

In the cases of (1) and (2) of FIG. 5, the state of the following equation is obtained.

$$(F_{P,Start} \leq F_{S,Start}) \text{ AND } (F_{S,End} \leq F_{P,End})$$

Further, in the case of FIG. 5 (3), the state of the following equation is obtained.

$$(F_{S,Start} \leq F_{P,Start}) \text{ AND } (F_{P,Start} \leq F_{S,End})$$

In addition, in the case of FIG. 5 (4), the following equation is obtained.

$$(F_{S,Start} \leq F_{P,End}) \text{ AND } (F_{P,End} \leq F_{S,End})$$

Further, in the case of FIG. 5 (5), the state of the following equation is obtained.

$$(0 \leq (F_{P,Start} - F_{S,End})) \leq B_{P,S,Guard}) \text{ OR } (0 \leq (F_{S,Start} - F_{P,End}) \leq B_{P,S,Guard})$$

[Communication control procedure]

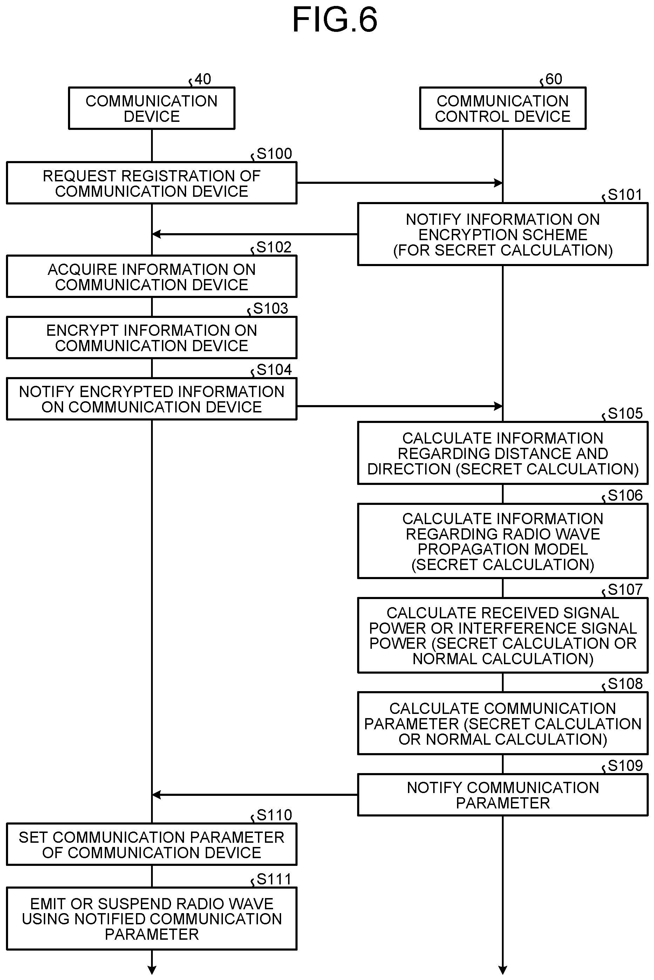

FIG. 6 is a diagram illustrating an example of a communication control procedure according to the first embodiment of the present disclosure. FIG. 6 is a diagram illustrating an example of a communication control procedure between the communication device 40 and the communication control device 60. In FIG. 6, the link between the communication device 40 and the communication control device 60 is expressed in a form regardless of whether the link is physically directly connected or indirectly connected. Even when the communication device 40 and the communication control device 60 are indirectly connected, it is assumed that both ends of the communication link are the communication device 40 and the communication control device 60.

First, the communication device 40 registers itself in the communication control device 60. Specifically, the communication device 40 requests registration (Step S100). With this registration, the communication device 40 can benefit from frequency sharing such as notification of communication parameters from the communication control device 60.

Next, the communication control device 60 notifies the registered communication device 40 of information on the encryption scheme (Step S101). The information on the encryption scheme is information related to information encryption used in the present disclosure, and corresponds to a specific encryption scheme, an encryption key (public key) used for encryption, a valid period of the encryption scheme and encryption key to be notified, and the like. Further, a decryption key used to decrypt the cryptography may be notified. This decryption key is used for decryption when the communication control device 60 notifies the communication device 40 of communication parameters later and the communication parameters are encrypted. Note that in addition to this notification, a notification indicating that the registration has been completed may be provided. In the example of FIG. 6, an encryption scheme for secret calculation is applied. The encryption scheme will be described later.

Next, the communication device 40 acquires its own information (Step S102). The acquisition timing is not necessarily the timing in FIG. 6. For example, since there is little information that changes with time in the fixedly installed communication device 40, information may be statically acquired before registration in the communication control device 60.

The communication device 40 encrypts at least a part of its own information according to the encryption information notified from the communication control device 60 (Step S103). Next, the communication device 40 notifies the communication control device 60 of the encrypted information on the communication device (Step S104).

Upon receiving the encrypted information on the communication device from the communication device 40, the communication control device 60 executes necessary calculation (estimation) on the basis of the received encrypted information (Step S105). This necessary calculation corresponds to, for example, calculation of information regarding distance and direction. At this time, the communication control device 60 performs secret calculation. Next, the communication control device 60 calculates (secret calculation) information regarding the radio wave propagation model (Step S106). Next, the communication control device 60 calculates received signal power or interference signal power (Step S107). This can be done by secret calculation or normal calculation. Next, the communication control device 60 calculates communication parameters (Step S108). This can be done by secret calculation or normal calculation. The communication parameters are communication parameters to be used by the communication device 40.

In the present disclosure, by applying secret calculation in the above calculation (estimation) including the progress, the calculation (estimation) can be executed with the information on the communication device concealed from the third party including the communication control device 60. The application of secret calculation of the present disclosure will be described in detail later.

As a result of performing the above secret calculation, the communication control device 60 derives communication parameters related to the behavior and operation of the communication device 40. Examples of the communication parameters will be described later. The communication control device 60 communicates the communication parameters to the communication device 40 (Step S109).

The communication device 40 notified of the communication parameters from the communication control device 60 sets the communication device according to the communication parameters (Step S110). Next, the communication device 40 emits or suspends radio waves using the notified communication parameters (Step S111). In this manner, the communication device 40 performs setting according to the communication parameters and executes emission or suspension of radio waves according to the setting.

Note that in addition to encrypting the information on the communication device according to the encryption information notified from the communication control device 60, a predetermined encryption scheme may be determined in advance, and encryption may be performed according to the encryption scheme determined in advance. In this case, the step of notifying the communication device 40 of the encryption scheme from the communication control device 60 may be omitted.

Note that "notification" by the communication device 40 or the like corresponds to the fact that the communication unit 410 or the like of the communication device 40 or the like transmits target data or the like to the target device. For example, "The communication device 40 notifies the communication control device 60 of the encrypted information on the communication device" in step S104 described above corresponds to the communication unit 410 of the communication device 40 transmitting the encrypted information on the communication device to the communication control device 60. The same applies to the communication control device 60 and a communication control device 67 described later.

[Other communication control procedure]

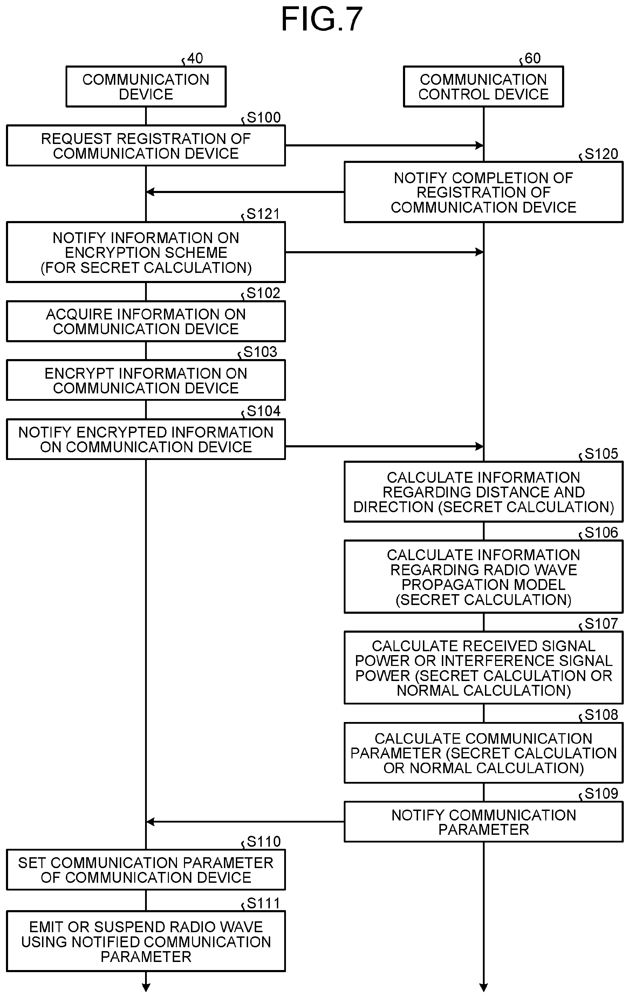

FIG. 7 is a diagram illustrating another example of the communication control procedure according to the first embodiment of the present disclosure. Similarly to FIG. 6, FIG. 7 is a diagram illustrating an example of a communication control procedure between the communication device 40 and the communication control device 60. The control procedure in FIG. 7 is different from the processing procedure in FIG. 6 in that the communication device 40 generates information on an encryption scheme.

First, the communication device 40 requests registration of the communication device (Step S100). Next, after the registration, the communication control device 60 notifies the communication device 40 of completion of registration of the communication device (Step S120). Next, the communication device 40 notifies the communication control device 60 of information on the encryption scheme (Step S121). Since the processing procedure other than this is similar to the processing procedure of FIG. 6, the description thereof is omitted.

The advantage of having the communication device 40 side generate and notify the information on the encryption scheme is that the communication control device 60 does not have a decryption key for decrypting the target cryptography. As a result, it is possible to more securely protect the information on the communication device.

[Registration request processing]

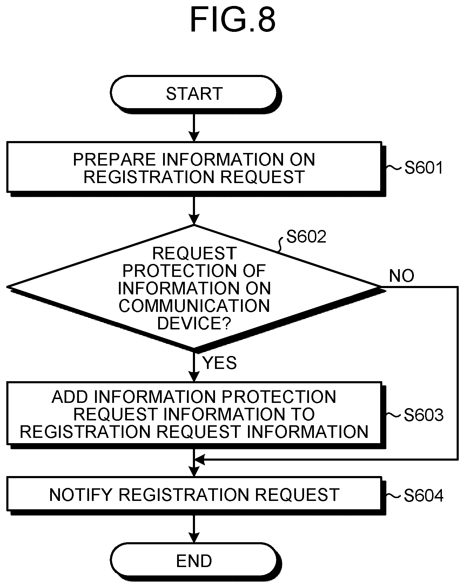

FIG. 8 is a diagram illustrating an example of a processing procedure of registration request processing according to the first embodiment of the present disclosure. FIG. 8 is a flowchart illustrating an example of a processing procedure of a registration request of the communication device 40. First, the communication device 40 prepares information (message) of the registration request (Step S601). In this process, the communication device 40 determines whether or not to request protection of information on the communication device (Step S602). When requesting protection of information (Step S602, Yes), the communication device 40 adds information regarding information protection (set bit flag indicating message such as information protection request) to the registration request (Step S603), and proceeds to the processing of step S604.

On the other hand, when not requesting protection of information (Step S602, No), the processing proceeds to step S604. At this time, the communication device 40 may perform processing such as not preparing information regarding information protection or not setting a bit flag indicating the information protection request. In step S604, the communication device 40 notifies the communication control device 60 or the information recording device 70 described later of the registration request (Step S604).

[Registration processing]

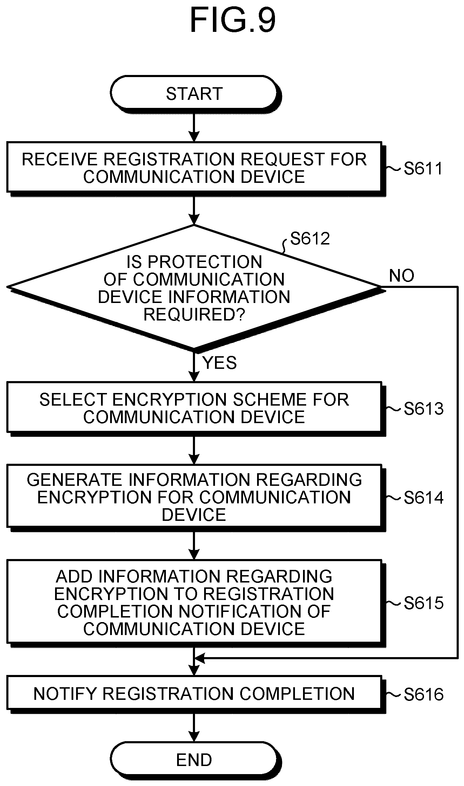

FIG. 9 is a diagram illustrating an example of a processing procedure of registration processing according to the first embodiment of the present disclosure. FIG. 9 is a flowchart illustrating an example of a registration processing procedure of the communication control device 60. Furthermore, FIG. 9 illustrates an example of a processing procedure when a registration request for a communication device is received in the communication control device 60 or the information recording device 70. First, the communication control device 60 receives a communication device registration request (Step S611). Next, the communication control device 60 determines whether protection of information on the communication device is required (Step S612). When protection of information on the communication device is not required (Step S612, No), the communication control device 60 proceeds to the processing of (Step S616).

On the other hand, when protection of information on the communication device is required (Step S612, Yes), the communication control device 60 selects an encryption scheme for the communication device 40 (Step S613), and generates information regarding encryption for the communication device (Step S614). Information regarding encryption for the communication device corresponds to, for example, information specifying an encryption scheme, an encryption key, a public key, and the like. Next, the communication control device 60 adds the generated information necessary for encryption to the registration completion notification (Step S615), and proceeds to the processing of step S616.

In step S616, the communication control device 60 notifies the communication device 40 of the registration completion (Step S616).

[Encryption key selection processing]

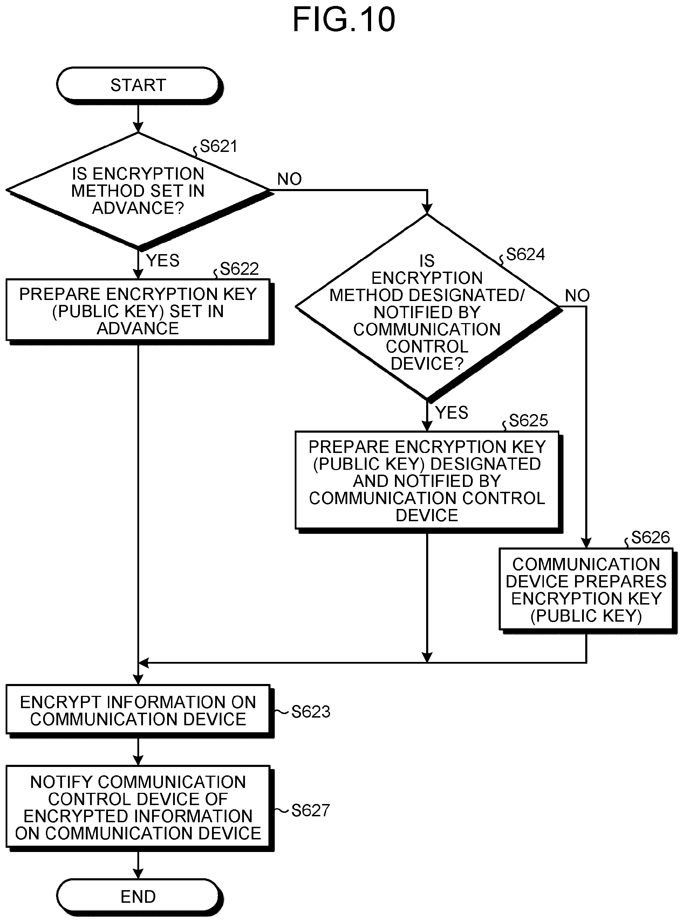

FIG. 10 is a diagram illustrating an example of a processing procedure of encryption key selection processing according to the first embodiment of the present disclosure. FIG. 10 is a flowchart illustrating an example of a processing procedure of encryption key selection processing of the communication device 40. When the encryption method is set in advance (Step S621, Yes), the communication device 40 prepares an encryption key (public key) set in advance (Step S622), and proceeds to the processing of step S623. When the encryption method is not set in advance (Step S621, No), and when the encryption method is designated or notified by the communication control device 60 (Step S624, Yes), the communication device 40 prepares an encryption key according to the designated or notified method (Step S625), and proceeds to the processing of step S623. When there is no designation or notification from the communication control device 60 (Step S624, No), the communication device 40 itself designates an encryption method, prepares an encryption key according to the designated method (Step S626), and proceeds to the processing of step S623.

In step S623, the communication device 40 encrypts information on the communication device (Step S623). Next, the communication device 40 notifies the communication control device 60 of the encrypted information on the communication device (Step S627).

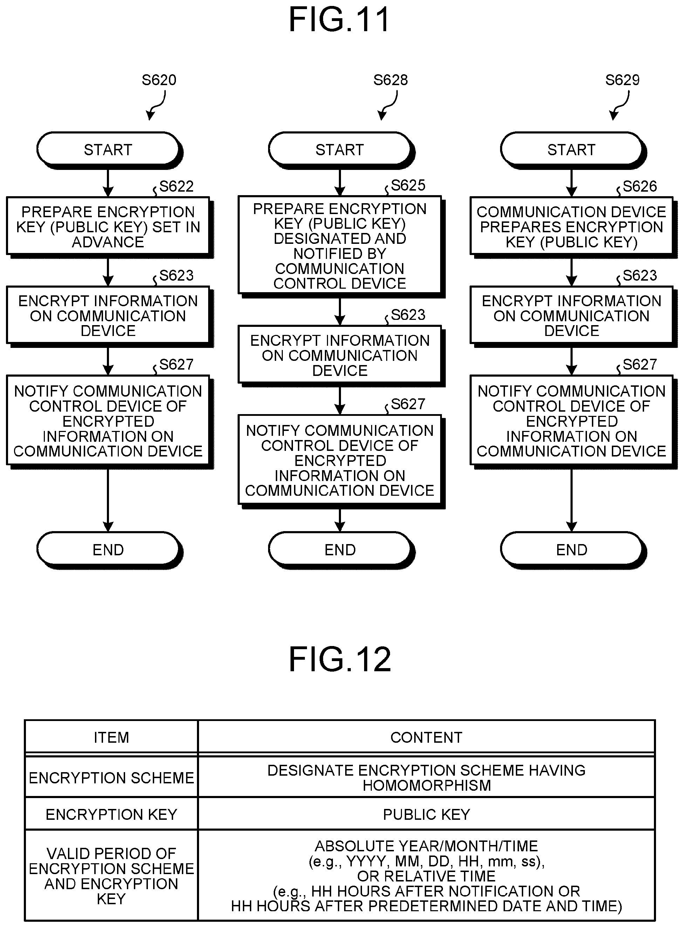

FIG. 11 is a diagram illustrating another example of the processing procedure of the encryption key selection processing according to the first embodiment of the present disclosure. FIG. 11 is obtained by decomposing the processing procedure of FIG. 10 into S620, S628, and S629. S620 represents a processing procedure when an encryption key (public key) set in advance is prepared. Furthermore, S628 represents a processing procedure when the encryption key (public key) designated or notified by the communication control device 60 is prepared. In addition, S629 represents a processing procedure when the communication device 40 prepares an encryption key.

[Encryption information]

FIG. 12 is a diagram illustrating an example of encryption information according to the embodiment of the present disclosure. FIG. 12 is a diagram illustrating an example of encryption information exchanged between the communication device 40 and the communication control device 60. Encryption information corresponds to an encryption scheme, an encryption key, and a valid period of the encryption scheme and the encryption key. Note that the encryption information is not limited to this example.

[Information on communication device]

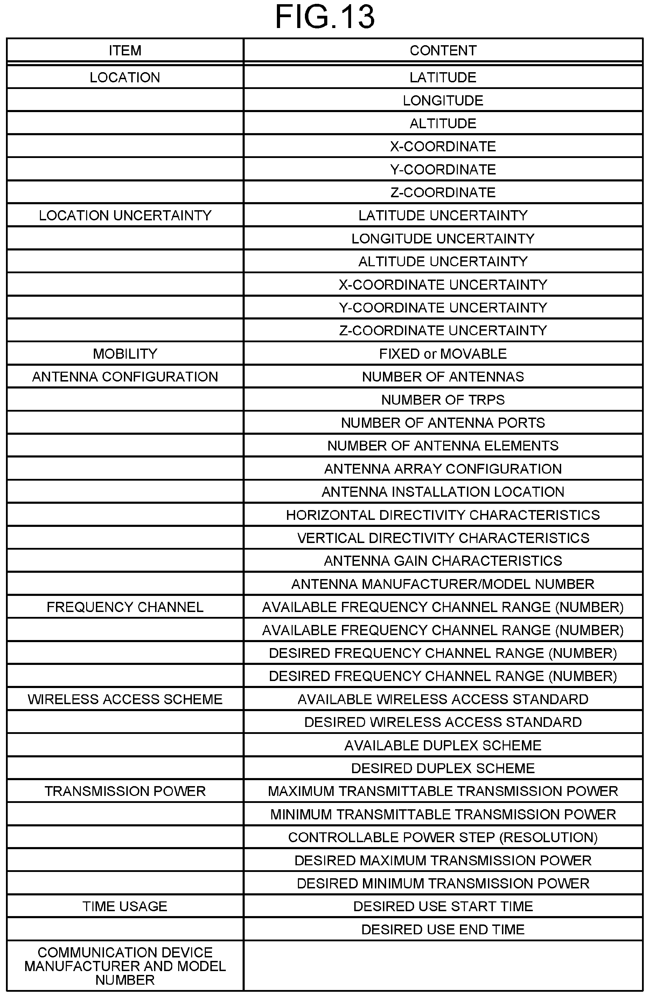

FIG. 13 is a diagram illustrating an example of information on a communication device according to the embodiment of the present disclosure. FIG. 13 is a diagram illustrating an example of information on a communication device to be encrypted. Information on a communication device corresponds to, for example, information regarding a location where the communication device is installed or exists (e.g., latitude, longitude, altitude, or coordinate information such as X-coordinate, Y-coordinate, and Z-coordinate). These pieces of location information can be used for calculation (estimation) of characteristics of a radio wave propagation model, received signal power, interference signal power, and the like, which is a particular object of the present disclosure.

Furthermore, for example, location uncertainty can also be an encryption target as information regarding the location.

Furthermore, for example, mobility of the communication device can also be an encryption target as information related to location. The mobility information corresponds to, for example, whether the communication device is fixedly installed or is movable.

Furthermore, for example, the antenna configuration of the communication device can also be an encryption target. The information on the antenna configuration corresponds to, for example, the number of antennas, the number of transmission and reception points (TRPs), the number of antenna ports, the number of antenna elements, the number of antenna arrays, an antenna installation location, horizontal directivity characteristics, vertical directivity characteristics, antenna gain characteristics, two-dimensional antenna characteristics, three-dimensional antenna characteristics, an antenna manufacturer, a model number, and the like. These pieces of information on the antenna configuration can also be used for calculation (estimation) of characteristics of the radio wave propagation model, received signal power, interference signal power, and the like, which is an object of the present disclosure.

Furthermore, for example, regarding the frequency channel used by the communication device, a frequency channel range available to the communication device and a frequency channel range desired to be used by the communication device can be encryption targets. The frequency channel range may be expressed by a physical range (e.g., lower limit frequency and upper limit frequency of frequency channel range), or may be expressed by a frequency channel number (channel 1 (2401 to 2423 MHz, 2.4 GHz band), channel 7 (5030 to 5040 MHz, 5 GHz band) of a wireless LAN, or a band number (e.g., band 48 (3550 to 3700 MHz, 4G LTE), band n79 (4400 to 5000 MHz, 5G NR), or the like) of the 3GPP (registered trademark) standard) defined in the radio law or the communication standard. In addition, a plurality of frequency channel ranges (numbers) may be listed and expressed. The information on the frequency channel is also related to the frequency dependence in the characteristics of the radio wave propagation model, and thus can be used for calculation (estimation) of the present disclosure.

Furthermore, for example, a wireless access scheme used by the communication device can also be an encryption target. The wireless access scheme corresponds to, for example, a standard related to Wi-Fi (registered trademark) (wireless LAN) (IEEE802.11a/b/g/n/ac/ax/be, Wi-Fi4/5/6/7, and the like), a standard related to a cellular system (2G(GSM (registered trademark), PDC)/3G(WCDMA (registered trademark), CDMA2000)/4G(LTE, LTE-Advanced)/5G(NR, NR-Advanced), 3GPP Release-8/9/10/11/12/13/14/15/16/17/18/19/20, UE Category 1/2/3/4/5/6/7/8/9/10/11/12/13/14/15, and the like. In addition, the wireless access method can be expressed by standards such as standards related to low power wide area (LPWA) and IoT communication (LoRa, sigfox, Zigbee, Bluetooth (registered trademark), ELTRES, IEEE802.11h, and the like).

In addition, the wireless access scheme may include a duplex scheme such as FDD (frequency division duplex: full duplex communication by a plurality of frequency channels and carrier components), TDD (time division duplex, half duplex communication), HD (half duplex: half duplex communication), FD (full duplex: full duplex communication), STR (simultaneous transmission and reception: simultaneous transmission and reception by one or more frequency channels or component carriers), and subband non-overlapping duplex (FDD in a frequency channel or a component carrier). In addition, the wireless access scheme may be expressed by listing a plurality of standards.

Furthermore, for example, information regarding transmission power can also be an encryption target. The transmission power to be encrypted includes at least a part of the maximum transmission power and the minimum transmission power of the communication device. In addition, the maximum or minimum power available to the communication device and the maximum or minimum power desired to be used by the communication device may be notified as information regarding transmission power. Furthermore, information regarding transmission power may include a transmission power step (resolution, change width) that can be controlled by the communication device. The transmission power may be used for calculation (estimation) of the received signal power and the interference signal power, which is an object of the present disclosure, and thus may be notified from the communication device 40 to the communication control device 60.

Furthermore, for example, information regarding time usage can also be an encryption target. The time usage desirably includes at least one of a use start time desired by the communication device and a use end time desired by the communication device. When the time usage becomes clear, it becomes possible to select the target communication device or location for calculating the received signal power and interference signal, and an effect of efficient calculation (estimation) can be expected.

In addition, for example, a manufacturer and a distributor of a communication device and a model number and a serial number of a communication device can also be information to be encrypted. By notifying and using this information, for example, it may be possible to query all or part of the information on the communication device described above. As a result, an effect of reducing the amount of notification data from the communication device 40 to the communication control device 60 can be expected.

An object of the present disclosure is calculation (estimation) of expected or predicted received signal power and interference signal power between predetermined locations (two-dimensional or three-dimensional location, location of transmission communication device, location of reception communication device, location where there is no communication device, and the like). In addition, another object is to execute calculation (estimation) of progress information necessary for calculating the received signal power and the interference signal power in the communication control device 60. Progress information corresponds to, for example, a distance and a direction (two-dimensional direction and angle, three-dimensional direction and angle, horizontal direction and angle, and vertical direction and angle) between a plurality of locations to be calculated. Progress information also corresponds to, for example, a setting value and a radio wave propagation characteristic of a radio wave propagation model between a plurality of locations to be calculated. A setting value of a radio wave propagation model corresponds to, for example, an attenuation coefficient (e.g., attenuation coefficient with respect to distance) of a propagation attenuation amount, geographic model and terrain model selection (e.g., line-of-sight (LOS), non-line-of-sight (NLOS), urban area, suburban area, rural area, open area, areal, underground, underwater and ocean, and the like), and the like. A radio wave propagation characteristic corresponds to, for example, a radio wave attenuation amount (e.g., XX dB (decibel) attenuation) between a plurality of locations to be calculated.

[Communication parameter]

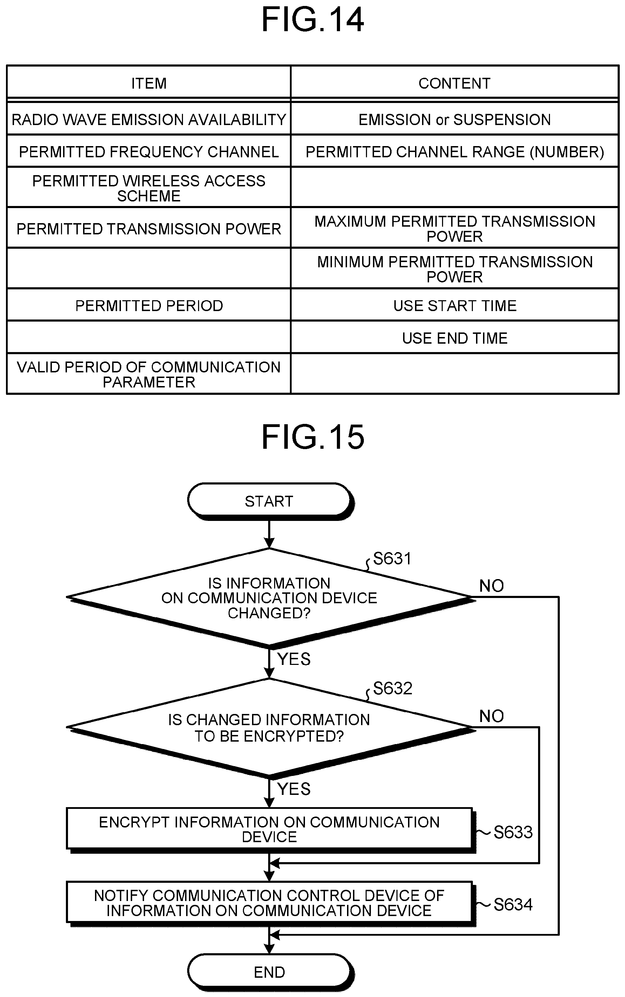

FIG. 14 is a diagram illustrating an example of communication parameters according to the embodiment of the present disclosure. FIG. 14 is a diagram illustrating an example of communication parameters to be used by the communication device 40 generated by the communication control device 60.

A communication parameter corresponds to, for example, information regarding whether or not radio wave emission by the target communication device is allowed (e.g., emission allowed, emission not allowed, suspended, or the like). Another communication parameter is set in a case where the emission is allowed (case where Grant is notified and set in communication device).

Furthermore, a communication parameter corresponds to, for example, information regarding a frequency channel that can be permitted. This information may be expressed by a frequency channel range or a physical range (e.g., lower limit frequency and upper limit frequency of frequency channel range), or may be expressed by a frequency channel number (channel 1 (2401 to 2423 MHz, 2.4 GHz band), channel 7 (5030 to 5040 MHz, 5 GHz band) of a wireless LAN, band 48 (3550 to 3700 MHz, 4G LTE) and band n79 (4400 to 5000 MHz, 5G NR) of the 3GPP (registered trademark) standard, and the like) defined in the radio law or the communication standard. In addition, a plurality of frequency channel ranges (numbers) may be listed and expressed. A permitted frequency channel is desirably a frequency channel included in an available frequency channel of the communication device. In addition, a permitted frequency channel is desirably a frequency channel that is included in a desired frequency channel of the communication device. Note, however, that a frequency channel that is not included in a desired frequency channel of the communication device (but is included in available frequency channel of communication device) may be included in a permitted frequency channel.

In addition, a communication parameter corresponds to, for example, a permitted wireless access scheme. The wireless access scheme corresponds to, for example, a standard related to Wi-Fi (registered trademark) (wireless LAN) (IEEE802.11a/b/g/n/ac/ax/be, Wi-Fi4/5/6/7, and the like), a standard related to a cellular system (2G(GSM (registered trademark), PDC)/3G(WCDMA (registered trademark), CDMA2000)/4G(LTE, LTE-Advanced)/5G(NR, NR-Advanced), 3GPP Release-8/9/10/11/12/13/14/15/16/17/18/19/20, UE Category 1/2/3/4/5/6/7/8/9/10/11/12/13/14/15, and the like). In addition, the wireless access scheme can be expressed by standards such as standards related to low power wide area (LPWA) and IoT communication (LoRa, sigfox, Zigbee, Bluetooth (registered trademark), ELTRES, IEEE802.11h, and the like).

In addition, the wireless access scheme may be expressed by listing a plurality of standards. The permitted wireless access scheme is desirably a wireless access scheme included in an available wireless access scheme of the target communication device.

Furthermore, a communication parameter corresponds to, for example, information on the permitted transmission power. In addition, the transmission power desirably includes at least one of the maximum transmission power and the minimum transmission power to be permitted to the communication device. The maximum permitted transmission power is desirably equal to or less than the maximum transmission power available to the communication device 40. Furthermore, the minimum permitted transmission power is desirably equal to or less than the minimum transmission power available to the communication device 40.

Furthermore, a communication parameter corresponds to, for example, information regarding a time permitted to the communication device. Specifically, it is desirable to include at least one of a use start time and a use end time permitted to the communication device.

[Processing of changing information on communication device]

FIG. 15 is a diagram illustrating an example of a processing procedure of information change processing of the communication device according to the first embodiment of the present disclosure. FIG. 15 is a flowchart illustrating an example of a processing procedure in a case where there is a change in information on the communication device 40. Encryption of information on the communication device may be executed not only when information is initially registered but also when information on the communication device 40 is changed. When information on the communication device is changed (Step S631, Yes), the communication device 40 determines whether the changed information is to be encrypted (Step S632). As a result, if the information is to be encrypted (Step S632, Yes), the information on the communication device is encrypted (Step S633), and the processing proceeds to step S634.

On the other hand, if the information is not to be encrypted (Step S632, No), the processing proceeds to step S634. In step S634, the communication device 40 notifies the communication control device 60 of the information on the communication device (Step S634). Note that if there is no change in the information on the communication device in step S631, the communication device 40 ends the processing without doing anything.

As a case where the information on the communication device is changed, for example, a change in location information due to moving or change of installation position of the communication device 40 is conceivable. Furthermore, as a case where the information on the communication device is changed, for example, a change in the antenna configuration due to a change or repair of an external antenna or the like is conceivable. Furthermore, as a case where the information on the communication device is changed, for example, a change in the desired use of communication (e.g., communication parameter, time, place, frequency band, and the like) is conceivable.

The communication device 40 may notify the communication control device 60 of information on an encryption scheme to be applied to the communication parameters received later from the communication control device 60 when registering the communication device in the communication control device 60 or in other procedures. In the present disclosure, information on the communication device is the main target of protection, but in a case where it is desired to also protect the calculation (estimation) result, the protection can be achieved by this additional information on the encryption scheme.

[Information encryption]

In the first embodiment, it is desirable to use an encryption scheme having homomorphism (homomorphic encryption, fully-homomorphic encryption, and the like) for encryption of information. "Homomorphism" means that Enc (m1om2) can be calculated without using an original plaintext or a secret key for encrypted texts Enc (m1) and Enc (m2) obtained by encrypting two plaintexts m1 and m2, respectively. It is assumed that the operation o is a binary operation such as addition (+) or multiplication ($\times$). A case where any operation (e.g., either addition or multiplication) of these operations is possible is referred to as homomorphism, and a case where all operations (e.g., both addition and multiplication) are possible is referred to as full homomorphism. Examples of the encryption having homomorphism include RSA encryption, ElGamal encryption, Modified-ElGamal encryption, and Paillier encryption.

More specifically, public key encryption having homomorphism is preferable. For example, an encryption key for encryption is used as a public key, and a decryption key for decrypting the cryptography is used as a private key. In the procedure illustrated in FIG. 6, when the communication control device 60 notifies the communication device 40 of the encryption scheme, this public key is included in the information and notified. As a result, the communication device 40 that receives the notification encrypts at least a part of the information on the communication device using the public key.

In a case where a plurality of communication devices 40 is registered in the communication control device 60, the communication control device 60 can specify and notify the same information encryption information regarding information encryption information used by the plurality of communication devices 40. Here, the same information encryption corresponds to, for example, the same encryption scheme or the same encryption key (public key). Furthermore, the use of the same encryption scheme and encryption key (public key) by a plurality of communication devices 40 at a certain time or within a certain range of time is also included in the same information encryption described here. In other words, for example, the encryption scheme and the encryption key may be different between a certain time and another time.

In a case where a plurality of communication devices 40 is registered in the communication control device 60, the communication control device 60 can also specify and notify different information encryption information regarding information encryption information used by the plurality of communication devices 40. Here, different information encryption corresponds to, for example, different encryption schemes or different encryption keys (public keys).

[Calculation using encrypted information]

In the first embodiment of the present disclosure, the communication control device 60 executes target calculation (estimation) by secret calculation using information on the communication device received from the communication device 40 or another communication control device 60. Specifically, the calculation unit 621 of the communication control device 60 performs encrypted secret calculation on the basis of information on the communication device 40 or the like. The items to be calculated (estimated) by executing the secret calculation correspond to, for example, (1) a distance and a direction regarding the communication device, (2) a radio wave propagation model (radio wave propagation characteristic) regarding the communication device, and (3) received signal power and interference signal power regarding the communication device.

The calculation (estimation) in the first embodiment is executed in an encrypted state to the end. In this case, it is conceivable that the communication parameters and the like of the communication device obtained from this result are also in an encrypted state. In this case, the target communication device 40 may be notified of the encrypted communication parameter. The communication device 40 that receives the encrypted communication parameter decrypts the encrypted communication parameter using the decryption key among the set encryption schemes.

In addition, the calculation (estimation) in the first embodiment may be executed in a state where the cryptography is decrypted in the process. In this case, it is conceivable that the communication parameters and the like of the communication device 40 obtained from this result are also in an unencrypted state. When notifying the communication device 40 of the information such as the communication parameter, the notification is given to the communication device 40 with the communication parameter encrypted again. Alternatively, the communication device 40 may be notified of the information such as the communication parameter with no encryption.

[Distance and direction]

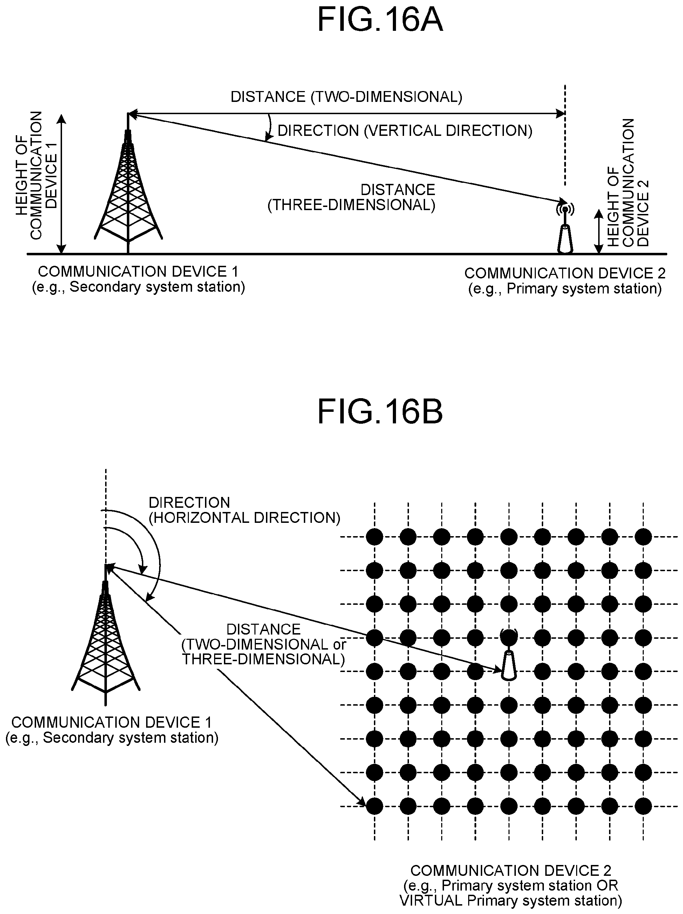

FIGS. 16A and 16B are diagrams illustrating examples of a distance and a direction according to the embodiment of the present disclosure. FIGS. 16A and 16B illustrate a distance between two communication devices (communication device 1 and communication device 2). These communication devices may have a relationship such as a transmission communication device and a reception communication device that receives a signal transmitted from the transmission communication device, or a relationship such as a transmission communication device and a reception signal device that receives a signal transmitted from the transmission communication device as interference. Two-dimensional distance and three-dimensional distance are considered as examples of distance. Two-dimensional distance corresponds to a case where the height information on the location to be calculated is not considered. Three-dimensional distance corresponds to a case where the height of the location to be calculated is also considered. As the direction, the horizontal direction and the vertical direction are conceivable. FIG. 16A illustrates the vertical direction. The vertical direction is determined by the difference in height of the calculation target.

FIG. 16B illustrates another example of the distance. FIG. 16B illustrates a distance between a communication device and another communication device, or a distance between the communication device and a virtual calculation target point (point at which communication device is assumed to exist), and the horizontal direction. In the present disclosure, the location of the communication device when the communication control device 60 calculates the received signal power and the interference signal power is not limited to the place where the communication device actually exists. For example, as illustrated in FIG. 16B, a specific location (black circle in FIG. 16B) around a certain communication device 2 may be set as the calculation target location. The periphery of the communication device 2 may be arranged in a mesh shape such that the locations of calculation targets (black circles) are uniform. Although FIG. 16B is an example viewed from above, the locations of the calculation targets (black circles) may be arranged in the height direction. That is, not only two-dimensional arrangement (arrangement on plane) but also three-dimensional arrangement (arrangement in plane + height direction) may be performed. Furthermore, a distance and a direction between two virtual calculation target points can be obtained.

[Calculation processing of distance and direction]

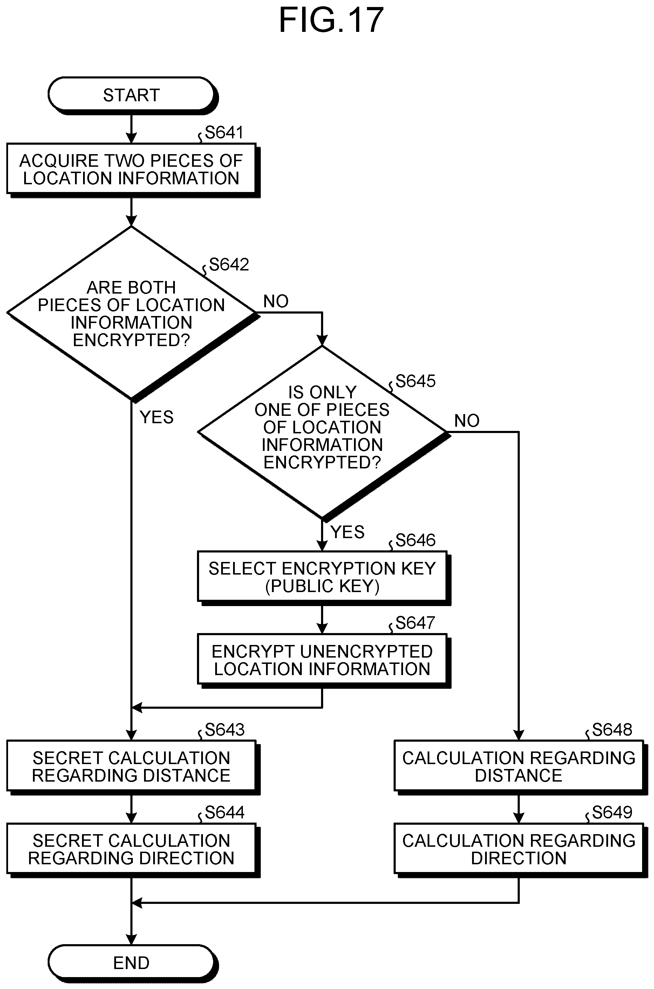

FIG. 17 is a diagram illustrating an example of a processing procedure of the distance and direction calculation processing according to the first embodiment of the present disclosure. FIG. 17 is a flowchart illustrating an example of a processing procedure of distance and direction calculation processing by the communication control device 60. The present disclosure corresponds to both a case where location information on the communication device (or location information used assuming that communication device is present) is encrypted and a case where the location information is not encrypted. As illustrated in FIGS. 16A and 16B, in order to calculate a distance and a direction between two points corresponding to the transmission communication device and the reception communication device, the communication control device 60 acquires two pieces of location information (Step S641). If both of the pieces of location information are encrypted (Step S642, Yes), the processing proceeds to Step S643.

If not both pieces of location information are encrypted (Step S642, No) and only one piece of location information is encrypted (Step S645, Yes), an encryption key (public key) is selected (Step S646), and the unencrypted location information is encrypted (Step S647). As a result, both pieces of location information are encrypted. Thereafter, the processing proceeds to step S643.

In step S643, the communication control device 60 performs secret calculation for distance (Step S643). Next, the communication control device 60 performs secret calculation for direction (Step S644), and ends the processing.

In step S645, if neither of the two pieces of location information is encrypted (Step S645, No), the communication control device 60 performs calculation regarding distance in a state where the two pieces of location information are not encrypted (Step S648), and performs calculation for direction (Step S649). Thereafter, the communication control device 60 ends the processing. By preparing such calculation processing according to the encryption state, it is advantageous in that calculation of the distance and the direction by the communication control device 60 can be performed even in a case where encryption is not essential due to circumstances or requirements on the communication device side or the wireless communication system side.

[Calculation of distance and direction]

In order to calculate the distance and the direction from the encrypted location information, the following mathematical expressions can be used. Note that in the first embodiment, operations (additive/subtractive multiplication/division, square root, trigonometric function, and the like) in the following mathematical expressions are assumed to be operations in secret calculation.

An example in which location information is given by coordinates of X, Y, and Z without considering the sphere of the earth will be described. Here, X is an east-west direction, Y is a north-south direction, and Z is a height. Each unit is, for example, a unit of length such as meters. When two pieces of encrypted location information Enc (Loc1) =[Enc (X1), Enc (Y1), Enc (Z1)] and Enc (Loc2) =[Enc (X2), Enc (Y2), Enc (Z2)] are given, the two-dimensional distance is obtained by the following equation.

$$D_{h,1\to2} = \sqrt{\left(Enc(X_1) - Enc(X_2)\right)^2 + \left(Enc(Y_1) - Enc(Y_2)\right)^2} \quad \cdots (1)$$

In addition, the three-dimensional distance is obtained by the following equation.

$$D_{v,1\to2} = \sqrt{D_{h,1\to2}^2 + \left(Enc(Z_1) - Enc(Z_2)\right)^2} \quad \cdots (2)$$

The azimuth angle in the horizontal direction viewed from location 1 is as follows. Here, the north direction is set to zero radian (rad).

$$\theta_{1\rightarrow2} = arccos\left(\frac{|Enc(Y_2) - Enc(Y_1)|}{D_{h,1\rightarrow2}}\right) \quad \cdots(3)$$

The azimuth angle in the horizontal direction viewed from location 2 is as follows. Here, the north direction is set to zero radian (rad).

$$\theta_{2\rightarrow1}=\theta_{1\rightarrow2}+\pi$$

The angle in the vertical direction viewed from location 1 is as follows. Here, the zenith direction is set to zero radian (rad).

$$\phi_{1\rightarrow2} = arccos\left(\frac{|Enc(Z_2) - Enc(Z_1)|}{D_{v,1\rightarrow2}}\right) \quad \cdots(4)$$

The angle in the vertical direction viewed from location 2 is as follows. Here, the zenith direction is set to zero radian (rad).

$$\phi_{2\rightarrow1}=\phi_{1\rightarrow2}+\pi$$

In the case of considering the sphere of the earth, an example in which the location information is given by coordinates of latitude A and longitude B will be described. When two pieces of encrypted location information Enc (Loc1) = [Enc (A1), Enc (B1)] and Enc (Loc2) =[Enc (A2), Enc (B2)] are given, the two-dimensional distance is obtained by the following equation. Here, the radius of the earth (equatorial radius) is defined as R.

$$D = Rarccos\big[sin\big(Enc(B_1)\big)sin\big(Enc(B_2)\big)$$
$$+ cos\big(Enc(B_1)\big)cos\big(Enc(B_2)\big)cos\big(Enc(A_2) - Enc(A_1)\big)\big] \quad \cdots(5)$$

The azimuth angle in the horizontal direction viewed from location 1 is as follows. Here, it is assumed that the north direction is zero degrees (deg), the east is 90 degrees, the south is 180 degrees, and the west is 270 degrees.

$$\varphi_{1\rightarrow2} = 90 - atan2\big[sin\big(Enc(A_2) - Enc(A_1)\big), cos\big(Enc(B_1)\big)tan\big(Enc(B_2)\big)$$
$$- sin\big(Enc(B_1)\big)cos\big(Enc(A_2) - Enc(A_1)\big)\big] \quad \cdots(6)$$

In addition to the above, a geodetic method such as an inverse solution or a forward solution of a so-called Vincency's formulae may be performed by secret calculation to obtain the distance, orientation, and the like.

[Radio wave propagation model]

Estimation and setting of a radio wave propagation model between two locations 1 and 2 are also important elements for calculation of received signal power and interference signal power, which is an object of the present disclosure. When a general-purpose model is applied, an attenuation amount L of signal power due to radio wave propagation can be expressed as follows. Here, a logarithmic (decibel, dB) expression is used.

$$L_{1\rightarrow2} = G_1\big(\theta_{1\rightarrow2},\phi_{1\rightarrow2}\big) + L_p\big(D_{h,1\rightarrow2}, D_{v,1\rightarrow2}, Loc_1, Loc_2, F_C, Map\big) + G_2\big(\theta_{2\rightarrow1},\phi_{2\rightarrow1}\big) \quad \cdots(7)$$

Here, G represents an antenna gain at a target location (e.g., location of transmission communication device, location of reception communication device, and the like). This antenna gain can be a function of a horizontal angle θ and a

vertical angle $\phi$. Lp represents a (pure) radio wave propagation characteristic between two locations. Fc represents a carrier frequency assumed in calculation (estimation) of the radio wave propagation model. Map represents geographic information, terrain information, map information, and the like referred to in the calculation (estimation) of the radio wave propagation characteristic (hereinafter referred to as geographic information as representative). Note that in general, $L_{1\rightarrow 2} = L_{2\rightarrow 1}$ is often assumed.

When the elements are further divided, the (pure) radio wave propagation characteristic can be expressed as follows, for example.

$$L_p = L_D\big(D_{h,1\rightarrow 2}, D_{v,1\rightarrow 2}, Enc(Loc_1), Enc(Loc_2), F_C, Proc(Map)\big)$$
$$+ L_S(Enc(Loc_1), F_C, Proc(Map))$$
$$+ L_S(Enc(Loc_2), F_C, Proc(Map))$$
$$+ L_F(Enc(Loc_1), F_C, Proc(Map), t)$$
$$+ L_F(Enc(Loc_2), F_C, Proc(Map), t)$$

$$\cdots (8)$$

Here, LD represents a term (so-called distance attenuation) that depends on a distance between two locations. LS represents attenuation (so-called shadowing) due to shielding or the like around a certain location. LF represents time-dependent attenuation (so-called fading) such as reflection, scattering, diffraction, and movement generated between certain locations.

There are a wide variety of models of the radio wave propagation characteristic, but the radio wave propagation characteristic can be roughly summarized as follows. Furthermore, these are not completely independent models, and there may be models having composite characteristics.

(1) Deterministic model

This is a model that mainly corresponds to LD in the above formula. For example, a free space model and an exponential decay model are applicable.

(2) Stochastic statistical model (stochastic, probabilistic)

This is a model that mainly corresponds to LS and LF in the above formula. For example, shadowing (shadowing, log-normal fading) and fading (small-scale fading, fast fading) are applicable.

(3) Geographic model (geographic, location-specific)

This is a model that often adopts more detailed geographic information, terrain information, map information, and the like. For example, Hata model, irregular terrain model (ITM), ITU-R P. 1546, and ITU-R P. 452 are applicable. Note that this does not mean that the other models do not use geographic information and the like.

[Radio wave propagation model calculation processing]

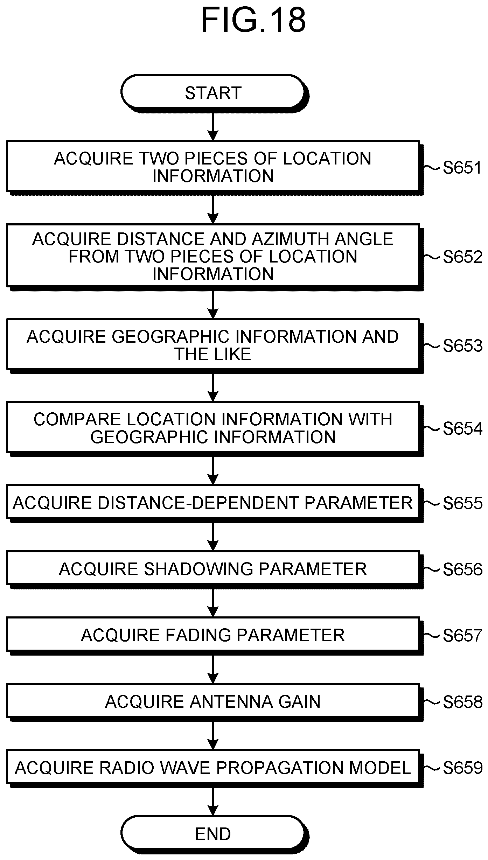

FIG. 18 is a diagram illustrating an example of a processing procedure of radio wave propagation model calculation processing according to the embodiment of the present disclosure. FIG. 18 is a flowchart illustrating an example of a processing procedure of radio wave propagation model calculation processing of the communication control device 60. First, the communication control device 60 acquires two pieces of location information (encrypted location information) (Step S651). Next, the communication control device 60 acquires a distance, an azimuth angle, and the like from the two pieces of location information (Step S652). The acquisition of the distance and the azimuth angle can be performed by applying the above-described method. Next, the communication control device 60 acquires geographic information and the like (Step S653).

Next, the communication control device 60 compares the location information with the geographic information (Step S654), and acquires the distance-dependent parameter necessary for calculation (estimation) of the radio wave propagation characteristic (Step S655). Here, the value of the distance-dependent characteristic in the radio wave propagation characteristic corresponds to, for example, an exponential coefficient (square law, cube law, quadrature law, and $\alpha$ power law ($\alpha$ is a real number), and the like) of an exponential attenuation model or an environment setting (open lands, suburban areas, small and medium cities, large cities, and the like) in a Hata model, or the like.

Next, the communication control device 60 acquires a shadowing parameter (Step S656). Here, a shadowing parameter corresponds to, for example, a variance value ($\sigma_S$ decibel ($\sigma_S$ is a real number), or the like) in a case of being modeled by log-normal distribution.

Next, the communication control device 60 acquires a fading parameter (Step S657). Here, the value of a fading characteristic corresponds to, for example, a delay wave number of multipath propagation, a power level of each delay wave, a delay time, a fading distribution model (Rayleigh fading, Rician fading, and the like), and a K-factor.

Next, the communication control device 60 acquires an antenna gain (Step S658). This can be performed by calculating (estimating) the antenna gain at the target location using the azimuth angle (horizontal direction, vertical direction) acquired from location information. Next, the communication control device 60 integrates the acquired radio wave propagation characteristic, antenna gain, and the like, calculates (estimates) a radio wave propagation attenuation amount of the radio wave propagation model as a whole, and acquires the radio wave propagation model (Step S659).

In the processing of comparing location information with geographic information in step S654 described above, the geographic information or the like is processed in order to cope with a case where the information (e.g., location information) of the communication device is encrypted. This is because normal geographic information or the like cannot be directly compared with encrypted location information since the location information or the like is in its bare form (XYZ coordinates, latitude and longitude, or the like). In this case, the communication control device 60 compares the encrypted location information with encrypted geographic information to generate the radio wave propagation characteristic.

[Geographic information]

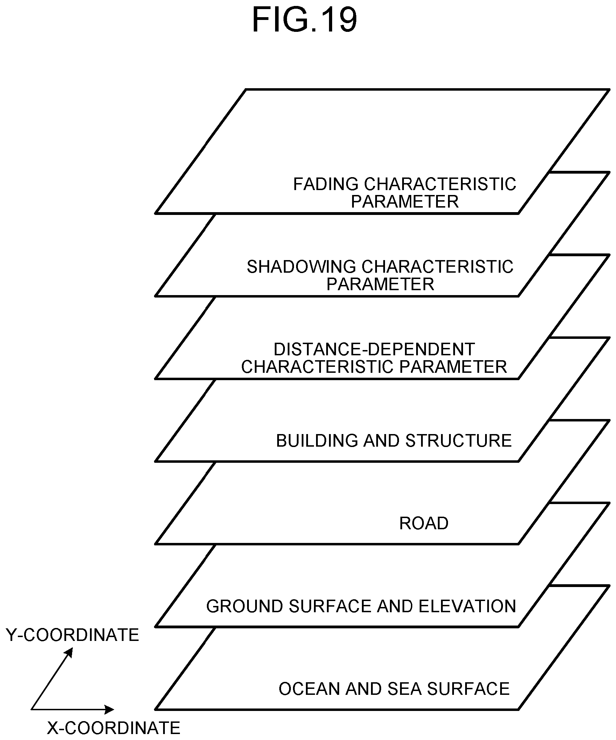

FIG. 19 is a diagram illustrating an example of geographic information according to an embodiment of the present disclosure. FIG. 19 is a diagram illustrating an example of a data structure of geographic information. In order to estimate and set the radio wave propagation model, it is necessary to consider a plurality of attributes and factors in geography, terrain, a map, and the like as illustrated in FIG. 19. For example, attributes and factors that are relatively close to nature and natural environments, such as the ocean, the sea surface, the ground surface, and the altitude, are conceivable. The attributes and factors of the ocean, the sea surface, the ground surface, and the altitude may include, in addition to height information, the water quality, the geology, the material, a radio wave reflection coefficient and a transmission coefficient associated with the water quality, the geology, and the material, and the like. In addition, attributes and factors close to artificial objects such as roads, buildings, and structures are also conceivable. The attributes and factors of roads, buildings, and structures also include the size, the material, a radio wave reflection coefficient and a transmission coefficient associated with the material, and the like. In addition, the attributes and factors related to the radio wave propagation characteristic described above may be directly included in geographic information. For example, a distance-dependent characteristic, a shadowing characteristic, a fading characteristic, and the like correspond thereto.

[Processing of geographic information]

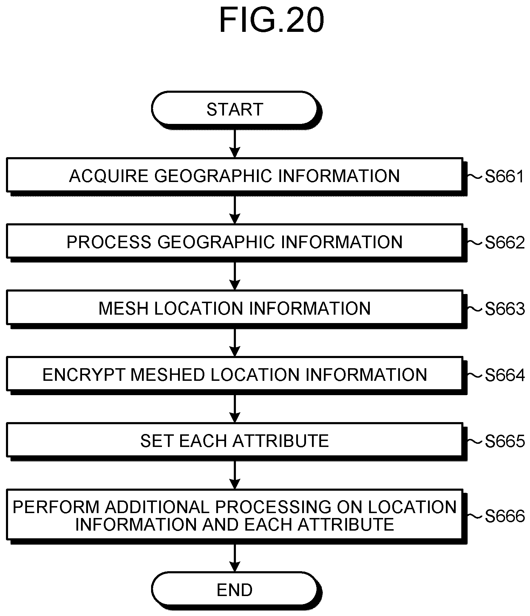

FIG. 20 is a diagram illustrating an example of a processing procedure of processing of geographic information according to the embodiment of the present disclosure. FIG. 20 is a flowchart illustrating an example of a processing procedure of processing of geographic information by the communication control device 60. First, the communication control device 60 acquires original geographic information and the like before processing (Step S661). Next, the communication control device 60 processes the acquired geographic information (Step S662). This processing corresponds to, for example, the data structuring in FIG. 19.

Next, the communication control device 60 meshes information regarding location (e.g., coordinates) in the geographic information (Step S663). The meshing is, for example, processing to divide and express the information into one or more predetermined polygons (e.g., triangles, quadrangles, pentagons, hexagons, and the like) in the XY plane. Each of the polygons corresponds to a mesh. The location and coordinates of the center of the mesh are assumed to be the location and coordinates of the mesh.

Next, the communication control device 60 encrypts information regarding the meshed location (Step S664). This encryption is desirably the same as the method used for encrypting the information on the communication device. That is, in a case where a common encryption method is used in a plurality of communication devices 40, the same encryption method is also applied to the geographic information. As a result, the processed geographic information can also be common. On the other hand, in a case where the encryption method is changed in each of the communication devices 40, the encryption method for each of the communication devices 40 is also applied when processing the geographic information. In this case, a plurality of (e.g., the number of communication devices) pieces of processed geographic information is generated.

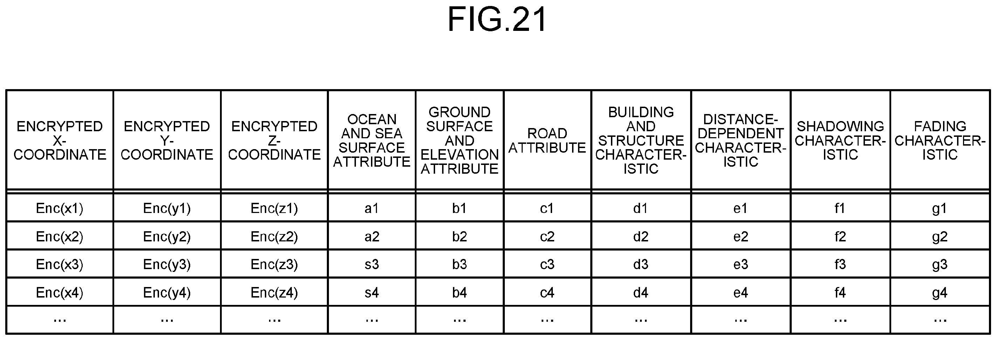

Next, the communication control device 60 sets and associates values of the attributes and factors of the geographic information for each mesh (Step S665). This setting and association correspond to, for example, creation of geographic information data in a table format as illustrated in FIG. 21 described later. Note that as illustrated in FIG. 21, it is desirable that the processed geographic information data does not include original location information and coordinate information (e.g., bare form in x, y, z). Including the original location information and coordinate information enables reverse lookup of location information, and protection of information on the communication device, which is the problem of the present disclosure, is hindered.

The communication control device 60 may perform additional processing on the processed data such as the geographic information (Step S666). This makes it possible to further alleviate the above-described problem of reverse lookup. As the additional processing, for example, swapping of attribute data within a predetermined attribute (column direction), intentional processing on the attribute data value (noise addition, scrambling, interleaving, permutation), anonymization on the attribute data value, concealment on the attribute data value, and the like can be considered. In intentional processing on attribute data values, it is desirable not to create a unique combination of attribute data values in geographic information data. This is because, for example, in a case where a combination of values of ocean and sea surface, ground surface and elevation, road, building and structure, distance-dependent characteristic, shadowing characteristic, and fading characteristic exists at only one place (specific location Enc (x'), Enc (y'), Enc (z')) in geographic information data, reverse lookup can be practically performed. In order to prevent reverse lookup, it is desirable to perform processing such that at least K combinations of certain attribute data values occur in geographic information data.

In FIG. 20, meshing of information regarding location is not necessarily performed. However, it should be noted that if the information is not meshed, the amount of data such as geographic information after processing will increase enormously. That is, in the present disclosure, by meshing information regarding location, it is possible to curb the amount of data such as geographic information after processing. Furthermore, by meshing, it is possible to simplify the comparison work between the encrypted location information and the processed geographic information. It should be noted that if the information is not meshed, the particle size and resolution of the comparison will theoretically be infinitely small, and the number of times of comparison will be enormous.

It can be said that the processing of geographic information in the present disclosure is desirably performed by the communication control device 60, for example. Furthermore, in addition to the communication control device 60, the communication device 40 or another communication control device may perform the processing.

The processing of geographic information in the present disclosure can also be executed within a safety area as described later. As a result, the communication control device 60 itself that processes geographic information or the like cannot know the process of processing of the geographic information or the like. It is possible to further make it difficult to perform reverse lookup of location information on the communication device 40 using the processed geographic information data.

[Geographic information data]

FIG. 21 is a diagram illustrating an example of geographic information data according to the embodiment of the present disclosure. FIG. 21 is a diagram illustrating an example of geographic information data after processing in the processing of FIG. 20. As illustrated in FIG. 21, geographic information data can have a structure in which attributes such as the ocean and interface attribute are associated with encrypted coordinates.

The value of the distance-dependent characteristic in FIG. 21 corresponds to, for example, an exponential coefficient (square law, cube law, quadrature law, and $\alpha$ power law ($\alpha$ is a real number), and the like) of an exponential attenuation model or an environment setting (open lands, suburban areas, small and medium cities, large cities, and the like) in a Hata model, or the like. Furthermore, the value of the shadowing characteristic corresponds to, for example, a variance value ($\sigma\_S$ decibel ($\sigma\_S$ is a real number), or the like) in a case of being modeled by log-normal distribution. The value of a fading characteristic corresponds to, for example, a delay wave number of multipath propagation, a power level of each delay wave, a delay time, a fading distribution model (Rayleigh fading, Rician fading, and the like), and a K-factor.

The geographic information data in FIG. 21 may be further generated for each frequency band. Since the radio wave propagation characteristic has frequency dependence, it is possible to more accurately calculate (estimate) the radio wave propagation characteristic by having a plurality of pieces of geographic information data in accordance with this circumstance. Furthermore, in a case where there is geographic information data related to a plurality of frequency bands, the encrypted location and coordinate information may be shared. This makes it possible to reduce the number of times of comparison using the location and coordinate information as keys when comparing the encrypted location information with the geographic information data. For example, in a case where geographic information exists for M frequency bands, the number of times of comparison in a case where the location and the coordinate information are shared is 1/M as compared with a case where the location and the coordinate information are not shared.

[Comparison processing between location information and geographic information data]

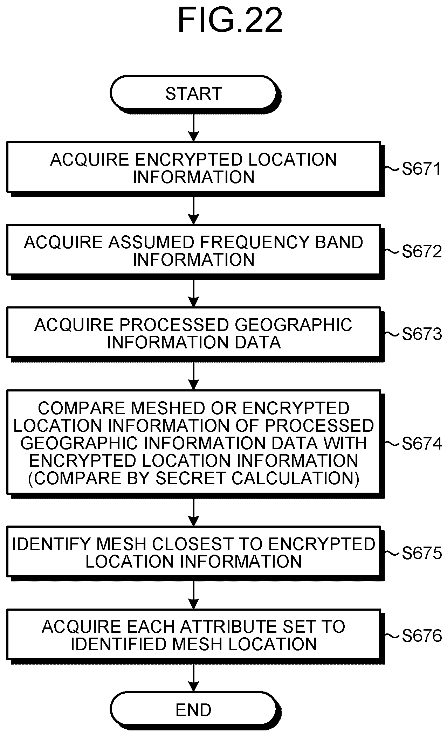

FIG. 22 is a diagram illustrating an example of a processing procedure of comparison processing between location information and geographic information data according to the embodiment of the present disclosure. FIG. 22 is a flowchart illustrating an example of a processing procedure of comparison processing between encrypted location information and processed geographic information data in the communication control device 60. First, the communication control device 60 acquires geographic information data and encrypted location information to be queried (Step S671). Next, the communication control device 60 acquires frequency band information assumed when a specific frequency band is desired or designated (Step S672). Next, the communication control device 60 acquires processed geographic information data corresponding to the frequency band based on the acquired frequency band information (Step S673).

Next, the communication control device 60 compares the meshed and encrypted location information and coordinate information in the processed geographic information data with location information to be queried (Step S674). Next, the communication control device 60 identifies a mesh having the closest encrypted location information to be queried on the basis of the comparison result (Step S675). Next, the communication control device 60 acquires the attribute and factor data values (specific column in FIG. 21) set and associated with the identified mesh location (Step S676).

[Identification of mesh]

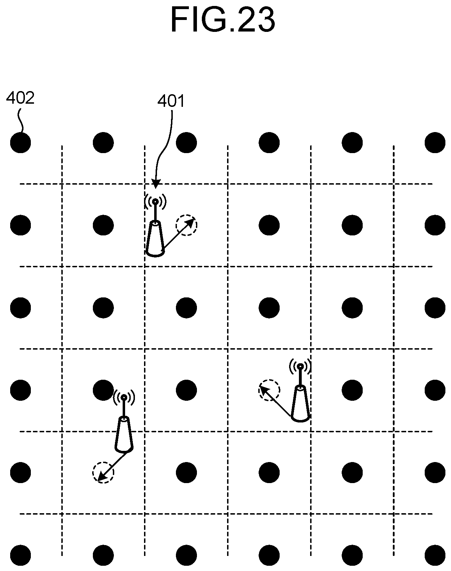

FIG. 23 is a diagram illustrating a specific example of a mesh according to the embodiment of the present disclosure. FIG. 23 is a diagram for describing identification of a mesh in the processing of FIG. 22. In FIG. 23, a dotted rectangle represents a mesh. Furthermore, a communication device 401 represents a location indicated by encrypted location information. In addition, a black circle represents a location indicated by meshed location information. Further, a dashed circle represents an identified mesh. As illustrated in FIG. 23, distances between meshed and encrypted location information and encrypted location information to be queried are compared, and the closest mesh is identified.

[Received signal power and interference signal power]

In the present disclosure, the received signal power and the interference signal power when the radio wave propagation model, the radio wave propagation attenuation amount, and the communication parameters desired by the communication device and the communication system are used are calculated. A received signal power $P_R$ when radio waves and a signal transmitted from a certain location 1 (e.g., location of target communication device) are received at another location 2 (location of another communication device, or location at which another communication device can be assumed to be present) can be calculated (estimated) as follows, for example (expressed in decibels).

$$P_{R,1\rightarrow2} = P_{T,1} - L_{1\rightarrow2}$$

Here, $P_{T,1}$ is transmission power desired (or used) by the communication device at location 1. The above equation can be applied to calculation and estimation of an interference signal. That is, an interference signal power I can be calculated or estimated as follows.

$$I_{1\rightarrow2} = P_{T,1} - L_{1\rightarrow2}$$

The interference signal power needs to consider not only an interference signal from one communication device but also a sum of interference signals (e.g., aggregate interference) from a plurality of communication devices. When considering the aggregate interference of signals from a plurality of locations n, the aggregate interference power $I_{Agg,2}$ at location 2 can be calculated (estimated) as follows:

$$I_{Agg,2} = 10 \log_{10} \left( \sum_n 10^{\frac{I_{n\rightarrow2}}{10}} \right) \quad \cdots (9)$$

In the above mathematical expression, in a case where there is no encrypted term (no description of Enc ()), but information such as a communication parameter desired by the communication device 40 is encrypted and the communication control device 60 is notified of the encrypted information, the above calculation can also be executed by secret calculation using a homomorphic characteristic. In this case, secret calculation may be executable by temporarily encrypting a value (e.g., propagation propagation attenuation amount) other than the communication parameter used for calculation. That is, the above calculation may be performed with secret calculation as follows (operator Enc () in following equation represents secret calculation operation).

$$P_{R,1 \to 2} = Enc(P_{T,1}) - Enc(L_{1 \to 2})$$

$$I_{1 \to 2} = Enc(P_{T,1}) - Enc(L_{1 \to 2})$$

[Communication parameter (availability)]

In the present disclosure, it is assumed that the communication control device 60 sets and notifies the communication parameters of the communication device 40. One of the assumed communication parameters, is availability of wireless communication with respect to the communication device 40. Availability of wireless communication in the target frequency band corresponds to a case where the target communication device 40 belongs to the position of a secondary system or a case where a frequency band that is the same as or overlaps with a frequency band used by the communication device 40 belonging to another communication system is to be used.

[Use schedule information]

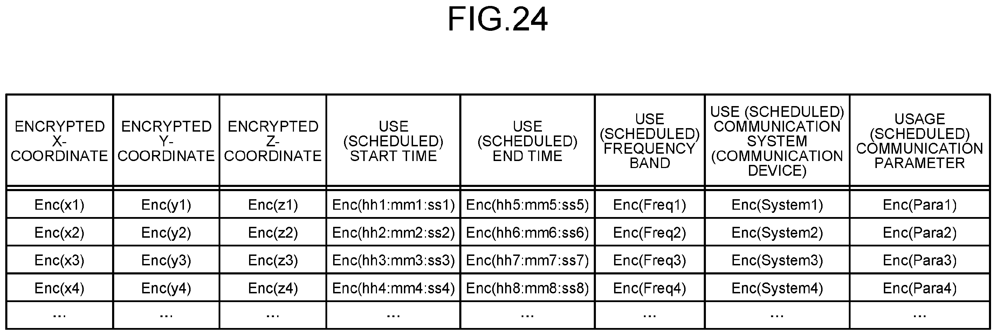

FIG. 24 is a diagram illustrating an example of use schedule information according to the embodiment of the present disclosure. FIG. 24 is a diagram illustrating an example of a method of holding use schedule information on communication systems (communication devices) regarding place, time, and frequency band held by the communication control device 60. In FIG. 24, for example, at location x1, y1, and z1, it means that a communication system System1 (and communication device belonging to System1) uses communication in a frequency band Freq1 between times hh1: mm1: ss1 and hh5: mm5: ss5. During this communication use, the target communication system and the communication device 40 use a communication parameter Para1. In such a usage status or use schedule, it is desirable that the information to be recorded is encrypted. This is because, as described earlier, the information listed in the table may be information that the user and the owner of the communication system and the communication device want to be kept concealed. Therefore, there is a possibility that encryption is performed at the time of notification from the communication device 40 to the communication control device 60.

[Communication use request acceptability determination processing]

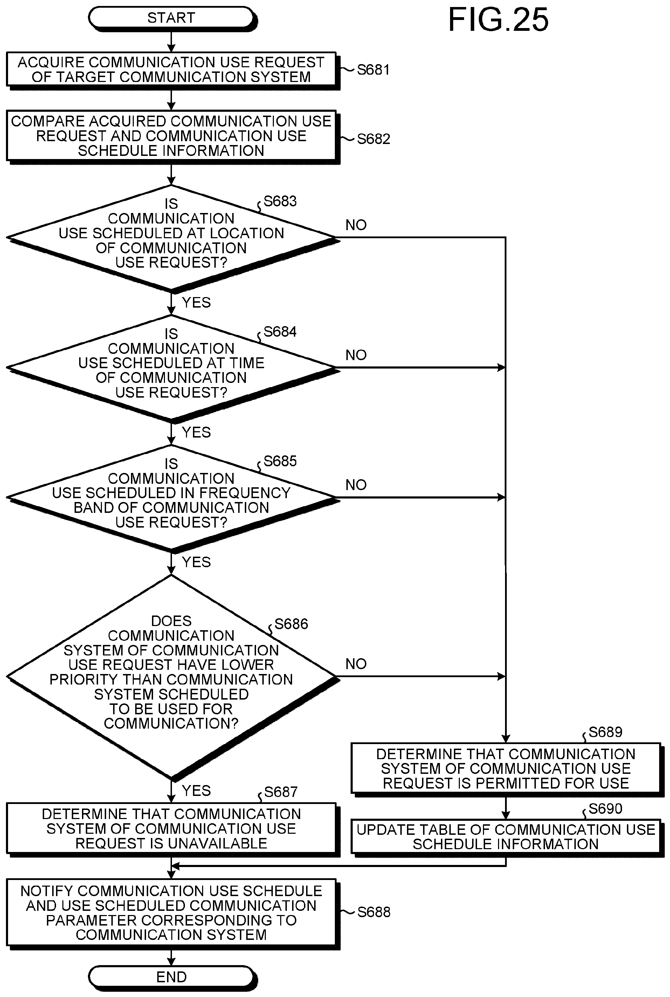

FIG. 25 is a diagram illustrating an example of a processing procedure of a communication use request acceptability determination processing according to the embodiment of the present disclosure. FIG. 25 is a flowchart illustrating an example of an acceptability determination processing for a communication use request from the communication device 40 in the communication control device 60. First, a communication use request is acquired from a target communication system or a communication device belonging to the communication system (Step S681). It is assumed that the communication use request includes a request to use a specific place, time, and frequency band. This may be notified by (encrypted) information notified from the communication device 40 to the communication control device 60 in the processing of FIG. 6 described above, a request for registration from the communication device 40 to the communication control device 60, or the like.

The communication control device 60 compares the acquired communication use request with use schedule information on the communication system and the communication device held by the communication control device 60 (Step S682). Specifically, it is determined whether or not the place, time, and frequency band required in the communication use request are used by another communication system or the communication device 40.

The communication control device 60 determines whether communication use is scheduled at the location of the communication use request (Step S683), and if communication use is not scheduled at the location of the communication use request (Step S683, No), the processing proceeds to step S689. On the other hand, if communication use is scheduled at the location of the communication use request (Step S683, Yes), the communication control device 60 determines whether communication use is scheduled at the time of the communication use request (Step S684). If communication use is not scheduled at the time of the communication use request (Step S684, No), the processing proceeds to step S689.

On the other hand, if communication use is scheduled at the time of the communication use request (Step S684, Yes), the communication control device 60 determines whether communication use is scheduled in the frequency band of the communication use request (Step S685). If communication use is not scheduled in the frequency band of the communication use request (Step S685, No), the processing proceeds to step S689. On the other hand, if communication use is scheduled in the frequency band of the communication use request (Step S685, Yes), the communication control device 60 determines whether the communication system of the communication use request has a lower priority than the communication system scheduled to be used for communication (Step S686). If the communication system of the communication use request does not have a lower priority than the communication system scheduled to be used for communication (Step S686, No), the processing proceeds to step S689.

On the other hand, if the communication system of the communication use request has a lower priority than the communication system scheduled to be used for communication (Step S686, Yes), the communication control device 60 determines that the communication system of the communication use request is unavailable (Step S687), and proceeds to the processing of step S688.

In step S689, the communication control device 60 determines that the communication system of the communication use request is permitted for use (Step S689). Next, the communication control device 60 updates the table of the communication use schedule information (Step S690), and proceeds to the processing of step S683. In step S688, the communication control device 60 notifies the communication use schedule and the use scheduled communication parameter corresponding to the communication system (Step S688), and ends the processing.

As illustrated in FIG. 25, when all of the place, time, and frequency band are scheduled for use, the communication control device 60 determines that that the communication use request is unacceptable. If not (when at least one of place, time, and frequency band does not overlap), the communication control device 60 determines to grant permission to the communication use request. As for overlapping of frequency bands, it may be considered as overlapping when at least one of FIG. 4 above applies. In addition, as another way of considering overlapping of frequency bands, as in (1), (3), (4), and (5) of FIG. 4, the frequency bands that are not actually used by the primary system and the frequency bands that are considered to have no interference from the secondary system to the primary system may be considered as not overlapping. As for overlapping of time usage, it may be considered as overlapping when at least one of FIG. 5 above applies. In addition, as another way of considering overlapping of time usage, as in (1), (3) to (5), and (6) of FIG. 5, the time that is not actually used by the primary system and the time that is considered to have no interference from the secondary system to the primary system may be considered as not overlapping.

In a case of determining not to accept a communication use request, if it is not possible to permit the communication use request as it is, but is possible to give permission by changing the frequency band, the time, and the communication parameter (changing direction to reduce use opportunity from original request), the changed frequency band, time, and communication parameter may be notified together with the determination that the communication use request is unacceptable. Similarly, in a case of determining to permit a communication use request, if it is not possible to permit the communication use request as it is, but is possible to give permission by changing the frequency band, the time, and the communication parameter (changing direction to reduce use opportunity from original request), the changed frequency band, time, and communication parameter may be notified as the determination that the communication use request is permitted.

In a case of giving permission to the communication use request, the communication control device 60 updates use schedule information. For example, the communication control device 60 adds or rewrites the content of the communication use request received from the communication device 40 or the content permitted from the communication control device 60 to the communication device 40 to the table of the use schedule information. In addition, depending on the level of priority of the communication system and the communication device, updating and rewriting may be performed such that the use schedule originally in the table of the use schedule information is deleted or reduced.

After a determination of permission or prohibition of the communication use request from the communication device 40 is given, the target communication device 40 is notified of the determination result. The target communication device 40 here is the communication device 40 that has submitted a communication use schedule or the communication device 40 whose use schedule has been deleted. In a case of giving permission or prohibition accompanied by a change in the frequency band, the time, the communication parameter, and the like, the information after the change may be notified together or individually.

[Communication parameter (transmission power)]

The set communication parameter corresponds to transmission power (allowable maximum transmission power) of the communication device 40. As a criterion for setting the transmission power, it is conceivable to set received signal power that can be received by a reception communication device (or location where reception communication device is assumed to be present) from a certain transmission communication device to be equal to or higher than a required level.

Assuming that a required received signal power in the reception communication device (referred to as communication device 2) is $P_{req,2}$, it is conceivable that a necessary transmission signal power $P_{alloc,1}$ of the transmission communication device (referred to as communication device 1) that can be a communication partner of the reception communication device is given under the following conditions. Here, $P_{max,1}$ is the maximum transmission power under the specification of the transmission communication device.

$$P_{alloc,1} \geq P_{req,2} + L_{1\rightarrow2}$$

$$P_{alloc,1} \leq P_{max,1}$$

The communication control device 60 calculates the transmission power (allowable maximum transmission power) of the communication device so as to satisfy the above conditions. This calculation may be performed by secret calculation using information on the encrypted communication device.

[Transmission power calculation processing]

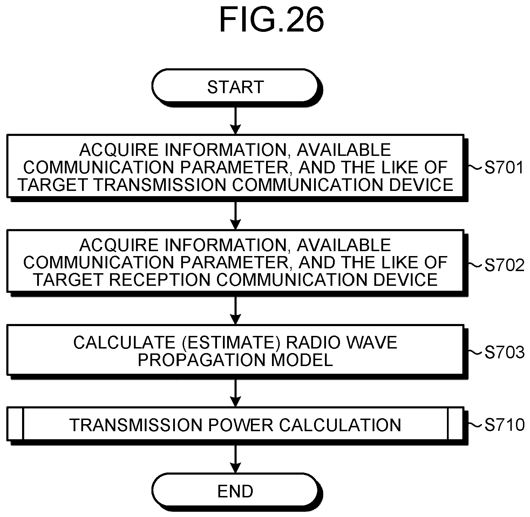

FIG. 26 is a diagram illustrating an example of a processing procedure of transmission power calculation processing according to the embodiment of the present disclosure. FIG. 26 is a flowchart illustrating an example of processing of calculating the allowable maximum transmission power of the transmission communication device on the basis of the required received signal power of the reception communication device in the communication control device 60. First, the communication control device 60 acquires information, available communication parameters, and the like of a target transmission communication device (Step S701). Next, the communication control device 60 acquires information, available communication parameters, and the like of a target reception communication device (Step S702). Next, the communication control device 60 calculates or estimates a radio wave propagation model between the communication devices by the above-described method (Step S703). Next, the communication control device 60 performs transmission power calculation processing (Step S710), and ends the processing.

[Transmission power calculation processing]

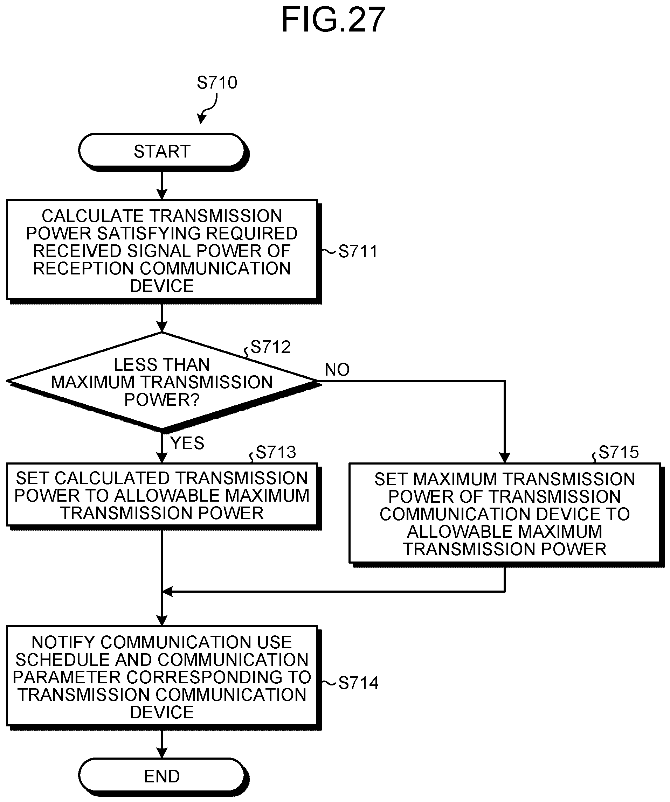

FIG. 27 is a diagram illustrating an example of a processing procedure of transmission power calculation processing according to the embodiment of the present disclosure. FIG. 27 is a flowchart illustrating an example of processing in step S710 in FIG. 26. First, the communication control device 60 calculates transmission power that satisfies the required received signal power of the reception communication device (Step S711). Next, the communication control device 60 determines whether the calculated transmission power is less than the maximum transmission power of the transmission communication device (Step S712). If the calculated transmission power is less than the maximum transmission power of the transmission communication device (Step S712, Yes), the communication control device 60 sets the calculated transmission power to the allowable maximum transmission power (Step S713), and proceeds to the processing of step S714.

On the other hand, if the calculated transmission power is not less than the maximum transmission power of the transmission communication device (Step S712, No), the communication control device 60 sets the maximum power of the transmission communication device to the allowable maximum transmission power (Step S715), and proceeds to the processing of step S714. In step S714, the communication control device 60 notifies the communication use schedule and the communication parameter corresponding to the transmission communication device (Step S714). Thereafter, the communication control device 60 returns to the original processing.

[Other example of transmission power]

As another criterion for setting, it is conceivable to set interference signal power (aggregate interference signal power) that can be received by a reception communication device (or location where reception communication device is assumed to be present) from a certain (one or more) transmission communication device to be equal to or less than an allowable level (allowable interference signal power level) for the reception communication device.

Assuming that an allowable maximum interference signal power in the reception communication device (referred to as communication device 2) is $I_{accept,2}$, it is conceivable that a required transmission signal power $P_{alloc,1}$ of the transmission communication device (referred to as communication device 1) that can be an interference signal source to the reception signal device is given under the following conditions.

$$P_{alloc,1} \leq P_{qaccept,2} + L_{1\rightarrow2}$$

$$P_{alloc,1} \leq P_{max,1}$$

Furthermore, in a case where the aggregate interference from the plurality of communication devices 40 is also taken into consideration, it is conceivable to set the aggregate interference power to satisfy the allowable interference signal power of the reception communication device by allocating and distributing the allowable interference power (or transmission power) to the plurality of transmission communication devices. The following equation is an example of calculation of the allowable maximum transmission power of the nth transmission communication device in a case where a condition is added that an allowable interference power allocated and distributed to the nth transmission communication device is $I_{accept,n \rightarrow 2}$.

$$P_{alloc,n} \leq I_{accept,n \rightarrow 2} + L_{n \rightarrow 2}$$

$$P_{alloc,n} \leq P_{max,n} \qquad \cdots (10)$$

$$I_{accept,2} \geq \sum_{n} I_{accept,n \rightarrow 2}$$

[Other example of transmission power calculation processing]

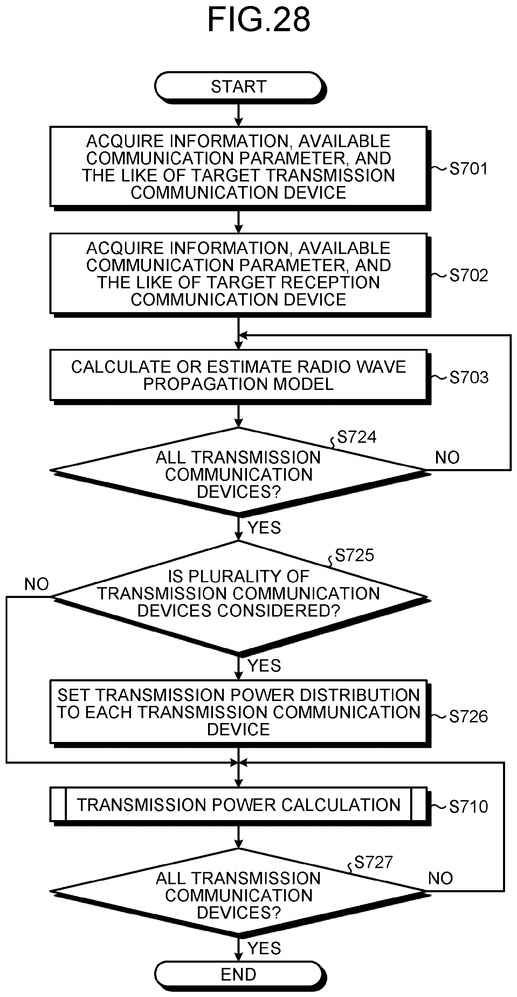

FIG. 28 is a diagram illustrating another example of the processing procedure of the transmission power calculation processing according to the embodiment of the present disclosure. Similarly to FIG. 26, FIG. 28 is a flowchart illustrating an example of processing of calculating the allowable maximum transmission power of the transmission communication device on the basis of the required received signal power of the reception communication device in the communication control device 60. The processing in FIG. 28 is different from the processing in FIG. 26 in consideration of a plurality of transmission communication devices and aggregate interference.

First, the communication control device 60 performs the processing of step S701 and step S702 described in FIG. 26. Next, the communication control device 60 performs the processing of step S703 on all the transmission communication devices (Step S724). Next, the communication control device 60 determines whether to consider a plurality of transmission communication devices (Step S725). As a result, in a case where a plurality of transmission communication devices is considered (Step S725, Yes), the communication control device 60 sets transmission power distribution to each transmission communication device (Step S726), and proceeds to the next processing.

Next, the communication control device 60 performs transmission power calculation (Step S710) for all the transmission communication devices (Step S727), and ends the processing.

In this manner, the communication control device 60 acquires information and available communication parameters of the communication device, and calculates (estimates) the radio wave propagation model between the communication devices by the method as described above. The radio wave propagation model is desirably calculated (estimated) for the number of combinations of the transmission communication device and the reception communication device. Then, on the basis of the calculated radio wave propagation model, the required received signal power of the reception communication device, the allowable interference signal power allocated or distributed to the transmission communication device (or transmission power allocated or distributed to transmission communication device), and the maximum transmission power of the transmission communication device, the allowable maximum transmission power of the transmission communication device is set in consideration of the above conditions.

[Communication parameter (wireless access scheme and frequency band)]

As one of the settings of communication parameters in the present disclosure, selection of a wireless access scheme can be considered. A wireless access scheme corresponds to, for example, 4G LTE/5G NR/6G which is a cellular system (mobile phone system), IEEE802.11a/b/g/n/ac/ax/be which is a wireless LAN, and Wi-Fi 4/5/6/7/8 (or a further advanced standard of Wi-Fi). Since it is conceivable that a wireless access scheme that can be used or a wireless access scheme having good characteristics changes depending on the location of the communication device, there may be a request for using a good wireless access scheme in a state where the location information on the communication device is protected.

[Wireless access scheme characteristic information]

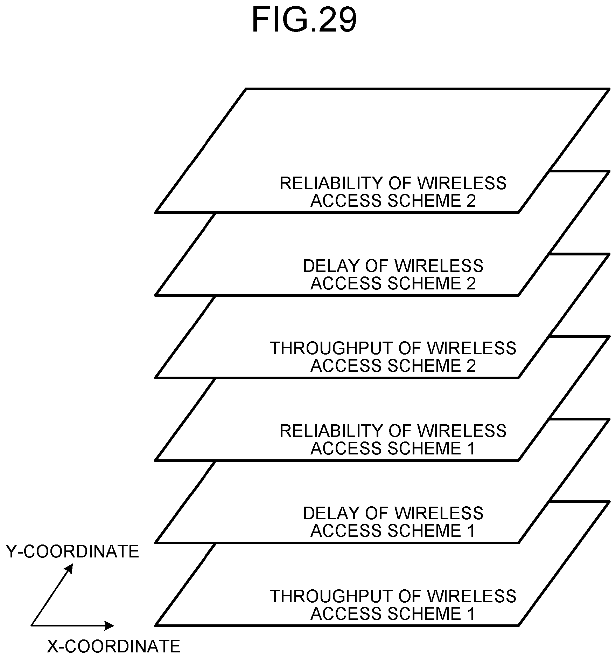

FIG. 29 is a diagram illustrating an example of wireless access scheme characteristic information according to the embodiment of the present disclosure. FIG. 29 is a diagram illustrating an example of a data structure of wireless access scheme characteristic information. The data structure of the wireless access scheme characteristic information in FIG. 29 can be implemented in a format similar to the data structure of the geographic information described in FIG. 19.

In order to set the wireless access scheme used by the communication device as in the present disclosure, it is necessary to consider characteristics related to a plurality of wireless access schemes as in FIG. 29. In addition, it is necessary to consider a plurality of characteristic indices in one wireless access scheme. The throughput, delay, and reliability of the wireless access scheme in FIG. 29 are examples of the characteristic index. It can be said that these are characteristic indices close to basic evaluation indices in communication. Although not included in FIG. 29, indices of environmental performance and economic efficiency such as power consumption, $Co_2$ consumption, and communication charges may be included in addition to throughput, delay, and reliability.

[Processing of wireless access scheme characteristic information]

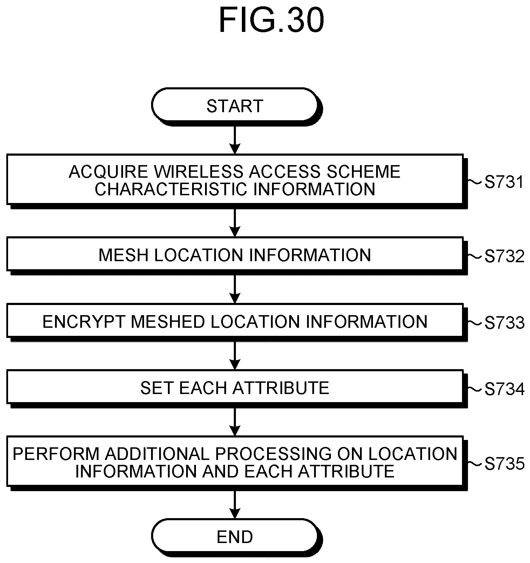

FIG. 30 is a diagram illustrating an example of a processing procedure of the processing of wireless access scheme characteristic information according to the embodiment of the present disclosure. FIG. 30 is a flowchart illustrating an example of a processing procedure of processing of wireless access scheme characteristic information on the communication control device 60. First, the communication control device 60 acquires, for example, wireless access scheme characteristic information that is an original before processing (Step S731). The wireless access scheme characteristic information corresponds to, for example, a result of converting the wireless access scheme characteristics of FIG. 29 into data.

Next, the communication control device 60 meshes information regarding a location (e.g., coordinates) in the wireless access scheme characteristic information (Step S732). Here, meshing corresponds to, for example, processing to divide and express the information into one or more predetermined polygons (e.g., triangles, quadrangles, pentagons, hexagons, and the like) in the XY plane. Furthermore, each of the polygons is set as a mesh, and processing of setting the location and coordinates of the center of the mesh as the location and coordinates of the mesh is performed.

Next, the communication control device 60 encrypts information regarding the meshed location (Step S733). This encryption is desirably the same as the method used for encrypting the information on the communication device. That is, in a case where a common encryption method is used in a plurality of communication devices 40, the same encryption method is also applied to the wireless access scheme characteristic information. As a result, the processed wireless access scheme characteristic information can also be common. On the other hand, in a case where the encryption method is changed in each of the communication devices 40, the encryption method for each of the communication devices 40 is also applied when processing the wireless access scheme characteristic information. In this case, a plurality of (e.g., the number of communication devices) pieces of processed wireless access scheme characteristic information is generated.

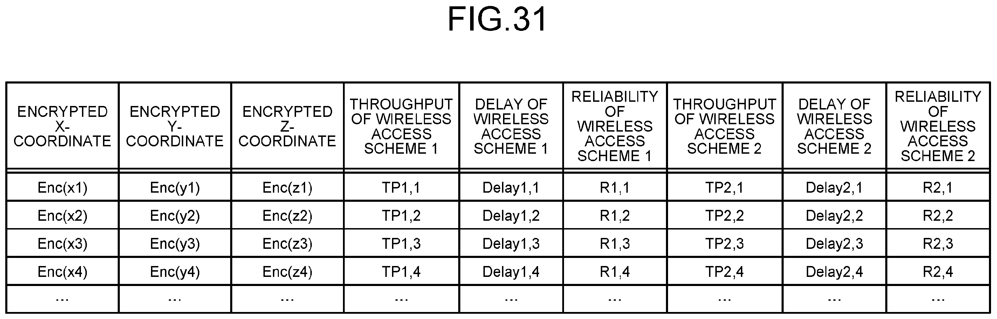

After the meshed location and coordinates are encrypted, the value of the characteristic index of the wireless access scheme characteristic information is set and associated for each mesh (Step S734). This setting and association correspond to, for example, creation of wireless access scheme characteristic information data in a table format as illustrated in FIG. 31 described later. Note that as illustrated in FIG. 31, it is desirable that the processed wireless access scheme characteristic information data does not include original location information and coordinate information (e.g., bare form in x, y, z). Including the original location information and coordinate information enables reverse lookup of location information, and protection of information on the communication device, which is the problem of the present disclosure, cannot be achieved.

The communication control device 60 may further perform additional processing on the processed data such as the wireless access scheme characteristic information (Step S735). This makes it possible to further alleviate the above-described problem of reverse lookup. As the additional processing, for example, swapping of index data within a predetermined wireless access scheme and index (column direction), intentional processing on the index data value (noise addition, scrambling, interleaving, permutation), anonymization on the attribute data value, concealment on the attribute data value, and the like can be considered. In intentional processing on index data values, it is desirable not to create a unique combination of index data values in the wireless access scheme characteristic information data. This is because, for example, in a case where a combination of values of throughput, delay, and reliability of a plurality of wireless access schemes exists at only one place (specific location Enc (x'), Enc (y'), Enc (z')) in the wireless access scheme characteristic information data, reverse lookup can be practically performed. In order to prevent reverse lookup, it is desirable to perform processing such that at least K combinations of certain index data values occur in the wireless access scheme characteristic information data.

In FIG. 30, meshing of information regarding location is not necessarily performed. However, it should be noted that if the information is not meshed, the amount of data such as wireless access scheme characteristic information after processing will increase enormously. That is, in the present disclosure, by meshing information regarding location, it is possible to curb the amount of data such as wireless access scheme characteristic information after processing. Furthermore, by meshing, it is possible to simplify the comparison work between the encrypted location information and the processed wireless access scheme characteristic information. It should be noted that if the information is not meshed, the particle size and resolution of the comparison will theoretically be infinitely small, and the number of times of comparison will be enormous.

It can be said that the processing of wireless access scheme characteristic information in the present disclosure is desirably performed by the communication control device 60, for example. Furthermore, in addition to the communication control device 60, it is considered that the communication device 40 or another communication control device may perform the processing.

The processing of wireless access scheme characteristic information in the present disclosure can also be executed within a safety area as described later. As a result, the communication control device 60 itself that processes wireless access scheme characteristic information or the like cannot know the process of processing of the wireless access scheme characteristic information or the like. It is possible to further make it difficult to perform reverse lookup of location information on the communication device 40 using the processed wireless access scheme characteristic information data.

[Wireless access scheme characteristic information]

FIG. 31 is a diagram illustrating an example of data of wireless access scheme characteristic information according to the embodiment of the present disclosure. FIG. 31 is a diagram illustrating an example of wireless access scheme characteristic information data after processing in the processing of FIG. 30. As illustrated in FIG. 31, data of the wireless access scheme characteristic information can have a structure in which attributes such as throughput of the wireless access scheme are associated with encrypted coordinates.

The wireless access scheme characteristic information data in FIG. 31 may be further generated for each frequency band. Since it can be assumed that the characteristics of the wireless access scheme have frequency dependence, it is possible to achieve more accurate selection and estimation of the wireless access scheme by having a plurality of pieces of wireless access scheme characteristic information data in accordance with this circumstance.

In a case where there is wireless access scheme characteristic information data related to a plurality of frequency bands, the encrypted location and coordinate information may be shared. An advantage of sharing the location and coordinate information in this manner is a reduction in the number of times of comparison using the location and coordinate information as a key when comparing the encrypted location information with the wireless access scheme characteristic information data. For example, in a case where wireless access scheme characteristic information exists for M frequency bands, in a case where the location and coordinate information are shared, the comparison can be completed with the number of times of comparison of 1/M as compared with a case where the location and coordinate information are not shared.

[Comparison processing between location Information and wireless access scheme characteristic information data]

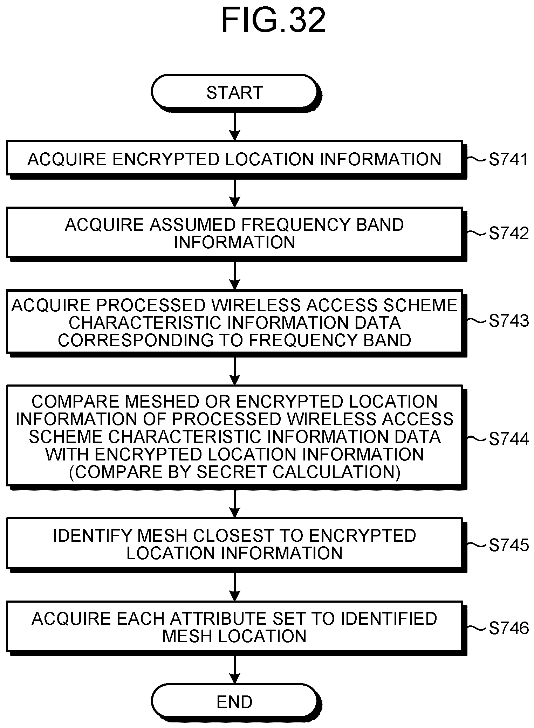

FIG. 32 is a diagram illustrating an example of a processing procedure of comparison processing between location information and wireless access scheme characteristic information data according to the embodiment of the present disclosure. FIG. 32 is a flowchart illustrating an example of a processing procedure of comparison processing between encrypted location information and processed wireless access scheme characteristic information data in the communication control device 60. First, the communication control device 60 acquires geographic information data and encrypted location information to be queried (Step S741). Next, the communication control device 60 acquires frequency band information assumed when a specific frequency band is desired or designated (Step S742). Next, the communication control device 60 acquires processed wireless access scheme characteristic information data corresponding to the frequency band based on the acquired frequency band information (Step S743).

Next, the communication control device 60 compares the meshed and encrypted location information and coordinate information in the processed wireless access scheme characteristic information data with location information to be queried (Step S744). Next, the communication control device 60 identifies a mesh having the closest encrypted location information to be queried on the basis of the comparison result (Step S745). Next, the communication control device 60 acquires the attribute and factor data values (specific column in FIG. 31) set and associated with the identified mesh location.

Note that the identification of the mesh having the closest encrypted location information in the processing in step S745 can be performed by processing similar to that in FIG. 23.

[Wireless access scheme and frequency band selection processing]

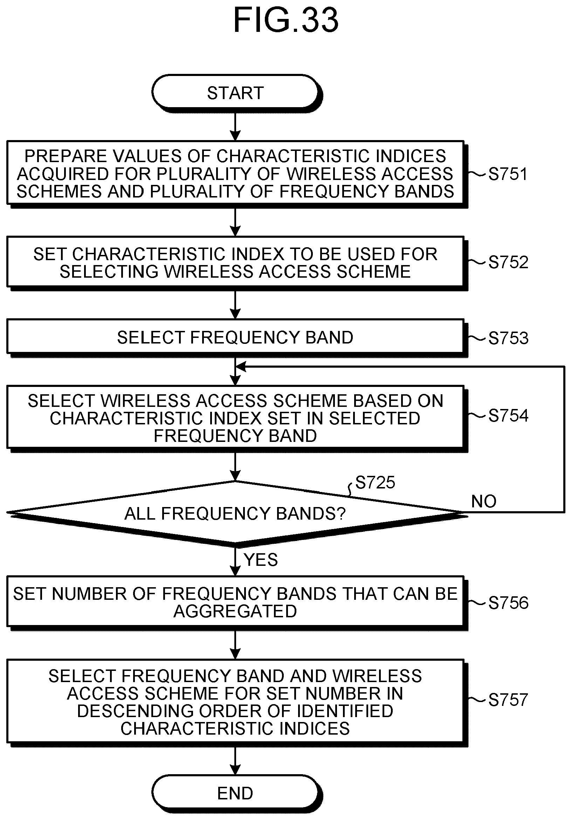

FIG. 33 is a diagram illustrating an example of a processing procedure of wireless access scheme and frequency band selection processing according to the embodiment of the present disclosure. FIG. 33 is a flowchart illustrating an example of a processing procedure of comparison processing between encrypted location information and processed wireless access scheme characteristic information data in the communication control device 60.

First, the communication control device 60 prepares values of the characteristic indices acquired for a plurality of wireless access schemes and a plurality of frequency bands (Step S751). Next, the communication control device 60 sets a characteristic index to be used for selection of a wireless access scheme and a frequency band (Step S752). For example, the communication control device 60 selects, as an index, throughput when it is desired to achieve high-speed communication, delay amount when it is desired to achieve low-delay communication, and reliability or the like when it is desired to achieve reliable communication. This index is not limited to a single index, but may be selected in combination.

Next, the communication control device 60 selects a frequency band (Step S753). Next, the communication control device 60 selects a wireless access scheme on the basis of the characteristic index set in the selected frequency band (Step S754). In a case where there are a plurality of frequency bands as targets, the communication control device 60 performs the processing of step S754 for all the frequency bands (Step S725). The communication control device 60 selects the best wireless access scheme for each characteristic index.

After selecting the wireless access scheme in all the frequency bands, the communication control device 60 sets the number of frequency bands that can be aggregated (Step S756). Note that, in a case where aggregation is not possible, the communication control device 60 sets a value 1. Next, the communication control device 60 selects a frequency band corresponding to the set number and a wireless access scheme selected in the frequency band in descending order of the characteristic index (Step S757). The communication control device 60 notifies the target communication device 40 of the frequency band and the wireless access scheme selected in the above processing.

[Communication parameter (communication permitted area)]

Another example of the communication parameter assumed in the present disclosure corresponds to calculation (estimation) of an area related to communication of a target communication device or communication system. Examples of the area include an area in which communication by the target communication device 40 (or communication system) is permitted, an area in which communication is not permitted (disabled and prohibited) (e.g., exclusion zone), and a separation distance (minimum separation distance) from another communication device 40 (or another communication system). These areas are expressed planarly (two-dimensionally) or spatially (three-dimensionally). In addition, these areas may be expressed as a boundary line and a surface (contour) of the surface and the space.

[Communication permitted area and communication disabled area]

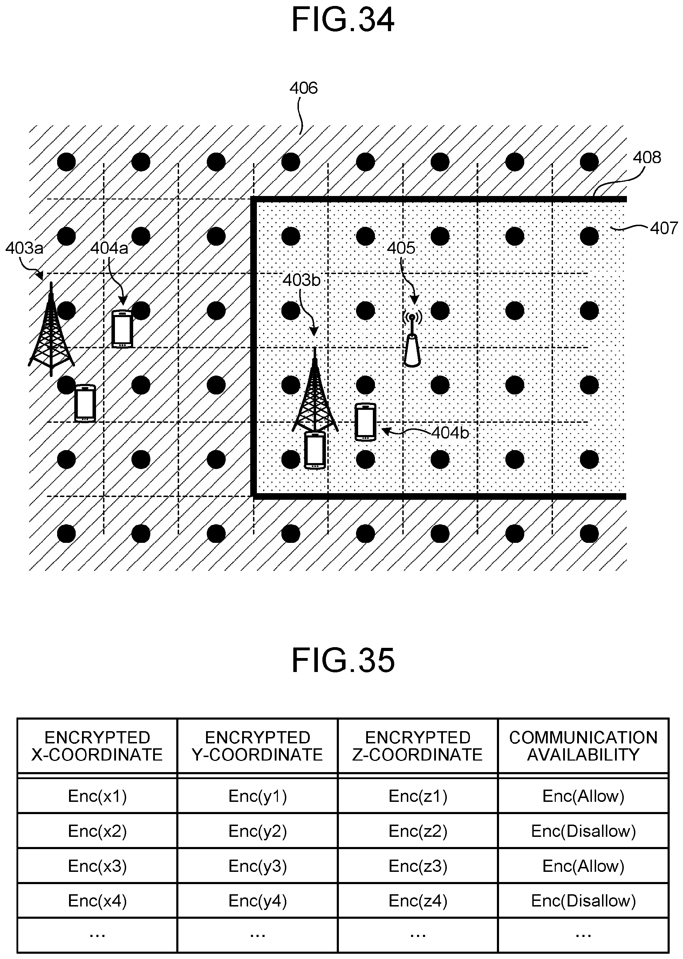

FIG. 34 is a diagram illustrating an example of a communication permitted area and a communication disabled area according to the embodiment of the present disclosure. FIG. 34 is a diagram illustrating an example of a communication permitted area, a communication disabled area, and boundaries thereof for a communication system and a communication device (e.g., secondary system) to be controlled. A communication device 403a and a communication device 403b in FIG. 34 represent communication systems (and communication devices) to be controlled. These communication systems correspond to secondary communication systems. A communication device 405 represents another communication system (or communication device). This communication system corresponds to, for example, a primary communication system. An area 406 represents an area in which the control target can communicate. An area 407 represents an area in which the control target cannot communicate. Further, a boundary line 408 represents a boundary between communicable areas and uncommunicable areas. Other than these, the same notation as that in FIG. 23 is used.

As illustrated in FIG. 34, in a case where there is another communication system and communication device (e.g., primary system or system having higher priority than target) such as the communication device 405, it is conceivable that it is determined that communication is not permitted for the communication device 403b in an area relatively close to the other communication device. On the other hand, it is conceivable that the communication device 403a at a certain distance from the other communication device (communication device 405) is determined to be in a communication permitted area.

Note that in FIG. 34, an example in which areas are regularly gridded is illustrated, but the areas do not necessarily have to be regularly gridded. For example, it is also possible to express the boundary line in a curved line instead of a straight line. In addition, the sizes of the grids can be expressed to be different from each other.

[Determination of communication area]

An example of calculation, estimation, and determination of the communication area will be described. When the communication device 40 to be controlled uses a transmission power $P_{T,SS}$, the communication permitted area can be obtained by determining (a set of) location information $Loc_{allow}$ satisfying the following conditions.

$$Loc_{allow} \ni arg_{Loc_{SS}}\left(I_{SS \to PS} \leq I_{accept,PS} \middle| Loc_{SS}, Loc_{PS}, P_{T,SS}\right) \quad \cdots (11)$$

That is, when the other communication device is at a location $Loc_{PS}$ and an allowable interference power is

$I_{accept,PS}$, a (set of) location $Loc_{SS}$ where the interference power when it is assumed that the communication device to be controlled is at the location $Loc_{SS}$ is equal to or less than the allowable interference power is the communication permitted area $LOC_{allow}$.

When the communication device to be controlled uses a transmission power $P_{T,SS}$, the communication disabled area can be obtained by determining (a set of) location information $LoC_{disallow}$ satisfying the following conditions.

$$Loc_{disallow} \ni arg_{Loc_{SS}}\left(I_{SS \rightarrow PS} > I_{accept,PS} \middle| Loc_{SS}, Loc_{PS}, P_{T,SS}\right) \qquad \cdots (12)$$

That is, when the other communication device is at the location $Loc_{PS}$ and the allowable interference power is $I_{accept,PS}$, a (set of) location $Loc_{SS}$ where the interference power when it is assumed that the communication device to be controlled is at the location $Loc_{SS}$ exceeds the allowable interference power is the communication disabled area $LOC_{disallow}$.

In a combination of a certain control target communication device and another communication device, it is conceivable that $Loc_{allow}$ and $LOC_{disallow}$ are a set that does not overlap with each other. Therefore, for example, when a set of location information on the entire area targeted by the present disclosure is $Loc_{all}$, after obtaining $Loc_{allow}$, $LOC_{disallow}$ may be determined as a set obtained by excluding $Loc_{allow}$ from the entire set $Loc_{all}$.

$$Loc_{disallow} = Loc_{all} - Loc_{allow} \qquad \cdots (13)$$

Conversely, after obtaining $LoC_{disallow}$, $Loc_{allow}$ may be determined as a set obtained by excluding $LoC_{disallow}$ from the entire set $Loc_{all}$.

$$Loc_{allow} = Loc_{all} - Loc_{disallow} \qquad \cdots (14)$$

When the communication device to be controlled uses the transmission power $P_{T,SS}$, the boundary between the communication disabled area and the communication permitted area can be obtained by determining (a set of) location information $Loc_{contour}$ satisfying the following conditions.

$$Loc_{contour} \ni arg_{Loc_{SS}}\left(I_{accept,PS} - \varepsilon_{Low} \leq I_{SS \rightarrow PS} \leq I_{accept,PS} + \varepsilon_{High} \middle| Loc_{SS}, Loc_{PS}, P_{T,SS}\right)$$

$$\cdots (15)$$

That is, when the other communication device is at the location $Loc_{PS}$ and the allowable interference power is $I_{accept,PS}$, (a set of) location $Loc_{SS}$ where the interference power when the communication device to be controlled is assumed to be at the location $Loc_{SS}$ falls within a predetermined range related to the allowable interference power is the boundary $Loc_{contour}$. In the above equation, $\varepsilon$ is a coefficient that defines an interference power range for obtaining a boundary. $\varepsilon$ is desirably a non-negative number. When $\varepsilon$ is zero, $Loc_{contour}$ will indicate a line. When $\varepsilon$ is non-zero, $Loc_{contour}$ is a boundary line but will have a certain area or volume.

When the communication device to be controlled uses the transmission power $P_{T,SS}$, the required separation distance (minimum separation distance) from another communication device can be obtained by determining a distance $D_{separate}$ satisfying the following conditions.

$$D_{separate} = min_{Loc_{SS}, Loc_{PS}, P_{T,SS}}\left(D_{SS \rightarrow PS} \middle| I_{SS \rightarrow PS} \leq I_{accept,PS}\right) \qquad \cdots (16)$$

That is, when the other communication device is at the location $Loc_{PS}$ and the allowable interference power is $I_{accept,PS}$, in the location $Loc_{SS}$ where the interference power when the communication device to be controlled is assumed to be at the location $Loc_{SS}$ is equal to or less than the allowable interference power, the minimum value of the distance between $Loc_{SS}$ and $Loc_{PS}$ is the separation distance $D_{separate}$.

[Data in communication permitted area and communication disabled area]

FIG. 35 is a diagram illustrating an example of data of a communication permitted area and a communication disabled area according to the embodiment of the present disclosure. FIG. 35 is a diagram illustrating an example in which a communication permitted area and a communication disabled area are held as geographic information. As illustrated in FIG. 35, communication availability (Allow, Disallow) may also be encrypted and held.

[Deregistration of communication device]

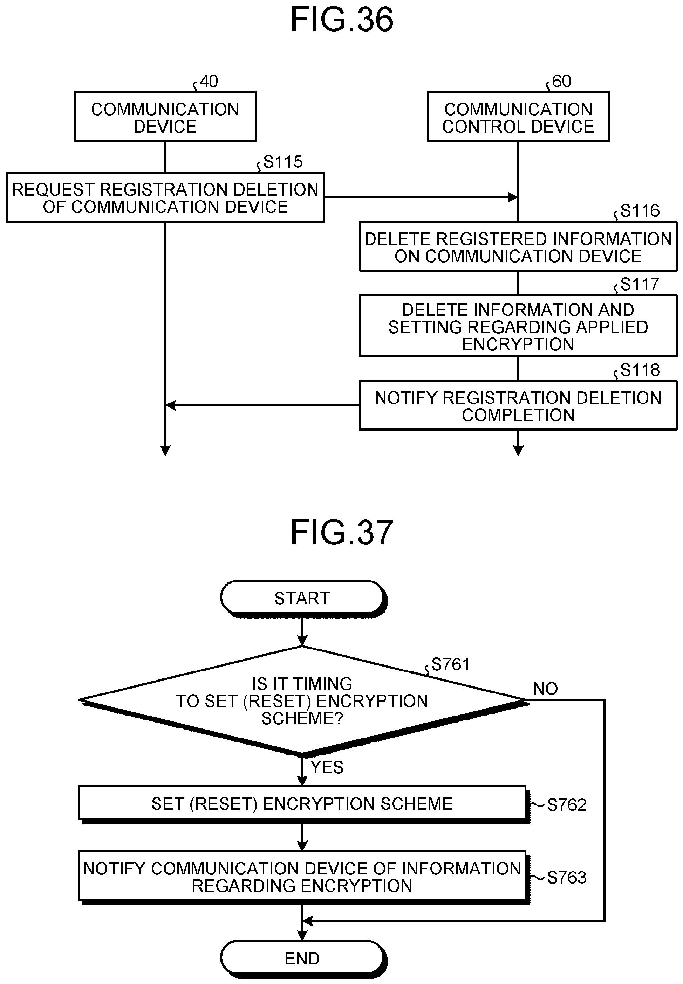

FIG. 36 is a diagram illustrating an example of a deregistration procedure of the communication device according to the embodiment of the present disclosure. FIG. 36 is a diagram illustrating an example of a deregistration procedure between the communication device 40 and the communication control device 60. First, the communication device 40 requests registration deletion of the communication device (Step S115). When receiving a registration deletion request regarding a specific communication device, the communication control device 60 deletes registered information regarding the communication device 40 (Step S116). Next, in a case where encryption has been applied, the communication control device 60 deletes the information and setting regarding the applied encryption (Step S117). After completion of the deletion processing, the communication control device 60 notifies the communication device 40 of registration deletion completion (Step S118). By deleting the information on the communication device, it is possible to more reliably protect privacy of the information on the communication device.

Regarding the registration deletion of the communication device, it is conceivable that the target communication device 40 itself requests the registration deletion. Furthermore, as another example, it is conceivable that a device other than the target communication device 40 or a person requests registration deletion. Furthermore, examples of a trigger for deletion other than the registration deletion request include a case where it is found that the target communication device 40 has used a setting contrary to a communication parameter or the like specified by the communication control device 60, and a case where it is found that interference power that is not allowable by another communication system has been given. When the communication control device 60 notifies the communication device 40 of the registration deletion completion, the reason for the registration deletion may be notified together. As a result, the target communication device 40 can interpret whether the deletion is in line with its own intention or unintended, and can change the subsequent response. As an example of the response, for example, it is conceivable to issue a request for a communication parameter that reduces interference with another communication system.

[Valid period of encryption scheme]

The encryption scheme set in the communication device 40 may be changed regularly or irregularly. As a result, it can be expected that privacy protection of information on the communication device 40 is more reliably performed.

[Encryption scheme setting and resetting processing]

FIG. 37 is a diagram illustrating an example of a processing procedure of an encryption scheme setting and resetting processing according to the embodiment of the present disclosure. FIG. 37 is a flowchart illustrating an example of a processing procedure of setting and resetting of an encryption scheme applied to the communication device 40 in a case where the communication control device 60 sets the encryption scheme. The communication control device 60 determines whether it is a timing to set or reset the encryption scheme (Step S761). If it is a timing to set or reset the encryption scheme (Step S761, Yes), the communication control device 60 sets or resets the encryption scheme applied to the communication device 40 (Step S762). Next, the communication control device 60 notifies the communication device 40 of information regarding the encryption scheme after the setting or resetting (Step S763), and completes the processing. On the other hand, in step S761, if it is not a timing to set or reset the encryption scheme (Step S761, No), the communication control device 60 completes the processing without doing anything.

As the change of an item when resetting, for example, it is conceivable to change the encryption key and the public key without changing the encryption scheme. As a result, the amount of notification of information after resetting can be reduced as much as possible. In addition, as the change of an item when resetting, for example, it is also conceivable to change the encryption scheme. As a result, it can be expected that the protection of the information on the communication device is further ensured.

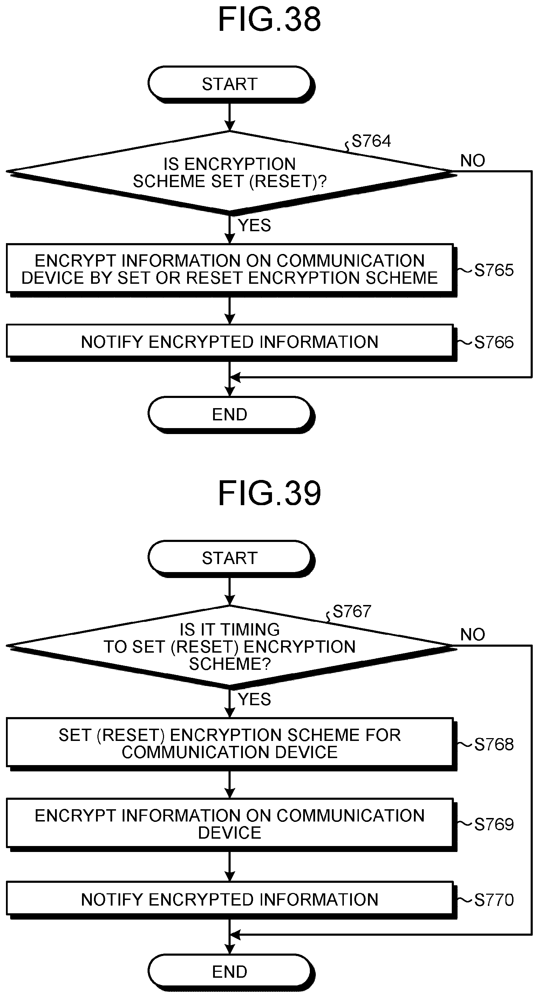

FIG. 38 is a diagram illustrating an example of a processing procedure of encryption scheme setting and resetting processing according to the embodiment of the present disclosure. FIG. 38 is a flowchart illustrating an example of a processing procedure of the communication device 40 in a case where the communication control device 60 sets an encryption scheme. The communication device 40 determines whether an encryption scheme has been set or reset (Step S764). For example, when information regarding the encryption scheme is received from the communication control device 60 and it is determined that the encryption scheme is set or reset (Step S764, Yes), the communication device 40 encrypts or re-encrypts information on the communication device according to the set or reset encryption scheme (Step S765). Next, the communication device 40 notifies the communication control device 60 of the encrypted or re-encrypted information (Step S766), and completes the processing. On the other hand, if it is determined in step S764 that the encryption scheme has not been set or reset (Step S764, No), the communication device 40 completes the processing without doing anything.

FIG. 39 is a diagram illustrating an example of a processing procedure of encryption scheme setting and resetting processing according to the embodiment of the present disclosure. FIG. 39 is a flowchart illustrating an example of a processing procedure of the communication device 40 in a case where the communication device 40 sets or resets an encryption scheme. The communication device 40 determines whether it is a timing to set or reset the encryption scheme (Step S767). When determining that it is a timing to set or reset the encryption scheme (Step S767, Yes), the communication device 40 sets or resets the encryption scheme (Step S768). Next, the communication device 40 encrypts information on the communication device (Step S769). Next, the communication device 40 notifies the communication control device 60 of the encrypted information (Step S770), and completes the processing. On the other hand, in step S767, if it is not a timing to set or reset the encryption scheme (Step S767, No), the communication device 40 completes the processing without doing anything.

[Communication path encryption]

As a related art of communication encryption, there has been encryptions of a communication path such as transport layer security (TLS) and secure sockets layer (SSL). The difference between these encryptions of a communication path and the secret calculation of the present disclosure will be described.

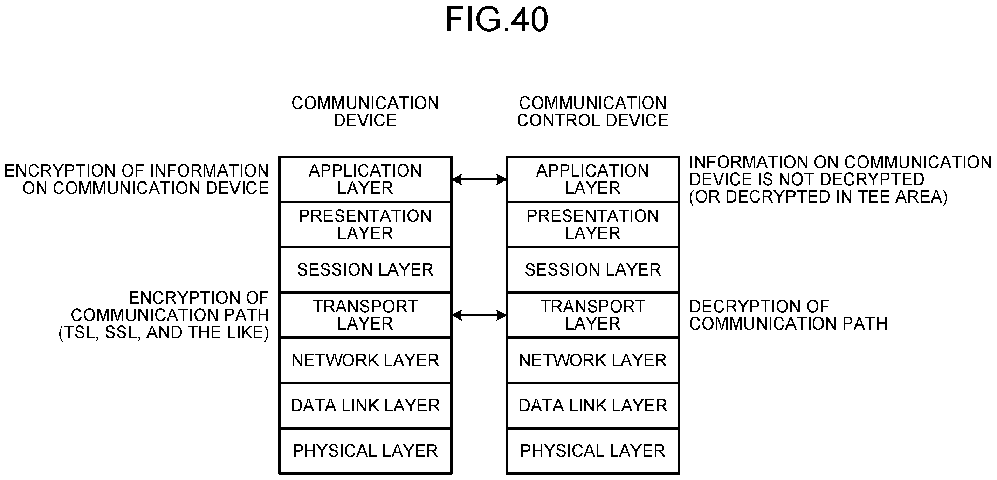

FIG. 40 is a diagram illustrating an example of a communication control protocol hierarchy. FIG. 40 is a diagram illustrating an example of the position of the present disclosure in a communication control protocol hierarchy (example of OSI reference model). While the related art such as TLS and SSL is encryption of the communication path, the present disclosure is encryption of information itself to be handled.

Furthermore, in the related art of TLS and SSL, a reception communication device (e.g., communication control device on the right in FIG. 40) decrypts communication content encrypted by a transmission communication device (e.g., communication device on the left in FIG. 40), whereas in the encryption of the present disclosure, the reception communication device does not necessarily decrypt the encryption performed by the transmission communication device. Alternatively, in the present disclosure, the reception communication device decrypts the encryption of the information performed by the transmission communication device by a method such as the safety area described above, in which the reception communication device itself cannot grasp the decrypted content.

In view of the above, when the present disclosure and the conventional communication path encryption are used together, the layer implemented by the present disclosure is required to be implemented at a higher level than that of the communication path encryption. When this relationship is reversed, it becomes necessary to decrypt the encryption implemented in the present disclosure in the middle of communication (in middle layer), and the protection of the information on the communication device, which is the object of the present disclosure, cannot be achieved.

Note that although FIG. 40 illustrates the OSI reference model as an example, the same applies to the TCP/IP model. It is desirable that the present disclosure be implemented, for example, in an application layer and at a higher level than that of communication path encryption in the related art.

As described above, the communication control device 60 according to the first embodiment of the present disclosure performs secret calculation based on information on the communication device to generate communication parameters. As a result, it is possible to conceal information on the communication device 40 using the secondary communication service.

(2. Second embodiment)

In the communication system 1000 according to the first embodiment described above, the communication control device 60 records information on the communication device. On the other hand, a communication system 1000 according to a second embodiment of the present disclosure is different from the above-described first embodiment in that an information recording device that records information on a communication device is used.

[Configuration of information recording device]

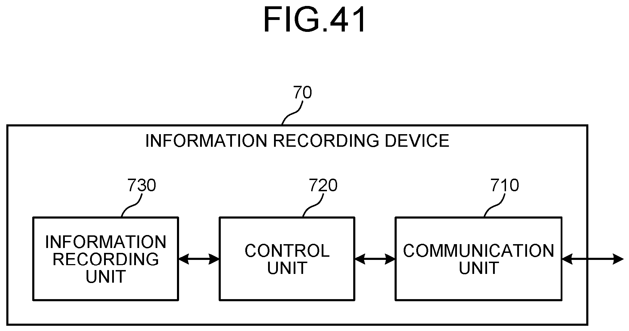

FIG. 41 is a diagram illustrating a configuration example of an information recording device according to the second embodiment of the present disclosure. An information recording device 70 in FIG. 41 includes a communication unit 710, a control unit 720, and an information recording unit 730. Note that information recording device 70 is an example of another device.

The communication unit 710 communicates with another communication device (e.g., communication device 40 and communication control device 60). The communication unit 710 includes a transmission unit and a reception unit. Furthermore, the communication unit 710 operates under the control of the control unit 720. As described later, the communication unit 710 receives a request for a secondary communication service and information on the communication device from the communication device 40. Furthermore, the communication unit 710 transmits information on an encryption scheme to the communication device 40.

The control unit 720 controls the entire information recording device 70.

The information recording unit 730 records information and the like of the communication device.

[Communication control procedure]

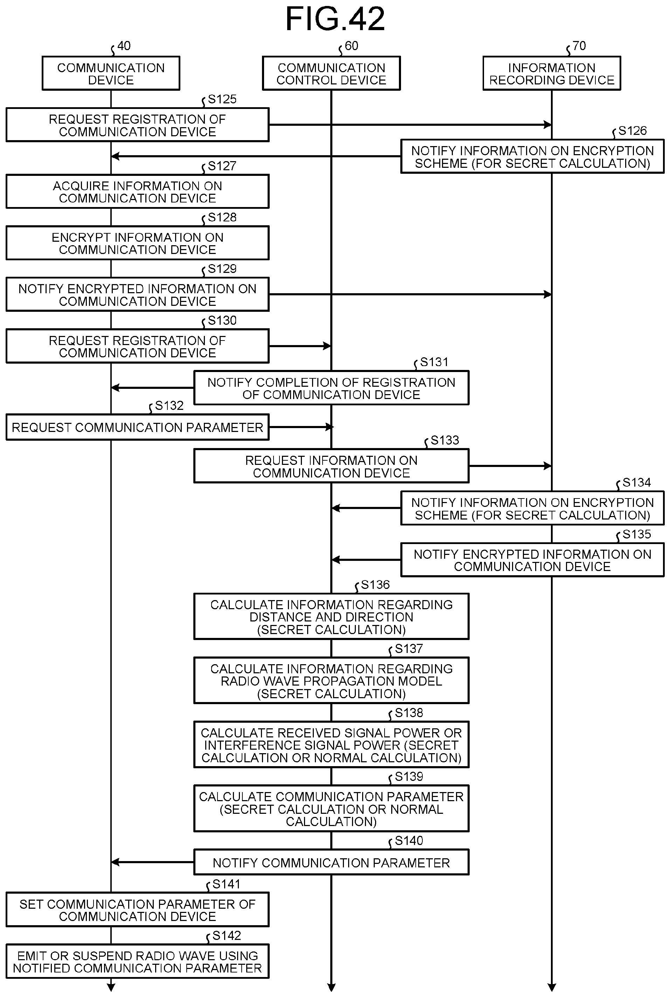

FIG. 42 is a diagram illustrating an example of a communication control procedure according to the second embodiment of the present disclosure. FIG. 42 is a diagram illustrating an example of a communication control procedure among the communication device 40, the communication control device 60, and the information recording device 70.

First, the communication device 40 registers itself in the information recording device 70. Specifically, the communication device 40 requests registration (Step S125). The information recording device 70 notifies the registered communication device 40 of information on the encryption scheme (Step S126). The information on the encryption scheme is information related to information encryption used in the present disclosure, and corresponds to a specific encryption scheme, an encryption key (public key) used for encryption, a valid period of the encryption scheme and encryption key to be notified, and the like. Note that in addition to this notification, a notification indicating that the registration has been completed may be provided. Similarly to the communication control procedure of FIG. 6, an encryption scheme for secret calculation is applied in the example of FIG. 42.

Next, the communication device 40 acquires its own information (Step S127), encrypts at least a part of its own information according to the encryption information notified from the communication control device 60 (Step S128), and notifies the information recording device 70 of the encrypted information on the communication device (Step S129). Next, the communication device 40 registers itself in the communication control device 60 (Step S130). Specifically, the communication device 40 requests registration. With this registration, the communication device 40 can benefit from frequency sharing such as notification of communication parameters from the communication control device 60. The communication control device 60 notifies the communication device 40 of the registration completion (Step S131).

Next, the communication device 40 requests a communication parameter from the communication control device 60 (Step S132). Next, communication control device 60 requests information on the communication device from information recording device 70 (Step S133). The information recording device 70 notifies the communication control device 60 of the information on the encryption scheme notified to the target communication device (Step S134). The information on the encryption scheme may be the same as the information notified to the communication device 40 by the information recording device 70, or may be only a part of the information notified to the communication device 40 by the communication control device 60. For example, at least one of an encryption scheme to be used and an encryption key (public key) to be used corresponds to the only partially notified information.

Next, the information recording device 70 notifies the communication control device 60 of the encrypted information on the communication device (Step S135). The encrypted information on the communication device is encrypted by the target communication device 40.

Since the subsequent processing procedure (steps S136 to S142) is similar to steps S105 to S111 in FIG. 6, the description thereof is omitted.

Note that in addition to encrypting the information on the communication device according to the encryption information notified from the information recording device 70, if a predetermined encryption scheme is determined in advance, encryption may be performed according to the encryption scheme determined in advance. In this case, the step of notifying the communication device 40 of the encryption scheme from the information recording device 70 may be omitted.

[Other communication control procedure]

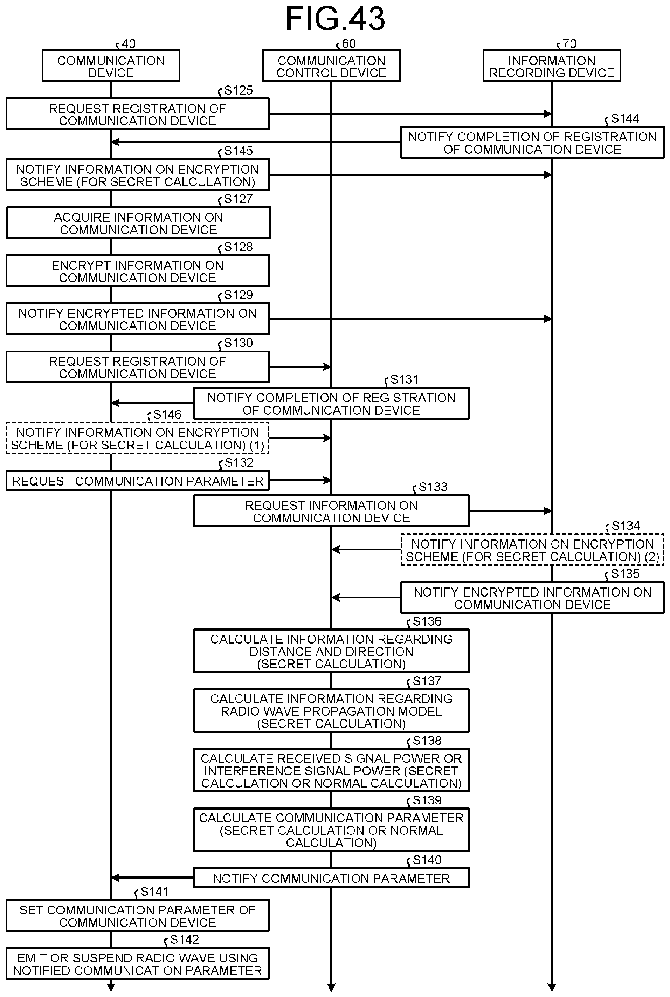

FIG. 43 is a diagram illustrating another example of the communication control procedure according to the second embodiment of the present disclosure. Similarly to FIG. 42, FIG. 43 is a diagram illustrating an example of a communication control procedure among the communication device 40, the communication control device 60, and the information recording device 70. The control procedure in FIG. 43 is different from the processing procedure in FIG. 6 in that the communication device 40 generates information on an encryption scheme.

First, the communication device 40 requests registration of the communication device (Step S125). Next, the information recording device 70 notifies the communication device 40 of the registration completion of the communication device (step S144). Next, the communication device 40 notifies the information recording device 70 of information on the encryption scheme (Step S145). Since Steps S127 to S142 in FIG. 43 are similar to those in FIG. 6, the description thereof is omitted.

Note that as a procedure of notifying the communication control device 60 of the information on the encryption scheme, a procedure (Step S146) in which the communication device 40 gives notification ((1) in FIG. 43) and a procedure (Step S134) in which the information recording device 70 gives notification ((2) in FIG. 43) can be considered. At least one of these procedures is applied.

The configuration of the communication system 1000 other than this is similar to the configuration of the communication system 1000 in the first embodiment of the present disclosure, and thus the description thereof is omitted.

As described above, in the communication system 1000 according to the second embodiment of the present disclosure, the information recording device 70 holds the encrypted information on the communication device. As a result, a part of the processing of the communication control device 60 can be distributed to the information recording device 70, and the processing load of the communication control device 60 can be reduced.

(3. Third embodiment)

The communication system 1000 according to the first embodiment described above uses one communication control device 60. On the other hand, a communication system 1000 according to a third embodiment of the present disclosure is different from the above-described first embodiment in that a plurality of communication control devices is used.

[Communication control procedure]

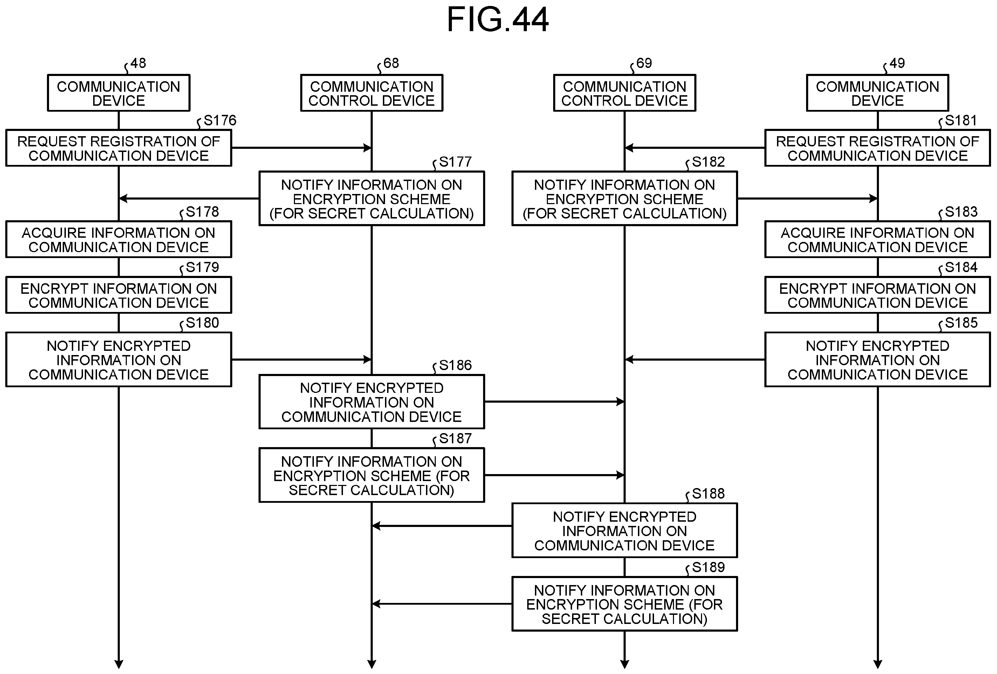

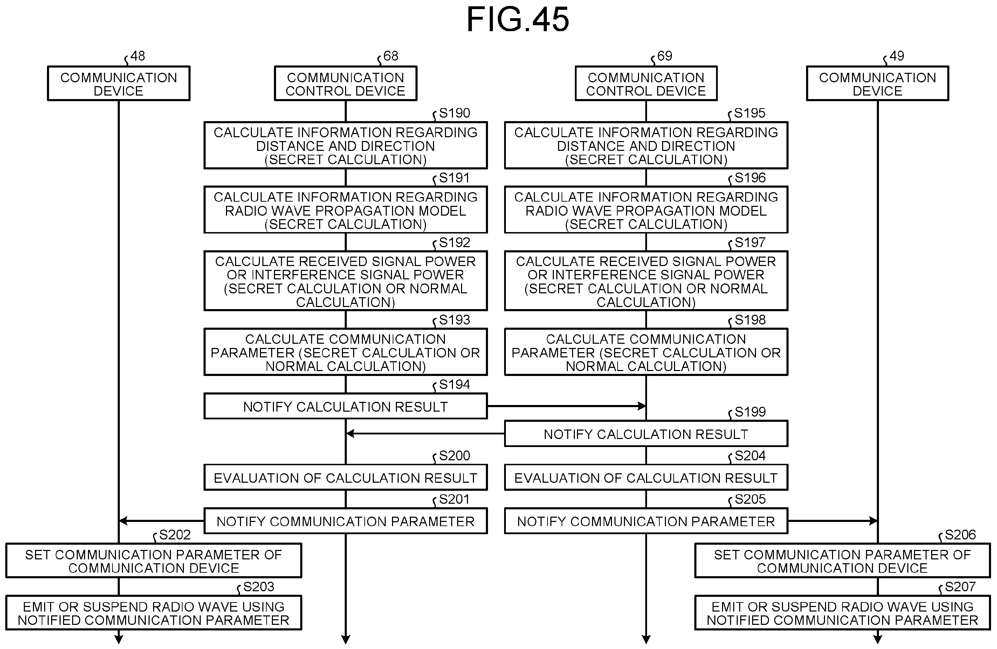

FIGS. 44 and 45 are diagrams illustrating an example of a communication control procedure according to the third embodiment of the present disclosure. FIGS. 44 and 45 are diagrams illustrating an example of a communication control procedure among communication devices 48 and 49 and communication control devices 68 and 69. The communication devices 48 and 49 perform registration with any of the communication control devices 68 and 69. Then, the communication control devices 68 and 69 calculate and estimate communication parameters such as communication availability of the communication device on the basis of information on the communication device registered therein and information on the communication device registered in the other communication control device. Furthermore, in FIGS. 44 and 45, it is assumed that all the communication control devices can support secret calculation using encryption (having homomorphism).

The communication device 48 requests the communication control device 68 to register the communication device 48 (Step S176). The communication control device 60 notifies the registered communication device 48 of information on the encryption scheme (Step S177). The communication device 40 acquires its own information (Step S178) and encrypts at least a part of the acquired own information (Step S179). Next, the communication device 40 notifies the communication control device 60 of the encrypted information on the communication device (Step S180).

The communication device 49 requests the communication control device 69 to register the communication device 49 (Step S181). The communication control device 69 notifies the registered communication device 49 of information on the encryption scheme (Step S182). The communication device 49 acquires its own information (Step S183) and encrypts at least a part of the acquired own information (Step S184). Next, the communication device 49 notifies the communication control device 69 of the encrypted information on the communication device (Step S185).

The communication control device 68 notifies the communication control device 69 of the encrypted information on the communication device (Step S186), and notifies the communication control device 69 of the information on the encryption scheme (Step S187). Similarly, the communication control device 69 notifies the communication control device 68 of the encrypted information on the communication device (Step S188), and notifies the communication control device 68 of the information on the encryption scheme (Step S189). In this manner, the communication control devices 68 and 69 notify each other and exchange information on the communication device. At this time, in a case where the information on the communication device is encrypted, information regarding the encryption (encryption scheme, encryption key, public key, and the like) is also notified and exchanged. As a result, even when there is a difference in the encryption scheme or the like between the communication control devices 68 and 69, it is possible to perform secret calculation.

The communication control device 68 performs the processing of steps S190 to S193. Furthermore, the communication control device 69 performs the processing of steps S195 to S198. Since the processing is similar to the processing of steps S105 to S108 in FIG. 6, the description thereof is omitted. Next, the communication control device 68 notifies the communication control device 69 of the calculation result (Step S194). Similarly, the communication control device 69 notifies the communication control device 68 of the calculation result (Step S199). In this manner, the communication control devices 68 and 69 exchange calculation (estimation) results.

The communication control device 68 evaluates the calculation result (Step S200). This evaluation can be performed by comparing the own calculation result with the calculation result notified from the communication control device 69 and determining the validity of the own calculation result. In a case where the calculation result of the communication control device 68 is evaluated to be valid, the communication device 40 is notified of the communication parameter (Step S201). Similarly, the communication control device 69 evaluates the calculation result (Step S204) and notifies the communication device 49 of the communication parameter (Step S205).

The communication device 48 performs the processing of steps S202 and S203. Furthermore, the communication device 49 performs the processing of steps S206 and S207. Since the processing is similar to the processing of steps S110 and S111 in FIG. 6, the description thereof is omitted.

In the above-described control procedure, the communication control devices (communication control devices 68 and 69) notify each other of a calculation (estimation) result and exchange the calculation (estimation) result with the other communication control device. Then, the communication control device 68 or the like that receives the calculation (estimation) result from the other communication control device compares its own calculation (estimation) result with the calculation (estimation) result of the other communication control device, and evaluates the validity. For example, if there is no difference between the results, the communication control device 68 or the like can evaluate the calculation (estimation) result as valid. The fact that there is no difference in calculation (estimation) results corresponds to, for example, a state where the calculation (estimation) results are the same or a state where the calculation (estimation) results fall within a predetermined error range.

On the other hand, if the calculation (estimation) result is not valid, for example, if there is a difference between the calculation (estimation) results, the communication control device 68 or the like selects and sets the communication parameter assuming that the calculation (estimation) result is not valid. For example, the communication control device 68 or the like can set a communication parameter that does not give permission for communication to the target communication device 48 or the like. Furthermore, for example, the communication control device 68 or the like can also set a communication parameter that causes suspension stoppage of the target communication device 48 and the like.

Furthermore, the communication control device 68 or the like can also adopt the most conservative calculation (estimation) result among the invalid calculation (estimation) results. For example, in a case where the communication permission and the communication failure are mixed, the communication control device 68 or the like can adopt the failure result. Furthermore, for example, regarding the transmission power of the communication device, the communication control device 68 or the like can adopt a result of the smallest value. Furthermore, for example, regarding the communication area, the communication control device 68 or the like can adopt a result having the smallest (least) communication permitted area. Furthermore, for example, regarding the separation distance, the communication control device 68 or the like can adopt a result having the largest value (longest separation distance). The communication control device 68 or the like can notify the target communication device 48 or the like of the communication parameter selected and set on the basis of such a rule.

The communication device 48 or the like to be notified of the communication parameter is desirably at least a communication device registered in the communication control device 68 or the like.

Notification and exchange of information on the communication device between the communication control devices 68 and 69 can be performed at predetermined time intervals and timings. The communication control devices 68 and 69 can notify and exchange information on the communication device, for example, at a timing such as once per hour (e.g., 00 minute every hour) or once a day (e.g., 0:00 every day).

Furthermore, the communication control devices 68 and 69 may notify and exchange information on the communication device in accordance with the timing at which calculation (estimation) is performed. For example, in a case where the communication control devices 68 and 69 perform calculation (estimation) once a day (e.g., 0:00 every day), notification (exchange) of information on the communication device can be performed before the timing of the calculation (estimation). Furthermore, in a case where the communication control devices 68 and 69 perform calculation (estimation) N times within a predetermined time, notification (exchange) of information on the communication device is desirably performed at least N times within the predetermined time.

In addition, the other communication control device may be notified of information on the communication device at a timing when a new communication device is registered in the communication control device 68 or the like. In addition, even in a case where there is no new registration, the other communication control device may be notified of information on the communication device at a timing when a change occurs in the information on the communication device already registered. In addition, at the timing when registration of a communication device registered in the communication control device 68 or the like is deleted, the other communication control device may be notified of the information on the communication device (deletion).

Regarding encryption applied by a plurality of communication control devices, it is desirable to apply at least a common encryption scheme. This can simplify implementation of the secret calculation function and minimize secret calculation. In addition to the encryption scheme, an encryption key, a public key, and the like may be shared. In this case, it is not necessary to notify and exchange information regarding encryption when notifying and exchanging information on the communication device between the communication control devices. Therefore, it is possible to reduce communication overhead related to notification and exchange.

[Communication control processing]

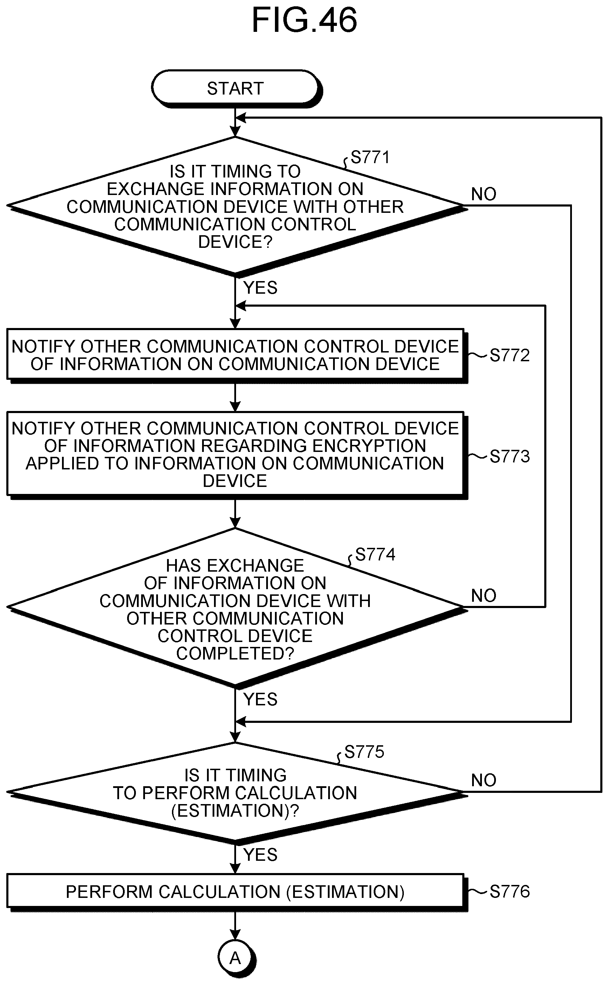

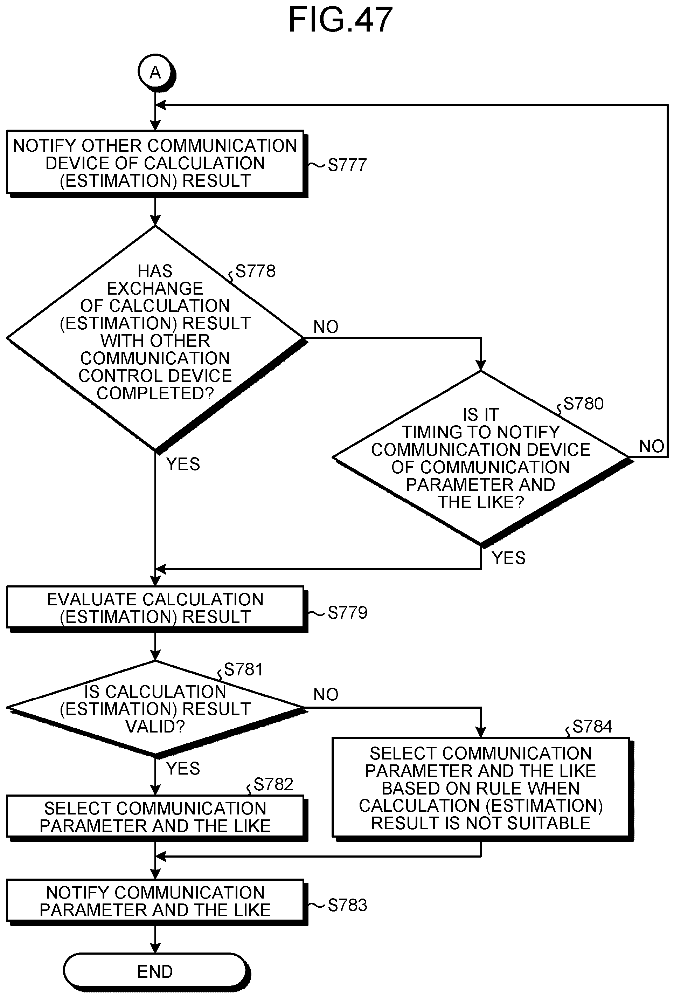

FIGS. 46 and 47 are diagrams illustrating an example of a processing procedure of communication control processing according to the third embodiment of the present disclosure. FIGS. 46 and 47 are flowcharts illustrating an example of a processing procedure of communication control processing of the communication control device 68 or the like. A processing procedure of FIGS. 46 and 47 will be described using the communication control device 68 as an example. First, the communication control device 68 determines whether it is a timing to exchange information on the communication device with another communication control device (communication control device 69) (Step S771). If it is not a timing to exchange information on the communication device with the other communication control device (communication control device 69) (Step S771, No), the communication control device 68 proceeds to the processing of step S775.

On the other hand, if it is a timing to exchange information on the communication device with the other communication control device (communication control device 69) (Step S771, Yes), the communication control device 68 notifies the other communication control device (communication control device 69) of information on the communication device (Step S772). Next, the communication control device 68 notifies the other communication control device (communication control device 69) of information regarding encryption applied to the information on the communication device (Step S773). Next, the communication control device 68 determines whether exchange of information on the communication device with the other communication control device (communication control device 69) has been completed (Step S774). If the exchange of the information on the communication device with the other communication control device (communication control device 69) has not been completed (Step S774, No), the communication control device 68 proceeds to the processing of step S772. On the other hand, if the exchange of the information on the communication device communication device with the other communication control device (communication control device 69) has been completed (Step S774, Yes), the communication control device 68 proceeds to the processing of step S775.

In step S775, the communication control device 68 determines whether it is a timing to perform calculation (estimation) (Step S775). If it is not a timing to perform calculation (estimation) (Step S775, No), the communication control device 68 proceeds to step S771. On the other hand, if it is a timing to perform calculation (estimation) (Step S775, Yes), the communication control device 68 executes the calculation (estimation) of the communication parameter (Step S776). Next, the communication control device 68 notifies the other communication control device (communication control device 69) of the calculation (estimation) result (Step S777). Next, the communication control device 68 determines whether exchange of calculation (estimation) results with the other communication control device (communication control device 69) has been completed (Step S778).

If the exchange of the calculation (estimation) results with the other communication control device has been completed (Step S778, Yes), the communication control device 68 proceeds to the processing of step S779. On the other hand, if the exchange of the calculation (estimation) results with the other communication control device has not been completed (Step S778, No), the communication control device 68 determines whether or not it is a timing to notify the communication device (communication device 48) of the communication parameter and the like (Step S780). If it is not a timing to notify the communication device (communication device 48) of the communication parameter and the like (Step S780, No), the communication control device 68 proceeds to the processing of step S777. On the other hand, if it is a timing to notify the communication device (communication device 48) of the communication parameter and the like (Step S780, Yes), the communication control device 68 proceeds to the processing of step S779.

In step S779, the communication control device 68 evaluates the calculation (estimation) result (Step S779). Next, the communication control device 68 determines whether the calculation (estimation) result is valid (Step S781). If the calculation (estimation) result is valid (Step S781, Yes), the communication control device 68 selects a communication parameter and the like of the calculation (estimation) result (Step S782), and proceeds to the processing of step S783.

On the other hand, in step S781, if the calculation (estimation) result is not valid (Step S781, No), the communication control device 68 selects a communication parameter and the like on the basis of a rule when the calculation (estimation) result is not suitable (Step S784), and proceeds to the processing of step S783. In step S783, the communication control device 68 notifies the communication device (the communication device 48) of the selected communication parameter and the like (Step S783).

Furthermore, in the present disclosure, in a case where there is a plurality of communication control devices, it is also conceivable that only some of the communication control devices perform calculation (estimation) of a radio wave propagation model, a radio wave propagation characteristic, or a communication parameter. Also in this case, the processing of FIGS. 46 and 47 can be applied. Note, however, that the calculation (estimation) by the communication control device in FIGS. 46 and 47 is partially performed (e.g., one of two communication control devices 68 and 69 in the case of FIGS. 46 and 47). In addition, in the evaluation of the calculation result in FIGS. 46 and 47, in a case where the communication control device itself does not perform calculation (estimation), evaluation is made using the result of another communication control device. Alternatively, the communication control device may omit evaluation of the calculation result in FIGS. 46 and 47.

The configuration of the communication system 1000 other than this is similar to the configuration of the communication system 1000 in the first embodiment of the present disclosure, and thus the description thereof is omitted.

As described above, in the communication system 1000 according to the third embodiment of the present disclosure, a plurality of communication control devices 68 compares a communication parameter calculated by itself with a communication parameter calculated by another communication control device, and evaluates the validity of the communication parameter. By notifying the communication device 48 or the like of the evaluated communication parameters, the communication quality can be improved.

(4. Fourth embodiment)

In the communication system 1000 according to the first embodiment described above, the communication device 40 and the communication control device 60 directly communicate with each other. On the other hand, a communication system 1000 according to a fourth embodiment of the present disclosure is different from the above-described first embodiment in that a communication control device serving as a substitute device of a communication device 40 is further used. Note that a communication control device serving as a substitute device of the communication device 40 is referred to as a proxy device.

[Proxy device]

The proxy device can have the same configuration as the communication control device 60 illustrated in FIG. 2. The proxy device serves as a proxy in a procedure for registering the communication device 40 in a communication control device 60. When registering a plurality of communication devices 40, the proxy devices can collectively perform registration as a proxy. In addition, the proxy device encrypts information on the communication device notified from the communication device 40 and notifies the communication control device 60 of the encrypted information. At this time, the proxy device may collectively notify the information on the communication devices from the plurality of communication devices 40 at the same time. In addition, the proxy device receives a notification of the communication parameter from the communication control device 60 and notifies the communication device 40 of the communication parameter. In this manner, the proxy device serves as a substitute for the communication device 40.

[Communication control procedure]

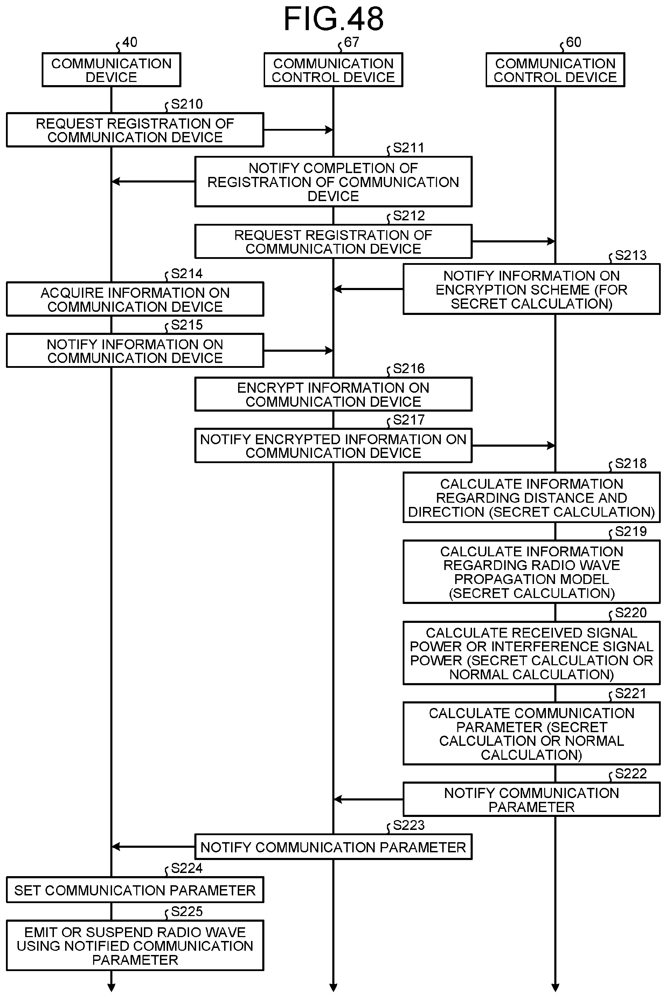

FIG. 48 is a diagram illustrating an example of a communication control procedure according to the fourth embodiment of the present disclosure. FIG. 48 is a diagram illustrating an example of a communication control procedure among the communication device 40, a communication control device 67, and the communication control device 60. Note that the communication control device 67 corresponds to a proxy device.
First, the communication device 40 requests the communication control device 67 to register (Step S210). The communication control device 67 notifies the communication device 40 of the registration completion (Step S211), and requests the communication control device 60 to register the communication device 40 (Step S212). The communication control device 60 notifies the communication control device 67 of information on the encryption scheme (Step S213). The information on the encryption scheme is information related to information encryption used in the present disclosure, and corresponds to a specific encryption scheme, an encryption key (public key) used for encryption, a valid period of the encryption scheme and encryption key to be notified, and the like.
Next, the communication device 40 acquires its own information (Step S214) and notifies the communication control device 67 of at least a part of its own information (Step S215). The communication control device 67 encrypts the information on the communication device notified from the communication device 40 according to the encryption information notified from the communication control device 60 (Step S216). Next, the communication control device 67 notifies the communication control device 60 of the encrypted information on the communication device (Step S217).
Next, the communication control device 60 performs processing of steps S218 to S221. Since the processing is similar to the processing of steps S105 to S108 in FIG. 6, the description thereof is omitted. Next, the communication control device 60 notifies the communication control device 67 of the communication parameter (Step S222). The communication control device 67 notifies the communication device 40 of the communication parameter (Step S223). Since the subsequent processing procedure (steps S224 and S225) is similar to steps S110 and S111 in FIG. 6, the description thereof is omitted.

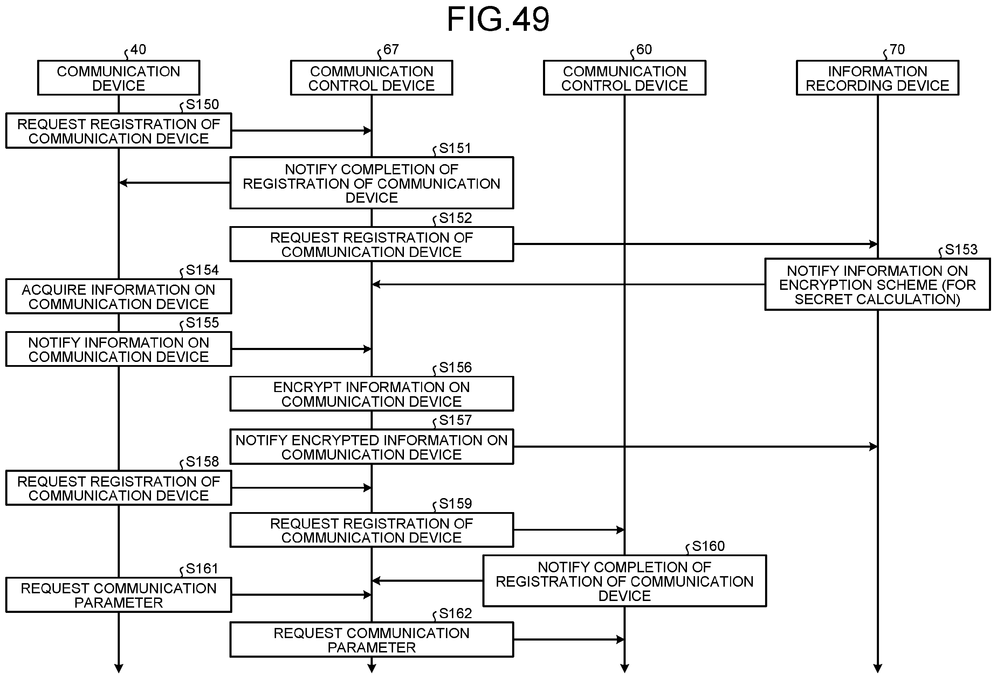

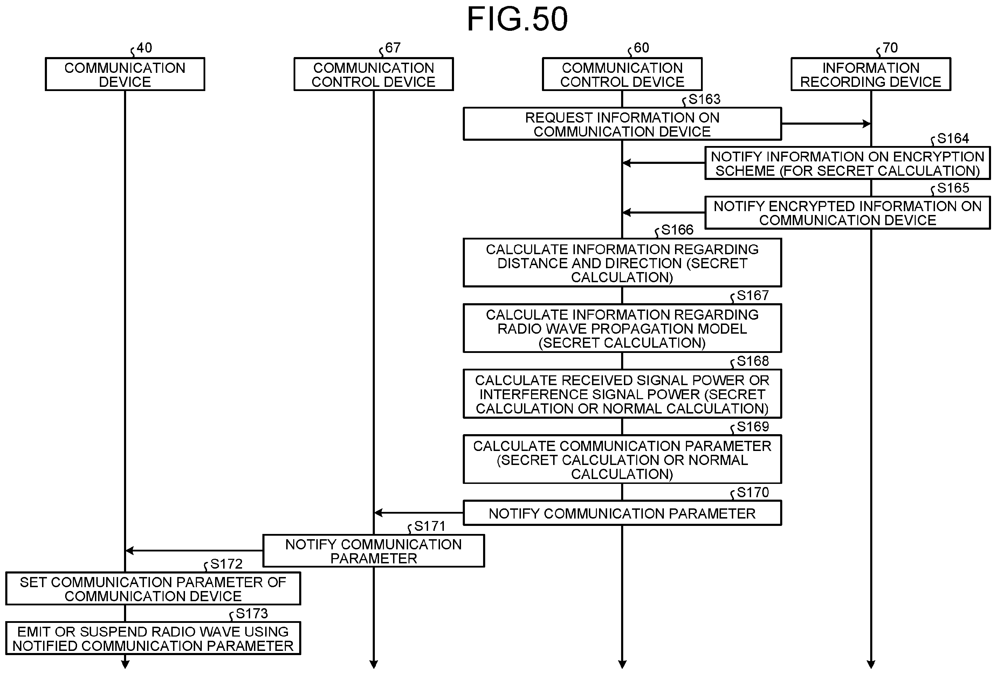

FIGS. 49 and 50 are diagrams illustrating another example of the communication control procedure according to the fourth embodiment of the present disclosure. FIGS. 49 and 50 are diagrams illustrating an example of a communication control procedure among the communication device 40, the communication control device 67, the communication control device 60, and an information recording device 70. Furthermore, FIGS. 49 and 50 are diagrams illustrating a processing procedure in which processing of the communication control device 67 is added to the communication control procedure of FIG. 42.
First, the communication device 40 requests the communication control device 67 to register (Step S150). The communication control device 67 notifies the communication device 40 of the registration completion (Step S151), and requests the information recording device 70 to register the communication device 40 (Step S152). The information recording device 70 notifies the communication control device 67 of information on the encryption scheme (Step S153). The information on the encryption scheme is information related to information encryption used in the present disclosure, and corresponds to a specific encryption scheme, an encryption key (public key) used for encryption, a valid period of the encryption scheme and encryption key to be notified, and the like.

Next, the communication device 40 acquires its own information (Step S154) and notifies the communication control device 67 of at least a part of its own information (Step S155). The communication control device 67 encrypts the information on the communication device notified from the communication device 40 according to the encryption information notified from the information recording device 70 (Step S156). Next, the communication control device 67 notifies the information recording device 70 of the encrypted information on the communication device (Step S157).

Next, the communication device 40 requests the communication control device 67 to register the communication device 40 (Step S158). The communication control device 67 requests the communication control device 60 to register the communication device 40 (Step S159). The communication control device 60 notifies the communication control device 67 of the registration completion of the communication device 40 (Step S160).

Next, the communication device 40 requests a communication parameter from the communication control device 67 (Step S161). The communication control device 67 requests the communication parameter from the communication control device 60 (Step S162). Since the processing procedure of steps S163 to S169 below is similar to steps S133 to S139 of FIG. 42, the description thereof is omitted.

Next, the communication control device 60 notifies the communication control device 67 of the communication parameter (Step S170). The communication control device 67 notifies the communication device 40 of the communication parameter (Step S171). Since the subsequent processing procedure (steps S172 and S173) is similar to steps S110 and S111 in FIG. 6, the description thereof is omitted.

In this manner, by introducing the proxy device (communication control device 67), it is possible to reduce the processing load of the communication device 40. In the first to third embodiments, the communication device 40 performs encryption. It is conceivable that the communication device 40 is a user terminal. Since the signal processing capability and the power consumption are limited, an increase in the processing load of the communication device 40 becomes a problem. Therefore, by introducing a proxy device and causing the proxy device to perform processing such as encryption of information on the communication device on behalf of the communication device, it is possible to avoid or alleviate these limitations.

Note that the communication device 40 and the proxy device (communication control device 67) desirably belong to the same communication system. This is because it is desirable that the proxy device has a relationship with the communication device in which there is no problem even if the information on the communication device is known, since the proxy device receives unencrypted information on the communication device.

Furthermore, the proxy device (communication control device 67) according to the embodiment of the present disclosure is assumed to be a communication control device on the core network side or the wired network side of the communication system 1000. In this case, another communication device (e.g., base station, access point, or the like) may be interposed between the communication device 40 and the proxy device that exchanges data with the communication device 40. Furthermore, the proxy device may be, for example, a communication device that wirelessly connects to a communication device, such as a base station or an access point. In this case, another communication device or a communication control device (e.g., communication control device on core network side or wired network side, gateway device, switch router device, or the like ) may be interposed between the proxy device and the communication control device exchanging data with the proxy device.

The configuration of the communication system 1000 other than this is similar to the configuration of the communication system 1000 in the first embodiment of the present disclosure, and thus the description thereof is omitted.

As described above, the communication system 1000 according to the fourth embodiment of the present disclosure arranges the proxy device and causes the proxy device to perform processing on behalf of the communication device 40. As a result, the processing load on the communication device 40 can be reduced.

(5. Fifth embodiment)

In the communication system 1000 according to the first embodiment described above, when the communication device 40 is registered in the communication control device 60, the communication device 40 requests registration. On the other hand, a communication system 1000 according to a fifth embodiment of the present disclosure is different from the above-described first embodiment in that a device other than the communication device 40 requests registration.

As described above, in the fifth embodiment of the present disclosure, a device other than the communication device 40 requests registration of the communication device 40. The device other than the communication device 40 corresponds to, for example, a device (e.g., device having operation and management (OAM) function) that manages information on the communication device in the communication system. Furthermore, for example, a computer (PC) used by a person (e.g., user or administrator of communication device) can be applied to the device other than the communication device 40. In this case, a person (e.g., user or administrator of communication device) registers the communication device 40 using a browser of a computer (PC) or a registration-dedicated device. Furthermore, a person (e.g., user or administrator of communication device) may directly access the communication control device 60 or the like via a terminal device to register the communication device.

[Communication control procedure]

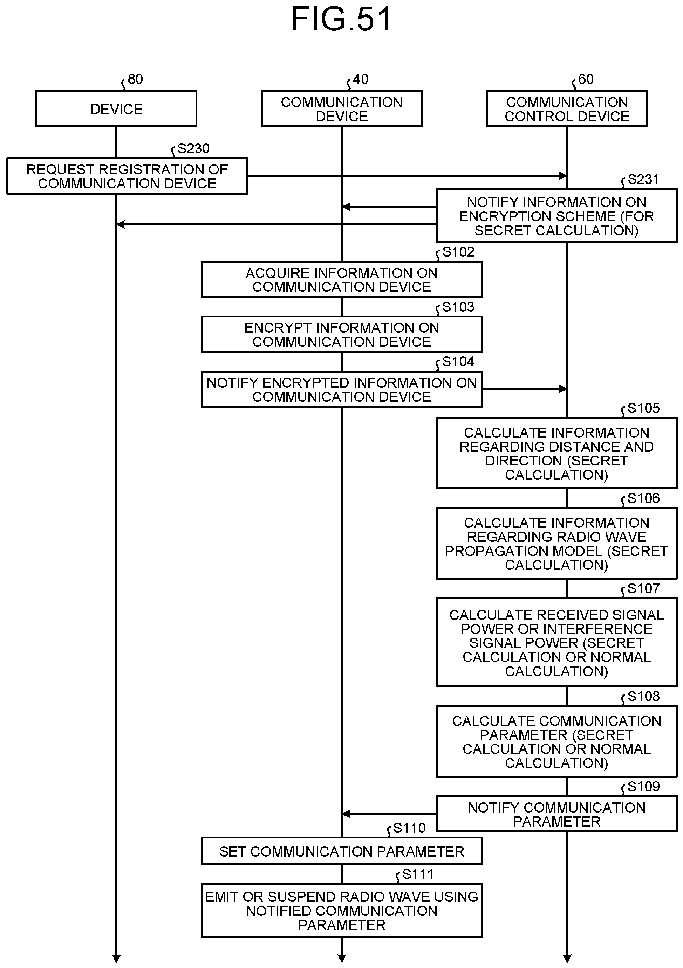

FIG. 51 is a diagram illustrating an example of a communication control procedure according to the fifth embodiment of the present disclosure. FIG. 51 is a diagram illustrating an example of a communication control procedure among a device 80, a communication device 40, and a communication control device 60. Note that the device 80 corresponds to a device other than the above-described communication device 40.

First, the device 80 requests the communication control device 60 to register the communication device 40 (Step S230). The communication control device 60 notifies the communication device 40 and the device 80 of information on the encryption scheme (Step S231). Since the subsequent control procedure is similar to the control procedure of FIG. 6, the description thereof is omitted.

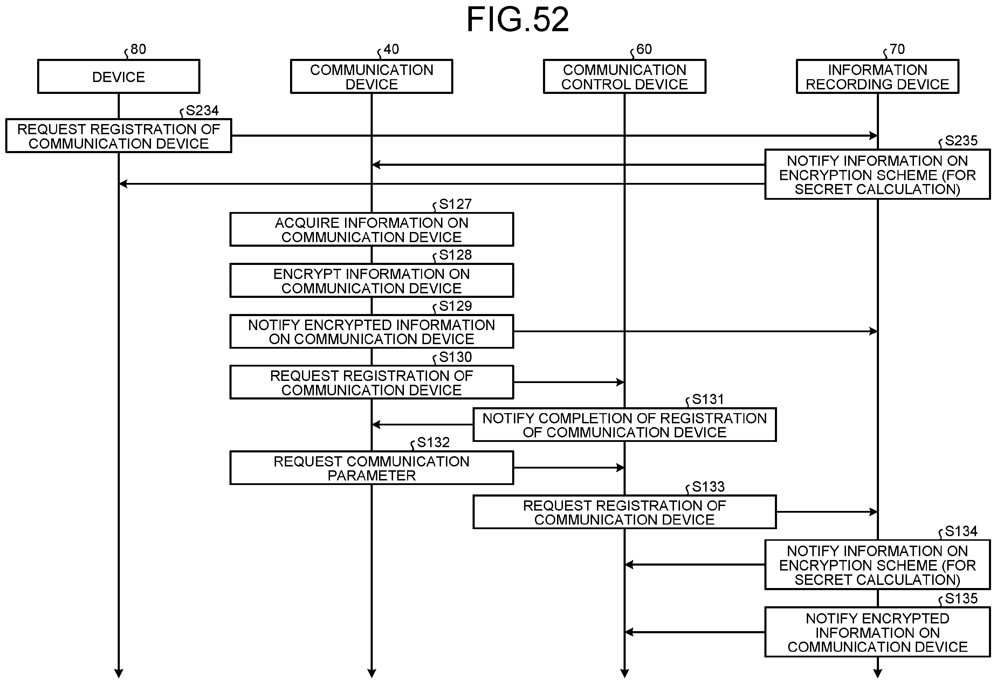

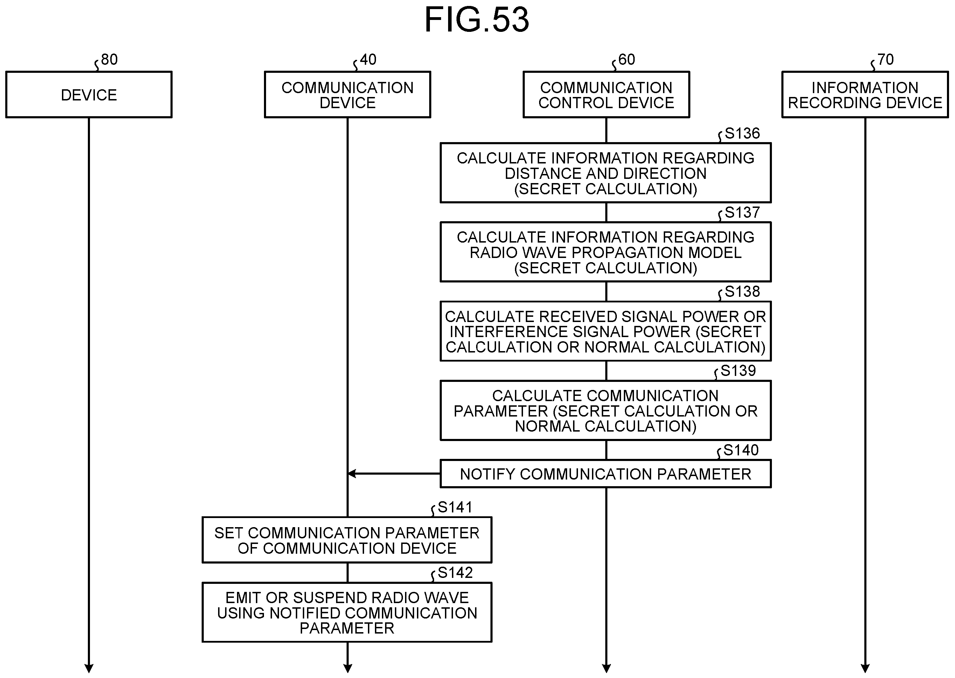

FIGS. 52 and 53 are diagrams illustrating another example of the communication control procedure according to the fifth embodiment of the present disclosure. FIGS. 52 and 53 are diagrams illustrating an example of a communication control procedure among the device 80, the communication device 40, the communication control device 60, and an information recording device 70.

First, the device 80 requests the information recording device 70 to register the communication device 40 (Step S234). The information recording device 70 notifies the communication device 40 and the device 80 of information on the encryption scheme (Step S235). Since the subsequent control procedure is similar to the control procedure of FIG. 42, the description thereof is omitted.

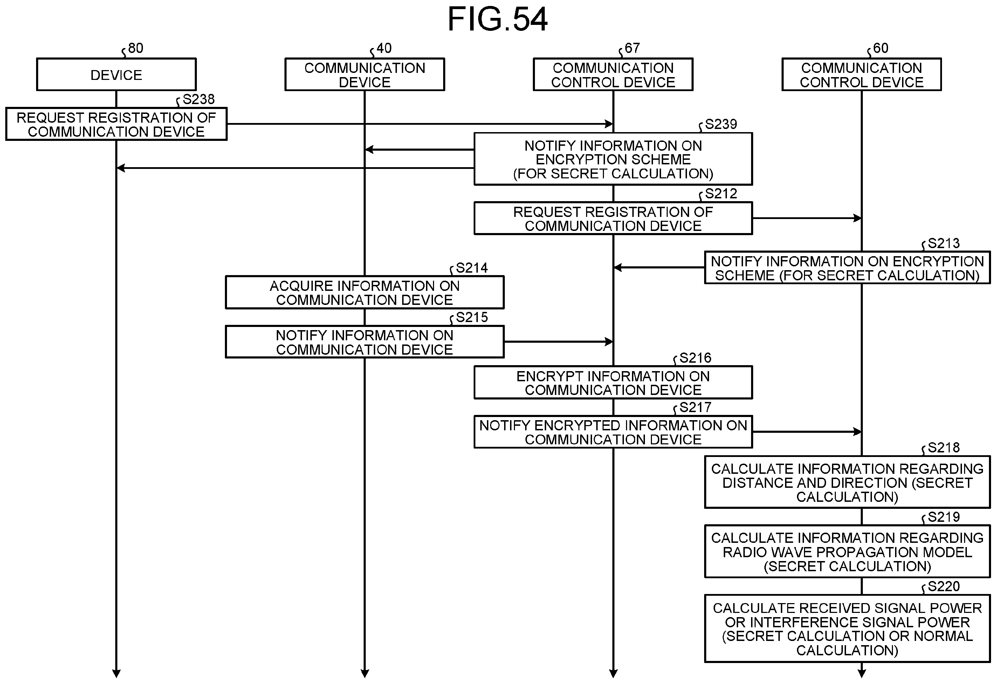

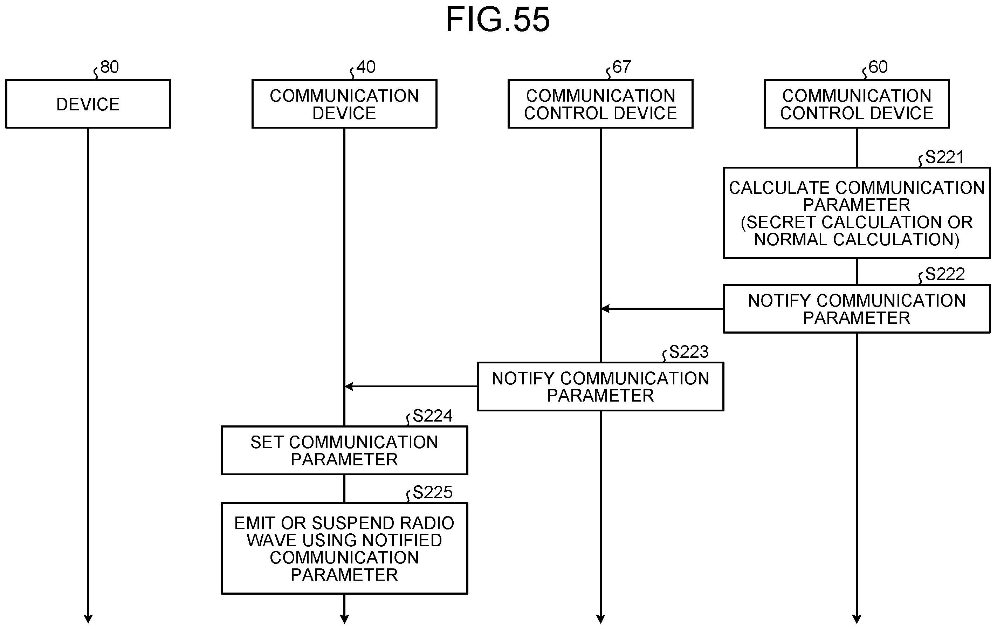

FIGS. 54 and 55 are diagrams illustrating another example of the communication control procedure according to the fifth embodiment of the present disclosure. FIGS. 54 and 55 are diagrams illustrating an example of a communication control procedure among the device 80, the communication device 40, the communication control device 67, and the communication control device 60.

First, the device 80 requests the communication control device 67 to register the communication device 40 (Step S238). The communication control device 67 notifies the communication device 40 and the device 80 of information on the encryption scheme (Step S239). Since the subsequent control procedure is similar to the control procedure of FIG. 48, the description thereof is omitted.

The configuration of the communication system 1000 other than this is similar to the configuration of the communication system 1000 in the first embodiment of the present disclosure, and thus the description thereof is omitted.

As described above, in the communication system 1000 according to the fifth embodiment of the present disclosure, a device other than the communication device 40 can request registration of the communication device 40.

(6. Sixth embodiment)

In the communication system 1000 according to the first embodiment described above, the communication control device 60 performs secret calculation based on information on the communication device 40 of the secondary communication system. On the other hand, a communication system 1000 according to a sixth embodiment of the present disclosure is different from the above-described first embodiment in that a communication control device 60 performs secret calculation based on information on a plurality of communication devices.

As described above, in the sixth embodiment of the present disclosure, the communication control device 60 performs secret calculation based on information on a plurality of communication devices to generate a communication parameter. Specifically, the communication control device 60 performs secret calculation based on information on a communication device of the primary communication system and a communication device of another secondary communication system in addition to the communication device 40 of the secondary communication system. In this case, the communication control device 60 receives encrypted information from each communication device, and performs calculation of interference between different communication systems or communication devices or generation of a communication parameter or the like of different communication systems or communication devices by secret calculation.

[Communication control procedure]

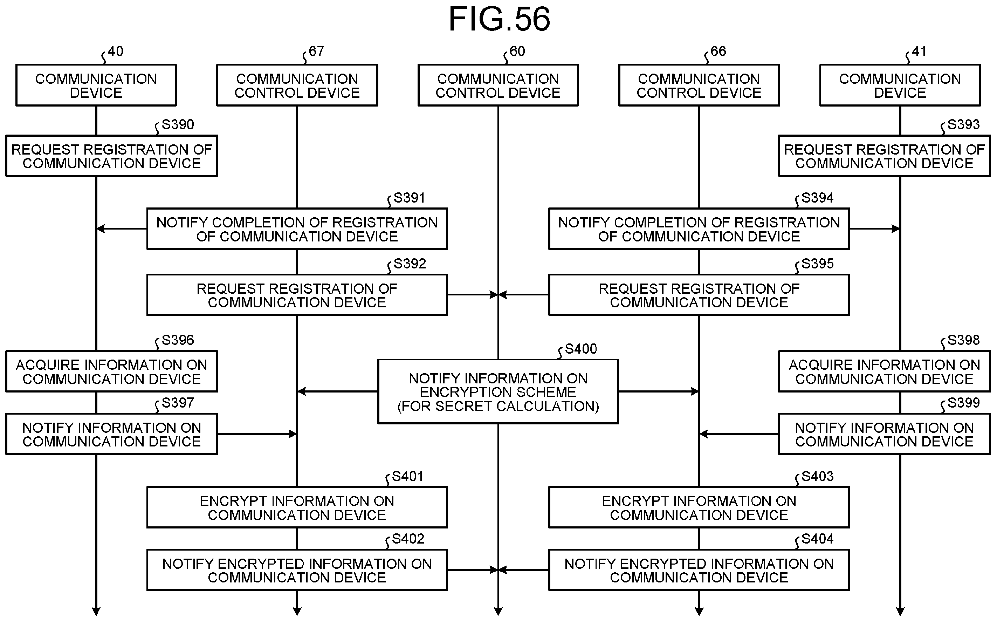

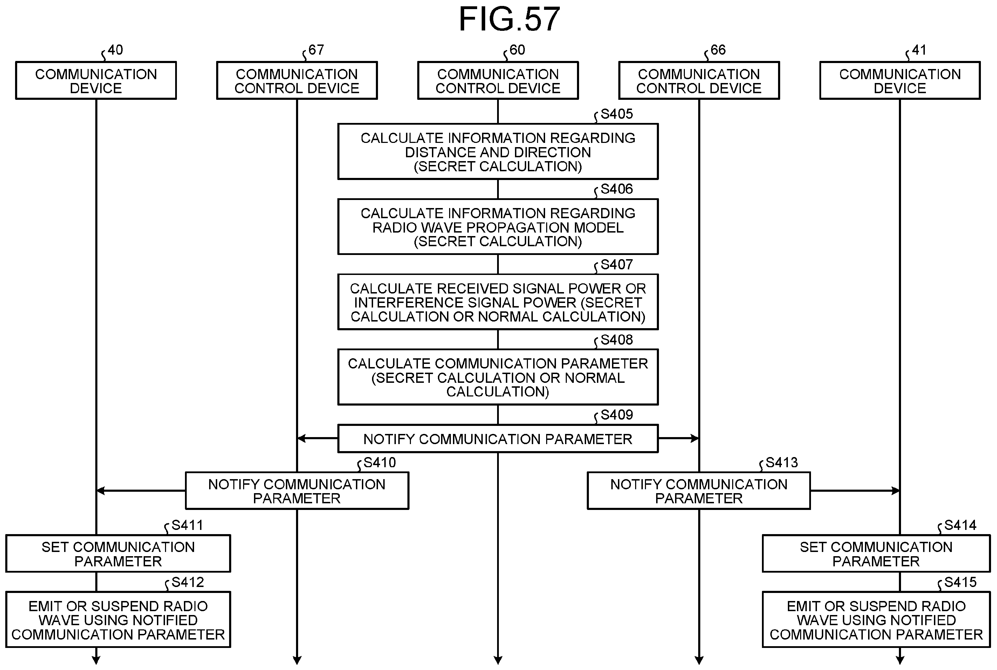

FIGS. 56 and 57 are diagrams illustrating an example of a communication control procedure according to the sixth embodiment of the present disclosure. FIGS. 56 and 57 are diagrams illustrating an example of a communication control procedure in which the communication control device 60 performs secret calculation for encrypted communication device information of a communication device 40 and a communication device 41. Here, the communication device 41 is a communication device of the primary communication system or a communication device of a secondary communication system different from the communication device 40. Furthermore, FIGS. 56 and 57 illustrate an example in a case where a communication control device 67 and a communication control device 66 corresponding to the proxy devices are provided. The communication control device 67 encrypts information on the communication device 40, and the communication control device 66 encrypts information on the communication device 41.

First, the communication device 40 requests the communication control device 67 to register (Step S390). The communication control device 67 notifies the communication device 40 of the registration completion (Step S391), and requests the communication control device 60 to register the communication device 40 (Step S392). Similarly, the communication device 41 requests the communication control device 66 to register (Step S393). The communication control device 66 notifies the communication device 41 of the registration completion (Step S394), and requests the communication control device 60 to register the communication device 41 (Step S395).

Next, the communication control device 60 notifies the communication control devices 66 and 67 of information on the encryption scheme (for secret calculation) (Step S400).

Next, the communication device 40 acquires its own information (Step S396) and notifies the communication control device 67 of at least a part of its own information (Step S397). The communication control device 67 encrypts the information on the communication device notified from the communication device 40 according to the encryption information notified from the communication control device 60 (Step S401). Next, the communication control device 67 notifies the communication control device 60 of the encrypted information on the communication device (Step S402). Similarly, the communication device 41 acquires its own information (Step S398) and notifies the communication control device 66 of at least a part of its own information (Step S399). The communication control device 66 encrypts the information on the communication device notified from the communication device 41 according to the encryption information notified from the communication control device 60 (Step S403). Next, the communication control device 66 notifies the communication control device 60 of the encrypted information on the communication device (Step S404).

Next, the communication control device 60 calculates information regarding distance and direction on the basis of the information on the communication devices 40 and 41 (Step S405), calculates information regarding a radio wave propagation model (Step S406), and calculates received signal power or interference signal power (Step S407). Next, the communication control device 60 calculates a communication parameter on the basis of the information on the communication devices 40 and 41 (Step S408). Next, the communication control device 60 notifies the communication control devices 66 and 67 of the communication parameter (Step S409).

Next, the communication control device 67 notifies the communication device 40 of the communication parameter (Step S410). Furthermore, the communication control device 66 notifies the communication device 41 of the communication parameter (Step S413). Next, the communication device 40 performs the processing of steps S433 and S434, and the communication device 41 performs the processing of steps S435 and S436. Since the processing is similar to the processing of steps S110 and S111 in FIG. 6, the description thereof is omitted.

As described above, in the above-described communication system, information such as operation parameters and communication parameters of the communication device 40 and the communication device 41 of the primary communication system or another secondary communication system is encrypted by the proxy devices 66 and 67, respectively, and the communication control device 60 is notified of the information. As a result, the information on the communication devices 40 and 41 is shared by the communication control device 60. The communication control device 60 executes secret calculation for each of the secondary communication system and the primary communication system and the communication devices belonging thereto. Note that communication parameters such as whether radio waves can be emitted, permitted transmission power (allowable maximum transmission power), permitted frequency channel, and permitted time, which are the calculation results, can vary depending on the communication device and the communication system.

[Other communication control procedure]

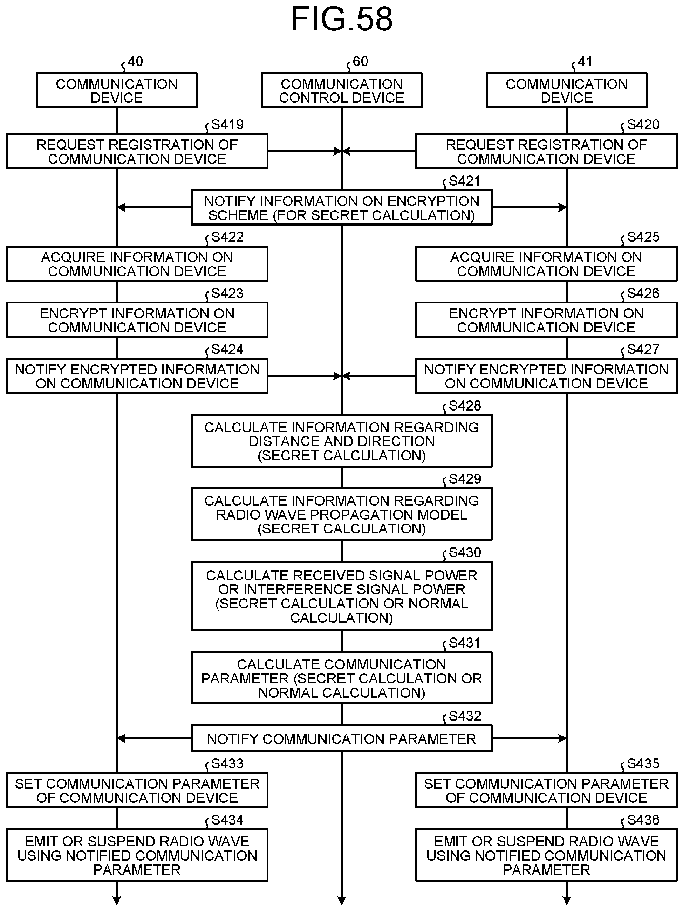

FIG. 58 is a diagram illustrating another example of the communication control procedure according to the sixth embodiment of the present disclosure. Similarly to FIGS. 56 and 57, FIG. 58 is a diagram illustrating an example of a communication control procedure in which the communication control device 60 performs secret calculation for encrypted communication device information of the communication device 40 and the communication device 41. FIG. 58 is different from the communication control procedure of FIGS. 56 and 57 in that the communication control devices 66 and 67 are omitted, and the communication device 40 and the communication device 41 encrypt their own information.

First, the communication device 40 requests the communication control device 60 to register the communication device 40 (Step S419). Similarly, the communication device 41 requests the communication control device 60 to register the communication device 41 (Step S420). Next, the communication control device 60 notifies the communication devices 40 and 41 of information on the encryption scheme (for secret calculation) (Step S421).

Next, the communication device 40 acquires its own information (Step S422), encrypts at least a part of its own information according to the encryption scheme notified from the communication control device 60 (Step S423), and notifies the communication control device 60 of the encrypted information (Step S424). Similarly, the communication device 41 acquires its own information (Step S425), encrypts at least a part of its own information according to the encryption scheme notified from the communication control device 60 (Step S426), and notifies the communication control device 60 of the encrypted information (Step S427).

Next, the communication control device 60 performs processing of steps S428 to S431. Since the processing is similar to the processing of steps S405 to S408 of FIG. 57, the description thereof is omitted. Next, the communication control device 60 notifies the communication devices 40 and 41 of the communication parameter (Step S432). The communication device 40 performs the processing of steps S411 and S412, and the communication device 41 performs the processing of steps S414 and S415. Since the processing is similar to the processing of steps S110 and S111 in FIG. 6, the description thereof is omitted.

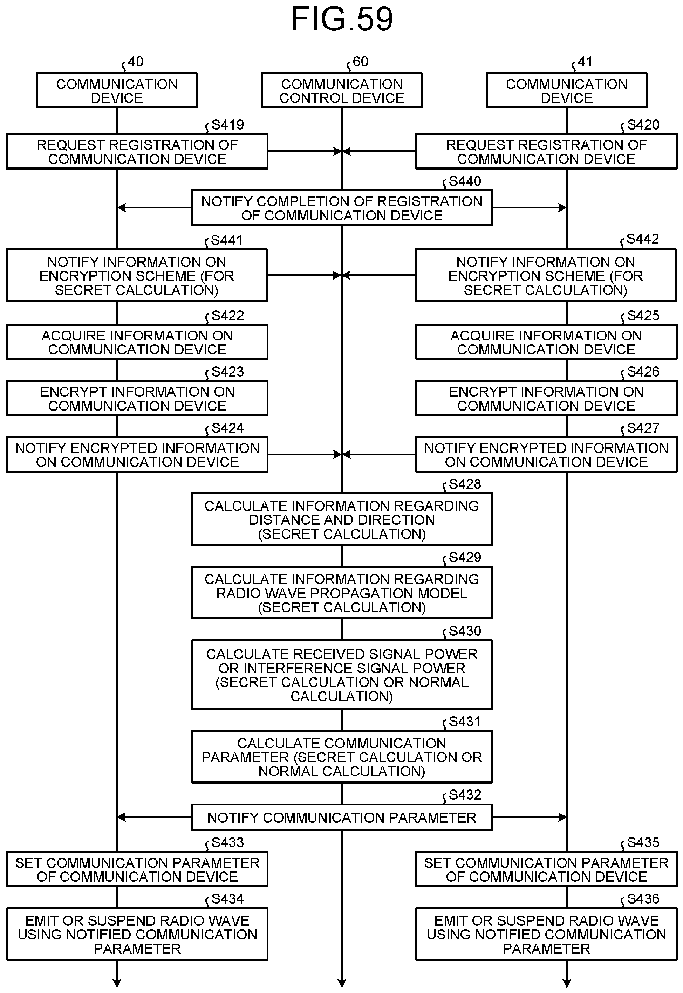

FIG. 59 is a diagram illustrating another example of the communication control procedure according to the sixth embodiment of the present disclosure. Similarly to FIG. 58, FIG. 59 is a diagram illustrating an example of a communication control procedure in which the communication control device 60 performs secret calculation on the basis of information on the communication device encrypted by the communication device 40 and the communication device 41. The control procedure in FIG. 59 is different from the processing procedure in FIG. 58 in that the communication devices 40 and 41 generate information on the encryption scheme.

First, the communication device 40 requests the communication control device 60 to register the communication device 40 (Step S419). Similarly, the communication device 41 requests the communication control device 60 to register the communication device 41 (Step S420). Next, the communication control device 60 notifies the communication device 40 and the communication device 41 of completion of registration of the communication device (Step S440).

Next, the communication device 40 notifies the communication control device 60 of information on the encryption scheme (Step S441). Similarly, the communication device 41 notifies the communication control device 60 of information on the encryption scheme (Step S442). Since the subsequent control procedure is similar to the control procedure of FIG. 58, the description thereof is omitted.

The configuration of the communication system 1000 other than this is similar to the configuration of the communication system 1000 in the first embodiment of the present disclosure, and thus the description thereof is omitted.

As described above, in the communication system 1000 according to the sixth embodiment of the present disclosure, the communication control device 60 performs secret calculation on the basis of information on a plurality of communication devices 40 and the like, and generates a communication parameter.

(7. Seventh embodiment)

In the communication system 1000 according to the first embodiment described above, the communication control device 60 performs encrypted secret calculation. On the other hand, a communication system 1000 according to an embodiment of the present disclosure is different from the above-described first embodiment in that a communication control device 60 performs secret calculation in a hardware safety area.

As described above, in a seventh embodiment of the present disclosure, the communication control device 60 performs secret calculation based on information on the communication device in a hardware safety area (trusted execution environment (TEE)). This safety area is an environment independent of the normal OS used by the communication control device 60 and a communication device 40. The safety area is also referred to as a hardware-assisted isolated execution environment (HIEE) or an isolated execution environment. The communication control device 60 itself cannot grasp the progress of the calculation executed in the safety area.

[Configuration of communication control device]

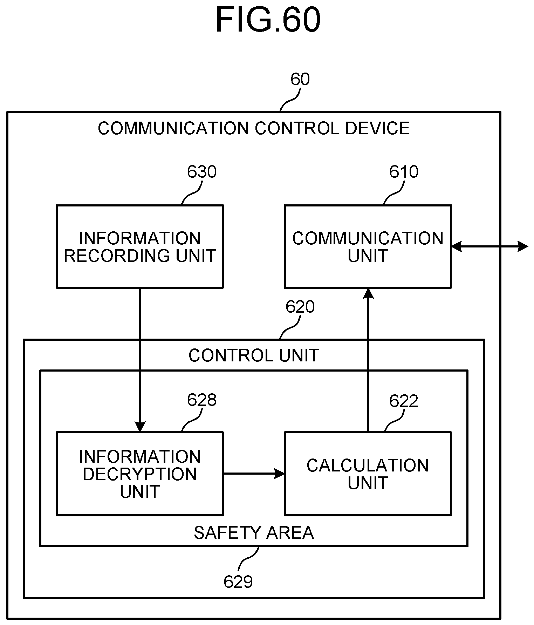

FIG. 60 is a diagram illustrating a configuration example of a communication control device according to the seventh embodiment of the present disclosure. FIG. 60 is a block diagram illustrating a configuration example of the communication control device 60 similarly to FIG. 2. The communication control device 60 in FIG. 60 is different from the communication control device 60 in FIG. 2 in including a safety area 629.

As described above, a control unit 620 of the communication control device 60 in FIG. 60 includes the safety area 629. An information decryption unit 628 and a calculation unit 622 are arranged in the safety area 629. The information decryption unit 628 decrypts information on the communication device from an information recording unit 630. The calculation unit 622 in FIG. 60 calculates information on the communication device. In the communication control device 60 in FIG. 60, all the calculation of the information on the communication device is performed in the safety area 629.

Here, two execution methods are conceivable for the calculation inside the safety area 629: (a) executing secret calculation of cryptography having homomorphism inside the safety area; and (b) executing calculation by decrypting the cryptography inside the safety area. Regarding (a), by combining both the characteristics of the safety area and the characteristics of the secret encryption, information protection can be performed more securely. On the other hand, regarding (b), it is possible to increase the calculation speed by using decrypted information, while maintaining the same reliability of information protection as that of the safety area. In a case of executing (a), if there is unencrypted information on a communication device, the unencrypted information is encrypted in the safety area 629 (or outside safety area). In the case of (b), if there is encrypted information on a communication device, the encrypted information is decrypted in the safety area 629. Thereafter, calculation is executed using the encrypted or decrypted information. Note that in a case where the information on the communication device used for calculation (estimation) is not encrypted, the calculation may be executed without using the safety area 629.

[Communication control processing]

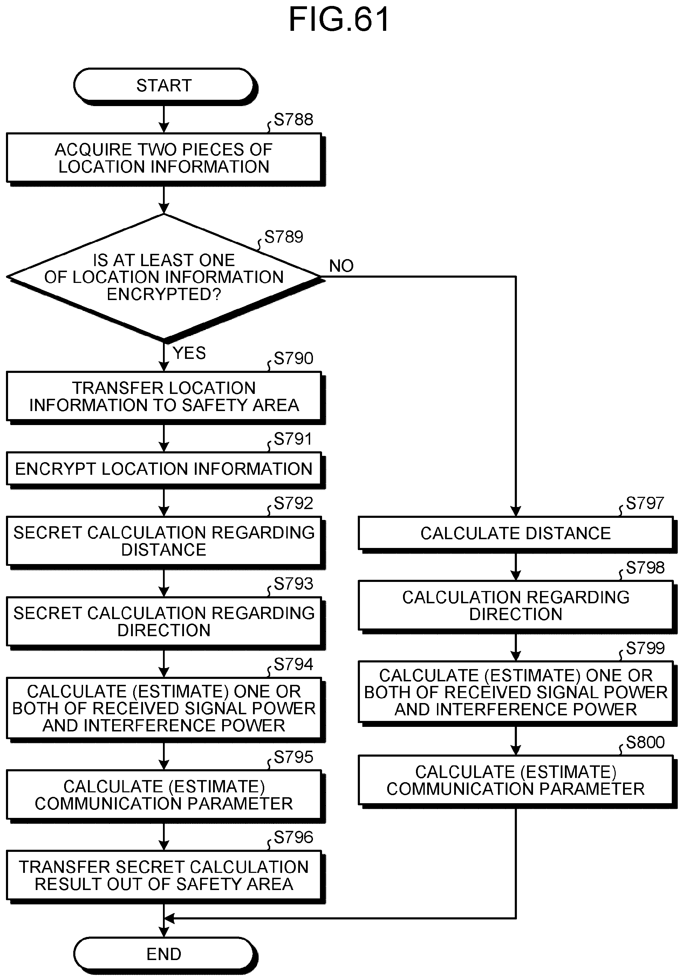

FIG. 61 is a diagram illustrating an example of a processing procedure of communication control processing according to the seventh embodiment of the present disclosure. FIG. 61 is a flowchart illustrating an example of a processing procedure of the communication control device 60 in FIG. 60.

First, the communication control device 60 acquires two pieces of location information (Step S788). Next, the communication control device 60 determines whether at least one of the location information is encrypted (Step S789). If at least one of the location information is encrypted (Step S789, Yes), the communication control device 60 transfers the location information into the safety area 629 (Step S790). Next, the communication control device 60 encrypts the location information (Step S791). Next, the communication control device 60 performs secret calculation regarding distance (Step S792). Next, the communication control device 60 performs secret calculation regarding direction (Step S793). Next, the communication control device 60 calculates (estimates) at least one of received signal power and interference power (Step S794). Next, the communication control device 60 calculates (estimates) the communication parameter (Step S795). Next, the communication control device 60 transfers the secret calculation result to the outside of the safety area 629 (Step S796), and ends the processing.

On the other hand, in step S789, if none of the location information is encrypted (Step S789, No), the communication control device 60 performs calculation regarding distance (Step S797). Next, the communication control device 60 performs calculation regarding direction (Step S798). Next, the communication control device 60 calculates (estimates) at least one of received signal power and interference power (Step S799). Next, the communication control device 60 calculates (estimates) the communication parameter (Step S800), and ends the processing. Of the above processing, steps S790 to S796 is processing in the safety area 629.

[Other configuration of communication control device]

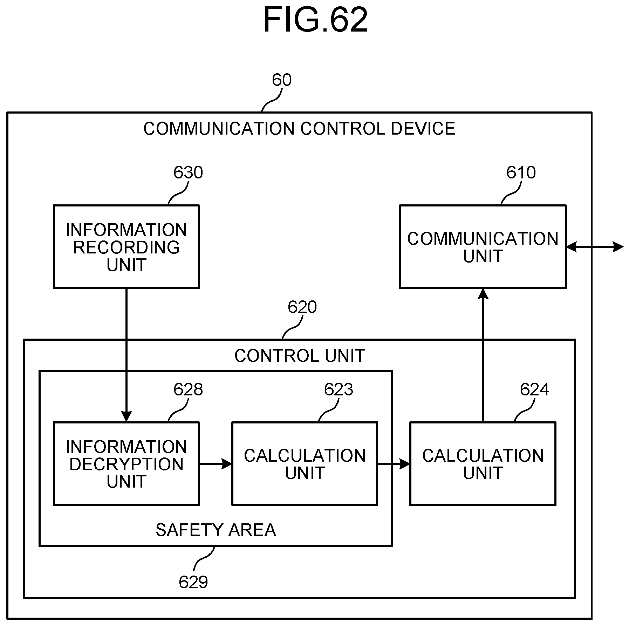

FIG. 62 is a diagram illustrating another configuration example of the communication control device according to the seventh embodiment of the present disclosure. FIG. 62 is a block diagram illustrating a configuration example of the communication control device 60 similarly to FIG. 60. The communication control device 60 in FIG. 62 is different from the communication control device 60 in FIG. 60 in further including a calculation unit 624.

As described above, the control unit 620 of the communication control device 60 in FIG. 62 includes the calculation unit 624. The calculation unit 624 is arranged outside the safety area 629. In the communication control device 60 in FIG. 62, some of calculation of the information on the communication device is performed in the safety area 629.

The communication control device 60 in FIG. 62 divides the secret calculation into the inside of the safety area 629 and the outside of the safety area 629 and executes the secret calculation. As a result, even in the communication control device 60 in which the capacity of the safety area is limited, it is possible to prevent a decrease in calculation capability while protecting the information on the communication device. Whether or not to directly use information on an encryption target in target calculation corresponds to a guideline of division of secret calculation into the inside and outside of the safety area 629, for example. For example, the distance and orientation between two pieces of location information in the processing of FIG. 61 are information calculated directly using the location information to be encrypted. Therefore, it is desirable that the calculation of the distance and orientation between the two pieces of location information is executed inside the safety area 629. In addition, since the calculation and setting of a radio wave propagation model also use the location information, it is desirable to perform the calculation and setting inside the safety area 629.

On the other hand, received signal power and interference signal power use the distance, the orientation, and the radio wave propagation model setting obtained from the two pieces of location information for calculation. Since the distance, orientation, and radio wave propagation model setting are not encryption targets, calculation of the received signal power and the interference signal power is allowed to be executed outside the safety area 629.

[Communication control processing]

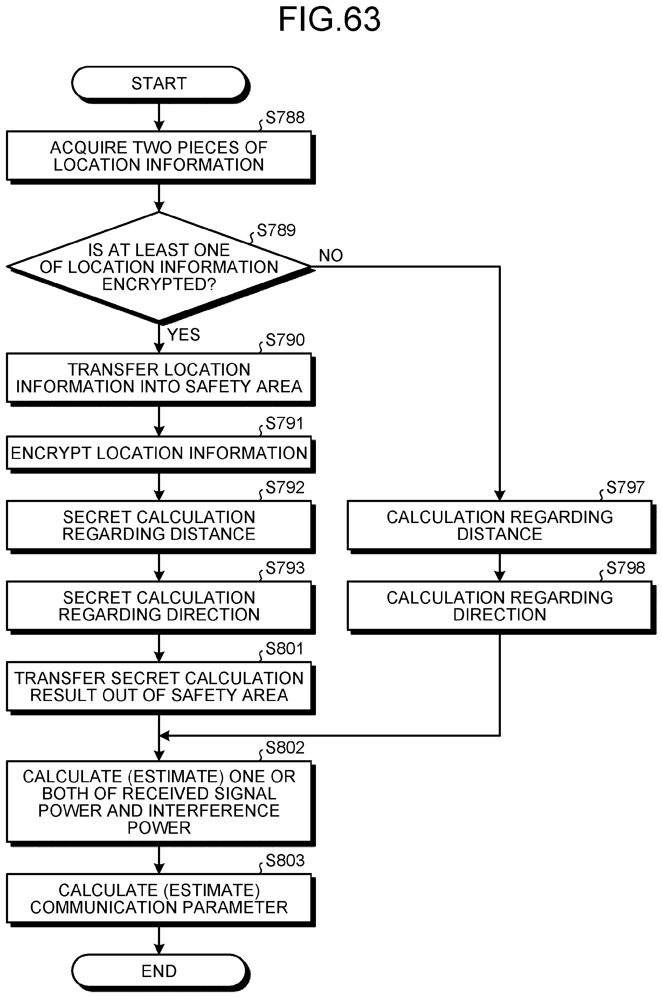

FIG. 63 is a diagram illustrating another example of the processing procedure of the communication control processing according to the seventh embodiment of the present disclosure. FIG. 63 is a flowchart illustrating an example of a processing procedure of the communication control device 60 in FIG. 62.

First, the communication control device 60 acquires two pieces of location information (Step S788). Next, the communication control device 60 determines whether at least one of the location information is encrypted (Step S789). If at least one of the location information is encrypted (Step S789, Yes), the communication control device 60 transfers the location information into the safety area 629 (Step S790). Next, the communication control device 60 encrypts the location information (Step S791). Next, the communication control device 60 performs secret calculation regarding distance (Step S792). Next, the communication control device 60 performs secret calculation regarding direction (Step S793).

Next, the communication control device 60 transfers the secret calculation result to the outside of the safety area 629 (Step S801). Next, the communication control device 60 calculates (estimates) at least one of received signal power and interference power (Step S802). Next, the communication control device 60 calculates (estimates) the communication parameter (Step S803), and ends the processing.

On the other hand, in step S789, if none of the location information is encrypted (Step S789, No), the communication control device 60 performs calculation regarding distance (Step S797). Next, the communication control device 60 performs calculation regarding direction (Step S798). Next, the communication control device 60 proceeds to the processing of step S802.

The configuration of the communication system 1000 other than this is similar to the configuration of the communication system 1000 in the first embodiment of the present disclosure, and thus the description thereof is omitted.

As described above, the communication system 1000 according to the seventh embodiment of the present disclosure performs secret calculation based on information on the communication device in the safety area 629 arranged in the communication control device 60. As a result, the information on the communication device can be concealed.

(8. Eighth embodiment)

In the communication system 1000 according to the first embodiment described above, the communication control device 60 performs encrypted secret calculation. On the other hand, a communication system 1000 according to an eighth embodiment of the present disclosure is different from the above-described first embodiment in that secret calculation is performed by secret sharing using a plurality of communication control devices 60.

[Secret sharing]

As described above, in the eighth embodiment of the present disclosure, secret calculation by secret sharing is performed. Here, secret sharing is a technology for dividing information (confidential information) to be protected into a plurality of pieces of information and performing distributed management. Information (also referred to as share) distributed by secret sharing cannot independently restore the original confidential information, but can restore the original information by collecting a certain number or more of shares. The confidential information is divided into a plurality of shares by secret sharing, distributed to a plurality of devices and the like (or users and the like), and certain calculation and functions are executed (evaluated) by using the shares. Using the output, target control (e.g., generation of communication parameter of the communication device) or the like can be performed.

Secret sharing will be explained more qualitatively. Consider distributing confidential information X into M pieces. Secret sharing by the (N, M) threshold secret sharing method using the number N having the relationship N<=M is formulated by a stochastic polynomial algorithm deal and a polynomial algorithm recovery. The owner of the confidential information (e.g., communication device) generates M shares Um from the confidential information by deal.

$(U_1,...,U_m,...,U_M) \leftarrow \mathrm{deal}(X,M)$

Here, the share has the following properties. Secret sharing having these properties is called the (N, M) threshold secret sharing method. (a) From (N-1) or less shares, no information can be obtained about the original confidential Information. (b) The original confidential information can be completely restored from N or more shares.

The device or user holding confidential information passes different shares to the M devices or users. In a case where N or more share holding devices and users out of M cooperate, N shares can be collected, and thus the original confidential information can be restored by recovery.

$X \leftarrow \mathrm{recovery}(U_{\mu(1)},...,U_{\mu(n)},...,U_{\mu(N)})$

Here, $\mu(1)$ to $\mu(N)$ are indices of cooperative share holding devices or users. As a more specific secret sharing method, it is desirable to use secret sharing by additive sharing, secret sharing by polynomial, or the like.

The communication control device 60 notifies the communication device 40 of the secret sharing method by including it in information regarding the deal algorithm. As a result, the communication device 40 that has received the notification distributes all or a part of the information on the communication device using this deal algorithm. In a case where a plurality of communication devices 40 is registered in the communication control device 60, the communication control device 60 can designate and notify information on the same secret sharing regarding information on the secret sharing method used by the plurality of communication devices. Here, the same secret sharing corresponds to, for example, a case where the deal algorithm is the same. Furthermore, in a case where a plurality of communication devices 40 uses the same secret sharing method and the same deal algorithm at a certain time or within a certain time range, they are included in the same secret sharing. In other words, the secret sharing method or the deal algorithm may be different between a certain time and another time.

In a case where a plurality of communication devices 40 is registered in the communication control device 60, the communication control device 60 can also designate and notify information on different secret sharing regarding information on the secret sharing used by the plurality of communication devices 40. Here, the different secret sharing correspond to, for example, different secret sharing methods or different deal algorithms.

In the present disclosure, an expression such as "share a secret" may refer to, in a broad sense, division of target information into a plurality of shares (implementation of a deal algorithm). In addition, in a narrow sense, in addition to the broad sense, it may refer to distributing a plurality of divided shares to a plurality of devices and users.

[Secret calculation by secret sharing]

In the present embodiment, the communication control device 60 executes calculation (estimation) of an object by secret calculation using information on the communication device received from the communication device 40 or another communication control device. The items to be calculated (estimated) by executing secret calculation correspond to, for example, (a) a distance and a direction regarding the communication device, (b) a radio wave propagation model regarding the communication device, and (c) received signal power and interference signal power regarding the communication device.

The secret calculation of the present disclosure can be executed, for example, in a state in which the secret is shared (state in which the share remains) until the end of the calculation (estimation). In this case, the communication parameters and the like of the communication device obtained from the result are also in a secret-shared state. The target communication device 40 is notified of the communication parameter that has been subjected to the secret sharing. The communication device 40 notified of the communication parameter subjected to the secret sharing performs decryption by using the recovery algorithm in the set secret sharing.

In addition, the secret calculation of the present disclosure may be executed, for example, in a state where the share is decrypted in the process. In this case, the communication parameters and the like of the communication device obtained from the result are not in a secret-shared state (in a decrypted state). When notifying the communication device 40 of the information such as the communication parameter, the notification can be given to the communication device 40 with the information subjected to secret sharing again. Alternatively, it is possible to notify the communication device 40 of the information such as the communication parameter without subjecting the information to secret sharing.

Note that the communication control device 60 (first communication control device 61 and second communication control device 62 described later) according to the eighth embodiment of the present disclosure can have the same configuration as that in FIG. 2. The calculation unit 621 arranged in the control unit 620 performs secret calculation by secret sharing.

[Communication control procedure]

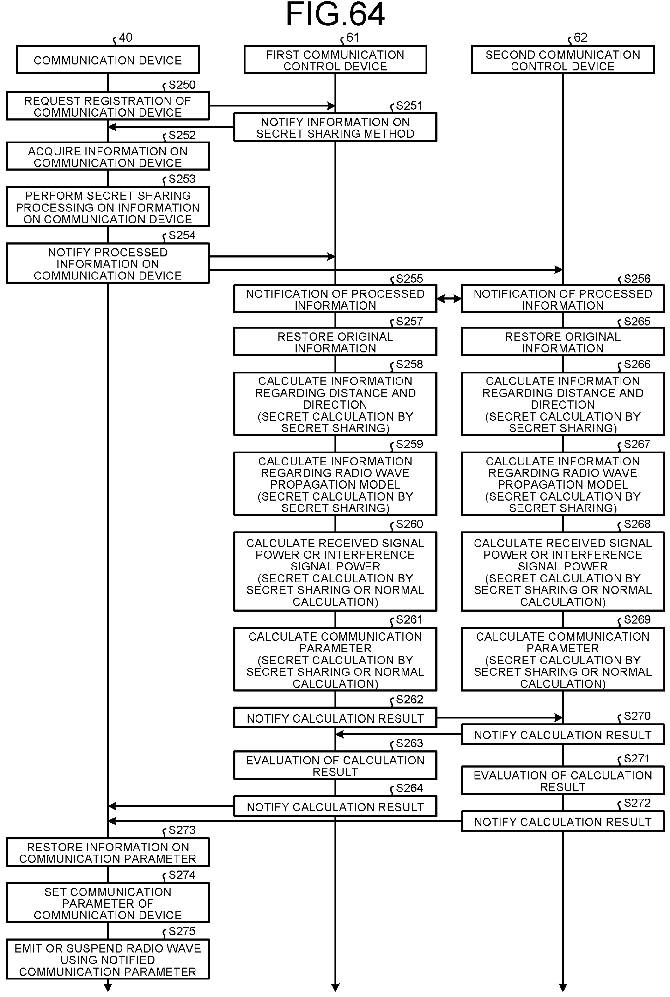

FIG. 64 is a diagram illustrating an example of a communication control procedure according to the eighth embodiment of the present disclosure. FIG. 64 is a diagram illustrating an example of a communication control procedure among the communication device 40, the first communication control device 61, and the second communication control device 62. The first communication control device 61 and the second communication control device 62 correspond to the plurality of communication control devices 60 described above, and perform secret calculation by secret sharing. Note that FIG. 64 illustrates the link between the communication device 40 and each of the first communication control device 61 and the second communication control device 62 in a form regardless of whether the link is physically directly connected or indirectly connected. Even when the communication device 40 is indirectly connected to the first communication control device 61 and the second communication control device 62, both ends of the communication link are considered to be the communication device 40, and the first communication control device 61 and the second communication control device 62.

First, the communication device 40 registers itself in the first communication control device 61. Specifically, the communication device 40 requests the first communication control device 61 to register (Step S250). The first communication control device 61 notifies the registered communication device 40 of information on the encryption scheme (Step S251).

The information on the encryption scheme is information regarding secret sharing. The information regarding secret sharing corresponds to, for example, a specific scheme of secret sharing, a rule used for secret sharing, a valid period of the secret sharing method and rule to be notified, and the like. Furthermore, the information on the encryption scheme also corresponds to, for example, information (ID, address, location, and the like) of a plurality of communication control devices to which information subjected to secret sharing processing is to be notified. Furthermore, the first communication control device 61 may be configured to notify the communication device 40 of a rule to be used for decryption of information subjected to secret sharing. This decryption rule is used for decryption in a case where the communication parameter to be used by the communication device notified from the first communication control device 61 and the second communication control device 62 to the communication device 40 later is subjected to secret sharing. Note that together with this notification, the first communication control device 61 may notify that the registration is completed.

Next, the communication device 40 acquires its own information (Step S252). The acquisition timing is not necessarily the timing in FIG. 64. For example, since there is little information that changes with time in the fixedly installed communication device 40, information may be statically acquired before registration in the first communication control device 61. The communication device 40 performs secret sharing processing on at least a part of its own information according to the information on the encryption scheme notified from the first communication control device 61 (Step S253). The communication device 40 notifies the first communication control device 61 and the second communication control device 62 of the processed information on the communication device (Step S254). Each communication control device is notified of information having a different processing result (not notified of a copy of the information on the processing result).

The first communication control device 61 and the second communication control device 62 notify each other of the processed information and exchange the processed information (steps S255 and S256). As a result, it is possible to perform secret calculation by secret sharing. Next, the first communication control device 61 restores the original information from the processed information notified to itself and the processed information exchanged in step S255 (Step S257). Next, the first communication control device 61 calculates information regarding distance and direction (Step S258), and calculates information regarding the radio wave propagation model (Step S259). Next, the first communication control device 61 calculates received signal power or interference signal power (Step S260), and calculates a communication parameter (Step S261). Next, the first communication control device 61 notifies the second communication control device 62 of the calculation result (Step S262).

The second communication control device 62 performs the processing procedure of steps S256 to S269. Since these processing procedures are similar to those in steps S257 to S261 described above, the description thereof is omitted. Next, the second communication control device 62 notifies the first communication control device 61 of the calculation result (Step S270). The first communication control device 61 evaluates the calculation result (Step S263) and notifies the communication device 40 of the communication parameter (Step S264). The second communication control device 62 also evaluates the calculation result (Step S271), and notifies the communication device 40 of the communication parameter (Step S272).

The communication device 40 notified of the communication parameters from the first communication control device 61 and the second communication control device 62 restores the information on the communication parameter (Step S273). Next, the communication device 40 performs setting of the communication device according to the restored communication parameter (Step S274). Next, the communication device 40 emits or suspends radio waves using the notified communication parameter (Step S275).

In the processing procedures of steps S258 to S261 and steps S266 to S269 described above, secret calculation by secret sharing is performed. By applying the secret calculation by the secret sharing in the above calculation (estimation) including the progress, the calculation (estimation) can be performed without the third party including the communication control device knowing the information on the communication device. In addition, although not illustrated in FIG. 64, the progress of calculation may be notified to and exchanged with another communication control device in the process of executing secret calculation by secret sharing. As a result, it can be expected that the distribution of the calculation load is reduced.

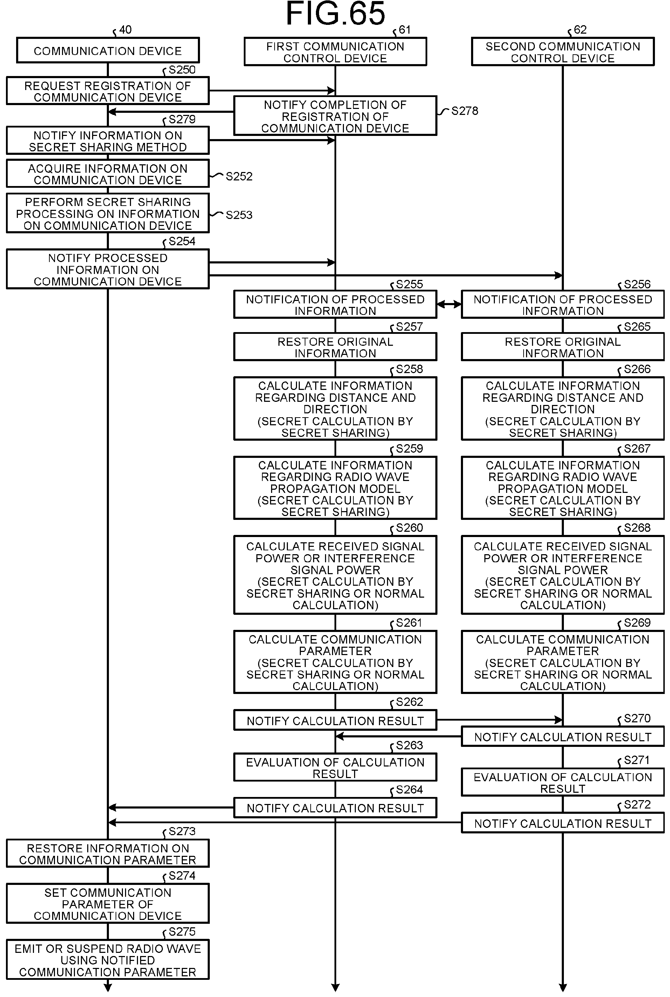

FIG. 65 is a diagram illustrating another example of the communication control procedure according to the eighth embodiment of the present disclosure. Similarly to FIG. 64, FIG. 65 is a diagram illustrating an example of a communication control procedure among the communication device 40, the first communication control device 61, and the second communication control device 62. The processing is different from the processing of FIG. 64 in that the communication device 40 notifies the first communication control device 61 of the secret sharing method.

First, the communication device 40 requests the first communication control device 61 to register (Step S250). The first communication control device 61 notifies the registered communication device 40 of the registration completion (Step S278). Next, the communication device 40 notifies the first communication control device 61 of the information on the secret sharing method (Step S279). Since the subsequent control procedure is similar to that in FIG. 64, the description thereof is omitted.

Note that the information of FIG. 12 can be applied to the information on the encryption scheme of FIGS. 64 and 65. Among them, the secret sharing method is applied as the encryption scheme. Furthermore, the information of FIG. 13 can be applied to the information on the communication device described above. Furthermore, the information of FIG. 14 can be applied to the above-described communication parameters.

Furthermore, the processing of FIGS. 8 to 11, 15, 17, 18, 20, 22, 25 to 28, 30, 32, 33, and 36 to 39 can also be applied in the eighth embodiment of the present disclosure. Of the processing above, a part "secret calculation" is replaced with "secret calculation by secret sharing", and secret calculation by secret sharing is applied as the encryption scheme.

The configuration of the communication system 1000 other than this is similar to the configuration of the communication system 1000 in the first embodiment of the present disclosure, and thus the description thereof is omitted.

As described above, the communication system 1000 according to the eighth embodiment of the present disclosure performs secret calculation by secret sharing using a plurality of communication control devices (first communication control device 61 and second communication control device 62). As a result, the information on the communication device can be concealed.

(9. Ninth embodiment)

A variation of the above-described eighth embodiment will be described.

[Communication control procedure]

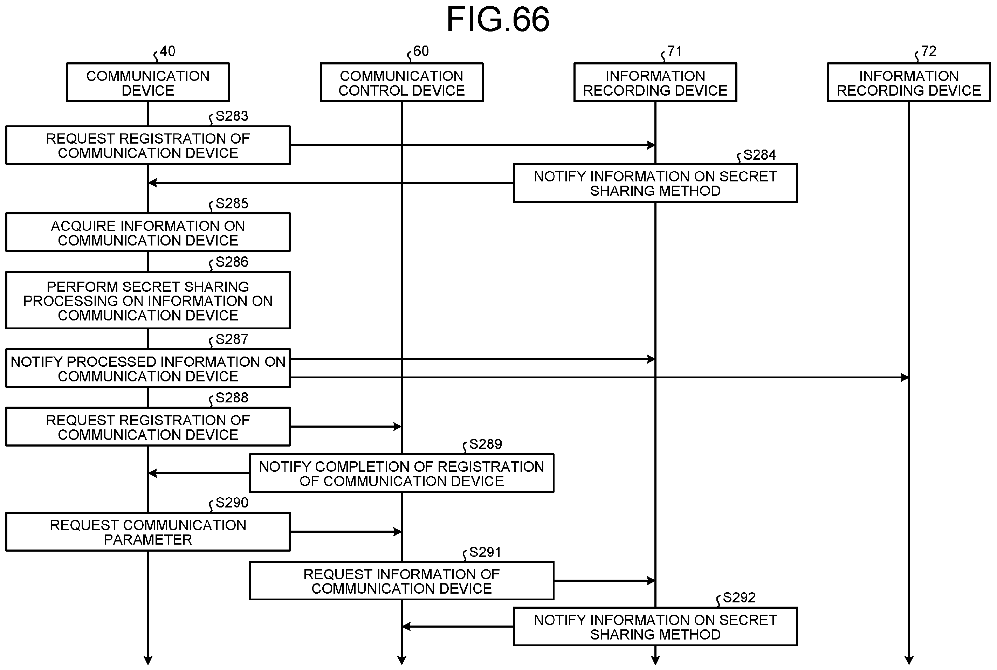

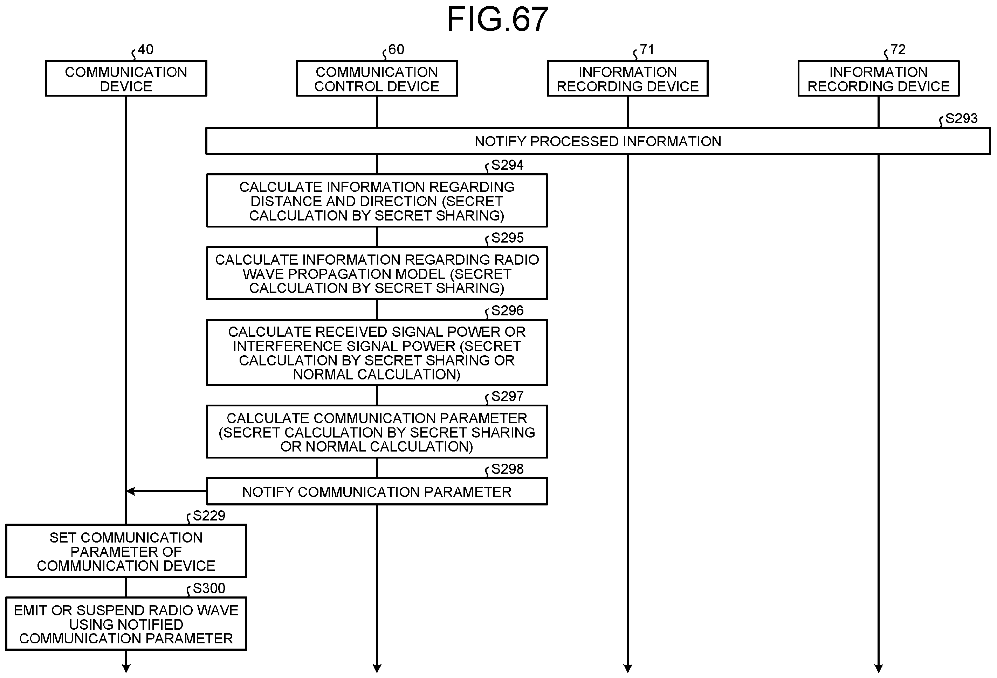

FIGS. 66 and 67 are diagrams illustrating an example of a communication control procedure according to a ninth embodiment of the present disclosure. FIGS. 66 and 67 are diagrams illustrating an example of a communication control procedure among a communication device 40, a communication control device 60, an information recording device 71, and an information recording device 72. The processing procedure in FIGS. 66 and 67 illustrate a case where a communication control device that calculates (estimates) a communication parameter to be used by the communication device 40 and an information recording device (regulatory database in FIG. 1) that records information on the communication device are operated as different communication control devices. In this case, there is a plurality of information recording devices that record or hold information on the communication device.

First, the communication device 40 requests the information recording device 71 to register the communication device 40 (Step S283). The information recording device 71 notifies the registered communication device 40 of information on the encryption scheme (Step S284). The communication device 40 acquires its own information on the communication device (Step S285), performs secret sharing processing on the acquired information on the communication device (Step S286), and notifies the information recording device 71 and the information recording device 72 of the processed information on the communication device (Step S287). Next, the communication device 40 registers itself in the communication control device 60 (Step S288). The communication control device 60 notifies the registration completion of the registered communication device 40 (Step S289). The communication device 40 requests a communication parameter from the communication control device 60 (Step S290).

The communication control device 60 requests information on the target communication device from the information recording device 71 (Step S291). The information recording device 71 notifies the communication control device 60 of the secret sharing method (Step S292). The information regarding the secret sharing may be the same as the information notified from the information recording device 71 to the communication device 40, or may be only a part of the information notified from the information recording device 71 to the communication device 40. The case of notifying only a part corresponds to, for example, a case of notifying at least one of the secret sharing method to be used and the rule to be used. Next, the information recording device 71 and the information recording device 72 notify the communication control device 60 of the processed information (Step S293). The processed information is processed by the target communication device 40.

The communication control device 60 that has received the information on the target communication device executes the control procedure of steps S294 to S297. Since this control procedure is similar to steps S258 to S261 in FIG. 64, the description thereof is omitted. Next, the communication control device 60 notifies the communication device 40 of the communication parameter (Step S298). The communication device 40 sets a communication parameter of the communication device (Step S299), and emits or suspends radio waves using the notified communication parameter (Step S300).

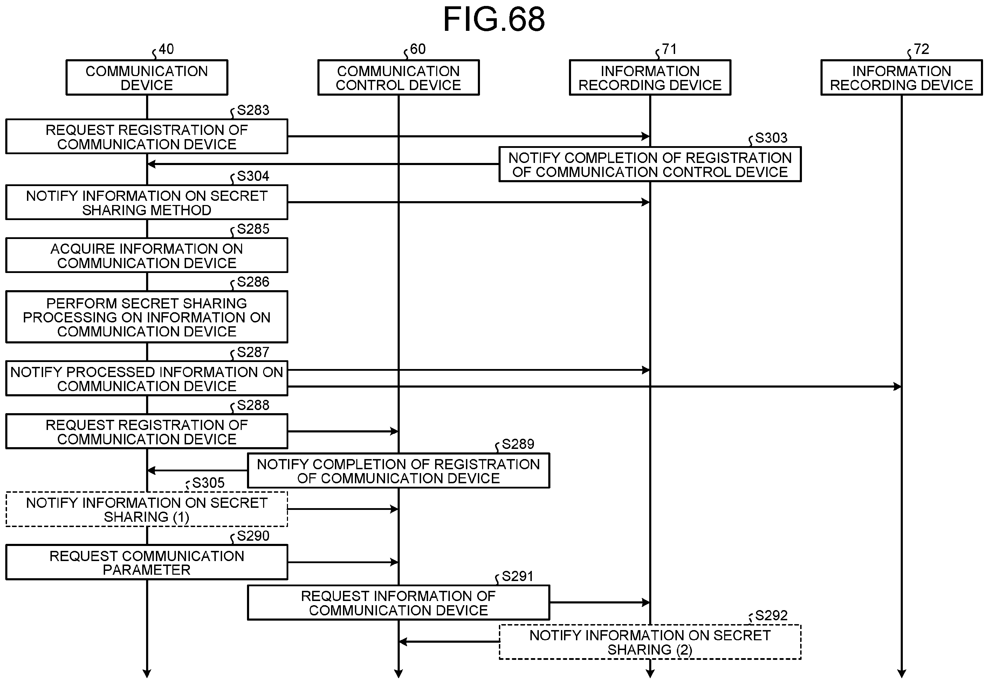

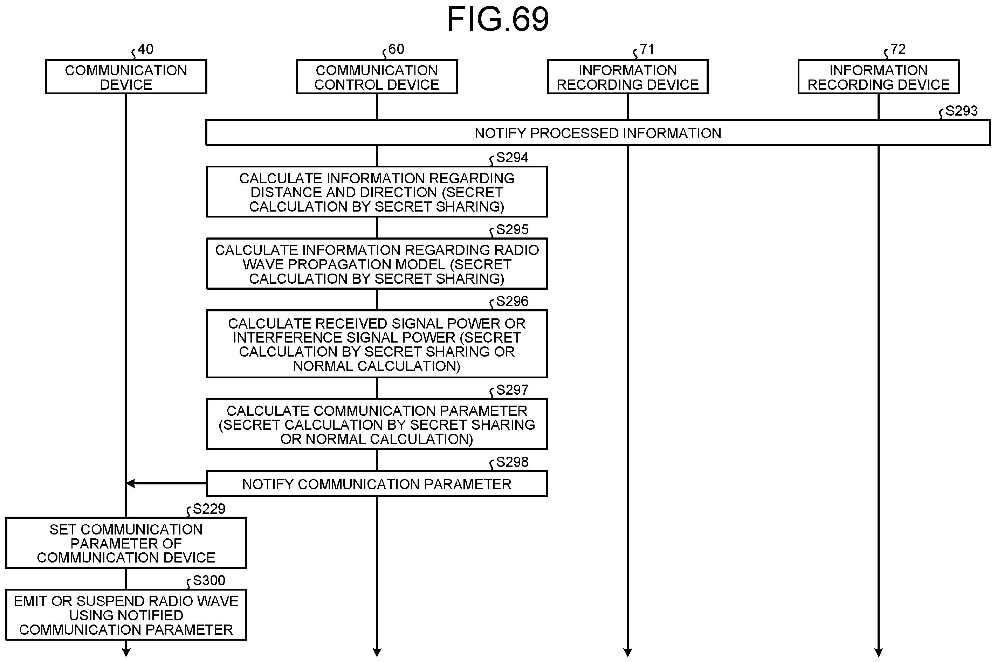

FIGS. 68 and 69 are diagrams illustrating another example of the communication control procedure according to the ninth embodiment of the present disclosure. Similarly to FIGS. 66 and 67, FIGS. 68 and 69 are diagrams illustrating an example of a communication control procedure among the communication device 40, the communication control device 60, the information recording device 71, and the information recording device 72. The processing procedure in FIGS. 68 and 69 is different from that in FIGS. 66 and 67 in that the communication device 40 notifies information on the secret sharing method.

First, the communication device 40 requests the information recording device 71 to register (Step S283). The information recording device 71 notifies the registration completion of the registered communication device 40 (Step S303). Next, the communication device 40 notifies the information recording device 71 of information on the secret sharing method (Step S304). Since Steps S285 to S300 in FIGS. 68 and 69 are similar to those in FIGS. 66 and 67, the description thereof is omitted.

Note that as a procedure of notifying the communication control device 60 of the information on the encryption scheme, a procedure (Step S305) in which the communication device 40 gives notification ((1) in FIG. 68) and a procedure (Step S292) in which the information recording device 71 gives notification ((2) in FIG. 68) can be considered. At least one of these procedures is applied.

In the present embodiment, the communication device 40 generates and notifies information on secret sharing. As a result, since the information recording device 71 does not have a rule for decrypting the processed information on the communication device, the information on the communication device can be protected more securely.

[Other communication control procedure]

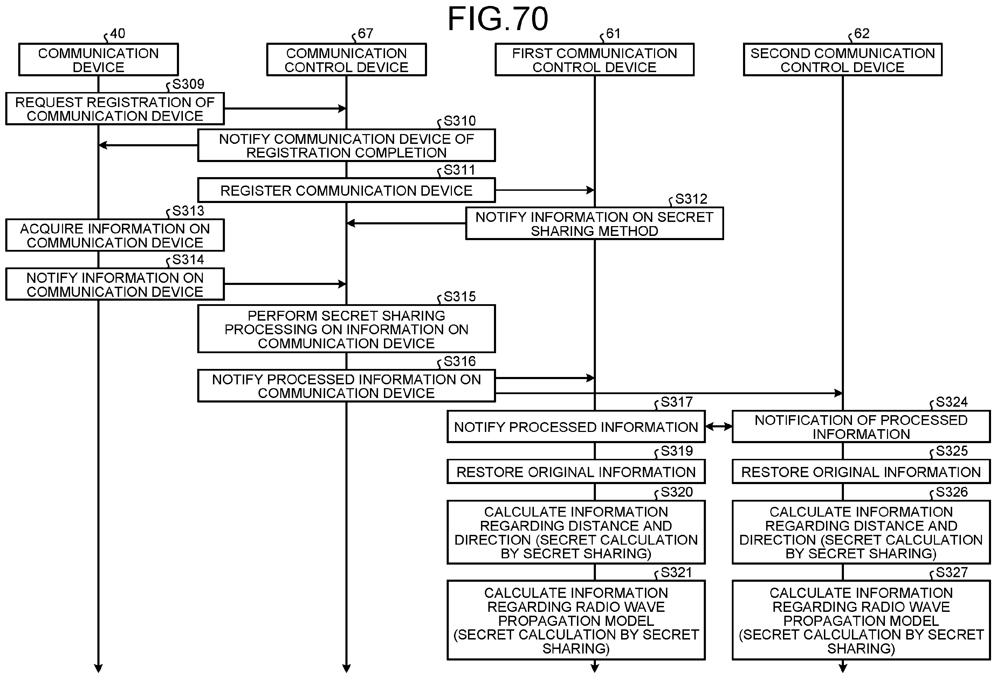

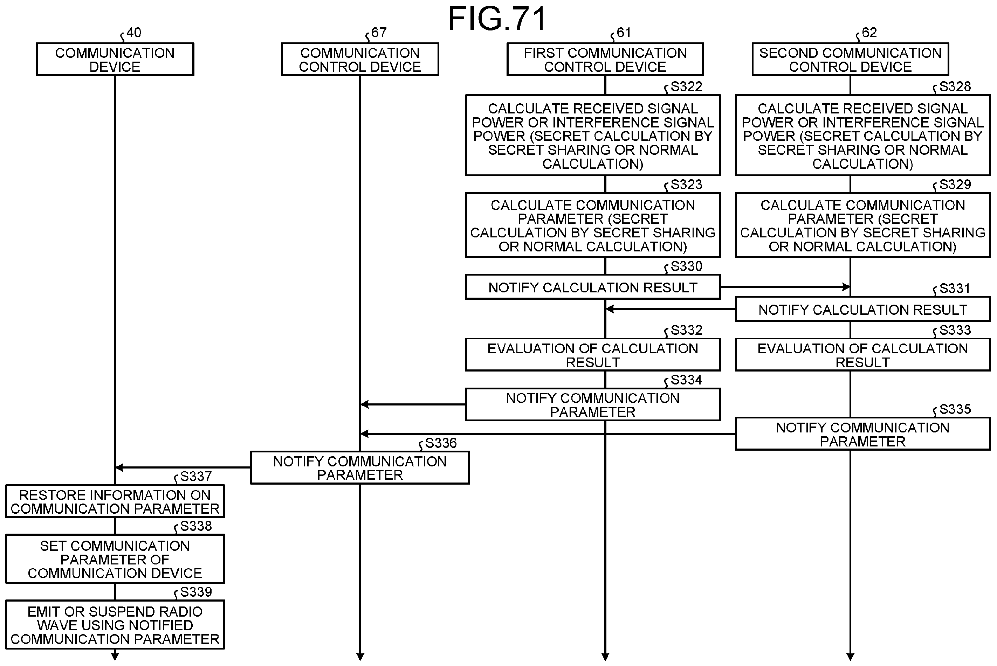

FIGS. 70 and 71 are diagrams illustrating another example of the communication control procedure according to the ninth embodiment of the present disclosure. FIGS. 70 and 71 are diagrams illustrating an example of a communication control procedure among the communication device 40, the communication control device 67, the first communication control device 61, and the second communication control device 62. Note that the communication control device 67 is the proxy device described in FIG. 48.

First, the communication device 40 requests the communication control device 67 to register (Step S309). The communication control device 67 notifies the registered communication device 40 of the registration completion (Step S310), and requests the first communication control device 61 to register the communication device (Step S311). The first communication control device 61 notifies the communication control device 67 of information on the encryption scheme (Step S312). The information on the encryption scheme is information related to information encryption for secret sharing used in the present disclosure, and corresponds to a specific encryption scheme, an encryption key (public key) used for encryption, a valid period of the encryption scheme and encryption key to be notified, and the like.

Next, the communication device 40 acquires its own information (Step S313) and notifies the communication control device 67 of at least a part of its own information (Step S314). The communication control device 67 performs secret sharing processing on the information on the communication device notified from the communication device 40 according to the information on the secret sharing method notified from the communication control device 61 (Step S315). Next, the communication control device 67 notifies the first communication control device 61 and the second communication control device 62 of the information on the communication device subjected to the secret sharing processing (Step S316).

Next, the first communication control device 61 and the second communication control device 62 perform processing of steps S317 to S333. Since the processing is similar to the processing of steps S255 to S271 of FIG. 65, the description thereof is omitted. Next, the first communication control device 61 and the second communication control device 62 notify the communication control device 67 of the communication parameter (steps S334 and S335). The communication control device 67 notifies the communication device 40 of the communication parameter (Step S336). Since the subsequent processing procedure (steps S337 to S339) is similar to steps S273 to S275 in FIG. 64, the description thereof is omitted.

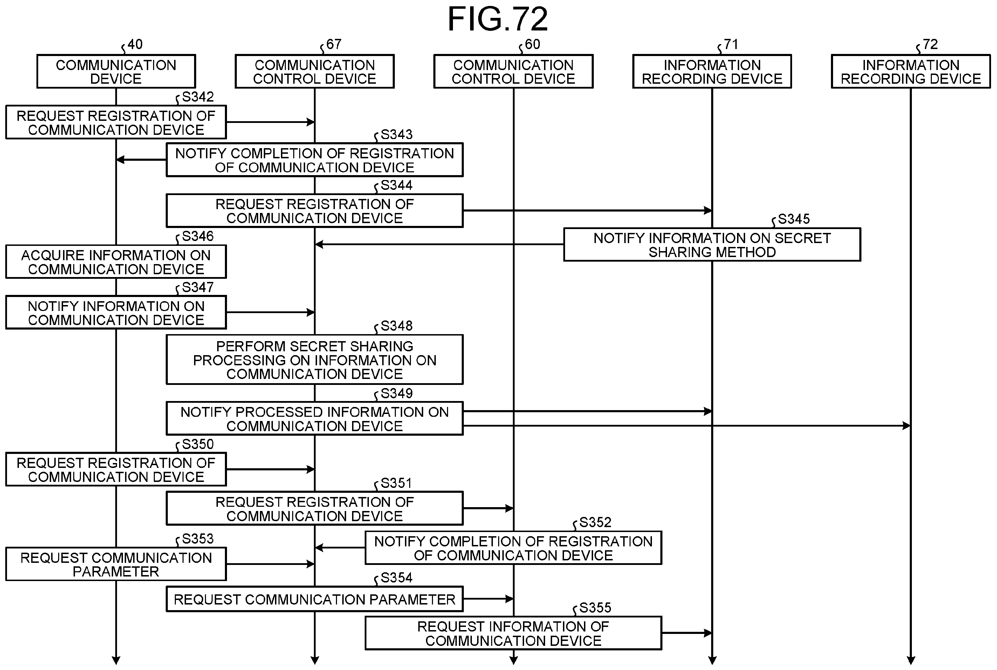

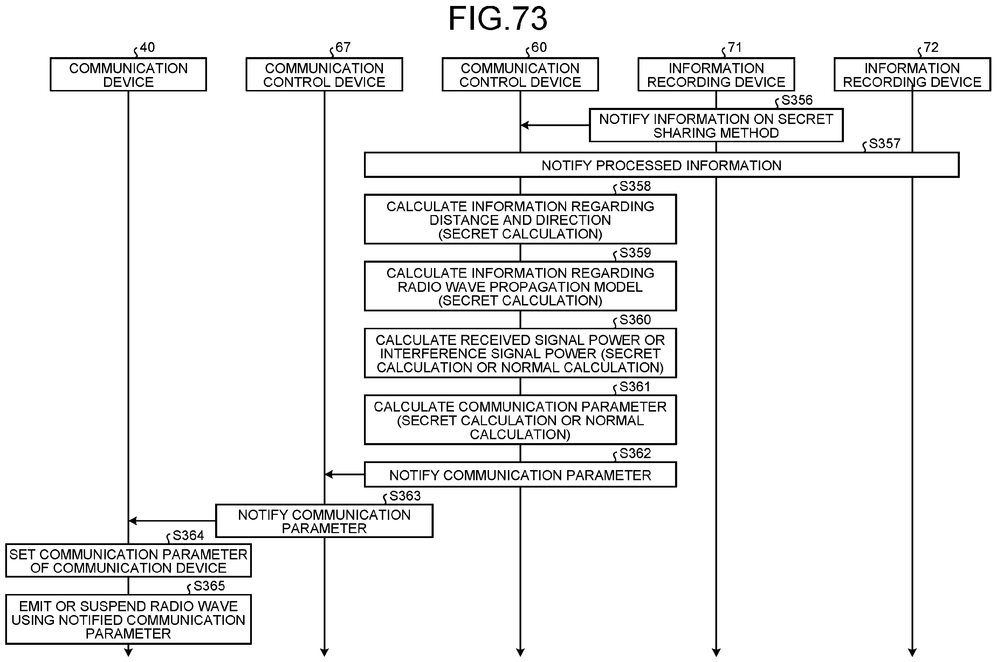

FIGS. 72 and 73 are diagrams illustrating another example of the communication control procedure according to the ninth embodiment of the present disclosure. FIGS. 72 and 73 are diagrams illustrating an example of a communication control procedure among the communication device 40, the communication control device 67, the communication control device 60, the information recording device 71, and the information recording device 72. In addition, FIGS. 72 and 73 correspond to a procedure in which a control procedure of the communication control device 67 is added to FIGS. 66 and 67.

First, the communication device 40 requests the communication control device 67 to register (Step S342). The communication control device 67 notifies the registered communication device 40 of the registration completion (Step S343), and requests the information recording device 71 to register the communication device (Step S344). The information recording device 71 notifies the communication control device 67 of information on the secret sharing method (Step S345).

Next, the communication device 40 acquires its own information (Step S346) and notifies the communication control device 67 of at least a part of its own information (Step S347). The communication control device 67 performs secret sharing processing on the information on the communication device notified from the communication device 40 according to the information on the secret sharing method notified from the information recording device 71 (Step S348). Next, the communication control device 67 notifies the information recording device 71 and the information recording device 72 of the information on the communication device subjected to the secret sharing processing (Step S349).

Next, the communication device 40 registers itself in the communication control device 67 (Step S350). The communication control device 67 registers the communication device 40 in the communication control device 60 (Step S351). The communication control device 60 notifies the registration completion of the registered communication device 40 (Step S352).

Next, the communication device 40 requests a communication parameter from the communication control device 67 (Step S353). The communication control device 67 requests the communication parameter from the communication control device 60 (Step S354). The communication control device 60 requests information on the communication device from the information recording device 71 (Step S355). The information recording device 71 notifies the communication control device 60 of the information on the secret sharing method (Step S356). Next, the information recording device 71 and the information recording device 72 notify the communication control device 60 of the processed information (Step S357). The processed information is processed by the communication control device 67.

Next, the communication control device 60 performs processing of steps S358 to S361. Since the processing is similar to the processing of steps S258 to S261 of FIG. 64, the description thereof is omitted. Next, the communication control device 60 notifies the communication control device 67 of the communication parameter (Step S362). The communication control device 67 notifies the communication device 40 of the communication parameter (Step S363). Since the subsequent processing procedure (steps S364 and S365) is similar to steps S274 and S275 in FIG. 64, the description thereof is omitted.

[Other communication control procedure]

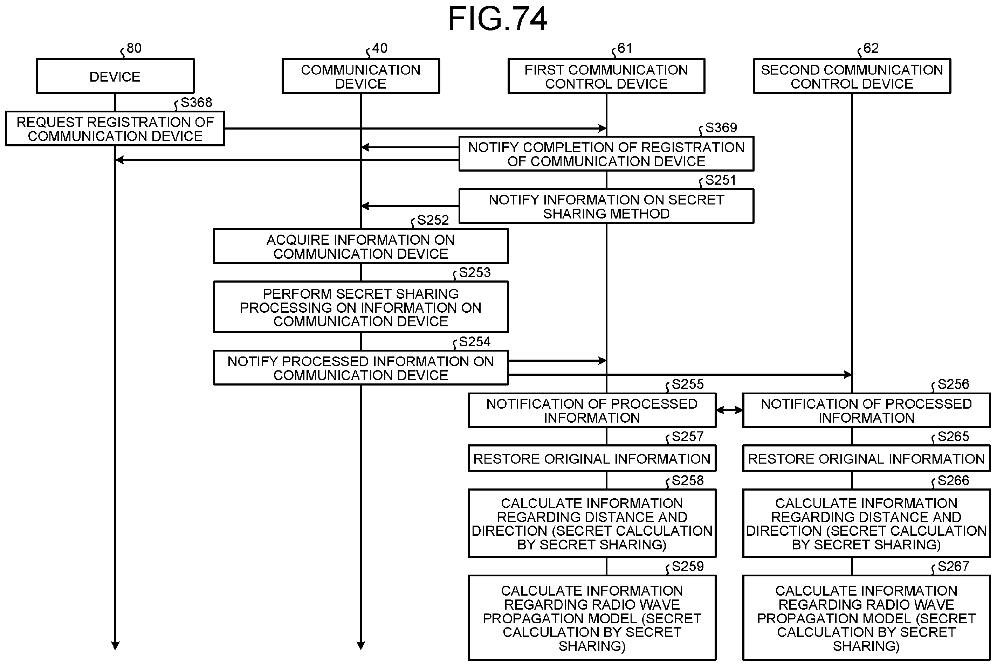

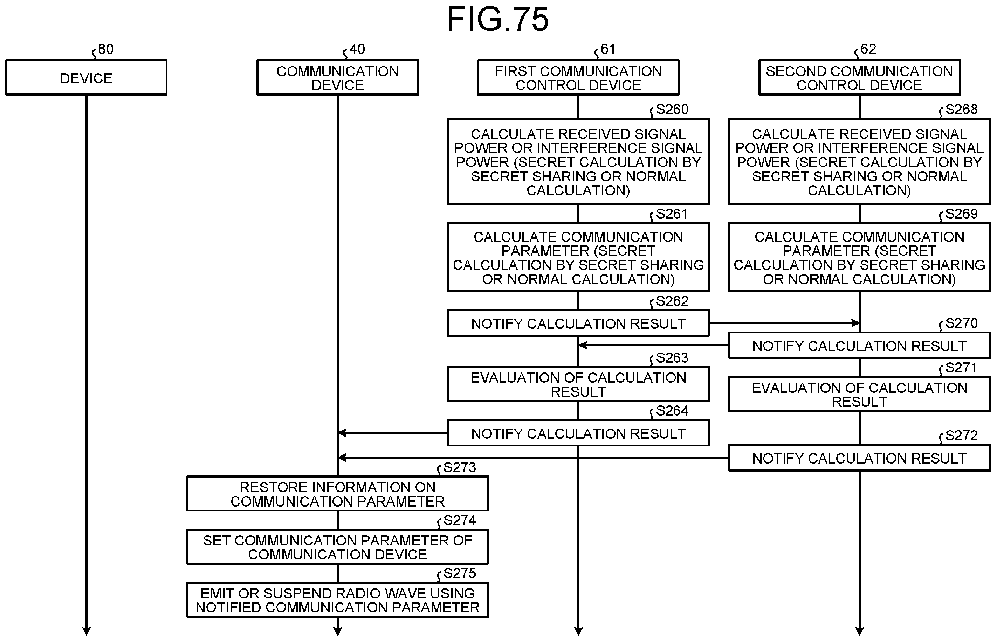

FIGS. 74 and 75 are diagrams illustrating another example of the communication control procedure according to the ninth embodiment of the present disclosure. FIGS. 74 and 75 are diagrams illustrating an example of a communication control procedure among the device 80, the communication device 40, the first communication control device 61, and the second communication control device 62. Note that the device 80 is a device other than the communication device 40 described in FIG. 52.

First, the device 80 requests the first communication control device 61 to register (Step S368). The first communication control device 61 notifies the device 80 and the communication device 40 of the registration completion (Step S369). Since subsequent control procedures are similar to those in FIGS. 64 and 65, the description thereof is omitted.

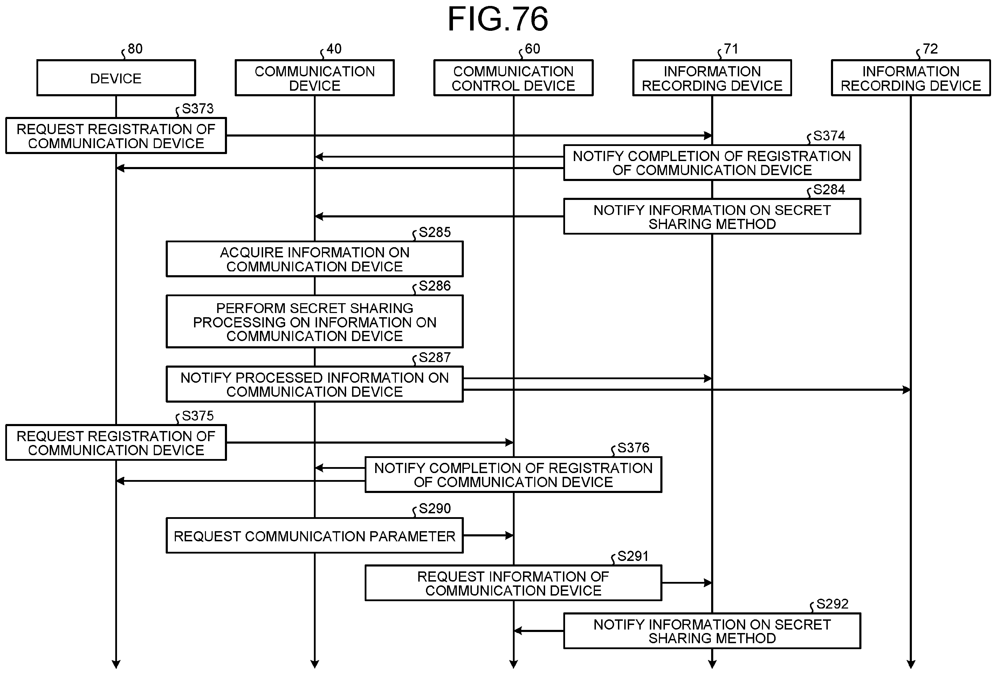

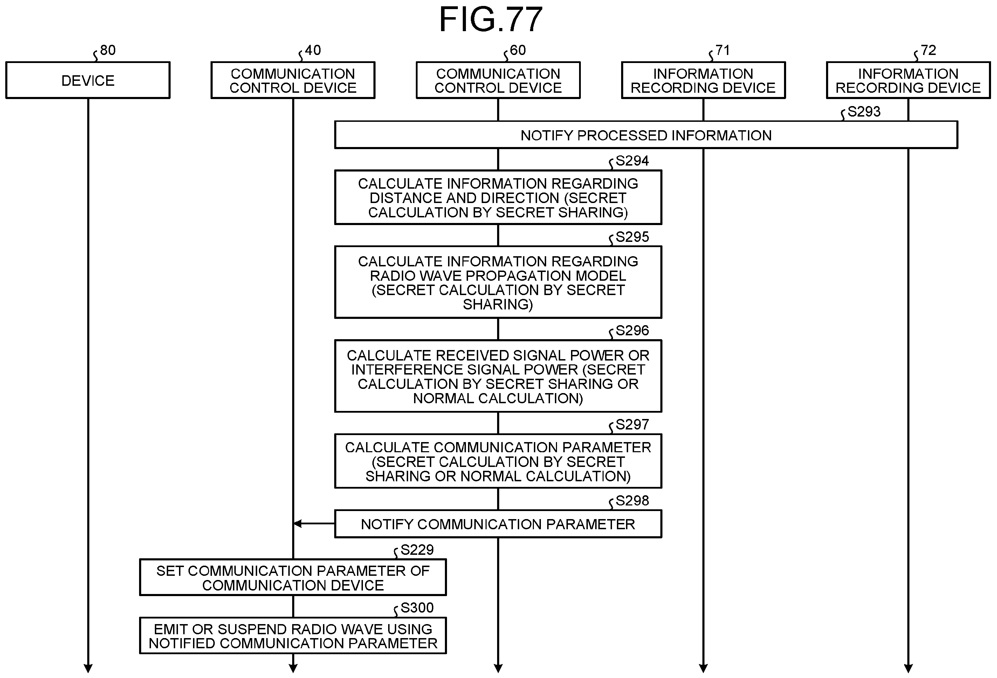

FIGS. 76 and 77 are diagrams illustrating another example of the communication control procedure according to the ninth embodiment of the present disclosure. FIGS. 76 and 77 are diagrams illustrating an example of a communication control procedure among the device 80, the communication device 40, the communication control device 60, the information recording device 71, and the information recording device 72.

First, device 80 requests the information recording device 71 to register (Step S373). The information recording device 71 notifies the device 80 and the communication device 40 of the registration completion (Step S374). Since subsequent control procedures are similar to those in FIGS. 66 and 67, the description thereof is omitted.

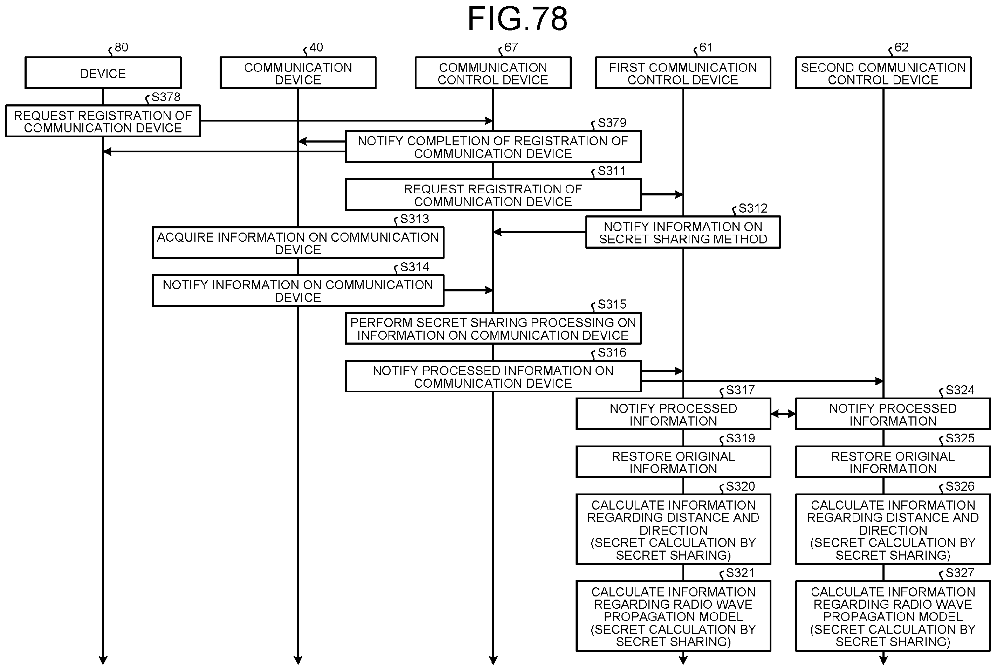

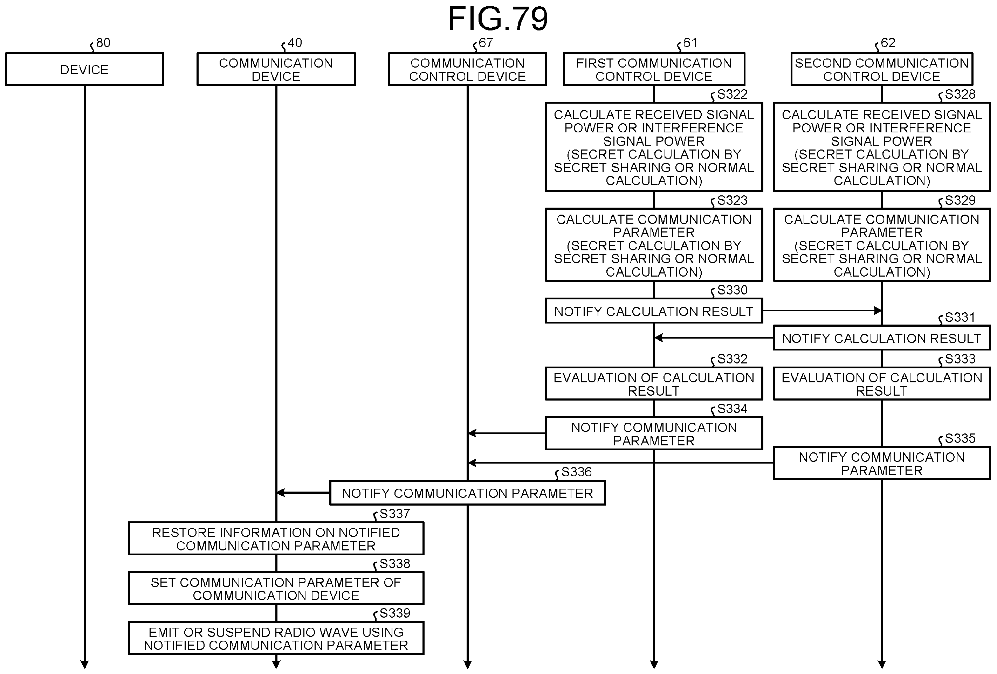

FIGS. 78 and 79 are diagrams illustrating another example of the communication control procedure according to the ninth embodiment of the present disclosure. FIGS. 78 and 79 are diagrams illustrating an example of a communication control procedure among the device 80, the communication device 40, the communication control device 67, the first communication control device 61, and the second communication control device 62.

First, the device 80 requests the communication control device 67 to register (Step S378). The communication control device 67 notifies the device 80 and the communication device 40 of the registration completion (Step S379). Since subsequent control procedures are similar to those in FIGS. 70 and 71, the description thereof is omitted.

The configuration of the communication system 1000 other than this is similar to the configuration of the communication system 1000 in the eighth embodiment of the present disclosure, and thus the description thereof is omitted.

(10. 10th embodiment)

In the communication system 1000 according to the eighth embodiment described above, the first communication control device 61 and the second communication control device 62 perform secret calculation by secret sharing based on information on the communication device 40 of the secondary communication system. On the other hand, a communication system 1000 according to a 10th embodiment of the present disclosure is different from the above-described eighth embodiment in that a first communication control device 61 and a second communication control device 62 perform secret calculation by secret sharing based on information on a plurality of communication devices.

As described above, in the 10th embodiment of the present disclosure, the first communication control device 61 and the second communication control device 62 perform secret calculation by secret sharing based on information on a plurality of communication devices, and generate a communication parameter. Specifically, the first communication control device 61 and the second communication control device 62 perform secret calculation by secret sharing based on information on the communication device of the primary communication system and the communication device of another secondary communication system, in addition to the communication device 40 of the secondary communication system. In this case, the first communication control device 61 and the second communication control device 62 receive encrypted information from the communication devices thereof, and perform calculation of interference between different communication systems or communication devices and generation of a communication parameter or the like of different communication systems or communication devices by secret calculation by secret sharing.

[Communication control procedure]

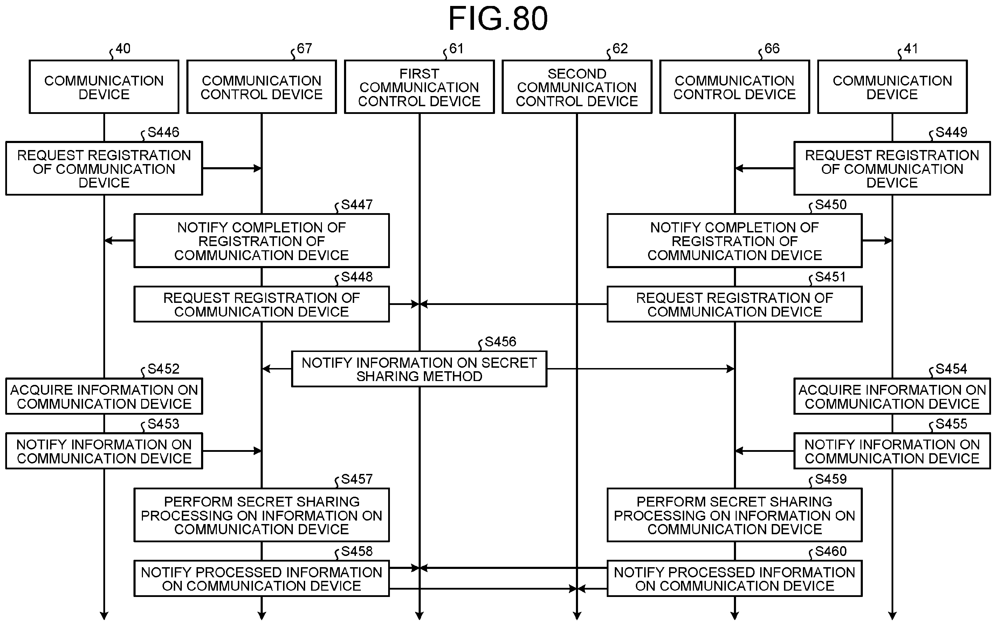

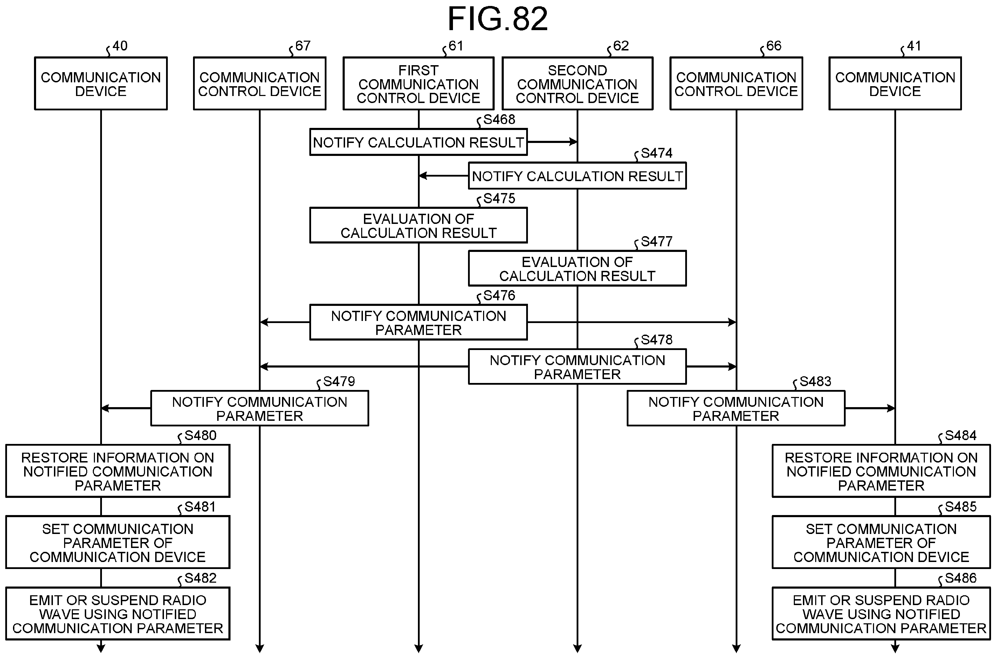

FIGS. 80 to 82 are diagrams illustrating an example of a communication control procedure according to the 10th embodiment of the present disclosure. FIGS. 80 to 82 are diagrams illustrating an example of a communication control procedure in which the first communication control device 61 and the second communication control device 62 perform secret calculation by secret sharing for encrypted information on the communication device of the communication device 40 and the communication device 41. Here, the communication device 41 is assumed to be a communication device of a secondary communication system different from the communication device 40 or a primary communication system. Furthermore, FIGS. 80 to 82 illustrate an example in a case where a communication control device 67 and a communication control device 66 corresponding to the proxy devices are provided. The communication control device 67 encrypts information on the communication device 40, and the communication control device 66 encrypts information on the communication device 41.

First, the communication device 40 requests the communication control device 67 to register (Step S446). The communication control device 67 notifies the communication device 40 of the registration completion (Step S447), and requests the first communication control device 61 to register the communication device 40 (Step S448). Similarly, the communication device 41 requests the communication control device 66 to register (Step S449). The communication control device 66 notifies the communication device 41 of the registration completion (Step S450), and requests the first communication control device 61 to register the communication device 41 (Step S451).

Next, the first communication control device 61 notifies the communication control devices 66 and 67 of information on the secret sharing method (for secret calculation by secret sharing) (Step S456).

Next, the communication device 40 acquires its own information (Step S452) and notifies the communication control device 67 of at least a part of its own information (Step S453). The communication control device 67 performs secret sharing processing on the information on the communication device notified from the communication device 40 according to the information on the encryption scheme notified from the first communication control device 61 (Step S457). Next, the communication control device 67 notifies the first communication control device 61 and the second communication control device 62 of the processed information on the communication device (Step S458). Similarly, the communication device 41 acquires its own information (Step S454) and notifies the communication control device 66 of at least a part of its own information (Step S455). The communication control device 66 performs secret sharing processing on the information on the communication device notified from the communication device 41 according to the information on the encryption scheme notified from the first communication control device 61 (Step S459). Next, the communication control device 66 notifies the first communication control device 61 and the second communication control device 62 of the processed information on the communication device (Step S460).

Next, the first communication control device 61 and the second communication control device 62 notify each other of the processed information and exchange the processed information (steps S461 and S462). Next, the first communication control device 61 restores the original information from the processed information notified to itself and the processed information exchanged in step S461 (Step S463). Next, the first communication control device 61 calculates information regarding distance and direction on the basis of the information on the communication devices 40 and 41 (Step S464), and calculates information regarding the radio wave propagation model (Step S465). Next, the first communication control device 61 calculates received signal power or interference signal power on the basis of the information on the communication devices 40 and 41 (Step S466), and calculates a communication parameter (Step S467). Next, the first communication control device 61 notifies the second communication control device 62 of the calculation result (Step S468).

Similarly, the second communication control device 62 performs the processing procedure of steps S469 to S473. Since these processing procedures are similar to those in steps S463 to S467 described above, the description thereof is omitted. Next, the second communication control device 62 notifies the first communication control device 61 of the calculation result (Step S474). The first communication control device 61 evaluates the calculation result (Step S475), and notifies the communication control devices 66 and 67 of the communication parameter (Step S476). Similarly, the second communication control device 62 also evaluates the calculation result (Step S477), and notifies the communication control devices 66 and 67 of the communication parameter (Step S478).

Next, the communication control device 67 notifies the communication device 40 of the communication parameter (Step S479). Furthermore, the communication control device 66 notifies the communication device 41 of the communication parameter (Step S483). Next, the communication device 40 performs the processing of steps S480 to S482, and the communication device 41 performs the processing of steps S484 to S486. Since this processing is similar to the processing of steps S273 to S275 of FIG. 64, the description thereof is omitted.

As described above, in the above-described communication system, information such as operation parameters and communication parameters of the communication device 40 and the communication device 41 of the primary communication system or another secondary communication system is subjected to secret sharing processing by the proxy devices 66 and 67, and the first communication control device 61 and the second communication control device 62 are notified of the information. As a result, the information on the communication devices 40 and 41 is shared by the first communication control device 61 and the second communication control device 62. The first communication control device 61 and the second communication control device 62 execute secret calculation by secret sharing for their secondary communication system and primary communication system and the communication devices belonging thereto. Note that communication parameters such as whether radio waves can be emitted, permitted transmission power (allowable maximum transmission power), permitted frequency channel, and permitted time, which are the calculation results, can vary depending on the communication device and the communication system.

[Other communication control procedure]

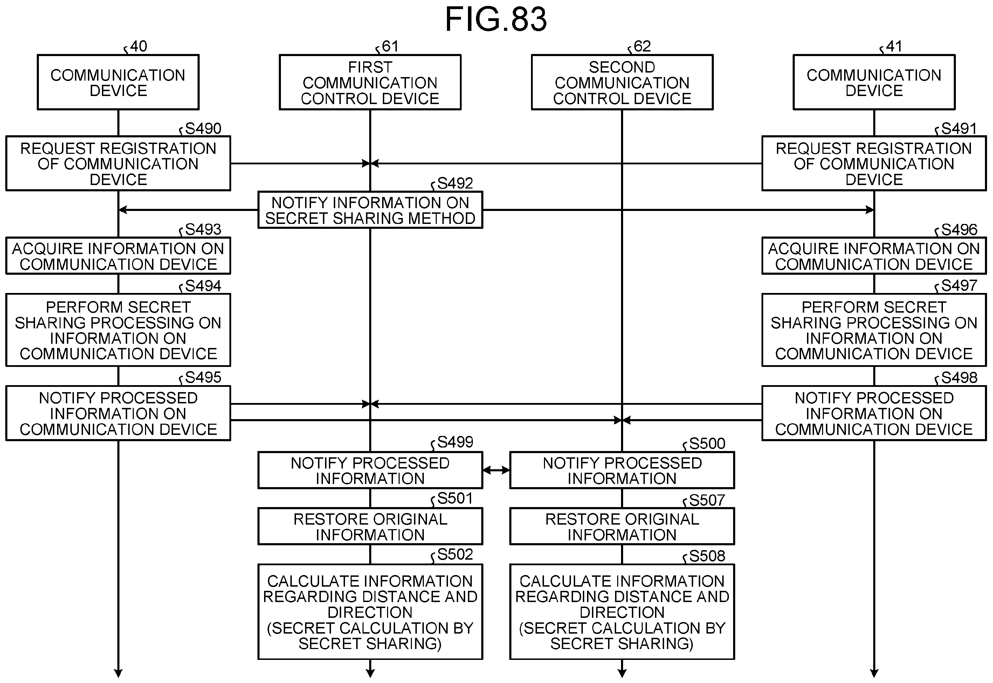

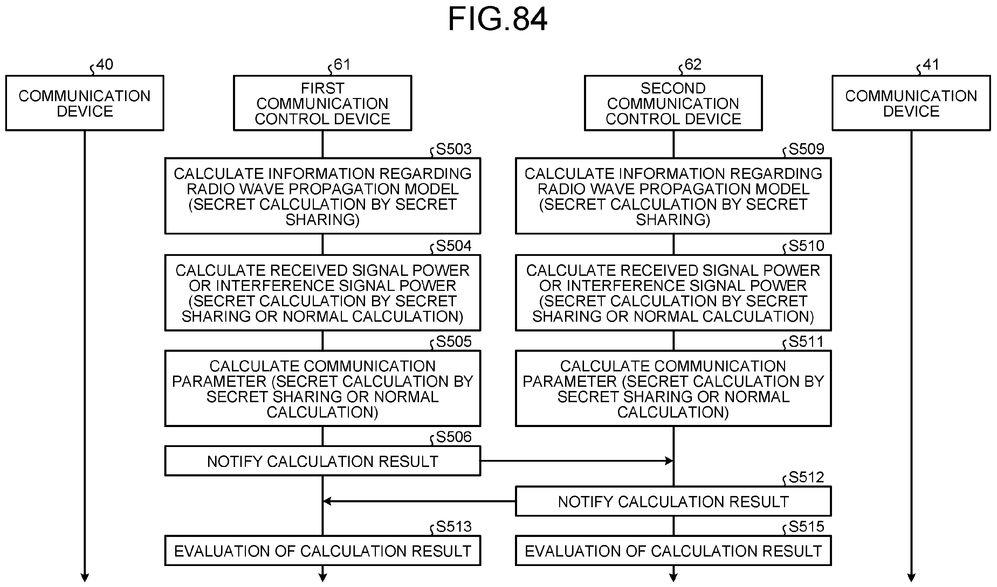

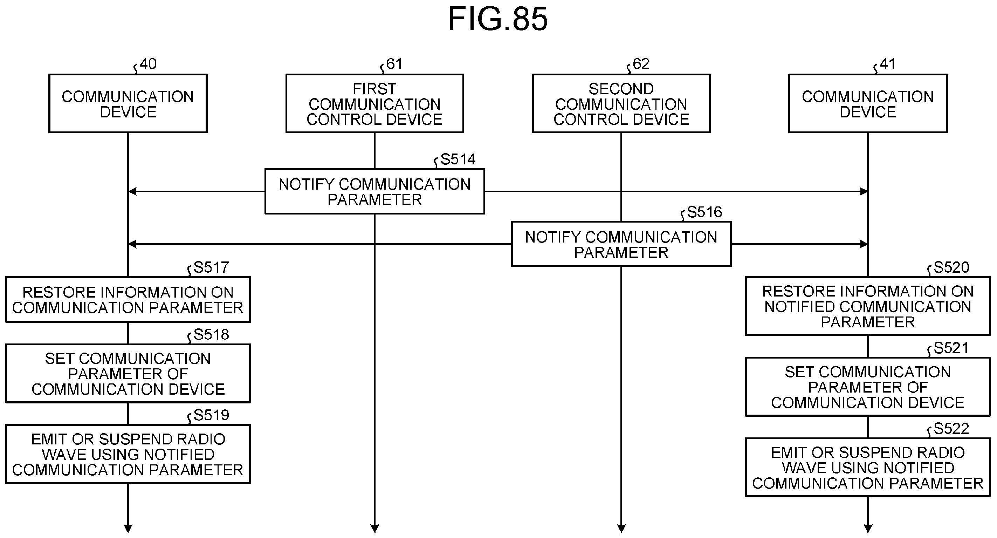

FIGS. 83 to 85 are diagrams illustrating another example of the communication control procedure according to the 10th embodiment of the present disclosure. Similarly to FIGS. 80 to 82, FIGS. 83 to 85 are diagrams illustrating an example of a communication control procedure of performing secret calculation by secret sharing for information on the communication devices 40 and 41 subjected to secret sharing processing. FIGS. 83 to 85 are different from the communication control procedure of FIGS. 80 to 82 in that the communication control devices 66 and 67 are omitted, and the communication device 40 and the communication device 41 perform secret sharing processing on their own information.

First, the communication device 40 requests the first communication control device 61 to register the communication device 40 (Step S490). Similarly, the communication device 41 requests the first communication control device 61 to register the communication device 41 (Step S491). Next, the first communication control device 61 notifies the communication devices 40 and 41 of information on the secret sharing method (for secret calculation by secret sharing) (Step S492).

Next, the communication device 40 acquires its own information (Step S493), performs secret sharing processing on at least a part of its own information according to the secret sharing method notified from the first communication control device 61 (Step S494), and notifies the first communication control device 61 and the second communication control device 62 of the information (Step S495). Similarly, the communication device 41 acquires its own information (Step S496), performs secret sharing processing on at least a part of its own information according to the secret sharing method notified from the first communication control device 61 (Step S497), and notifies the first communication control device 61 and the second communication control device 62 of the information (Step S498).

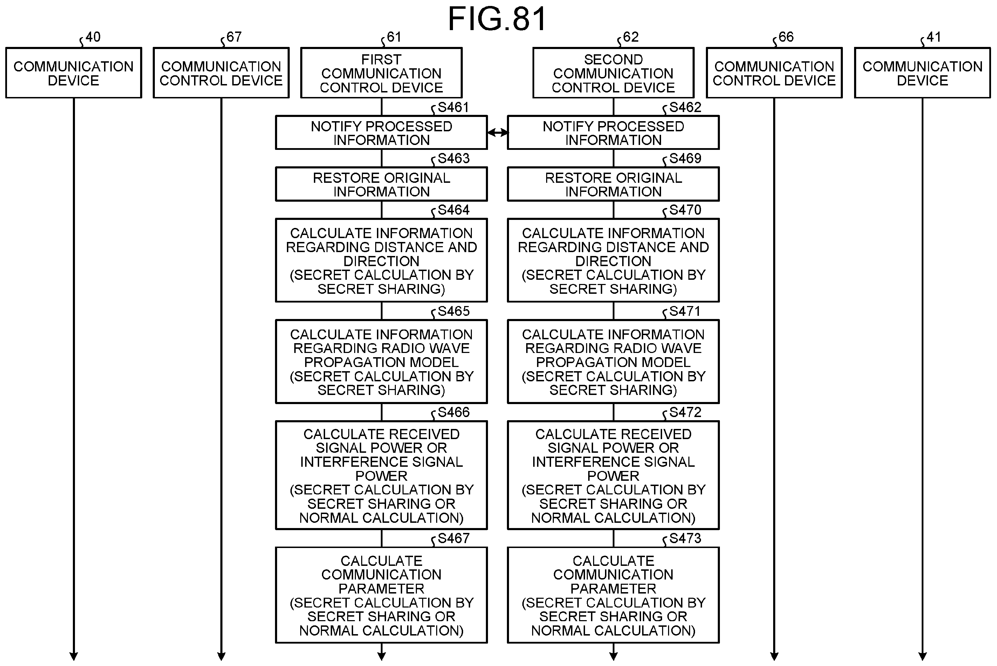

Next, the first communication control device 61 performs the processing of steps S499 to S513. Since the processing is similar to the processing of steps S461 to S475 of FIG. 81, the description thereof is omitted. Furthermore, the second communication control device 62 performs the processing of steps S500 to S515. Since the processing is similar to the processing of steps S462 to S477 of FIG. 81, the description thereof is omitted. Next, the first communication control device 61 notifies the communication devices 40 and 41 of the communication parameter (Step S514), and the second communication control device 62 notifies the communication devices 40 and 41 of the communication parameter (Step S516). The communication device 40 performs the processing of steps S517 to S519, and the communication device 41 performs the processing of steps S520 to S522. Since this processing is similar to the processing of steps S273 to S275 of FIG. 64, the description thereof is omitted.

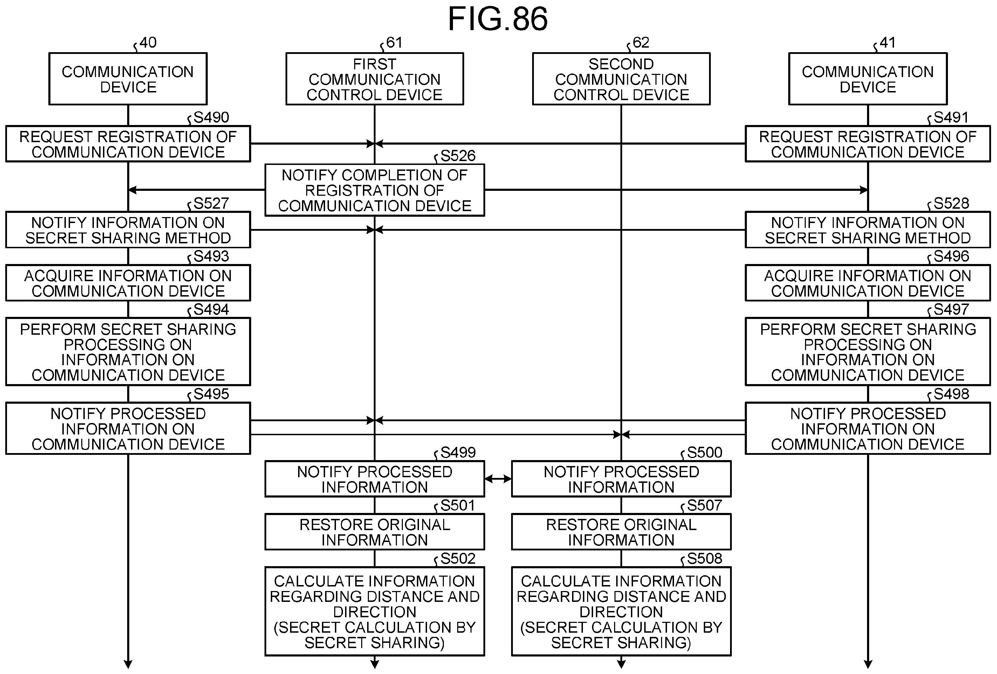

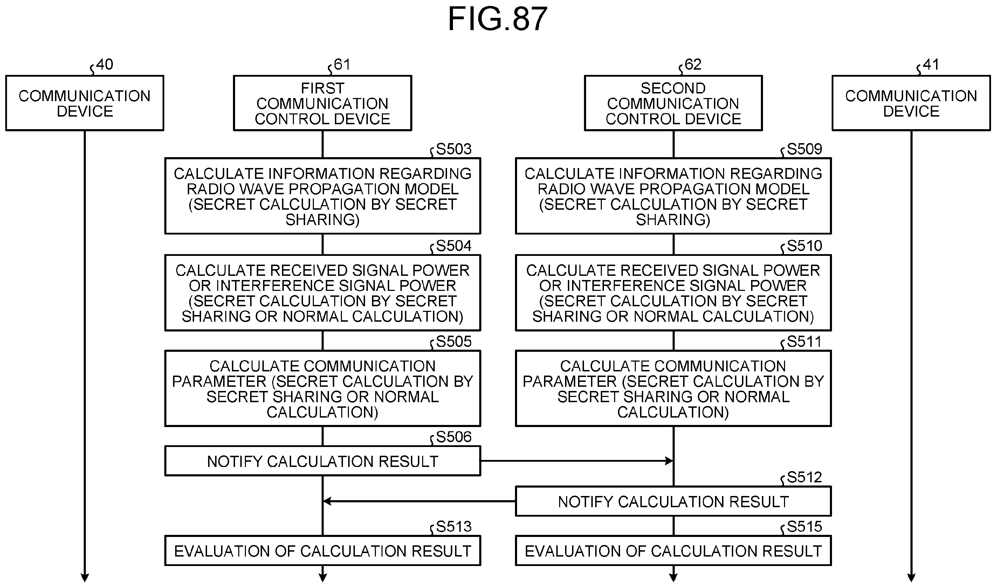

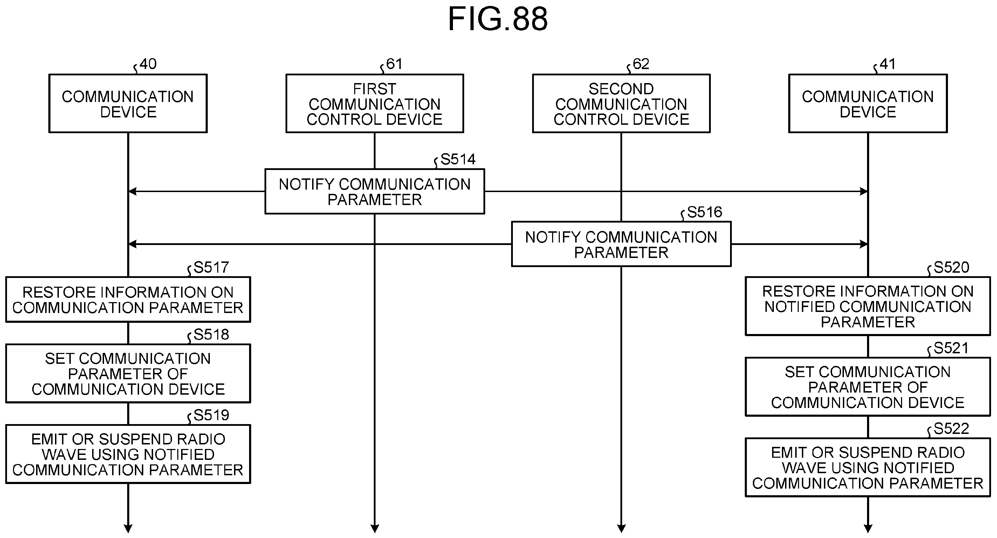

FIGS. 86 to 88 are diagrams illustrating another example of the communication control procedure according to the 10th embodiment of the present disclosure. Similarly to FIGS. 83 to 85, FIGS. 86 to 88 are diagrams illustrating an example of a communication control procedure in which the first communication control device 61 and the second communication control device 62 perform secret calculation by secret sharing on the basis of information on the communication device subjected to secret sharing processing by the communication device 40 and the communication device 41. The control procedure in FIGS. 86 to 88 is different from the processing procedure in FIGS. 83 to 85 in that the communication devices 40 and 41 generate information on the encryption scheme.

First, the communication device 40 requests the first communication control device 61 to register the communication device 40 (Step S490). Similarly, the communication device 41 requests the first communication control device 61 to register the communication device 41 (Step S491). Next, the first communication control device 61 notifies the communication device 40 and the communication device 41 of completion of registration of the communication device (Step S526).

Next, the communication device 40 notifies the first communication control device 61 of the information on the secret sharing method (Step S527). Similarly, the communication device 41 notifies the first communication control device 61 of the information on the secret sharing method (Step S528). Since the subsequent control procedure is similar to the control procedure of FIG. 58, the description thereof is omitted.

The configuration of the communication system 1000 other than this is similar to the configuration of the communication system 1000 in the first embodiment of the present disclosure, and thus the description thereof is omitted.

As described above, in the communication system 1000 according to the 10th embodiment of the present disclosure, the first communication control device 61 and the second communication control device 62 perform secret calculation on the basis of information on a plurality of communication devices 40 and the like, and generate the communication parameter.

Note that the configuration of the seventh embodiment of the present disclosure can be applied to other embodiments. Specifically, the safety area 629 in FIGS. 60 and 61 can be applied to the eighth to 10th embodiments of the present disclosure. In this case, secret calculation by secret sharing is performed in the safety area 629.

(Other modification)

The control device that controls the communication device 40, the communication control devices 60 and 67, the first communication control device 61, the second communication control device 62, and the information recording devices 71 and 72 of the present embodiment may be implemented by a dedicated computer system or a general-purpose computer system.

For example, a communication program for executing the above-described behavior is stored and distributed in a computer-readable recording medium such as an optical disk, a semiconductor memory, a magnetic tape, or a flexible disk. Then, for example, the program is installed in a computer, and the above-described processing is executed to configure the control device. At this time, the control device may be a device (e.g., personal computer) outside the communication device 40, the communication control devices 60 and 67, the first communication control device 61, the second communication control device 62, and the information recording devices 71 and 72. Furthermore, the communication control device may be an internal device (e.g., control unit) of the communication device 40, the communication control devices 60 and 67, the first communication control device 61, the second communication control device 62, and the information recording devices 71 and 72.

In addition, the communication program may be stored in a disk device included in a server device on a network such as the Internet so that the communication program can be downloaded to a computer. In addition, the above-described functions may be implemented by cooperation of an operating system (OS) and application software. In this case, a part other than the OS may be stored in a medium and distributed, or a part other than the OS may be stored in a server device and downloaded to a computer.

Of the processing described in the above embodiments, all or a part of the processing described as being performed automatically can be performed manually, or all or a part of the processing described as being performed manually can be performed automatically by a known method. In addition, the processing procedure, specific name, and information including various data and parameters illustrated in the document and the drawings can be arbitrarily changed unless otherwise specified. For example, the various types of information illustrated in each figure is not limited to the illustrated information.

In addition, each component of each device illustrated in the drawings is functionally conceptual, and is not necessarily physically configured as illustrated in the drawings. That is, a specific form of distribution and integration of each device is not limited to the illustrated form, and all or a part thereof can be functionally or physically distributed and integrated in an arbitrary unit according to various loads, usage statuses, and the like. Note that this configuration by distribution and integration may be performed dynamically.

In addition, the above-described embodiments can be appropriately combined in an area in which the processing contents do not contradict each other. Furthermore, the order of each step illustrated in the flowchart of the above-described embodiments can be appropriately changed.

Furthermore, for example, the present embodiment can be implemented as any configuration constituting a device or a system, for example, a processor as a system large scale integration (LSI) or the like, a module using a plurality of processors or the like, a unit using a plurality of modules or the like, a set obtained by further adding other functions to a unit, or the like (i.e., a configuration of a part of a device).

Note that in the present embodiment, a system means a set of a plurality of components (devices, modules (parts), and the like), and it does not matter whether or not all the components are in the same housing. Therefore, a plurality of devices housed in separate housings and connected via a network and one device in which a plurality of modules is housed in one housing are both systems.

Furthermore, for example, the present embodiment can adopt a configuration of cloud computing in which one function is shared and processed by a plurality of devices in cooperation via a network.

Although the embodiments of the present disclosure have been described above, the technical scope of the present disclosure is not limited to the above-described embodiments, and various modifications can be made without departing from the gist of the present disclosure. In addition, components of different embodiments and modifications may be appropriately combined.

Note that the effects described in the present specification are merely examples and are not limited, and other effects may be provided.

Note that the present technology can also have the following configurations.

(1) A communication control device comprising:

a reception unit that receives information on a communication device from a communication device requesting a secondary communication service that is a communication service using at least a part of a frequency band of a primary communication system; and
a calculation unit that generates a communication parameter of the communication device by performing secret calculation based on the information on the communication device.

(2) The communication control device according to the above (1), wherein the calculation unit performs the secret calculation by encryption.

(3) The communication control device according to the above (2), wherein the calculation unit performs the secret calculation by the encryption having homomorphism.

(4) The communication control device according to the above (2), wherein

the reception unit receives the information on the communication device encrypted by the encryption, and
the calculation unit performs the secret calculation based on the encrypted information on the communication device.

(5) The communication control device according to the above (1), wherein the calculation unit performs the secret calculation using a safety area.

(6) The communication control device according to any one of the above (1) to (5), wherein the calculation unit performs the secret calculation with a location as the information on the communication device.

(7) The communication control device according to any one of the above (1) to (6), wherein the calculation unit performs the secret calculation with location uncertainty as the information on the communication device.

(8) The communication control device according to any one of the above (1) to (7), wherein the calculation unit performs the secret calculation with an antenna configuration as the information on the communication device.

(9) The communication control device according any one of to the above (1) to (8), wherein the calculation unit performs the secret calculation with a frequency channel as the information on the communication device.

(10) The communication control device according to any one of the above (1) to (9), wherein the calculation unit performs the secret calculation with a wireless access scheme as the information on the communication device.

(11) The communication control device according to any one of the above (1) to (10), wherein the calculation unit performs the secret calculation with transmission power as the information on the communication device.

(12) The communication control device according to any one of the above (1) to (12), wherein the calculation unit performs the secret calculation with a time usage as the information on the communication device.

(13) The communication control device according to any one of the above (1) to (12), wherein the calculation unit generates the communication parameter on the basis of distance information on the communication device generated by performing the secret calculation.

(14) The communication control device according to any one of the above (1) to (12), wherein the calculation unit generates the communication parameter on the basis of a radio wave propagation characteristic generated by performing the secret calculation.

(15) The communication control device according to the above (14), wherein the calculation unit compares the information on the communication device with geographic information to generate the radio wave propagation characteristic.

(16) The communication control device according to the above (15), wherein the calculation unit compares the encrypted information on the communication device with the encrypted geographic information to generate the radio wave propagation characteristic.

(17) The communication control device according to any one of the above (1) to (12), wherein the calculation unit generates the communication parameter on the basis of received signal power detected on the basis of at least one of a distance of the communication device generated by performing the secret calculation and a radio wave propagation characteristic generated by performing the secret calculation.

(18) A communication device comprising:

a transmission unit that transmits own information on a communication device to a communication control device in order to request a secondary communication service that is a communication service using at least a part of a frequency band of a primary communication system; and

a control unit that performs wireless communication with a terminal device on the basis of a communication parameter generated by secret calculation based on the transmitted information on the communication device in the communication control device.

(19) A communication control device including a control unit that performs control to transmit information on a communication device to another communication control device in order to request a secondary communication service that is a communication service using at least a part of a frequency band of a primary communication system, control to receive a communication parameter generated by secret calculation based on the transmitted information on the communication device in the other communication control device, and control to transmit the received communication parameter to the communication device.

(20) A communication control method comprising:

receiving information on a communication device from a communication device requesting a secondary communication service that is a communication service using at least a part of a frequency band of a primary communication system; and

generating a communication parameter of the communication device by performing secret calculation based on the information on the communication device.

(21) A communication method comprising:

transmitting own information on a communication device to a communication control device in order to request a secondary communication service that is a communication service using at least a part of a frequency band of a primary communication system; and

performing wireless communication with a terminal device on the basis of a communication parameter generated by secret calculation based on the transmitted information on the communication device in the communication control device.

(22) A communication control method including:

transmitting information on a communication device to another communication control device in order to request a secondary communication service that is a communication service using at least a part of a frequency band of a primary communication system;

receiving a communication parameter generated by secret calculation based on the transmitted information on the communication device in the other communication control device; and

transmitting the received communication parameter to the communication device.

(23) A communication control device including:

a reception unit that receives information on a communication device from a communication device requesting a secondary communication service that is a communication service using at least a part of a frequency band of a primary communication system; and

a calculation unit that generates a communication parameter of the communication device by performing secret calculation by secret sharing based on the information on the communication device.

(24) The communication control device according to (23), in which

the reception unit receives the information on the communication device encrypted by the communication device, and

the calculation unit performs the secret calculation of the encrypted information on the communication device.

(25) The communication control device according to (23), in which

the reception unit receives the information on the communication device encrypted by another communication control device, and

the calculation unit performs the secret calculation of the encrypted information on the communication device.

(26) The communication control device according to (23), in which the calculation unit performs the secret calculation using a safety area.

(27) The communication control device according to (23) to (26), in which the calculation unit performs the secret calculation with a location as the information on the communication device.

(28) The communication control device according to (23) to (27), in which the calculation unit performs the secret calculation with location uncertainty as the information on the communication device.

(29) The communication control device according to (23) to (28), in which the calculation unit performs the secret calculation with an antenna configuration as the information on the communication device.

(30) The communication control device according to (23) to (29), in which the calculation unit performs the secret calculation with a frequency channel as the information on the communication device.

(31) The communication control device according to (23) to (30), in which the calculation unit performs the secret calculation with a wireless access scheme as the information on the communication device.

(32) The communication control device according to (23) to (31), in which the calculation unit performs the secret calculation with transmission power as the information on the communication device.

(33) The communication control device according to (23) to (32), in which the calculation unit performs the secret calculation with a time usage as the information on the communication device.

(34) The communication control device according to (23) to (33), in which the calculation unit generates the communication parameter on the basis of distance information on a communication device generated by performing the secret calculation.

(35) The communication control device according to (23) to (33), in which the calculation unit generates the communication parameter on the basis of a radio wave propagation characteristic generated by performing the secret calculation.

(36) The communication control device according to (35), in which the calculation unit compares the information on the communication device with geographic information to generate the radio wave propagation characteristic.

(37) The communication control device according to (36), in which the calculation unit compares the encrypted information on the communication device with the encrypted geographic information to generate the radio wave propagation characteristic.

(38) The communication control device according to (23) to (33), in which the calculation unit generates the communication parameter on the basis of received signal power detected on the basis of at least one of a distance of the communication device generated by performing the secret calculation and a radio wave propagation characteristic generated by performing the secret calculation.

(39) A communication device including:

a transmission unit that transmits its own information on the communication device to a plurality of communication control devices in order to request a secondary communication service that is a communication service using at least a part of a frequency band of a primary communication system; and

a control unit that performs wireless communication with a terminal device on the basis of a plurality of encrypted communication parameters each generated by secret calculation by secret sharing based on the transmitted information on the communication device in the plurality of communication control devices.

(40) A communication control device including a control unit that performs control to transmit information on a communication device to a plurality of other communication control devices in order to request a secondary communication service that is a communication service using at least a part of a frequency band of a primary communication system, control to receive a plurality of encrypted communication parameters each generated by secret calculation by secret sharing based on the transmitted information on the communication device in the plurality of other communication control devices, and control to transmit the received communication parameters to the communication device.

(41) The communication device according to (39), in which the control unit restores the plurality of encrypted communication parameters and performs wireless communication with the terminal device on the basis of the restored communication parameters.

(42) A communication control method including:

receiving information on a communication device from a communication device requesting a secondary communication service that is a communication service using at least a part of a frequency band of a primary communication system; and

generating a communication parameter of the communication device by performing secret calculation by secret sharing based on the information on the communication device.

(43) A communication method including:

transmitting own information on a communication device to a plurality of communication control devices in order to request a secondary communication service that is a communication service using at least a part of a frequency band of a primary communication system; and
performing wireless communication with a terminal device on the basis of communication parameters each generated by secret calculation by secret sharing based on the transmitted information on the communication device in the plurality of communication control devices.

(44) A communication control method including:

transmitting information on a communication device to a plurality of other communication control devices in order to request a secondary communication service that is a communication service using at least a part of a frequency band of a primary communication system;
receiving a plurality of encrypted communication parameters each generated by secret calculation by secret sharing based on the transmitted information on the communication device in the plurality of other communication control devices; and
transmitting the received communication parameters to the communication device.

Reference Signs List

40, 40a, 40b, 48, 49 COMMUNICATION DEVICE
60, 67 to 69 COMMUNICATION CONTROL DEVICE
61 FIRST COMMUNICATION CONTROL DEVICE
62 SECOND COMMUNICATION CONTROL DEVICE
70 to 72 INFORMATION RECORDING DEVICE
80 DEVICE
410, 610, 710 COMMUNICATION UNIT
420, 620, 720 CONTROL UNIT
621, 622, 624 CALCULATION UNIT
628 INFORMATION DECRYPTION UNIT
629 SAFETY AREA

**Claims**

1. A communication control device comprising:

a reception unit that receives information on a communication device from a communication device requesting a secondary communication service that is a communication service using at least a part of a frequency band of a primary communication system; and
a calculation unit that generates a communication parameter of the communication device by performing secret calculation based on the information on the communication device.

2. The communication control device according to claim 1, wherein the calculation unit performs the secret calculation by encryption.

3. The communication control device according to claim 2, wherein the calculation unit performs the secret calculation by the encryption having homomorphism.

4. The communication control device according to claim 2, wherein

the reception unit receives the information on the communication device encrypted by the encryption, and
the calculation unit performs the secret calculation based on the encrypted information on the communication device.

5. The communication control device according to claim 1, wherein the calculation unit performs the secret calculation using a safety area.

6. The communication control device according to claim 1, wherein the calculation unit performs the secret calculation with a location as the information on the communication device.

7. The communication control device according to claim 1, wherein the calculation unit performs the secret calculation with location uncertainty as the information on the communication device.

8. The communication control device according to claim 1, wherein the calculation unit performs the secret calculation with an antenna configuration as the information on the communication device.

9. The communication control device according to claim 1, wherein the calculation unit performs the secret calculation with a frequency channel as the information on the communication device.

10. The communication control device according to claim 1, wherein the calculation unit performs the secret calculation with a wireless access scheme as the information on the communication device.

11. The communication control device according to claim 1, wherein the calculation unit performs the secret calculation with transmission power as the information on the communication device.

12. The communication control device according to claim 1, wherein the calculation unit performs the secret calculation with a time usage as the information on the communication device.

13. The communication control device according to claim 1, wherein the calculation unit generates the communication parameter on the basis of distance information on the communication device generated by performing the secret calculation.

14. The communication control device according to claim 1, wherein the calculation unit generates the communication parameter on the basis of a radio wave propagation characteristic generated by performing the secret calculation.

15. The communication control device according to claim 14, wherein the calculation unit compares the information on the communication device with geographic information to generate the radio wave propagation characteristic.

16. The communication control device according to claim 15, wherein the calculation unit compares the encrypted information on the communication device with the encrypted geographic information to generate the radio wave propagation characteristic.

17. The communication control device according to claim 1, wherein the calculation unit generates the communication parameter on the basis of received signal power detected on the basis of at least one of a distance of the communication device generated by performing the secret calculation and a radio wave propagation characteristic generated by performing the secret calculation.

18. A communication device comprising:

a transmission unit that transmits own information on a communication device to a communication control device in order to request a secondary communication service that is a communication service using at least a part of a frequency band of a primary communication system; and
a control unit that performs wireless communication with a terminal device on the basis of a communication parameter generated by secret calculation based on the transmitted information on the communication device in the communication control device.

19. A communication control method comprising:

receiving information on a communication device from a communication device requesting a secondary communication service that is a communication service using at least a part of a frequency band of a primary communication system; and
generating a communication parameter of the communication device by performing secret calculation based on

**EP 4 572 394 A1**

the information on the communication device.

20. A communication method comprising:

transmitting own information on a communication device to a communication control device in order to request a secondary communication service that is a communication service using at least a part of a frequency band of a primary communication system; and
performing wireless communication with a terminal device on the basis of a communication parameter generated by secret calculation based on the transmitted information on the communication device in the communication control device.

# FIG.1

Regulatory database
INFORMATION
RECORDING DEVICE

70

1000

200

40-1

30-1

Database / Spectrum
management system /
Spectrum Access System
COMMUNICATION
CONTROL DEVICE

60

Internet / Public networks
INTERNET/PUBLIC
NETWORK

1100
Primary system /
incumbent system

Internet / Public networks
INTERNET/PUBLIC
NETWORK

100a

100b

Core network

Base station / Access point
COMMUNICATION
DEVICE

40a

40b

30a

30b

User equipment
COMMUNICATION
DEVICE

1200a
Secondary system A

1200b
Secondary system B

EP 4 572 394 A1

# FIG.2

60

COMMUNICATION CONTROL DEVICE

630
INFORMATION RECORDING UNIT

620
CONTROL UNIT

621
CALCULATION UNIT

610
COMMUNICATION UNIT

# FIG.3

40

COMMUNICATION DEVICE

430
INFORMATION RECORDING UNIT

420
CONTROL UNIT

410
COMMUNICATION UNIT

# FIG.4

Primary system's
spectrum

Primary system's
spectrum bandwidth

Frequency

Secondary system's
spectrum (1)

Secondary system's
spectrum bandwidth

Secondary system's
spectrum (2)

Secondary system's
spectrum (3)

Secondary system's
spectrum (4)

Secondary system's
spectrum (5)

Guard band between
primary and secondary
systems' spectrum

# FIG.5

Primary system's
time usage

Time

Secondary system's
time usage (1)

Time

Secondary system's
time usage (2)

Time

Secondary system's
time usage (3)

Time

Secondary system's
time usage (4)

Time

Secondary system's
time usage (5)

Time

Secondary system's
time usage (6)

Time

# FIG.6

**40**
COMMUNICATION
DEVICE

**60**
COMMUNICATION
CONTROL DEVICE

S100
REQUEST REGISTRATION OF
COMMUNICATION DEVICE

S101
NOTIFY INFORMATION ON
ENCRYPTION SCHEME
(FOR SECRET CALCULATION)

S102
ACQUIRE INFORMATION ON
COMMUNICATION DEVICE

S103
ENCRYPT INFORMATION ON
COMMUNICATION DEVICE

S104
NOTIFY ENCRYPTED INFORMATION
ON COMMUNICATION DEVICE

S105
CALCULATE INFORMATION
REGARDING DISTANCE AND
DIRECTION (SECRET CALCULATION)

S106
CALCULATE INFORMATION
REGARDING RADIO WAVE
PROPAGATION MODEL
(SECRET CALCULATION)

S107
CALCULATE RECEIVED SIGNAL
POWER OR INTERFERENCE SIGNAL
POWER (SECRET CALCULATION OR
NORMAL CALCULATION)

S108
CALCULATE COMMUNICATION
PARAMETER (SECRET CALCULATION
OR NORMAL CALCULATION)

S109
NOTIFY COMMUNICATION
PARAMETER

S110
SET COMMUNICATION PARAMETER
OF COMMUNICATION DEVICE

S111
EMIT OR SUSPEND RADIO WAVE
USING NOTIFIED COMMUNICATION
PARAMETER

# FIG.7

# FIG.8

START

PREPARE INFORMATION ON
REGISTRATION REQUEST ~S601

REQUEST
PROTECTION OF
INFORMATION ON
COMMUNICATION
DEVICE? S602

NO

YES

ADD INFORMATION PROTECTION
REQUEST INFORMATION TO
REGISTRATION REQUEST INFORMATION ~S603

NOTIFY REGISTRATION REQUEST ~S604

END

# FIG.9

```
        ┌─────────────┐
        │    START    │
        └─────────────┘
               │
               ▼
┌──────────────────────────────┐
│ RECEIVE REGISTRATION REQUEST  │ ~S611
│    FOR COMMUNICATION DEVICE   │
└──────────────────────────────┘
               │
               ▼
         ╱────────────╲  S612
        ╱ IS PROTECTION ╲
       ╱ OF COMMUNICATION ╲──── NO ──┐
       ╲ DEVICE INFORMATION╱         │
        ╲   REQUIRED?    ╱           │
         ╲──────────────╱            │
               │ YES                 │
               ▼                     │
┌──────────────────────────────┐    │
│  SELECT ENCRYPTION SCHEME FOR │ ~S613
│      COMMUNICATION DEVICE     │    │
└──────────────────────────────┘    │
               │                     │
               ▼                     │
┌──────────────────────────────┐    │
│  GENERATE INFORMATION          │    │
│  REGARDING ENCRYPTION FOR      │ ~S614
│  COMMUNICATION DEVICE          │    │
└──────────────────────────────┘    │
               │                     │
               ▼                     │
┌──────────────────────────────┐    │
│  ADD INFORMATION REGARDING     │    │
│  ENCRYPTION TO REGISTRATION    │ ~S615
│  COMPLETION NOTIFICATION OF    │    │
│  COMMUNICATION DEVICE          │    │
└──────────────────────────────┘    │
               │                     │
               ▼◄────────────────────┘
┌──────────────────────────────┐
│ NOTIFY REGISTRATION COMPLETION │ ~S616
└──────────────────────────────┘
               │
               ▼
        ┌─────────────┐
        │     END     │
        └─────────────┘
```

# FIG.10

START

S621
IS ENCRYPTION METHOD SET IN ADVANCE?

—NO→

**YES**

S622
PREPARE ENCRYPTION KEY (PUBLIC KEY) SET IN ADVANCE

S624
IS ENCRYPTION METHOD DESIGNATED/ NOTIFIED BY COMMUNICATION CONTROL DEVICE?

—NO→

**YES**

S625
PREPARE ENCRYPTION KEY (PUBLIC KEY) DESIGNATED AND NOTIFIED BY COMMUNICATION CONTROL DEVICE

S626
COMMUNICATION DEVICE PREPARES ENCRYPTION KEY (PUBLIC KEY)

ENCRYPT INFORMATION ON COMMUNICATION DEVICE — S623

NOTIFY COMMUNICATION CONTROL DEVICE OF ENCRYPTED INFORMATION ON COMMUNICATION DEVICE — S627

END

# FIG.11

S620

START

S622
PREPARE ENCRYPTION KEY (PUBLIC KEY) SET IN ADVANCE

S623
ENCRYPT INFORMATION ON COMMUNICATION DEVICE

S627
NOTIFY COMMUNICATION CONTROL DEVICE OF ENCRYPTED INFORMATION ON COMMUNICATION DEVICE

END

S628

START

S625
PREPARE ENCRYPTION KEY (PUBLIC KEY) DESIGNATED AND NOTIFIED BY COMMUNICATION CONTROL DEVICE

S623
ENCRYPT INFORMATION ON COMMUNICATION DEVICE

S627
NOTIFY COMMUNICATION CONTROL DEVICE OF ENCRYPTED INFORMATION ON COMMUNICATION DEVICE

END

S629

START

S626
COMMUNICATION DEVICE PREPARES ENCRYPTION KEY (PUBLIC KEY)

S623
ENCRYPT INFORMATION ON COMMUNICATION DEVICE

S627
NOTIFY COMMUNICATION CONTROL DEVICE OF ENCRYPTED INFORMATION ON COMMUNICATION DEVICE

END

# FIG.12

| ITEM | CONTENT |
|---|---|
| ENCRYPTION SCHEME | DESIGNATE ENCRYPTION SCHEME HAVING HOMOMORPHISM |
| ENCRYPTION KEY | PUBLIC KEY |
| VALID PERIOD OF ENCRYPTION SCHEME AND ENCRYPTION KEY | ABSOLUTE YEAR/MONTH/TIME (e.g., YYYY, MM, DD, HH, mm, ss), OR RELATIVE TIME (e.g., HH HOURS AFTER NOTIFICATION OR HH HOURS AFTER PREDETERMINED DATE AND TIME) |

# FIG.13

| ITEM | CONTENT |
| --- | --- |
| LOCATION | LATITUDE |
| | LONGITUDE |
| | ALTITUDE |
| | X-COORDINATE |
| | Y-COORDINATE |
| | Z-COORDINATE |
| LOCATION UNCERTAINTY | LATITUDE UNCERTAINTY |
| | LONGITUDE UNCERTAINTY |
| | ALTITUDE UNCERTAINTY |
| | X-COORDINATE UNCERTAINTY |
| | Y-COORDINATE UNCERTAINTY |
| | Z-COORDINATE UNCERTAINTY |
| MOBILITY | FIXED or MOVABLE |
| ANTENNA CONFIGURATION | NUMBER OF ANTENNAS |
| | NUMBER OF TRPS |
| | NUMBER OF ANTENNA PORTS |
| | NUMBER OF ANTENNA ELEMENTS |
| | ANTENNA ARRAY CONFIGURATION |
| | ANTENNA INSTALLATION LOCATION |
| | HORIZONTAL DIRECTIVITY CHARACTERISTICS |
| | VERTICAL DIRECTIVITY CHARACTERISTICS |
| | ANTENNA GAIN CHARACTERISTICS |
| | ANTENNA MANUFACTURER/MODEL NUMBER |
| FREQUENCY CHANNEL | AVAILABLE FREQUENCY CHANNEL RANGE (NUMBER) |
| | AVAILABLE FREQUENCY CHANNEL RANGE (NUMBER) |
| | DESIRED FREQUENCY CHANNEL RANGE (NUMBER) |
| | DESIRED FREQUENCY CHANNEL RANGE (NUMBER) |
| WIRELESS ACCESS SCHEME | AVAILABLE WIRELESS ACCESS STANDARD |
| | DESIRED WIRELESS ACCESS STANDARD |
| | AVAILABLE DUPLEX SCHEME |
| | DESIRED DUPLEX SCHEME |
| TRANSMISSION POWER | MAXIMUM TRANSMITTABLE TRANSMISSION POWER |
| | MINIMUM TRANSMITTABLE TRANSMISSION POWER |
| | CONTROLLABLE POWER STEP (RESOLUTION) |
| | DESIRED MAXIMUM TRANSMISSION POWER |
| | DESIRED MINIMUM TRANSMISSION POWER |
| TIME USAGE | DESIRED USE START TIME |
| | DESIRED USE END TIME |
| COMMUNICATION DEVICE MANUFACTURER AND MODEL NUMBER | |

# FIG.14

| ITEM | CONTENT |
|---|---|
| RADIO WAVE EMISSION AVAILABILITY | EMISSION or SUSPENSION |
| PERMITTED FREQUENCY CHANNEL | PERMITTED CHANNEL RANGE (NUMBER) |
| PERMITTED WIRELESS ACCESS SCHEME | |
| PERMITTED TRANSMISSION POWER | MAXIMUM PERMITTED TRANSMISSION POWER |
| | MINIMUM PERMITTED TRANSMISSION POWER |
| PERMITTED PERIOD | USE START TIME |
| | USE END TIME |
| VALID PERIOD OF COMMUNICATION PARAMETER | |

# FIG.15

## FIG.16A

DISTANCE (TWO-DIMENSIONAL)

DIRECTION (VERTICAL DIRECTION)

DISTANCE
(THREE-DIMENSIONAL)

HEIGHT OF COMMUNICATION DEVICE 1

HEIGHT OF COMMUNICATION DEVICE 2

COMMUNICATION DEVICE 1
(e.g., Secondary system station)

COMMUNICATION DEVICE 2
(e.g., Primary system station)

## FIG.16B

DIRECTION
(HORIZONTAL DIRECTION)

DISTANCE
(TWO-DIMENSIONAL or
THREE-DIMENSIONAL)

COMMUNICATION DEVICE 1
(e.g., Secondary system station)

COMMUNICATION DEVICE 2
(e.g., Primary system station OR
VIRTUAL Primary system station)

# FIG.17

START

S641

ACQUIRE TWO PIECES OF
LOCATION INFORMATION

S642

ARE BOTH
PIECES OF LOCATION
INFORMATION
ENCRYPTED?

NO

YES

S645

IS ONLY
ONE OF PIECES
OF LOCATION
INFORMATION
ENCRYPTED?

NO

YES

S646

SELECT ENCRYPTION KEY
(PUBLIC KEY)

S647

ENCRYPT UNENCRYPTED
LOCATION INFORMATION

S643

SECRET CALCULATION
REGARDING DISTANCE

S644

SECRET CALCULATION
REGARDING DIRECTION

S648

CALCULATION REGARDING
DISTANCE

S649

CALCULATION REGARDING
DIRECTION

END

# FIG.18

START

ACQUIRE TWO PIECES OF LOCATION
INFORMATION ～S651

ACQUIRE DISTANCE AND AZIMUTH ANGLE
FROM TWO PIECES OF LOCATION
INFORMATION ～S652

ACQUIRE GEOGRAPHIC INFORMATION AND
THE LIKE ～S653

COMPARE LOCATION INFORMATION WITH
GEOGRAPHIC INFORMATION ～S654

ACQUIRE DISTANCE-DEPENDENT PARAMETER ～S655

ACQUIRE SHADOWING PARAMETER ～S656

ACQUIRE FADING PARAMETER ～S657

ACQUIRE ANTENNA GAIN ～S658

ACQUIRE RADIO WAVE PROPAGATION MODEL ～S659

END

# FIG.19

FADING CHARACTERISTIC
PARAMETER

SHADOWING CHARACTERISTIC
PARAMETER

DISTANCE-DEPENDENT
CHARACTERISTIC PARAMETER

BUILDING AND STRUCTURE

ROAD

GROUND SURFACE AND ELEVATION

OCEAN AND SEA SURFACE

Y-COORDINATE

X-COORDINATE

# FIG.20

START

ACQUIRE GEOGRAPHIC INFORMATION ~S661

PROCESS GEOGRAPHIC INFORMATION ~S662

MESH LOCATION INFORMATION ~S663

ENCRYPT MESHED LOCATION INFORMATION ~S664

SET EACH ATTRIBUTE ~S665

PERFORM ADDITIONAL PROCESSING ON LOCATION INFORMATION AND EACH ATTRIBUTE ~S666

END

# FIG.21

| ENCRYPTED X-COORDINATE | ENCRYPTED Y-COORDINATE | ENCRYPTED Z-COORDINATE | OCEAN AND SEA SURFACE ATTRIBUTE | GROUND SURFACE AND ELEVATION ATTRIBUTE | ROAD ATTRIBUTE | BUILDING AND STRUCTURE CHARACTER-ISTIC | DISTANCE-DEPENDENT CHARACTER-ISTIC | SHADOWING CHARACTER-ISTIC | FADING CHARACTER-ISTIC |
|---|---|---|---|---|---|---|---|---|---|
| Enc(x1) | Enc(y1) | Enc(z1) | a1 | b1 | c1 | d1 | e1 | f1 | g1 |
| Enc(x2) | Enc(y2) | Enc(z2) | a2 | b2 | c2 | d2 | e2 | f2 | g2 |
| Enc(x3) | Enc(y3) | Enc(z3) | s3 | b3 | c3 | d3 | e3 | f3 | g3 |
| Enc(x4) | Enc(y4) | Enc(z4) | s4 | b4 | c4 | d4 | e4 | f4 | g4 |
| ... | ... | ... | ... | ... | ... | ... | ... | ... | ... |

# FIG.22

START

ACQUIRE ENCRYPTED LOCATION INFORMATION ~S671

ACQUIRE ASSUMED FREQUENCY BAND INFORMATION ~S672

ACQUIRE PROCESSED GEOGRAPHIC INFORMATION DATA ~S673

COMPARE MESHED OR ENCRYPTED LOCATION INFORMATION OF PROCESSED GEOGRAPHIC INFORMATION DATA WITH ENCRYPTED LOCATION INFORMATION (COMPARE BY SECRET CALCULATION) ~S674

IDENTIFY MESH CLOSEST TO ENCRYPTED LOCATION INFORMATION ~S675

ACQUIRE EACH ATTRIBUTE SET TO IDENTIFIED MESH LOCATION ~S676

END

# FIG.23

# FIG.24

| ENCRYPTED X-COORDINATE | ENCRYPTED Y-COORDINATE | ENCRYPTED Z-COORDINATE | USE (SCHEDULED) START TIME | USE (SCHEDULED) END TIME | USE (SCHEDULED) FREQUENCY BAND | USE (SCHEDULED) COMMUNICATION SYSTEM (COMMUNICATION DEVICE) | USAGE (SCHEDULED) COMMUNICATION PARAMETER |
|---|---|---|---|---|---|---|---|
| Enc(x1) | Enc(y1) | Enc(z1) | Enc(hh1:mm1:ss1) | Enc(hh5:mm5:ss5) | Enc(Freq1) | Enc(System1) | Enc(Para1) |
| Enc(x2) | Enc(y2) | Enc(z2) | Enc(hh2:mm2:ss2) | Enc(hh6:mm6:ss6) | Enc(Freq2) | Enc(System2) | Enc(Para2) |
| Enc(x3) | Enc(y3) | Enc(z3) | Enc(hh3:mm3:ss3) | Enc(hh7:mm7:ss7) | Enc(Freq3) | Enc(System3) | Enc(Para3) |
| Enc(x4) | Enc(y4) | Enc(z4) | Enc(hh4:mm4:ss4) | Enc(hh8:mm8:ss8) | Enc(Freq4) | Enc(System4) | Enc(Para4) |
| ... | ... | ... | ... | ... | ... | ... | ... |

EP 4 572 394 A1

# FIG.25

START

ACQUIRE COMMUNICATION USE REQUEST OF TARGET COMMUNICATION SYSTEM — S681

COMPARE ACQUIRED COMMUNICATION USE REQUEST AND COMMUNICATION USE SCHEDULE INFORMATION — S682

S683 — IS COMMUNICATION USE SCHEDULED AT LOCATION OF COMMUNICATION USE REQUEST? — NO

YES

S684 — IS COMMUNICATION USE SCHEDULED AT TIME OF COMMUNICATION USE REQUEST? — NO

YES

S685 — IS COMMUNICATION USE SCHEDULED IN FREQUENCY BAND OF COMMUNICATION USE REQUEST? — NO

YES

S686 — DOES COMMUNICATION SYSTEM OF COMMUNICATION USE REQUEST HAVE LOWER PRIORITY THAN COMMUNICATION SYSTEM SCHEDULED TO BE USED FOR COMMUNICATION? — NO

S689 — DETERMINE THAT COMMUNICATION SYSTEM OF COMMUNICATION USE REQUEST IS PERMITTED FOR USE

YES — S687

DETERMINE THAT COMMUNICATION SYSTEM OF COMMUNICATION USE REQUEST IS UNAVAILABLE

S690 — UPDATE TABLE OF COMMUNICATION USE SCHEDULE INFORMATION

NOTIFY COMMUNICATION USE SCHEDULE AND USE SCHEDULED COMMUNICATION PARAMETER CORRESPONDING TO COMMUNICATION SYSTEM — S688

END

# FIG.26

```
                    ┌─────────────┐
                    │    START    │
                    └──────┬──────┘
                           │
                           ▼
┌──────────────────────────────────────────────┐
│           ACQUIRE INFORMATION, AVAILABLE       │
│  COMMUNICATION PARAMETER, AND THE LIKE OF      │ ~S701
│  TARGET TRANSMISSION COMMUNICATION DEVICE      │
└──────────────────────┬─────────────────────────┘
                           │
                           ▼
┌──────────────────────────────────────────────┐
│           ACQUIRE INFORMATION, AVAILABLE       │
│  COMMUNICATION PARAMETER, AND THE LIKE OF      │ ~S702
│   TARGET RECEPTION COMMUNICATION DEVICE        │
└──────────────────────┬─────────────────────────┘
                           │
                           ▼
┌──────────────────────────────────────────────┐
│        CALCULATE (ESTIMATE) RADIO WAVE         │ ~S703
│              PROPAGATION MODEL                  │
└──────────────────────┬─────────────────────────┘
                           │
                           ▼
┌──────────────────────────────────────────────┐
│      TRANSMISSION POWER CALCULATION            │ ~S710
└──────────────────────┬─────────────────────────┘
                           │
                           ▼
                    ┌─────────────┐
                    │     END     │
                    └─────────────┘
```

# FIG.27

S710

```
        START
```

CALCULATE TRANSMISSION
POWER SATISFYING REQUIRED
RECEIVED SIGNAL POWER OF ~S711
RECEPTION COMMUNICATION
DEVICE

S712

LESS THAN
MAXIMUM TRANSMISSION     NO
POWER?

YES     S713

SET CALCULATED TRANSMISSION
POWER TO ALLOWABLE MAXIMUM
TRANSMISSION POWER

S715

SET MAXIMUM TRANSMISSION
POWER OF TRANSMISSION
COMMUNICATION DEVICE TO
ALLOWABLE MAXIMUM
TRANSMISSION POWER

NOTIFY COMMUNICATION USE
SCHEDULE AND COMMUNICATION
PARAMETER CORRESPONDING TO ~S714
TRANSMISSION COMMUNICATION
DEVICE

```
        END
```

# FIG.28

```
                    ┌─────────────┐
                    │    START    │
                    └──────┬──────┘
                           │
         ┌─────────────────▼─────────────────┐
         │ ACQUIRE INFORMATION, AVAILABLE    │
         │ COMMUNICATION PARAMETER, AND      │~S701
         │ THE LIKE OF TARGET TRANSMISSION   │
         │ COMMUNICATION DEVICE              │
         └─────────────────┬─────────────────┘
                           │
         ┌─────────────────▼─────────────────┐
         │ ACQUIRE INFORMATION, AVAILABLE    │
         │ COMMUNICATION PARAMETER, AND      │~S702
         │ THE LIKE OF TARGET RECEPTION      │
         │ COMMUNICATION DEVICE              │
         └─────────────────┬─────────────────┘
                           │
         ┌─────────────────▼─────────────────┐
         │ CALCULATE OR ESTIMATE RADIO WAVE  │~S703
         │ PROPAGATION MODEL                 │
         └─────────────────┬─────────────────┘
                           │            S724
                    ┌──────▼──────┐
                    │     ALL     │      NO
                    │ TRANSMISSION│──────────►
                    │COMMUNICATION│
                    │  DEVICES?   │
                    └──────┬──────┘
                           │ YES
                           │            S725
                    ┌──────▼──────┐
          NO        │IS PLURALITY │
      ◄─────────────│OF TRANSMISSION COMMUNICATION│
                    │DEVICES CONSIDERED?│
                    └──────┬──────┘
                           │ YES
         ┌─────────────────▼─────────────────┐
         │ SET TRANSMISSION POWER DISTRIBUTION│
         │ TO EACH TRANSMISSION COMMUNICATION │~S726
         │ DEVICE                            │
         └─────────────────┬─────────────────┘
                           │
         ┌─────────────────▼─────────────────┐
         │ TRANSMISSION POWER CALCULATION    │~S710
         └─────────────────┬─────────────────┘
                           │            S727
                    ┌──────▼──────┐
                    │     ALL     │      NO
                    │ TRANSMISSION│──────────►
                    │COMMUNICATION│
                    │  DEVICES?   │
                    └──────┬──────┘
                           │ YES
                    ┌──────▼──────┐
                    │     END     │
                    └─────────────┘
```

# FIG.29

RELIABILITY OF WIRELESS
ACCESS SCHEME 2

DELAY OF WIRELESS
ACCESS SCHEME 2

THROUGHPUT OF WIRELESS
ACCESS SCHEME 2

RELIABILITY OF WIRELESS
ACCESS SCHEME 1

DELAY OF WIRELESS
ACCESS SCHEME 1

Y-COORDINATE

THROUGHPUT OF WIRELESS
ACCESS SCHEME 1

X-COORDINATE

# FIG.30

```
                    ┌─────────────┐
                    │    START    │
                    └──────┬──────┘
                           ▼
┌──────────────────────────────────────────┐
│   ACQUIRE WIRELESS ACCESS SCHEME          │  ~S731
│   CHARACTERISTIC INFORMATION              │
└──────────────────┬───────────────────────┘
                   ▼
┌──────────────────────────────────────────┐
│      MESH LOCATION INFORMATION            │  ~S732
└──────────────────┬───────────────────────┘
                   ▼
┌──────────────────────────────────────────┐
│   ENCRYPT MESHED LOCATION INFORMATION     │  ~S733
└──────────────────┬───────────────────────┘
                   ▼
┌──────────────────────────────────────────┐
│          SET EACH ATTRIBUTE               │  ~S734
└──────────────────┬───────────────────────┘
                   ▼
┌──────────────────────────────────────────┐
│  PERFORM ADDITIONAL PROCESSING ON LOCATION│  ~S735
│    INFORMATION AND EACH ATTRIBUTE         │
└──────────────────┬───────────────────────┘
                   ▼
            ┌─────────────┐
            │     END     │
            └─────────────┘
```

## FIG.31

| ENCRYPTED X-COORDINATE | ENCRYPTED Y-COORDINATE | ENCRYPTED Z-COORDINATE | THROUGHPUT OF WIRELESS ACCESS SCHEME 1 | DELAY OF WIRELESS ACCESS SCHEME 1 | RELIABILITY OF WIRELESS ACCESS SCHEME 1 | THROUGHPUT OF WIRELESS ACCESS SCHEME 2 | DELAY OF WIRELESS ACCESS SCHEME 2 | RELIABILITY OF WIRELESS ACCESS SCHEME 2 |
|---|---|---|---|---|---|---|---|---|
| Enc(x1) | Enc(y1) | Enc(z1) | TP1,1 | Delay1,1 | R1,1 | TP2,1 | Delay2,1 | R2,1 |
| Enc(x2) | Enc(y2) | Enc(z2) | TP1,2 | Delay1,2 | R1,2 | TP2,2 | Delay2,2 | R2,2 |
| Enc(x3) | Enc(y3) | Enc(z3) | TP1,3 | Delay1,3 | R1,3 | TP2,3 | Delay2,3 | R2,3 |
| Enc(x4) | Enc(y4) | Enc(z4) | TP1,4 | Delay1,4 | R1,4 | TP2,4 | Delay2,4 | R2,4 |
| ... | ... | ... | ... | ... | ... | ... | ... | ... |

EP 4 572 394 A1

# FIG.32

```
                        START

        ACQUIRE ENCRYPTED LOCATION INFORMATION          ~S741

            ACQUIRE ASSUMED FREQUENCY BAND
                    INFORMATION                         ~S742

        ACQUIRE PROCESSED WIRELESS ACCESS SCHEME
            CHARACTERISTIC INFORMATION DATA             ~S743
            CORRESPONDING TO FREQUENCY BAND

        COMPARE MESHED OR ENCRYPTED LOCATION
        INFORMATION OF PROCESSED WIRELESS ACCESS
        SCHEME CHARACTERISTIC INFORMATION DATA          ~S744
        WITH ENCRYPTED LOCATION INFORMATION
            (COMPARE BY SECRET CALCULATION)

        IDENTIFY MESH CLOSEST TO ENCRYPTED
                LOCATION INFORMATION                    ~S745

        ACQUIRE EACH ATTRIBUTE SET TO IDENTIFIED
                    MESH LOCATION                       ~S746

                         END
```

# FIG.33

START

PREPARE VALUES OF CHARACTERISTIC INDICES ACQUIRED FOR PLURALITY OF WIRELESS ACCESS SCHEMES AND PLURALITY OF FREQUENCY BANDS ~S751

SET CHARACTERISTIC INDEX TO BE USED FOR SELECTING WIRELESS ACCESS SCHEME ~S752

SELECT FREQUENCY BAND ~S753

SELECT WIRELESS ACCESS SCHEME BASED ON CHARACTERISTIC INDEX SET IN SELECTED FREQUENCY BAND ~S754

ALL FREQUENCY BANDS? S725 NO

YES

SET NUMBER OF FREQUENCY BANDS THAT CAN BE AGGREGATED ~S756

SELECT FREQUENCY BAND AND WIRELESS ACCESS SCHEME FOR SET NUMBER IN DESCENDING ORDER OF IDENTIFIED CHARACTERISTIC INDICES ~S757

END

# FIG.34

# FIG.35

| ENCRYPTED X-COORDINATE | ENCRYPTED Y-COORDINATE | ENCRYPTED Z-COORDINATE | COMMUNICATION AVAILABILITY |
|---|---|---|---|
| Enc(x1) | Enc(y1) | Enc(z1) | Enc(Allow) |
| Enc(x2) | Enc(y2) | Enc(z2) | Enc(Disallow) |
| Enc(x3) | Enc(y3) | Enc(z3) | Enc(Allow) |
| Enc(x4) | Enc(y4) | Enc(z4) | Enc(Disallow) |
| ... | ... | ... | ... |

# FIG.36

40
COMMUNICATION
DEVICE

60
COMMUNICATION
CONTROL DEVICE

S115
REQUEST REGISTRATION DELETION
OF COMMUNICATION DEVICE

S116
DELETE REGISTERED INFORMATION
ON COMMUNICATION DEVICE

S117
DELETE INFORMATION AND
SETTING REGARDING APPLIED
ENCRYPTION

S118
NOTIFY REGISTRATION DELETION
COMPLETION

# FIG.37

START

IS IT TIMING
TO SET (RESET) ENCRYPTION
SCHEME?
S761

NO

YES

SET (RESET) ENCRYPTION SCHEME
S762

NOTIFY COMMUNICATION DEVICE OF INFORMATION
REGARDING ENCRYPTION
S763

END

# FIG.38

START

IS ENCRYPTION
SCHEME SET (RESET)? ⟨S764 — NO

↓ YES

ENCRYPT INFORMATION ON COMMUNICATION
DEVICE BY SET OR RESET ENCRYPTION SCHEME ~S765

NOTIFY ENCRYPTED INFORMATION ~S766

END

# FIG.39

START

IS IT TIMING
TO SET (RESET) ENCRYPTION
SCHEME? ⟨S767 — NO

↓ YES

SET (RESET) ENCRYPTION SCHEME FOR
COMMUNICATION DEVICE ~S768

ENCRYPT INFORMATION ON COMMUNICATION
DEVICE ~S769

NOTIFY ENCRYPTED INFORMATION ~S770

END

# FIG.40

|  | COMMUNICATION<br>DEVICE | COMMUNICATION<br>CONTROL DEVICE |  |
|---|---|---|---|
| ENCRYPTION OF INFORMATION<br>ON COMMUNICATION DEVICE | APPLICATION<br>LAYER | APPLICATION<br>LAYER | INFORMATION ON COMMUNICATION<br>DEVICE IS NOT DECRYPTED<br>(OR DECRYPTED IN TEE AREA) |
|  | PRESENTATION<br>LAYER | PRESENTATION<br>LAYER |  |
|  | SESSION LAYER | SESSION LAYER |  |
| ENCRYPTION OF<br>COMMUNICATION PATH<br>(TSL, SSL, AND THE LIKE) | TRANSPORT<br>LAYER | TRANSPORT<br>LAYER | DECRYPTION OF<br>COMMUNICATION PATH |
|  | NETWORK LAYER | NETWORK LAYER |  |
|  | DATA LINK LAYER | DATA LINK LAYER |  |
|  | PHYSICAL LAYER | PHYSICAL LAYER |  |

EP 4 572 394 A1

# FIG.41

70

INFORMATION RECORDING DEVICE

730

INFORMATION RECORDING UNIT

720

CONTROL UNIT

710

COMMUNICATION UNIT

# FIG.42

| 40 COMMUNICATION DEVICE | 60 COMMUNICATION CONTROL DEVICE | 70 INFORMATION RECORDING DEVICE |
|---|---|---|

S125
REQUEST REGISTRATION OF COMMUNICATION DEVICE

S126
NOTIFY INFORMATION ON ENCRYPTION SCHEME (FOR SECRET CALCULATION)

S127
ACQUIRE INFORMATION ON COMMUNICATION DEVICE

S128
ENCRYPT INFORMATION ON COMMUNICATION DEVICE

S129
NOTIFY ENCRYPTED INFORMATION ON COMMUNICATION DEVICE

S130
REQUEST REGISTRATION OF COMMUNICATION DEVICE

S131
NOTIFY COMPLETION OF REGISTRATION OF COMMUNICATION DEVICE

S132
REQUEST COMMUNICATION PARAMETER

S133
REQUEST INFORMATION ON COMMUNICATION DEVICE

S134
NOTIFY INFORMATION ON ENCRYPTION SCHEME (FOR SECRET CALCULATION)

S135
NOTIFY ENCRYPTED INFORMATION ON COMMUNICATION DEVICE

S136
CALCULATE INFORMATION REGARDING DISTANCE AND DIRECTION (SECRET CALCULATION)

S137
CALCULATE INFORMATION REGARDING RADIO WAVE PROPAGATION MODEL (SECRET CALCULATION)

S138
CALCULATE RECEIVED SIGNAL POWER OR INTERFERENCE SIGNAL POWER (SECRET CALCULATION OR NORMAL CALCULATION)

S139
CALCULATE COMMUNICATION PARAMETER (SECRET CALCULATION OR NORMAL CALCULATION)

S140
NOTIFY COMMUNICATION PARAMETER

S141
SET COMMUNICATION PARAMETER OF COMMUNICATION DEVICE

S142
EMIT OR SUSPEND RADIO WAVE USING NOTIFIED COMMUNICATION PARAMETER

# FIG.43

| 40 COMMUNICATION DEVICE | 60 COMMUNICATION CONTROL DEVICE | 70 INFORMATION RECORDING DEVICE |

S125
REQUEST REGISTRATION OF COMMUNICATION DEVICE

S144
NOTIFY COMPLETION OF REGISTRATION OF COMMUNICATION DEVICE

S145
NOTIFY INFORMATION ON ENCRYPTION SCHEME (FOR SECRET CALCULATION)

S127
ACQUIRE INFORMATION ON COMMUNICATION DEVICE

S128
ENCRYPT INFORMATION ON COMMUNICATION DEVICE

S129
NOTIFY ENCRYPTED INFORMATION ON COMMUNICATION DEVICE

S130
REQUEST REGISTRATION OF COMMUNICATION DEVICE

S131
NOTIFY COMPLETION OF REGISTRATION OF COMMUNICATION DEVICE

S146
NOTIFY INFORMATION ON ENCRYPTION SCHEME (FOR SECRET CALCULATION) (1)

S132
REQUEST COMMUNICATION PARAMETER

S133
REQUEST INFORMATION ON COMMUNICATION DEVICE

S134
NOTIFY INFORMATION ON ENCRYPTION SCHEME (FOR SECRET CALCULATION) (2)

S135
NOTIFY ENCRYPTED INFORMATION ON COMMUNICATION DEVICE

S136
CALCULATE INFORMATION REGARDING DISTANCE AND DIRECTION (SECRET CALCULATION)

S137
CALCULATE INFORMATION REGARDING RADIO WAVE PROPAGATION MODEL (SECRET CALCULATION)

S138
CALCULATE RECEIVED SIGNAL POWER OR INTERFERENCE SIGNAL POWER (SECRET CALCULATION OR NORMAL CALCULATION)

S139
CALCULATE COMMUNICATION PARAMETER (SECRET CALCULATION OR NORMAL CALCULATION)

S140
NOTIFY COMMUNICATION PARAMETER

S141
SET COMMUNICATION PARAMETER OF COMMUNICATION DEVICE

S142
EMIT OR SUSPEND RADIO WAVE USING NOTIFIED COMMUNICATION PARAMETER

94

# FIG.44

EP 4 572 394 A1

# FIG.45

| COMMUNICATION DEVICE (48) | COMMUNICATION CONTROL DEVICE (68) | COMMUNICATION CONTROL DEVICE (69) | COMMUNICATION DEVICE (49) |
|---|---|---|---|

**S190** CALCULATE INFORMATION REGARDING DISTANCE AND DIRECTION (SECRET CALCULATION)

**S191** CALCULATE INFORMATION REGARDING RADIO WAVE PROPAGATION MODEL (SECRET CALCULATION)

**S192** CALCULATE RECEIVED SIGNAL POWER OR INTERFERENCE SIGNAL POWER (SECRET CALCULATION OR NORMAL CALCULATION)

**S193** CALCULATE COMMUNICATION PARAMETER (SECRET CALCULATION OR NORMAL CALCULATION)

**S194** NOTIFY CALCULATION RESULT

**S195** CALCULATE INFORMATION REGARDING DISTANCE AND DIRECTION (SECRET CALCULATION)

**S196** CALCULATE INFORMATION REGARDING RADIO WAVE PROPAGATION MODEL (SECRET CALCULATION)

**S197** CALCULATE RECEIVED SIGNAL POWER OR INTERFERENCE SIGNAL POWER (SECRET CALCULATION OR NORMAL CALCULATION)

**S198** CALCULATE COMMUNICATION PARAMETER (SECRET CALCULATION OR NORMAL CALCULATION)

**S199** NOTIFY CALCULATION RESULT

**S200** EVALUATION OF CALCULATION RESULT

**S201** NOTIFY COMMUNICATION PARAMETER

**S202** SET COMMUNICATION PARAMETER OF COMMUNICATION DEVICE

**S203** EMIT OR SUSPEND RADIO WAVE USING NOTIFIED COMMUNICATION PARAMETER

**S204** EVALUATION OF CALCULATION RESULT

**S205** NOTIFY COMMUNICATION PARAMETER

**S206** SET COMMUNICATION PARAMETER OF COMMUNICATION DEVICE

**S207** EMIT OR SUSPEND RADIO WAVE USING NOTIFIED COMMUNICATION PARAMETER

EP 4 572 394 A1

# FIG.46

START

S771
IS IT TIMING TO
EXCHANGE INFORMATION ON
COMMUNICATION DEVICE WITH OTHER
COMMUNICATION CONTROL
DEVICE?

NO

YES

NOTIFY OTHER COMMUNICATION CONTROL DEVICE
OF INFORMATION ON COMMUNICATION DEVICE ~S772

NOTIFY OTHER COMMUNICATION CONTROL DEVICE
OF INFORMATION REGARDING ENCRYPTION
APPLIED TO INFORMATION ON COMMUNICATION
DEVICE ~S773

S774
HAS EXCHANGE
OF INFORMATION ON
COMMUNICATION DEVICE WITH
OTHER COMMUNICATION
CONTROL DEVICE
COMPLETED?

NO

YES

S775
IS IT TIMING
TO PERFORM CALCULATION
(ESTIMATION)?

NO

YES

PERFORM CALCULATION (ESTIMATION) ~S776

A

# FIG.47

A

NOTIFY OTHER COMMUNICATION DEVICE OF CALCULATION (ESTIMATION) RESULT ~S777

HAS EXCHANGE OF CALCULATION (ESTIMATION) RESULT WITH OTHER COMMUNICATION CONTROL DEVICE COMPLETED? S778

NO

IS IT TIMING TO NOTIFY COMMUNICATION DEVICE OF COMMUNICATION PARAMETER AND THE LIKE? S780

NO

YES

YES

EVALUATE CALCULATION (ESTIMATION) RESULT ~S779

IS CALCULATION (ESTIMATION) RESULT VALID? S781

NO

SELECT COMMUNICATION PARAMETER AND THE LIKE BASED ON RULE WHEN CALCULATION (ESTIMATION) RESULT IS NOT SUITABLE S784

YES

SELECT COMMUNICATION PARAMETER AND THE LIKE S782

NOTIFY COMMUNICATION PARAMETER AND THE LIKE ~S783

END

# FIG.48

| COMMUNICATION DEVICE ⌐40 | COMMUNICATION CONTROL DEVICE ⌐67 | COMMUNICATION CONTROL DEVICE ⌐60 |
|---|---|---|

⌐S210
REQUEST REGISTRATION OF COMMUNICATION DEVICE

⌐S211
NOTIFY COMPLETION OF REGISTRATION OF COMMUNICATION DEVICE

⌐S212
REQUEST REGISTRATION OF COMMUNICATION DEVICE

⌐S213
NOTIFY INFORMATION ON ENCRYPTION SCHEME (FOR SECRET CALCULATION)

⌐S214
ACQUIRE INFORMATION ON COMMUNICATION DEVICE

⌐S215
NOTIFY INFORMATION ON COMMUNICATION DEVICE

⌐S216
ENCRYPT INFORMATION ON COMMUNICATION DEVICE

⌐S217
NOTIFY ENCRYPTED INFORMATION ON COMMUNICATION DEVICE

⌐S218
CALCULATE INFORMATION REGARDING DISTANCE AND DIRECTION (SECRET CALCULATION)

⌐S219
CALCULATE INFORMATION REGARDING RADIO WAVE PROPAGATION MODEL (SECRET CALCULATION)

⌐S220
CALCULATE RECEIVED SIGNAL POWER OR INTERFERENCE SIGNAL POWER (SECRET CALCULATION OR NORMAL CALCULATION)

⌐S221
CALCULATE COMMUNICATION PARAMETER (SECRET CALCULATION OR NORMAL CALCULATION)

⌐S222
NOTIFY COMMUNICATION PARAMETER

⌐S223
NOTIFY COMMUNICATION PARAMETER

⌐S224
SET COMMUNICATION PARAMETER

⌐S225
EMIT OR SUSPEND RADIO WAVE USING NOTIFIED COMMUNICATION PARAMETER

# FIG.49

COMMUNICATION DEVICE 40

COMMUNICATION CONTROL DEVICE 67

COMMUNICATION CONTROL DEVICE 60

INFORMATION RECORDING DEVICE 70

S150 REQUEST REGISTRATION OF COMMUNICATION DEVICE

S151 NOTIFY COMPLETION OF REGISTRATION OF COMMUNICATION DEVICE

S152 REQUEST REGISTRATION OF COMMUNICATION DEVICE

S153 NOTIFY INFORMATION ON ENCRYPTION SCHEME (FOR SECRET CALCULATION)

S154 ACQUIRE INFORMATION ON COMMUNICATION DEVICE

S155 NOTIFY INFORMATION ON COMMUNICATION DEVICE

S156 ENCRYPT INFORMATION ON COMMUNICATION DEVICE

S157 NOTIFY ENCRYPTED INFORMATION ON COMMUNICATION DEVICE

S158 REQUEST REGISTRATION OF COMMUNICATION DEVICE

S159 REQUEST REGISTRATION OF COMMUNICATION DEVICE

S160 NOTIFY COMPLETION OF REGISTRATION OF COMMUNICATION DEVICE

S161 REQUEST COMMUNICATION PARAMETER

S162 REQUEST COMMUNICATION PARAMETER

100

EP 4 572 394 A1

# FIG.50

| COMMUNICATION DEVICE (40) | COMMUNICATION CONTROL DEVICE (67) | COMMUNICATION CONTROL DEVICE (60) | INFORMATION RECORDING DEVICE (70) |
|---|---|---|---|

**S163** REQUEST INFORMATION ON COMMUNICATION DEVICE

**S164** NOTIFY INFORMATION ON ENCRYPTION SCHEME (FOR SECRET CALCULATION)

**S165** NOTIFY ENCRYPTED INFORMATION ON COMMUNICATION DEVICE

**S166** CALCULATE INFORMATION REGARDING DISTANCE AND DIRECTION (SECRET CALCULATION)

**S167** CALCULATE INFORMATION REGARDING RADIO WAVE PROPAGATION MODEL (SECRET CALCULATION)

**S168** CALCULATE RECEIVED SIGNAL POWER OR INTERFERENCE SIGNAL POWER (SECRET CALCULATION OR NORMAL CALCULATION)

**S169** CALCULATE COMMUNICATION PARAMETER (SECRET CALCULATION OR NORMAL CALCULATION)

**S170** NOTIFY COMMUNICATION PARAMETER

**S171** NOTIFY COMMUNICATION PARAMETER

**S172** SET COMMUNICATION PARAMETER OF COMMUNICATION DEVICE

**S173** EMIT OR SUSPEND RADIO WAVE USING NOTIFIED COMMUNICATION PARAMETER

EP 4 572 394 A1

# FIG.51

# FIG.52

DEVICE 80 · COMMUNICATION DEVICE 40 · COMMUNICATION CONTROL DEVICE 60 · INFORMATION RECORDING DEVICE 70

S234 REQUEST REGISTRATION OF COMMUNICATION DEVICE

S235 NOTIFY INFORMATION ON ENCRYPTION SCHEME (FOR SECRET CALCULATION)

S127 ACQUIRE INFORMATION ON COMMUNICATION DEVICE

S128 ENCRYPT INFORMATION ON COMMUNICATION DEVICE

S129 NOTIFY ENCRYPTED INFORMATION ON COMMUNICATION DEVICE

S130 REQUEST REGISTRATION OF COMMUNICATION DEVICE

S131 NOTIFY COMPLETION OF REGISTRATION OF COMMUNICATION DEVICE

S132 REQUEST COMMUNICATION PARAMETER

S133 REQUEST REGISTRATION OF COMMUNICATION DEVICE

S134 NOTIFY INFORMATION ON ENCRYPTION SCHEME (FOR SECRET CALCULATION)

S135 NOTIFY ENCRYPTED INFORMATION ON COMMUNICATION DEVICE

EP 4 572 394 A1

103

# FIG.53

| DEVICE (80) | COMMUNICATION DEVICE (40) | COMMUNICATION CONTROL DEVICE (60) | INFORMATION RECORDING DEVICE (70) |
|---|---|---|---|

S136
CALCULATE INFORMATION REGARDING DISTANCE AND DIRECTION (SECRET CALCULATION)

S137
CALCULATE INFORMATION REGARDING RADIO WAVE PROPAGATION MODEL (SECRET CALCULATION)

S138
CALCULATE RECEIVED SIGNAL POWER OR INTERFERENCE SIGNAL POWER (SECRET CALCULATION OR NORMAL CALCULATION)

S139
CALCULATE COMMUNICATION PARAMETER (SECRET CALCULATION OR NORMAL CALCULATION)

S140
NOTIFY COMMUNICATION PARAMETER

S141
SET COMMUNICATION PARAMETER OF COMMUNICATION DEVICE

S142
EMIT OR SUSPEND RADIO WAVE USING NOTIFIED COMMUNICATION PARAMETER

# FIG.54

**80**
DEVICE

**40**
COMMUNICATION DEVICE

**67**
COMMUNICATION CONTROL DEVICE

**60**
COMMUNICATION CONTROL DEVICE

**S238**
REQUEST REGISTRATION OF COMMUNICATION DEVICE

**S239**
NOTIFY INFORMATION ON ENCRYPTION SCHEME (FOR SECRET CALCULATION)

**S212**
REQUEST REGISTRATION OF COMMUNICATION DEVICE

**S213**
NOTIFY INFORMATION ON ENCRYPTION SCHEME (FOR SECRET CALCULATION)

**S214**
ACQUIRE INFORMATION ON COMMUNICATION DEVICE

**S215**
NOTIFY INFORMATION ON COMMUNICATION DEVICE

**S216**
ENCRYPT INFORMATION ON COMMUNICATION DEVICE

**S217**
NOTIFY ENCRYPTED INFORMATION ON COMMUNICATION DEVICE

**S218**
CALCULATE INFORMATION REGARDING DISTANCE AND DIRECTION (SECRET CALCULATION)

**S219**
CALCULATE INFORMATION REGARDING RADIO WAVE PROPAGATION MODEL (SECRET CALCULATION)

**S220**
CALCULATE RECEIVED SIGNAL POWER OR INTERFERENCE SIGNAL POWER (SECRET CALCULATION OR NORMAL CALCULATION)

EP 4 572 394 A1

# FIG.55

| 80 | 40 | 67 | 60 |
|---|---|---|---|
| DEVICE | COMMUNICATION DEVICE | COMMUNICATION CONTROL DEVICE | COMMUNICATION CONTROL DEVICE |

S221
CALCULATE COMMUNICATION PARAMETER
(SECRET CALCULATION OR NORMAL CALCULATION)

S222
NOTIFY COMMUNICATION PARAMETER

S223
NOTIFY COMMUNICATION PARAMETER

S224
SET COMMUNICATION PARAMETER

S225
EMIT OR SUSPEND RADIO WAVE USING NOTIFIED COMMUNICATION PARAMETER

# FIG.56

Sequence diagram showing COMMUNICATION DEVICE (40), COMMUNICATION CONTROL DEVICE (67), COMMUNICATION CONTROL DEVICE (60), COMMUNICATION CONTROL DEVICE (66), and COMMUNICATION DEVICE (41):

- S390: REQUEST REGISTRATION OF COMMUNICATION DEVICE
- S391: NOTIFY COMPLETION OF REGISTRATION OF COMMUNICATION DEVICE
- S392: REQUEST REGISTRATION OF COMMUNICATION DEVICE
- S393: REQUEST REGISTRATION OF COMMUNICATION DEVICE
- S394: NOTIFY COMPLETION OF REGISTRATION OF COMMUNICATION DEVICE
- S395: REQUEST REGISTRATION OF COMMUNICATION DEVICE
- S396: ACQUIRE INFORMATION ON COMMUNICATION DEVICE
- S397: NOTIFY INFORMATION ON COMMUNICATION DEVICE
- S398: ACQUIRE INFORMATION ON COMMUNICATION DEVICE
- S399: NOTIFY INFORMATION ON COMMUNICATION DEVICE
- S400: NOTIFY INFORMATION ON ENCRYPTION SCHEME (FOR SECRET CALCULATION)
- S401: ENCRYPT INFORMATION ON COMMUNICATION DEVICE
- S402: NOTIFY ENCRYPTED INFORMATION ON COMMUNICATION DEVICE
- S403: ENCRYPT INFORMATION ON COMMUNICATION DEVICE
- S404: NOTIFY ENCRYPTED INFORMATION ON COMMUNICATION DEVICE

# FIG.57

| COMMUNICATION DEVICE (40) | COMMUNICATION CONTROL DEVICE (67) | COMMUNICATION CONTROL DEVICE (60) | COMMUNICATION CONTROL DEVICE (66) | COMMUNICATION DEVICE (41) |

S405
CALCULATE INFORMATION REGARDING DISTANCE AND DIRECTION (SECRET CALCULATION)

S406
CALCULATE INFORMATION REGARDING RADIO WAVE PROPAGATION MODEL (SECRET CALCULATION)

S407
CALCULATE RECEIVED SIGNAL POWER OR INTERFERENCE SIGNAL POWER (SECRET CALCULATION OR NORMAL CALCULATION)

S408
CALCULATE COMMUNICATION PARAMETER (SECRET CALCULATION OR NORMAL CALCULATION)

S409
NOTIFY COMMUNICATION PARAMETER

S410
NOTIFY COMMUNICATION PARAMETER

S413
NOTIFY COMMUNICATION PARAMETER

S411
SET COMMUNICATION PARAMETER

S414
SET COMMUNICATION PARAMETER

S412
EMIT OR SUSPEND RADIO WAVE USING NOTIFIED COMMUNICATION PARAMETER

S415
EMIT OR SUSPEND RADIO WAVE USING NOTIFIED COMMUNICATION PARAMETER

# FIG.58

# FIG.59

| 40 COMMUNICATION DEVICE | 60 COMMUNICATION CONTROL DEVICE | 41 COMMUNICATION DEVICE |
|---|---|---|

S419 REQUEST REGISTRATION OF COMMUNICATION DEVICE

S420 REQUEST REGISTRATION OF COMMUNICATION DEVICE

S440 NOTIFY COMPLETION OF REGISTRATION OF COMMUNICATION DEVICE

S441 NOTIFY INFORMATION ON ENCRYPTION SCHEME (FOR SECRET CALCULATION)

S442 NOTIFY INFORMATION ON ENCRYPTION SCHEME (FOR SECRET CALCULATION)

S422 ACQUIRE INFORMATION ON COMMUNICATION DEVICE

S425 ACQUIRE INFORMATION ON COMMUNICATION DEVICE

S423 ENCRYPT INFORMATION ON COMMUNICATION DEVICE

S426 ENCRYPT INFORMATION ON COMMUNICATION DEVICE

S424 NOTIFY ENCRYPTED INFORMATION ON COMMUNICATION DEVICE

S427 NOTIFY ENCRYPTED INFORMATION ON COMMUNICATION DEVICE

S428 CALCULATE INFORMATION REGARDING DISTANCE AND DIRECTION (SECRET CALCULATION)

S429 CALCULATE INFORMATION REGARDING RADIO WAVE PROPAGATION MODEL (SECRET CALCULATION)

S430 CALCULATE RECEIVED SIGNAL POWER OR INTERFERENCE SIGNAL POWER (SECRET CALCULATION OR NORMAL CALCULATION)

S431 CALCULATE COMMUNICATION PARAMETER (SECRET CALCULATION OR NORMAL CALCULATION)

S432 NOTIFY COMMUNICATION PARAMETER

S433 SET COMMUNICATION PARAMETER OF COMMUNICATION DEVICE

S435 SET COMMUNICATION PARAMETER OF COMMUNICATION DEVICE

S434 EMIT OR SUSPEND RADIO WAVE USING NOTIFIED COMMUNICATION PARAMETER

S436 EMIT OR SUSPEND RADIO WAVE USING NOTIFIED COMMUNICATION PARAMETER

# FIG.60

60

**COMMUNICATION CONTROL DEVICE**

630

**INFORMATION RECORDING UNIT**

610

**COMMUNICATION UNIT**

620

**CONTROL UNIT**

628

**INFORMATION DECRYPTION UNIT**

622

**CALCULATION UNIT**

**SAFETY AREA**

629

# FIG.61

START

ACQUIRE TWO PIECES OF
LOCATION INFORMATION — S788

IS AT LEAST ONE
OF LOCATION INFORMATION
ENCRYPTED? — S789

NO →

YES

TRANSFER LOCATION
INFORMATION TO SAFETY AREA — S790

ENCRYPT LOCATION INFORMATION — S791

SECRET CALCULATION REGARDING
DISTANCE — S792

SECRET CALCULATION REGARDING
DIRECTION — S793

CALCULATE (ESTIMATE) ONE OR
BOTH OF RECEIVED SIGNAL POWER
AND INTERFERENCE POWER — S794

CALCULATE (ESTIMATE)
COMMUNICATION PARAMETER — S795

TRANSFER SECRET CALCULATION
RESULT OUT OF SAFETY AREA — S796

CALCULATE DISTANCE — S797

CALCULATION REGARDING
DIRECTION — S798

CALCULATE (ESTIMATE) ONE OR
BOTH OF RECEIVED SIGNAL POWER
AND INTERFERENCE POWER — S799

CALCULATE (ESTIMATE)
COMMUNICATION PARAMETER — S800

END

# FIG.62

60

COMMUNICATION CONTROL DEVICE

630

INFORMATION
RECORDING
UNIT

610

COMMUNICATION
UNIT

620

CONTROL UNIT

628

INFORMATION
DECRYPTION
UNIT

623

CALCULATION
UNIT

624

CALCULATION
UNIT

SAFETY AREA

629

# FIG.63

START

ACQUIRE TWO PIECES OF
LOCATION INFORMATION — S788

IS AT LEAST ONE
OF LOCATION INFORMATION
ENCRYPTED? — S789

NO →

YES

TRANSFER LOCATION
INFORMATION INTO SAFETY AREA — S790

ENCRYPT LOCATION INFORMATION — S791

SECRET CALCULATION
REGARDING DISTANCE — S792

SECRET CALCULATION
REGARDING DIRECTION — S793

TRANSFER SECRET CALCULATION
RESULT OUT OF SAFETY AREA — S801

CALCULATION REGARDING
DISTANCE — S797

CALCULATION REGARDING
DIRECTION — S798

CALCULATE (ESTIMATE) ONE OR
BOTH OF RECEIVED SIGNAL
POWER AND INTERFERENCE
POWER — S802

CALCULATE (ESTIMATE)
COMMUNICATION PARAMETER — S803

END

# FIG.64

# FIG.65

```
        40                      61                       62
COMMUNICATION DEVICE    FIRST COMMUNICATION      SECOND COMMUNICATION
                         CONTROL DEVICE           CONTROL DEVICE
```

S250
REQUEST REGISTRATION OF
COMMUNICATION DEVICE

NOTIFY COMPLETION OF
REGISTRATION OF          S278
COMMUNICATION DEVICE

S279
NOTIFY INFORMATION ON
SECRET SHARING METHOD

ACQUIRE INFORMATION ON
COMMUNICATION DEVICE          S252

PERFORM SECRET SHARING
PROCESSING ON INFORMATION     S253
ON COMMUNICATION DEVICE

S254
NOTIFY PROCESSED
INFORMATION ON
COMMUNICATION DEVICE

S255                                    S256
NOTIFICATION OF PROCESSED    NOTIFICATION OF PROCESSED
INFORMATION                  INFORMATION

S257                                    S265
RESTORE ORIGINAL             RESTORE ORIGINAL
INFORMATION                  INFORMATION

S258                                    S266
CALCULATE INFORMATION        CALCULATE INFORMATION
REGARDING DISTANCE AND       REGARDING DISTANCE AND
DIRECTION                    DIRECTION
(SECRET CALCULATION BY       (SECRET CALCULATION BY
SECRET SHARING)              SECRET SHARING)

S259                                    S267
CALCULATE INFORMATION        CALCULATE INFORMATION
REGARDING RADIO WAVE         REGARDING RADIO WAVE
PROPAGATION MODEL            PROPAGATION MODEL
(SECRET CALCULATION BY       (SECRET CALCULATION BY
SECRET SHARING)              SECRET SHARING)

S260                                    S268
CALCULATE RECEIVED SIGNAL    CALCULATE RECEIVED SIGNAL
POWER OR INTERFERENCE        POWER OR INTERFERENCE
SIGNAL POWER                 SIGNAL POWER
(SECRET CALCULATION BY       (SECRET CALCULATION BY
SECRET SHARING OR NORMAL     SECRET SHARING OR NORMAL
CALCULATION)                 CALCULATION)

S261                                    S269
CALCULATE COMMUNICATION      CALCULATE COMMUNICATION
PARAMETER                    PARAMETER
(SECRET CALCULATION BY       (SECRET CALCULATION BY
SECRET SHARING OR NORMAL     SECRET SHARING OR NORMAL
CALCULATION)                 CALCULATION)

S262
NOTIFY CALCULATION RESULT                S270
                             NOTIFY CALCULATION RESULT

S263
EVALUATION OF CALCULATION               S271
RESULT                       EVALUATION OF CALCULATION
                             RESULT

S264
NOTIFY CALCULATION RESULT                S272
                             NOTIFY CALCULATION RESULT

S273
RESTORE INFORMATION ON
COMMUNICATION PARAMETER

S274
SET COMMUNICATION
PARAMETER OF
COMMUNICATION DEVICE

S275
EMIT OR SUSPEND RADIO WAVE
USING NOTIFIED
COMMUNICATION PARAMETER

# FIG.66

COMMUNICATION DEVICE — 40

COMMUNICATION CONTROL DEVICE — 60

INFORMATION RECORDING DEVICE — 71

INFORMATION RECORDING DEVICE — 72

S283 REQUEST REGISTRATION OF COMMUNICATION DEVICE

S284 NOTIFY INFORMATION ON SECRET SHARING METHOD

S285 ACQUIRE INFORMATION ON COMMUNICATION DEVICE

S286 PERFORM SECRET SHARING PROCESSING ON INFORMATION ON COMMUNICATION DEVICE

S287 NOTIFY PROCESSED INFORMATION ON COMMUNICATION DEVICE

S288 REQUEST REGISTRATION OF COMMUNICATION DEVICE

S289 NOTIFY COMPLETION OF REGISTRATION OF COMMUNICATION DEVICE

S290 REQUEST COMMUNICATION PARAMETER

S291 REQUEST INFORMATION OF COMMUNICATION DEVICE

S292 NOTIFY INFORMATION ON SECRET SHARING METHOD

# FIG.67

| COMMUNICATION DEVICE 40 | COMMUNICATION CONTROL DEVICE 60 | INFORMATION RECORDING DEVICE 71 | INFORMATION RECORDING DEVICE 72 |
|---|---|---|---|

S293
NOTIFY PROCESSED INFORMATION

S294
CALCULATE INFORMATION REGARDING DISTANCE AND DIRECTION (SECRET CALCULATION BY SECRET SHARING)

S295
CALCULATE INFORMATION REGARDING RADIO WAVE PROPAGATION MODEL (SECRET CALCULATION BY SECRET SHARING)

S296
CALCULATE RECEIVED SIGNAL POWER OR INTERFERENCE SIGNAL POWER (SECRET CALCULATION BY SECRET SHARING OR NORMAL CALCULATION)

S297
CALCULATE COMMUNICATION PARAMETER (SECRET CALCULATION BY SECRET SHARING OR NORMAL CALCULATION)

S298
NOTIFY COMMUNICATION PARAMETER

S229
SET COMMUNICATION PARAMETER OF COMMUNICATION DEVICE

S300
EMIT OR SUSPEND RADIO WAVE USING NOTIFIED COMMUNICATION PARAMETER

# FIG.68

COMMUNICATION DEVICE (40)  
COMMUNICATION CONTROL DEVICE (60)  
INFORMATION RECORDING DEVICE (71)  
INFORMATION RECORDING DEVICE (72)

S283 REQUEST REGISTRATION OF COMMUNICATION DEVICE

S303 NOTIFY COMPLETION OF REGISTRATION OF COMMUNICATION CONTROL DEVICE

S304 NOTIFY INFORMATION ON SECRET SHARING METHOD

S285 ACQUIRE INFORMATION ON COMMUNICATION DEVICE

S286 PERFORM SECRET SHARING PROCESSING ON INFORMATION ON COMMUNICATION DEVICE

S287 NOTIFY PROCESSED INFORMATION ON COMMUNICATION DEVICE

S288 REQUEST REGISTRATION OF COMMUNICATION DEVICE

S289 NOTIFY COMPLETION OF REGISTRATION OF COMMUNICATION DEVICE

S305 NOTIFY INFORMATION ON SECRET SHARING (1)

S290 REQUEST COMMUNICATION PARAMETER

S291 REQUEST INFORMATION OF COMMUNICATION DEVICE

S292 NOTIFY INFORMATION ON SECRET SHARING (2)

EP 4 572 394 A1

# FIG.69

| COMMUNICATION DEVICE [40] | COMMUNICATION CONTROL DEVICE [60] | INFORMATION RECORDING DEVICE [71] | INFORMATION RECORDING DEVICE [72] |

**[S293]** NOTIFY PROCESSED INFORMATION

**[S294]** CALCULATE INFORMATION REGARDING DISTANCE AND DIRECTION (SECRET CALCULATION BY SECRET SHARING)

**[S295]** CALCULATE INFORMATION REGARDING RADIO WAVE PROPAGATION MODEL (SECRET CALCULATION BY SECRET SHARING)

**[S296]** CALCULATE RECEIVED SIGNAL POWER OR INTERFERENCE SIGNAL POWER (SECRET CALCULATION BY SECRET SHARING OR NORMAL CALCULATION)

**[S297]** CALCULATE COMMUNICATION PARAMETER (SECRET CALCULATION BY SECRET SHARING OR NORMAL CALCULATION)

**[S298]** NOTIFY COMMUNICATION PARAMETER

**[S229]** SET COMMUNICATION PARAMETER OF COMMUNICATION DEVICE

**[S300]** EMIT OR SUSPEND RADIO WAVE USING NOTIFIED COMMUNICATION PARAMETER

# FIG.70

COMMUNICATION DEVICE (40)

COMMUNICATION CONTROL DEVICE (67)

FIRST COMMUNICATION CONTROL DEVICE (61)

SECOND COMMUNICATION CONTROL DEVICE (62)

S309 — REQUEST REGISTRATION OF COMMUNICATION DEVICE

S310 — NOTIFY COMMUNICATION DEVICE OF REGISTRATION COMPLETION

S311 — REGISTER COMMUNICATION DEVICE

S312 — NOTIFY INFORMATION ON SECRET SHARING METHOD

S313 — ACQUIRE INFORMATION ON COMMUNICATION DEVICE

S314 — NOTIFY INFORMATION ON COMMUNICATION DEVICE

S315 — PERFORM SECRET SHARING PROCESSING ON INFORMATION ON COMMUNICATION DEVICE

S316 — NOTIFY PROCESSED INFORMATION ON COMMUNICATION DEVICE

S317 — NOTIFY PROCESSED INFORMATION

S324 — NOTIFICATION OF PROCESSED INFORMATION

S319 — RESTORE ORIGINAL INFORMATION

S325 — RESTORE ORIGINAL INFORMATION

S320 — CALCULATE INFORMATION REGARDING DISTANCE AND DIRECTION (SECRET CALCULATION BY SECRET SHARING)

S326 — CALCULATE INFORMATION REGARDING DISTANCE AND DIRECTION (SECRET CALCULATION BY SECRET SHARING)

S321 — CALCULATE INFORMATION REGARDING RADIO WAVE PROPAGATION MODEL (SECRET CALCULATION BY SECRET SHARING)

S327 — CALCULATE INFORMATION REGARDING RADIO WAVE PROPAGATION MODEL (SECRET CALCULATION BY SECRET SHARING)

EP 4 572 394 A1

## FIG.71

| COMMUNICATION DEVICE ⌐40 | COMMUNICATION CONTROL DEVICE ⌐67 | FIRST COMMUNICATION CONTROL DEVICE ⌐61 | SECOND COMMUNICATION CONTROL DEVICE ⌐62 |
|---|---|---|---|

**⌐S322** CALCULATE RECEIVED SIGNAL POWER OR INTERFERENCE SIGNAL POWER (SECRET CALCULATION BY SECRET SHARING OR NORMAL CALCULATION)

**⌐S328** CALCULATE RECEIVED SIGNAL POWER OR INTERFERENCE SIGNAL POWER (SECRET CALCULATION BY SECRET SHARING OR NORMAL CALCULATION)

**⌐S323** CALCULATE COMMUNICATION PARAMETER (SECRET CALCULATION BY SECRET SHARING OR NORMAL CALCULATION)

**⌐S329** CALCULATE COMMUNICATION PARAMETER (SECRET CALCULATION BY SECRET SHARING OR NORMAL CALCULATION)

**⌐S330** NOTIFY CALCULATION RESULT

**⌐S331** NOTIFY CALCULATION RESULT

**⌐S332** EVALUATION OF CALCULATION RESULT

**⌐S333** EVALUATION OF CALCULATION RESULT

**⌐S334** NOTIFY COMMUNICATION PARAMETER

**⌐S335** NOTIFY COMMUNICATION PARAMETER

**⌐S336** NOTIFY COMMUNICATION PARAMETER

**⌐S337** RESTORE INFORMATION ON COMMUNICATION PARAMETER

**⌐S338** SET COMMUNICATION PARAMETER OF COMMUNICATION DEVICE

**⌐S339** EMIT OR SUSPEND RADIO WAVE USING NOTIFIED COMMUNICATION PARAMETER

EP 4 572 394 A1

# FIG.72

| COMMUNICATION DEVICE 40 | COMMUNICATION CONTROL DEVICE 67 | COMMUNICATION CONTROL DEVICE 60 | INFORMATION RECORDING DEVICE 71 | INFORMATION RECORDING DEVICE 72 |

S342 REQUEST REGISTRATION OF COMMUNICATION DEVICE

S343 NOTIFY COMPLETION OF REGISTRATION OF COMMUNICATION DEVICE

S344 REQUEST REGISTRATION OF COMMUNICATION DEVICE

S345 NOTIFY INFORMATION ON SECRET SHARING METHOD

S346 ACQUIRE INFORMATION ON COMMUNICATION DEVICE

S347 NOTIFY INFORMATION ON COMMUNICATION DEVICE

S348 PERFORM SECRET SHARING PROCESSING ON INFORMATION ON COMMUNICATION DEVICE

S349 NOTIFY PROCESSED INFORMATION ON COMMUNICATION DEVICE

S350 REQUEST REGISTRATION OF COMMUNICATION DEVICE

S351 REQUEST REGISTRATION OF COMMUNICATION DEVICE

S352 NOTIFY COMPLETION OF REGISTRATION OF COMMUNICATION DEVICE

S353 REQUEST COMMUNICATION PARAMETER

S354 REQUEST COMMUNICATION PARAMETER

S355 REQUEST INFORMATION OF COMMUNICATION DEVICE

EP 4 572 394 A1

# FIG.73

| COMMUNICATION DEVICE ⌐40 | COMMUNICATION CONTROL DEVICE ⌐67 | COMMUNICATION CONTROL DEVICE ⌐60 | INFORMATION RECORDING DEVICE ⌐71 | INFORMATION RECORDING DEVICE ⌐72 |

S356 NOTIFY INFORMATION ON SECRET SHARING METHOD

S357 NOTIFY PROCESSED INFORMATION

S358 CALCULATE INFORMATION REGARDING DISTANCE AND DIRECTION (SECRET CALCULATION)

S359 CALCULATE INFORMATION REGARDING RADIO WAVE PROPAGATION MODEL (SECRET CALCULATION)

S360 CALCULATE RECEIVED SIGNAL POWER OR INTERFERENCE SIGNAL POWER (SECRET CALCULATION OR NORMAL CALCULATION)

S361 CALCULATE COMMUNICATION PARAMETER (SECRET CALCULATION OR NORMAL CALCULATION)

S362 NOTIFY COMMUNICATION PARAMETER

S363 NOTIFY COMMUNICATION PARAMETER

S364 SET COMMUNICATION PARAMETER OF COMMUNICATION DEVICE

S365 EMIT OR SUSPEND RADIO WAVE USING NOTIFIED COMMUNICATION PARAMETER

# FIG.74

DEVICE (80) | COMMUNICATION DEVICE (40) | FIRST COMMUNICATION CONTROL DEVICE (61) | SECOND COMMUNICATION CONTROL DEVICE (62)

S368 REQUEST REGISTRATION OF COMMUNICATION DEVICE

S369 NOTIFY COMPLETION OF REGISTRATION OF COMMUNICATION DEVICE

S251 NOTIFY INFORMATION ON SECRET SHARING METHOD

S252 ACQUIRE INFORMATION ON COMMUNICATION DEVICE

S253 PERFORM SECRET SHARING PROCESSING ON INFORMATION ON COMMUNICATION DEVICE

S254 NOTIFY PROCESSED INFORMATION ON COMMUNICATION DEVICE

S255 NOTIFICATION OF PROCESSED INFORMATION

S256 NOTIFICATION OF PROCESSED INFORMATION

S257 RESTORE ORIGINAL INFORMATION

S265 RESTORE ORIGINAL INFORMATION

S258 CALCULATE INFORMATION REGARDING DISTANCE AND DIRECTION (SECRET CALCULATION BY SECRET SHARING)

S266 CALCULATE INFORMATION REGARDING DISTANCE AND DIRECTION (SECRET CALCULATION BY SECRET SHARING)

S259 CALCULATE INFORMATION REGARDING RADIO WAVE PROPAGATION MODEL (SECRET CALCULATION BY SECRET SHARING)

S267 CALCULATE INFORMATION REGARDING RADIO WAVE PROPAGATION MODEL (SECRET CALCULATION BY SECRET SHARING)

EP 4 572 394 A1

# FIG.75

EP 4 572 394 A1

# FIG.76

EP 4 572 394 A1

# FIG.77

```
      ┌─────────┐  ┌──────────────┐  ┌──────────────┐  ┌──────────────┐  ┌──────────────┐
      │   80    │  │      40      │  │      60      │  │      71      │  │      72      │
      ├─────────┤  ├──────────────┤  ├──────────────┤  ├──────────────┤  ├──────────────┤
      │ DEVICE  │  │COMMUNICATION │  │COMMUNICATION │  │ INFORMATION  │  │ INFORMATION  │
      │         │  │CONTROL DEVICE│  │CONTROL DEVICE│  │RECORDING     │  │RECORDING     │
      │         │  │              │  │              │  │DEVICE        │  │DEVICE        │
      └────┬────┘  └──────┬───────┘  └──────┬───────┘  └──────┬───────┘  └──────┬───────┘
```

S293

NOTIFY PROCESSED INFORMATION

S294

CALCULATE INFORMATION REGARDING DISTANCE AND DIRECTION (SECRET CALCULATION BY SECRET SHARING)

S295

CALCULATE INFORMATION REGARDING RADIO WAVE PROPAGATION MODEL (SECRET CALCULATION BY SECRET SHARING)

S296

CALCULATE RECEIVED SIGNAL POWER OR INTERFERENCE SIGNAL POWER (SECRET CALCULATION BY SECRET SHARING OR NORMAL CALCULATION)

S297

CALCULATE COMMUNICATION PARAMETER (SECRET CALCULATION BY SECRET SHARING OR NORMAL CALCULATION)

S298

NOTIFY COMMUNICATION PARAMETER

S229

SET COMMUNICATION PARAMETER OF COMMUNICATION DEVICE

S300

EMIT OR SUSPEND RADIO WAVE USING NOTIFIED COMMUNICATION PARAMETER

# FIG.78

# FIG.79

EP 4 572 394 A1

# FIG.80

| COMMUNICATION DEVICE (40) | COMMUNICATION CONTROL DEVICE (67) | FIRST COMMUNICATION CONTROL DEVICE (61) | SECOND COMMUNICATION CONTROL DEVICE (62) | COMMUNICATION CONTROL DEVICE (66) | COMMUNICATION DEVICE (41) |
|---|---|---|---|---|---|

**S446** REQUEST REGISTRATION OF COMMUNICATION DEVICE

**S449** REQUEST REGISTRATION OF COMMUNICATION DEVICE

**S447** NOTIFY COMPLETION OF REGISTRATION OF COMMUNICATION DEVICE

**S450** NOTIFY COMPLETION OF REGISTRATION OF COMMUNICATION DEVICE

**S448** REQUEST REGISTRATION OF COMMUNICATION DEVICE

**S451** REQUEST REGISTRATION OF COMMUNICATION DEVICE

**S456** NOTIFY INFORMATION ON SECRET SHARING METHOD

**S452** ACQUIRE INFORMATION ON COMMUNICATION DEVICE

**S454** ACQUIRE INFORMATION ON COMMUNICATION DEVICE

**S453** NOTIFY INFORMATION ON COMMUNICATION DEVICE

**S455** NOTIFY INFORMATION ON COMMUNICATION DEVICE

**S457** PERFORM SECRET SHARING PROCESSING ON INFORMATION ON COMMUNICATION DEVICE

**S459** PERFORM SECRET SHARING PROCESSING ON INFORMATION ON COMMUNICATION DEVICE

**S458** NOTIFY PROCESSED INFORMATION ON COMMUNICATION DEVICE

**S460** NOTIFY PROCESSED INFORMATION ON COMMUNICATION DEVICE

EP 4 572 394 A1

# FIG.81

| COMMUNICATION DEVICE [40] | COMMUNICATION CONTROL DEVICE [67] | FIRST COMMUNICATION CONTROL DEVICE [61] | SECOND COMMUNICATION CONTROL DEVICE [62] | COMMUNICATION CONTROL DEVICE [66] | COMMUNICATION DEVICE [41] |
|---|---|---|---|---|---|

**S461** NOTIFY PROCESSED INFORMATION ↔ **S462** NOTIFY PROCESSED INFORMATION

**S463** RESTORE ORIGINAL INFORMATION

**S469** RESTORE ORIGINAL INFORMATION

**S464** CALCULATE INFORMATION REGARDING DISTANCE AND DIRECTION (SECRET CALCULATION BY SECRET SHARING)

**S470** CALCULATE INFORMATION REGARDING DISTANCE AND DIRECTION (SECRET CALCULATION BY SECRET SHARING)

**S465** CALCULATE INFORMATION REGARDING RADIO WAVE PROPAGATION MODEL (SECRET CALCULATION BY SECRET SHARING)

**S471** CALCULATE INFORMATION REGARDING RADIO WAVE PROPAGATION MODEL (SECRET CALCULATION BY SECRET SHARING)

**S466** CALCULATE RECEIVED SIGNAL POWER OR INTERFERENCE SIGNAL POWER (SECRET CALCULATION BY SECRET SHARING OR NORMAL CALCULATION)

**S472** CALCULATE RECEIVED SIGNAL POWER OR INTERFERENCE SIGNAL POWER (SECRET CALCULATION BY SECRET SHARING OR NORMAL CALCULATION)

**S467** CALCULATE COMMUNICATION PARAMETER (SECRET CALCULATION BY SECRET SHARING OR NORMAL CALCULATION)

**S473** CALCULATE COMMUNICATION PARAMETER (SECRET CALCULATION BY SECRET SHARING OR NORMAL CALCULATION)

EP 4 572 394 A1

# FIG.82

EP 4 572 394 A1

# FIG.83

| COMMUNICATION DEVICE (40) | FIRST COMMUNICATION CONTROL DEVICE (61) | SECOND COMMUNICATION CONTROL DEVICE (62) | COMMUNICATION DEVICE (41) |
|---|---|---|---|

- S490: REQUEST REGISTRATION OF COMMUNICATION DEVICE
- S491: REQUEST REGISTRATION OF COMMUNICATION DEVICE
- S492: NOTIFY INFORMATION ON SECRET SHARING METHOD
- S493: ACQUIRE INFORMATION ON COMMUNICATION DEVICE
- S496: ACQUIRE INFORMATION ON COMMUNICATION DEVICE
- S494: PERFORM SECRET SHARING PROCESSING ON INFORMATION ON COMMUNICATION DEVICE
- S497: PERFORM SECRET SHARING PROCESSING ON INFORMATION ON COMMUNICATION DEVICE
- S495: NOTIFY PROCESSED INFORMATION ON COMMUNICATION DEVICE
- S498: NOTIFY PROCESSED INFORMATION ON COMMUNICATION DEVICE
- S499: NOTIFY PROCESSED INFORMATION
- S500: NOTIFY PROCESSED INFORMATION
- S501: RESTORE ORIGINAL INFORMATION
- S507: RESTORE ORIGINAL INFORMATION
- S502: CALCULATE INFORMATION REGARDING DISTANCE AND DIRECTION (SECRET CALCULATION BY SECRET SHARING)
- S508: CALCULATE INFORMATION REGARDING DISTANCE AND DIRECTION (SECRET CALCULATION BY SECRET SHARING)

# FIG.84

# FIG.85

COMMUNICATION DEVICE 40

COMMUNICATION DEVICE 41

FIRST COMMUNICATION CONTROL DEVICE 61

SECOND COMMUNICATION CONTROL DEVICE 62

NOTIFY COMMUNICATION PARAMETER S514

NOTIFY COMMUNICATION PARAMETER S516

RESTORE INFORMATION ON COMMUNICATION PARAMETER S517

SET COMMUNICATION PARAMETER OF COMMUNICATION DEVICE S518

EMIT OR SUSPEND RADIO WAVE USING NOTIFIED COMMUNICATION PARAMETER S519

RESTORE INFORMATION ON NOTIFIED COMMUNICATION PARAMETER S520

SET COMMUNICATION PARAMETER OF COMMUNICATION DEVICE S521

EMIT OR SUSPEND RADIO WAVE USING NOTIFIED COMMUNICATION PARAMETER S522

# FIG.86

EP 4 572 394 A1

| COMMUNICATION DEVICE (40) | FIRST COMMUNICATION CONTROL DEVICE (61) | SECOND COMMUNICATION CONTROL DEVICE (62) | COMMUNICATION DEVICE (41) |
|---|---|---|---|
| S490 REQUEST REGISTRATION OF COMMUNICATION DEVICE | | | S491 REQUEST REGISTRATION OF COMMUNICATION DEVICE |
| | S526 NOTIFY COMPLETION OF REGISTRATION OF COMMUNICATION DEVICE | | |
| S527 NOTIFY INFORMATION ON SECRET SHARING METHOD | | | S528 NOTIFY INFORMATION ON SECRET SHARING METHOD |
| S493 ACQUIRE INFORMATION ON COMMUNICATION DEVICE | | | S496 ACQUIRE INFORMATION ON COMMUNICATION DEVICE |
| S494 PERFORM SECRET SHARING PROCESSING ON INFORMATION ON COMMUNICATION DEVICE | | | S497 PERFORM SECRET SHARING PROCESSING ON INFORMATION ON COMMUNICATION DEVICE |
| S495 NOTIFY PROCESSED INFORMATION ON COMMUNICATION DEVICE | | | S498 NOTIFY PROCESSED INFORMATION ON COMMUNICATION DEVICE |
| | S499 NOTIFY PROCESSED INFORMATION | S500 NOTIFY PROCESSED INFORMATION | |
| | S501 RESTORE ORIGINAL INFORMATION | S507 RESTORE ORIGINAL INFORMATION | |
| | S502 CALCULATE INFORMATION REGARDING DISTANCE AND DIRECTION (SECRET CALCULATION BY SECRET SHARING) | S508 CALCULATE INFORMATION REGARDING DISTANCE AND DIRECTION (SECRET CALCULATION BY SECRET SHARING) | |

# FIG.87

| COMMUNICATION DEVICE (40) | FIRST COMMUNICATION CONTROL DEVICE (61) | SECOND COMMUNICATION CONTROL DEVICE (62) | COMMUNICATION DEVICE (41) |
|---|---|---|---|

**S503** — CALCULATE INFORMATION REGARDING RADIO WAVE PROPAGATION MODEL (SECRET CALCULATION BY SECRET SHARING)

**S509** — CALCULATE INFORMATION REGARDING RADIO WAVE PROPAGATION MODEL (SECRET CALCULATION BY SECRET SHARING)

**S504** — CALCULATE RECEIVED SIGNAL POWER OR INTERFERENCE SIGNAL POWER (SECRET CALCULATION BY SECRET SHARING OR NORMAL CALCULATION)

**S510** — CALCULATE RECEIVED SIGNAL POWER OR INTERFERENCE SIGNAL POWER (SECRET CALCULATION BY SECRET SHARING OR NORMAL CALCULATION)

**S505** — CALCULATE COMMUNICATION PARAMETER (SECRET CALCULATION BY SECRET SHARING OR NORMAL CALCULATION)

**S511** — CALCULATE COMMUNICATION PARAMETER (SECRET CALCULATION BY SECRET SHARING OR NORMAL CALCULATION)

**S506** — NOTIFY CALCULATION RESULT

**S512** — NOTIFY CALCULATION RESULT

**S513** — EVALUATION OF CALCULATION RESULT

**S515** — EVALUATION OF CALCULATION RESULT

EP 4 572 394 A1

# FIG.88

## INTERNATIONAL SEARCH REPORT

| International application No. |
|---|
| **PCT/JP2023/028492** |

**A. CLASSIFICATION OF SUBJECT MATTER**

*H04W 28/18*(2009.01)i; *H04W 12/03*(2021.01)i; *H04W 16/14*(2009.01)i; *H04W 88/18*(2009.01)i
FI:   H04W28/18; H04W12/03; H04W16/14; H04W88/18

According to International Patent Classification (IPC) or to both national classification and IPC

**B. FIELDS SEARCHED**

Minimum documentation searched (classification system followed by classification symbols)

H04W4/00-H04W99/00 H04B7/24-H04B7/26

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

3GPP TSG RAN WG1-4, SA WG1-4, CT WG1,4

**C. DOCUMENTS CONSIDERED TO BE RELEVANT**

| Category* | Citation of document, with indication, where appropriate, of the relevant passages | Relevant to claim No. |
|---|---|---|
| A | WO 2020/189022 A1 (SONY CORP.) 24 September 2020 (2020-09-24)<br> paragraphs [0354]-[0367]<br>(Family: none) | 1-20 |
| A | US 9887768 B1 (ROCKWELL COLLINES, INC.) 06 February 2018 (2018-02-06)<br> column 4, lines 46-62, claim 1<br>(Family: none) | 1-20 |

☐ Further documents are listed in the continuation of Box C.     ☐ See patent family annex.

| | |
|---|---|
| \* Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **24 August 2023** | **05 September 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

# EP 4 572 394 A1

**Patent documents cited in the description**

- WO 2013111442 A